# EUROPEAN PATENT APPLICATION

(11) **EP 4 756 968 A1**
(43) Date of publication of application: **10.06.2026**
(21) Application number: 24848390.1
(22) Date of filing: 02.08.2024
(51) Int. Cl.: H01M 10/058, H01M 10/052, H01M 10/42, H01M 50/103, H01M 50/183, H01M 50/317, H01M 50/609, H01M 50/645

(54) **HIGH-CAPACITY BATTERY ASSEMBLY, REPAIR MECHANISM, AND REPAIR METHOD FOR HIGH-CAPACITY BATTERY ASSEMBLY**

(30) Priority: 03.08.2023 CN 202322073834 U; 11.11.2023 CN 202311501524; 11.11.2023 CN 202311497434; 11.11.2023 CN 202311497435; 11.11.2023 CN 202311497438; 11.11.2023 CN 202311497437; 11.11.2023 CN 202323043216 U; 07.12.2023 CN 202311668457; 08.03.2024 CN 202410263699; 27.03.2024 CN 202420604013 U; 27.03.2024 CN 202420604332 U; 27.03.2024 CN 202420604560 U; 27.03.2024 CN 202420604819 U; 27.03.2024 CN 202420604963 U; 11.04.2024 CN 202410430519; 11.04.2024 CN 202420736543 U
(71) Applicant: Aurora Power&Energy Holdings Pte. Ltd., Singapore 189652 (SG)
(72) Inventor: LEI, Zhengjun, Xi'an, Shaanxi 710075 (CN); CHEN, Mengqi, Xi'an, Shaanxi 710075 (CN); ZHANG, Sanxue, Xi'an, Shaanxi 710075 (CN)
(74) Representative: Grassi, Stefano
(86) International application number: PCT/CN2024/109562
(87) International publication number: WO 2025/026437

(57) **Abstract**

The present invention relates to the field of batteries, and in particular to a high-capacity battery assembly, a repair mechanism, and a repair method for the high-capacity battery assembly, so as to prolong the service lives of high-capacity batteries while solving the problem of having a difficulty in assembling shared pipeline assemblies of existing high-capacity batteries. The high-capacity battery assembly includes a high-capacity battery and a repair mechanism. The high-capacity battery includes a housing and battery cells arranged in the housing; the housing is provided with an electrolyte region of the inner cavity of each battery cell; an avoidance hole capable of enabling an electrode terminal of each battery cell to extend out is formed on a housing top plate; the electrode terminal of each battery cell extends out from the avoidance hole on the housing top plate, and a region of the housing corresponding to the avoidance hole is fixed and sealed with a shell of the battery cell; and the repair mechanism is connected with the high-capacity battery, and is configured for repairing the high-capacity battery having an attenuated capacity or inhibiting the attenuation speed of the high-capacity battery, so as to improve the performance of the high-capacity battery and prolong the cycle life of the high-capacity battery.

## Description

### Technical Field

The present invention relates to the field of batteries, and specifically relates to a high-capacity battery assembly, a repair mechanism, and a repair method for the high-capacity battery assembly.

### Background

At present, a plurality of battery cells are generally connected in parallel or series to form a high-capacity battery (which may also be referred to as a battery module or a battery pack) in the market.

The Chinese patent CN219144456U discloses a high-capacity battery, and the structure thereof is as shown in Fig. 1. The high-capacity battery includes a battery pack main body formed by connecting several battery cells in parallel and a shared pipeline assembly located at the bottom of the battery pack main body; and the shared pipeline assembly is configured for penetrating through the inner cavities of the several battery cells, so that all battery cells in the high-capacity battery are in one electrolyte system. The high-capacity battery may enhance the uniformity of electrolyte inside the battery cells in the high-capacity battery by the shared pipeline assembly, thereby prolonging the cycle life, and may also replenish electrolyte to the high-capacity battery by the shared pipeline assembly, thereby prolonging the service life of the high-capacity battery, and meanwhile improving the use safety of the high-capacity battery.

However, such a shared pipeline assembly is formed by directly performing hermetical plug-in connection on a plurality of sub-pipelines 01 and intermediate connecting pipes 02 in an interference fit manner; and at this time, the plurality of sub-pipelines 01 disposed on lower cover plates 3 of battery cells one by one, the sub-pipelines extend in an arrangement direction of battery cells 2, are integrally formed with the lower cover plates 3 of the battery cells by extrusion forming, and are communicated with open pores on the lower cover plates 3 of the battery cells.

During assembly, the two ends of the sub-pipelines 1 are used as connecting ends with the intermediate connecting pipes 02, and when two battery cells are connected, one ends of the sub-pipelines on the two battery cells are respectively squeezed into the two ends of the intermediate connecting pipes 02.

The shared pipeline assembly requires the sub-pipelines 1 and the intermediate connecting pipes 2 to be coaxial in a plug-in connection process, to realize an effective connection. However, it is difficult to ensure the coaxiality between the sub-pipelines and the intermediate connecting pipes 2 due to the following reasons:
1) the sub-pipelines and the lower cover plates are integrated members, on each integrated member, if the location of the sub-pipeline on the lower cover plate has a slight deviation, or the size of each sub-pipeline itself has a slight deviation, a deviation occurs in the coaxiality of each sub-pipeline during the plug-in connection;
2) when the integrated members are welded with cylinder bodies of the battery cells, due to differences during welding, the locations of the sub-pipelines relative to the cylinder bodies of the battery cells may be inconsistent, which in turn leads to a deviation in the coaxiality of the sub-pipelines during the plug-in connection;
3) in the solution, during the plug-in connection, a dedicated tool needs to be used, and due to the improper use of the tool or operation problems of construction personnel, a deviation occurs in the coaxiality of the sub-pipelines because of any carelessness; and
in addition, during the plug-in connection, deviations between the sub-pipelines increase with an increase in the number of plug-in connections, such that the greater the number of plug-in connections is, the greater the difficulty in ensuring the coaxiality between the sub-pipelines is. Therefore, during assembly, the yield decreases with the increase in the number of plug-in connections.

To sum up, in the solution, since the sub-pipelines of two adjacent battery cells are difficult to be coaxial, the sub-pipelines may generate displacements relative to the lower cover plates or the lower cover plates generate displacements relative to the cylinder bodies of the battery cells, resulting in a damage to the battery.

### Summary

Some embodiments of the present invention are to provide a high-capacity battery assembly, a repair mechanism, and a repair method for the high-capacity battery assembly, so as to prolong the service life of a high-capacity battery while solving the problem of difficulty in assembling shared pipeline assemblies of existing high-capacity batteries.

A first embodiment of the present invention provides a high-capacity battery assembly, including a high-capacity battery and a repair mechanism, wherein the high-capacity battery includes a housing and m battery cells arranged in the housing, and m>1; the inner cavity of each battery cell includes an electrolyte region and a gas region; the housing is provided with an electrolyte sharing chamber; the electrolyte sharing chamber is in communication with the electrolyte region of the inner cavity of each battery cell; an avoidance hole capable of enabling an electrode terminal of each battery cell to extend out is formed on a housing top plate; and the electrode terminal of each battery cell extends out from the avoidance hole on the housing top plate, and a region of the housing corresponding to the avoidance hole is fixed and sealed with a shell of the battery cell; and
the repair mechanism is connected with the high-capacity battery, and is configured for repairing the high-capacity battery having an attenuated capacity or inhibiting the attenuation speed of the high-capacity battery, so as to improve the performance of the high-capacity battery and prolong the cycle life of the high-capacity battery.

In an embodiment of the present invention, a plurality of battery cells are disposed inside a housing having an electrolyte sharing chamber at the bottom, the electrolyte sharing chamber is in communication with the inner cavities of the battery cells located in the housing, so that electrolyte in the battery cells is shared to ensure the consistency of the battery cells, that is, electrolyte cavities of the battery cells are communicated, so that the electrolyte of all battery cells is in the same system, thereby reducing the differences between the electrolyte of the battery cells, and improving the consistency between the battery cells to a certain extent, thus prolonging the cycle life of the high-capacity battery to a certain extent. Since the electrolyte sharing chamber requires no plug-in connection, it is not necessary to take into account the problem of coaxiality of the plug-in connection in the arrangement direction of the battery cells, therefore requirements for processing precision and assembly precision are lower; and moreover, no dedicated tool is required, therefore the assembly process is relatively simple, the processing difficulty and processing cost of such a high-capacity battery having a sharing system are greatly reduced, and batch production may be implemented. In addition, the repair mechanism may further be used to repair the high-capacity battery having the attenuated capacity or inhibit the attenuation speed of the high-capacity battery, so as to improve the performance of the high-capacity battery and prolong the cycle life of the high-capacity battery.

The repair mechanism may be used to improve the performance of the high-capacity battery and prolong the cycle life of the high-capacity battery at least in the following manners:
in a first aspect, the reduction of active lithium in the high-capacity battery may be inhibited; in a second aspect, electrolyte may be replenished into the high-capacity battery or electrolyte in the high-capacity battery may be replaced; in a third aspect, the formation of lithium dendrites of each battery cell may be inhibited; and in a fourth aspect, a thickened SEI may be thinned.

Based on the above functions, the repair mechanism in the present invention may include an impurity removal member, a magnetic stirring apparatus, a liquid injection and replacement member, and the like, and different repair mechanisms are described in detail below.

In an embodiment of the present invention, at least one repair mechanism is disposed between a housing bottom plate and the bottom of each battery cell, and the repair mechanism is an impurity removal member for removing impurities in electrolyte; and the impurity removal member is of a hollow structure, the inner cavity thereof is filled with an impurity removal material, and a second through hole penetrating through the inner cavity of the impurity removal member and allowing the electrolyte to pass through is formed on the impurity removal member.

The electrolyte inevitably contains a certain amount of impurities, including HF, H₂O and other metal impurity ions, and when the content of these impurities exceeds a standard, the performance of the battery is affected, and the charging and discharging cycle performance of the battery is reduced. In general, electrolyte producers use impurity removal substances to preliminarily remove the above impurities during electrolyte production, so as to improve the quality of the electrolyte. However, during the process of preparing the high-capacity battery, it is discovered that it is inevitable to introduce new impurities during the process of injecting commercially available electrolyte into such a high-capacity battery, or new impurities may be generated in a charging and discharging cycle process of such a high-capacity battery. Therefore, for the high-capacity battery, how to effectively reduce the content of impurities in the electrolyte in the charging and discharging cycle process is a technical problem to be solved urgently at present. In an embodiment of the present invention, the impurity removal member having the impurity removal material is disposed in the housing of the high-capacity battery, the impurity removal material is always immersed in the electrolyte during the operation of the high-capacity battery to remove the impurities in the electrolyte, so as to avoid impacts of the impurities on the performance of the electrolyte, thereby improving the charging and discharging cycle performance of such a high-capacity battery.

In an embodiment, two impurity removal members are provided; and the two impurity removal members are respectively located on two sides of the electrolyte sharing chamber and extend in the length direction of the housing, thereby having the effect of supporting the battery cells while achieving an impurity removal effect.

In an embodiment, the impurity removal member is a hollow box body having a rectangular cross section.

In an embodiment, the size of the impurity removal member is equal to the size of regions of the housing bottom plate on the two sides of the electrolyte sharing chamber in a y direction.

In an embodiment, an inner surface of the housing bottom plate is provided with a limiting guide boss extending in an x direction; and the impurity removal member is located between the limiting guide boss and a sidewall of the housing.

In an embodiment, it is defined that the length direction of the impurity removal member is the x direction, the width direction thereof is the y direction, and the height direction thereof is a z direction; and the second through hole is formed on at least one sidewall of the impurity removal member that is parallel to an xz plane, and is preferably formed on a sidewall close to the electrolyte sharing chamber, so as to ensure that the electrolyte may smoothly enter the inner cavity of the impurity removal member, and the impurity removal material may be fully immersed in the electrolyte, thereby improving the impurity removal effect.

In an embodiment, a plurality of second through holes are formed and are uniformly distributed on the sidewall of the impurity removal member that is parallel to the xz plane.

In an embodiment, the repair mechanism further includes a magnetic stirring apparatus; the magnetic stirring apparatus includes a magneton and a magnetic stirrer; and the magneton is located in the electrolyte sharing chamber, and the magnetic stirrer is disposed outside the housing, and drives the magneton to rotate to stir the electrolyte.

In the charging and discharging cycle process, the magnetic stirrer is placed below the electrolyte sharing chamber, and the electrolyte in the electrolyte sharing chamber is stirred by the rotation of the magneton, so that electrolyte injected by the liquid injection and replacement member may be uniformly mixed with original electrolyte, or electrolyte may be uniformly mixed in the original electrolyte in the electrolyte sharing chamber after the electrolyte is subsequently replenished, thereby ensuring the distribution uniformity of lithium ions, and thus improving the performance of the high-capacity battery and prolonging the cycle life of the high-capacity battery. When cooperating with the impurity removal member, impurities generated in the electrolyte may further be fully absorbed and adsorbed by the impurity removal mechanism.

In an embodiment, the housing top plate is provided with a protrusion portion in a direction away from the housing bottom plate to serve as a gas chamber, and the gas chamber covers a gas port of each battery cell.

In an embodiment, the impurity removal material is at least one of a 4A molecular sieve, a lithiated molecular sieve or α-alumina.

In an embodiment, the impurity removal material is composed of the lithiated molecular sieve and the α-alumina, wherein a mass ratio of the lithiated molecular sieve to the α-alumina is 1: 1, and a mass percentage of the impurity removal material in the electrolyte is 3% to 10%.

In an embodiment, the repair mechanism further includes a liquid injection and replacement member disposed on the housing, and by means of the liquid injection and replacement member, electrolyte may be injected into the high-capacity battery, a gas in the high-capacity battery may be discharged or the electrolyte in the high-capacity battery may be replaced. After a period of time of a charging and discharging cycle of the high-capacity battery, the electrolyte is reduced by decomposition and consumption, resulting in a reduction in the performance of the high-capacity battery, so that electrolyte may be replenished into the electrolyte sharing chamber and the inner cavity of each battery cell by the liquid injection and replacement member, so as to improve the performance of the high-capacity battery; or, after a period of time of the charging and discharging cycle of the high-capacity battery, the performance of the high-capacity battery is affected by the occurrence of impurities in the electrolyte, so that the electrolyte in the electrolyte sharing chamber and the inner cavity of each battery cell may also be replaced by the liquid injection and replacement member, so as to improve the performance of the high-capacity battery. The replacement herein may be partial replacement and may also be complete replacement. In addition, after the electrolyte region of the inner cavity of each battery cell is in communication with the electrolyte sharing chamber, electrolyte may be injected into the inner cavity of each battery cell and the electrolyte sharing chamber again by the liquid injection and replacement member, so as to ensure continuity of the electrolyte. Moreover, the liquid injection and replacement member is disposed on the housing, therefore during liquid replenishment and replacement, an operation space is relatively large, the operation is easy, and the structural stability is high.

In an embodiment, in order to improve the heat dissipation performance of such a high-capacity battery, an avoidance hole capable of enabling a polarity terminal of each battery cell to extend out is formed on the housing; and the polarity terminal of each battery cell extends out from the corresponding avoidance hole, and a region of the housing at the periphery of the avoidance hole is fixed and sealed with the shell of the battery cell.

In an embodiment, the housing includes a first cylinder body having two open ends, and end plate assemblies respectively fixed at the two open ends of the first cylinder body; the avoidance hole is formed on a first cylinder body top plate; the electrolyte sharing chamber is located on a first cylinder body bottom plate; and the liquid injection and replacement member is located on at least one of the end plate assemblies. When an energy storage device is assembled on the basis of such a high-capacity battery assembly, a plurality of high-capacity batteries are arranged in the width direction of the high-capacity batteries, so that the end plate assembly of each high-capacity battery is exposed, therefore when the liquid injection-replacement member is disposed on the end plate assembly, liquid replenishment and replacement operations may be conveniently performed.

In an embodiment, the end plate assembly provided with the liquid injection and replacement member includes a first end sub-plate; and the first end sub-plate is provided with an electrolyte flow channel;
the liquid injection and replacement member is located on the first end sub-plate, and the liquid injection and replacement member includes a liquid injection and replacement member main body, and a blocking member fixed on the liquid injection and replacement member main body; and
a first channel is formed on the liquid injection and replacement member main body for communicating with the electrolyte flow channel; and the blocking member is configured for blocking the electrolyte flow channel to ensure the overall sealing performance of the housing.

In an embodiment, the first cylinder body top plate of the high-capacity battery is provided with a gas chamber; and the gas chamber is in communication with the gas region of the inner cavity of each battery cell. Based on the gas chamber, the gas regions of the battery cells may be communicated to achieve a gas balance, so that gases in the battery cells are shared to ensure the consistency of the battery cells, and the cycle life of the high-capacity battery is prolonged to a certain extent.

In an embodiment, a gas flow channel in communication with the gas chamber is further formed on the first end sub-plate; and
a second channel is formed on the liquid injection and replacement member main body for communicating with the gas flow channel; and the blocking member is further configured for blocking the gas flow channel.

In an embodiment, the liquid injection and replacement member main body is a columnar body, and both the first channel and the second channel are first through holes formed on the liquid injection and replacement member main body.

In an embodiment of the present invention, a plurality of different blocking manners may further be used:
the blocking member may be a cover cap buckled on the liquid injection and replacement member main body.

The blocking member may further include elastic blocking columns sealed in the first channel and the second channel.

When hot melting sealing is used, the blocking member further includes a sealing plate and a first hot melting member;
a stepped hole is formed on the liquid injection and replacement member; the stepped hole penetrates through the first channel and the second channel; and
the sealing plate is fixed on a step surface of the stepped hole, and the first hot melting member is fixed on the sealing plate and in the stepped hole where the sealing plate is located.

As another example, a portion of the liquid injection and replacement member main body may further be used as the blocking member:
the liquid injection and replacement member main body includes an annular fixing member and a rotating member; and the rotating member is coaxially located in the annular fixing member, is in clearance fit with the annular fixing member, and is capable of performing autorotation in the annular fixing member under the action of an external force;
both the first channel and the second channel are third through holes formed on the rotating member;
in a first state, by rotating the rotating member, the first channel is isolated from the electrolyte flow channel, and the second channel is isolated from the gas flow channel. In such a structure, an outer circumferential surface of the rotating member may also be used as the blocking member; and
in a second state, by rotating the rotating member, the first channel is in communication with the electrolyte flow channel, and the second channel is in communication with the gas flow channel.

The first state is a normal charging and discharging cycle state of the high-capacity battery; and
the second state is a state in which electrolyte is replenished into the electrolyte sharing chamber and the inner cavity of each battery cell by the liquid injection and replacement member, or the electrolyte in the electrolyte sharing chamber and the inner cavity of each battery cell is replaced by the liquid injection and replacement member.

In an embodiment, to rotate the rotating member in place at one time, a first positioning mark and a second positioning mark are respectively disposed on the annular fixing member and the rotating member, and when the first positioning mark and the second positioning mark arrive at set locations, the first channel is in communication with the electrolyte flow channel, and the second channel is in communication with the gas flow channel.

In an embodiment, when a portion of the liquid injection and replacement member main body is used as the blocking member, the liquid injection and replacement member main body of the following structure may further be used:
the liquid injection and replacement member main body includes an annular fixing member and a rotating member; and the rotating member is coaxially located in the annular fixing member, is in clearance fit with the annular fixing member, and is capable of performing autorotation in the annular fixing member under the action of an external force;
the first channel and the second channel are the same channel and are the same fourth through hole formed on the rotating member;
in the first state, by rotating the rotating member, the fourth through hole is isolated from the electrolyte flow channel and the gas flow channel; and
in the second state, by rotating the rotating member, the fourth through hole is in communication with the electrolyte flow channel or the gas flow channel.

In an embodiment, to rotate the rotating member in place at one time, the annular fixing member is provided with a first identifier and a second identifier, the rotating member is provided with a third identifier, when the third identifier and the first identifier arrive at set locations, the fourth through hole is in communication with the electrolyte flow channel, and when the third identifier and the second identifier arrive at set locations, the fourth through hole is in communication with the gas flow channel.

In an embodiment of the present invention, an unpacking apparatus operation port and an explosion venting port may be located on different end plate assemblies, for example, the first end sub-plate is provided with the unpacking apparatus operation port; the unpacking apparatus operation port is in communication with one end of the electrolyte sharing chamber, and in the first state, the unpacking apparatus operation port is sealed by a sealing member; and the other end plate assembly is provided with a first explosion venting channel and the explosion venting port, the two ends of the first explosion venting channel are respectively in communication with the gas chamber and the explosion venting port, and an explosion venting mechanism is sealed at the explosion venting port.

In an embodiment of the present invention, the unpacking apparatus operation port and the explosion venting port may be located on the same end plate assembly. In this case, the unpacking apparatus operation port and the explosion venting port may be the same port and may be located on the end plate assembly provided with the liquid injection and replacement member, and the corresponding end plate assembly provided with the liquid injection and replacement member further includes a second end sub-plate; the second end sub-plate is tightly attached to the outermost battery cell in the housing and is fixedly connected with the first end sub-plate; the second end sub-plate is fixedly connected with the first end sub-plate by a screw; a gasket is disposed between the second end sub-plate and the first end plate, and the head of the screw sequentially passes through the second end sub-plate and the gasket to be connected with the first end sub-plate; openings are further formed on the first end sub-plate of the end plate assembly provided with the liquid injection and replacement member to serve as the unpacking apparatus operation port and the explosion venting port; and a gap between the first end sub-plate and the second end sub-plate serves as the first explosion venting channel, the two ends of the first explosion venting channel are respectively in communication with the gas chamber and the explosion venting port, and the explosion venting mechanism is sealed at the explosion venting port. When an energy storage device is assembled on the basis of such a high-capacity battery assembly, a plurality of high-capacity batteries are arranged in the width direction of the high-capacity batteries, so that the end plate assembly of each high-capacity battery is exposed, therefore when the liquid injection and replacement member, the unpacking apparatus operation port and the explosion venting port are disposed on the end plate assembly, corresponding operations may be conveniently performed.

In an embodiment, it is defined that the length direction of the housing is the x direction, the width direction thereof is the y direction, and the height direction thereof is a z direction; the housing includes a second cylinder body, and a housing top plate and a housing bottom plate that cover open ends of the second cylinder body, and the housing top plate and the housing bottom plate are parallel to an xy plane; and the electrolyte sharing chamber is disposed on the housing bottom plate; and
the repair mechanism includes a liquid injection and replacement member, and the liquid injection and replacement member is disposed on at least one first sidewall of the second cylinder body, wherein the first sidewall is a sidewall parallel to a yz plane; and the liquid injection and replacement member is configured for replenishing electrolyte into the electrolyte sharing chamber and the inner cavity of each battery cell, or replacing the electrolyte in the electrolyte sharing chamber and the inner cavity of each battery cell.

In an embodiment of the present invention, the first sidewall of the second cylinder body that is parallel to the yz plane is provided with the liquid injection and replacement member, therefore during liquid replenishment and replacement, the operation space is relatively large, the operation is easy, and the structural stability is high. Moreover, when an energy storage device is assembled on the basis of such a high-capacity battery assembly, a plurality of high-capacity batteries are arranged in the width direction (the y direction) of the high-capacity batteries, so that the first sidewall of each high-capacity battery is exposed, therefore when the liquid injection and replacement member is disposed on the first sidewall, the liquid replenishment and replacement operations may be conveniently performed.

In an embodiment, the first sidewall is provided with an electrolyte flow channel; the liquid injection and replacement member includes a liquid injection and replacement member main body, and a blocking member fixed on the liquid injection and replacement member main body; and a first channel is formed on the liquid injection and replacement member main body, and the two ends of the electrolyte flow channel are respectively in communication with the electrolyte sharing chamber and the first channel of the liquid injection and replacement member; and
the blocking member is configured for blocking the first channel from the outer side of the first sidewall. In a normal charging and discharging cycle process of the high-capacity battery, the first channel is blocked by using the blocking member, thereby ensuring the overall sealing performance of the housing. After the blocking member is disassembled, an external connecting pipe is inserted into the first channel to replenish electrolyte into the electrolyte sharing chamber and the inner cavity of each battery cell, or replace the electrolyte in the electrolyte sharing chamber and the inner cavity of each battery cell.

In an embodiment, in order to reduce material consumption and reduce the material cost of the second cylinder body, a hollow cavity isolated from the electrolyte flow channel is formed on the first sidewall. After the hollow cavity is formed, the weight of the entire high-capacity battery may be reduced at the same time.

In an embodiment, a first blind hole penetrating through the first sidewall is formed on the first sidewall in the x direction to serve as a mounting hole of the liquid injection and replacement member main body; a second hole penetrating through the first sidewall is formed on the first sidewall in the z direction to serve as the electrolyte flow channel; the liquid injection and replacement member main body is a columnar body, which is fixed in the first blind hole and seals the first blind hole; and the first channel is formed on the liquid injection and replacement member main body and is in communication with the electrolyte flow channel.

In an embodiment, the housing top plate of the high-capacity battery is provided with a gas chamber; and the gas chamber is in communication with the gas region of the inner cavity of each battery cell. Based on the gas chamber, the gas regions of the battery cells may be communicated to achieve a gas balance, so that the gases in the battery cells are shared to ensure the consistency of the battery cells, thereby prolonging the cycle life of the high-capacity battery to a certain extent.

In an embodiment, a gas flow channel in communication with the gas chamber is further formed on the first sidewall; a second channel isolated from the first channel is formed on the liquid injection and replacement member main body, and the two ends of the gas flow channel are respectively in communication with the gas chamber and the second channel of the liquid injection and replacement member; and the blocking member is further configured for blocking the second from the outer side of the first sidewall.

In order to increase the open area of the second channel, in an embodiment of the present invention, second channels of different cross sections may further be used, and a porous structure may also be used to increase the open area of the second channel by means of a special arrangement manner:
for example, an L-shaped channel may be used as the second channel, the cross section of a horizontal channel of the L-shaped channel is in a fan ring shape, and the fan ring shape is concentric with the first channel, therefore under the same open area, requirements for the radial size of the liquid injection and replacement member main body are smaller compared with a channel having a circular cross section.

A plurality of through holes may further be used as the horizontal channel of the L-shaped channel, and the plurality of through holes are arranged along the same circumference. Similar to the channel in the fan ring shape, under the same open area, requirements for the radial size of the liquid injection and replacement member main body are smaller compared with the channel having the circular cross section.

In an embodiment, in an embodiment of the present invention, blocking members in a variety of structural forms may be used to block the first channel and the second channel from the outer side of the first sidewall:
the blocking member may only include a nut in threaded connection with the liquid injection and replacement member main body. In order to improve the sealing performance, a sealing ring may be additionally disposed at the threaded connection location, the structure is relatively simple, and the operation is simple.

In order to further improve the sealing performance of the blocking member for the first channel and the second channel, a hot melting sealing manner may further be configured for sealing. In this case, it is necessary to improve the structure of the liquid injection and replacement member, and a hollow member extending in the x direction is coaxially disposed at an end portion of the liquid injection and replacement member main body; the hollow member is located outside the second cylinder body; the blocking member further includes a first rubber ring and a second hot melting member; and the first rubber ring is coaxially fixed in the hollow member, and the second hot melting member is fixed in the first rubber ring in a hot melting manner and blocks the first channel and the second channel.

In an embodiment, the repair mechanism includes a liquid injection and replacement member, and the liquid injection and replacement member includes a liquid injection and replacement member main body, an electrolyte flow pipe section and a blocking member; one end of the electrolyte flow pipe section is fixed on the liquid injection and replacement member main body and penetrates through the first channel; the other end of the electrolyte flow pipe section is in communication with the electrolyte region of the inner cavity of the housing; and the blocking member blocks the first channel from the outer side of the housing.

In an embodiment, a second channel penetrating through the gas region of the inner cavity of the housing is further formed on the liquid injection and replacement member main body; and the blocking member is further configured for blocking the second channel from the outer side of the housing. The second channel may be configured for communicating the gas region of the inner cavity of the housing with the external environment, so as to facilitate smooth liquid replenishment or liquid replacement.

In an embodiment, the liquid injection and replacement member main body is a cylinder, and both the first channel and the second channel are through holes formed on the liquid injection and replacement member main body.

In an embodiment, an annular limiting boss is disposed on an outer circumferential surface of the liquid injection and replacement member main body in the circumferential direction thereof, and is configured for cooperating with the housing to fix the liquid injection and replacement member main body.

In order to increase the open area of the second channel, in an embodiment of the present invention, second channels of different cross sections may further be used, and a porous structure may also be used to increase the open area of the second channel by means of a special arrangement manner:
for example, a second channel of which the longitudinal cross section is in a fan ring shape may be used, and the fan ring shape is concentric with the first channel, therefore under the same open area, requirements for the radial size of the liquid injection and replacement member main body are smaller compared with the channel having the circular cross section.

A plurality of through holes may further be used as the second channel, and the plurality of through holes are arranged along the same circumference. Similar to the channel in the fan ring shape, under the same open area, requirements for the radial size of the liquid injection and replacement member main body are smaller compared with the channel having the circular cross section.

In an embodiment, in order to improve the sealing performance of the first channel and/or the second channel in the charging and discharging cycle process, the blocking member includes a first rubber ring and a second hot melting member;
a counter bore penetrating through the first channel and the second channel is formed in the axial direction of the liquid injection and replacement member main body; and
the first rubber ring is coaxially fixed in the counter bore, and the second hot melting member is fixed in the first rubber ring in the hot melting manner and blocks the first channel and the second channel.

In an embodiment, the blocking member further includes a cover cap buckled at one end of the liquid injection and replacement member main body, wherein one end of the liquid injection and replacement member main body is the end of the liquid injection and replacement member main body that is located outside the housing, so as to further improve the sealing reliability of the first channel and the second channel.

In an embodiment, the housing top plate is provided with a gas chamber; the gas chamber is in communication with the gas region of the inner cavity of each battery cell; and the second channel is in communication with the gas chamber.

In an embodiment, the liquid injection and replacement member main body is coaxially located in the mounting hole, and the annular limiting boss is hermetically welded with a peripheral region of the mounting hole.

In an embodiment, the repair mechanism includes a liquid injection and replacement member, and the liquid injection and replacement member includes a liquid injection and replacement member main body and a blocking member; the liquid injection and replacement member main body is fixed on the housing, and a first channel penetrating through the inner cavity of the housing is formed on the liquid injection and replacement member main body; the blocking member includes a first rubber ring and a first sealing plate; the first rubber ring is coaxially fixed in the first channel, the first sealing plate is fixed on a first end surface of the first rubber ring in the hot melting manner and blocks the first channel; and the first end surface of the first rubber ring is the end surface of the first rubber ring that is away from the housing of the battery.

The liquid injection and replacement member may further include an electrolyte flow pipe section; one end of the electrolyte flow pipe section is fixed on the liquid injection and replacement member main body and penetrates through the first channel; and the other end of the electrolyte flow pipe section is configured for communicating with the electrolyte region of the inner cavity of the housing. The end portion of the electrolyte flow pipe section that is in communication with the electrolyte region of the inner cavity of the housing may directly extend into the bottom of the inner cavity of the housing, and is always immersed in the electrolyte, therefore when liquid replacement is required, the electrolyte in the inner cavity of the housing may be extracted as much as possible, so that the liquid replacement is more thorough.

In an embodiment, a second channel penetrating through the gas region of the inner cavity of the housing is further formed on the liquid injection and replacement member main body; and the second channel may be configured for communicating the gas region of the inner cavity of the housing with the external environment, so as to facilitate smooth liquid replenishment or liquid replacement.

In order to simultaneously block the first channel and the second channel by using the same blocking member, the first channel may be designed to be a stepped through hole formed along the liquid injection and replacement member main body; the second channel is isolated from a small hole of the stepped through hole and penetrates through a large hole of the stepped through hole; the first rubber ring is coaxially fixed in the large hole of the stepped through hole, and the first channel and the second channel may be simultaneously blocked by fixing the first sealing plate on the first end surface of the first rubber ring.

In an embodiment, an axial length of the first rubber ring is greater than an axial length of the large hole of the stepped through hole; one end of the first rubber ring is tightly attached to a step surface of the stepped through hole, and the other end of the first rubber ring extends out from the large hole of the stepped through hole; and the outer side of the other end of the first rubber ring is provided with an annular folded edge in the circumferential direction thereof; and the annular folded edge is tightly attached to an end surface of the large hole of the stepped through-hole. By additionally providing the annular folded edge, the bonding strength between the first rubber ring and the liquid injection and replacement member main body may be improved firstly; and secondly, a contact area between the first sealing plate and the first rubber ring may be increased, such that the bonding strength therebetween may be improved, and the sealing effect is further improved.

In order to increase the open area of the second channel, in an embodiment of the present invention, second channels of different cross sections may further be used, and a porous structure may also be used to increase the open area of the second channel by means of a special arrangement manner:
for example, a second channel of which the longitudinal cross section is in a fan ring shape may be used, and the fan ring shape is concentric with the first channel, therefore under the same open area, requirements for the radial size of the liquid injection and replacement member main body are smaller compared with the channel having the circular cross section.

A plurality of through holes may further be used as the second channel, and the plurality of through holes are arranged along the same circumference. Similar to the channel in the fan ring shape, under the same open area, requirements for the radial size of the liquid injection and replacement member main body are smaller compared with the channel having the circular cross section.

In an embodiment, the blocking member further includes a cover cap buckled at one end of the liquid injection and replacement member main body, wherein one end of the liquid injection and replacement member main body is the end of the liquid injection and replacement member main body that is located outside the housing. A twice sealing manner is used to further improve the sealing reliability of the first channel and the second channel.

In an embodiment, the blocking member further includes a blocking column fixed in the first rubber ring in the hot melting manner.

In an embodiment, an annular limiting boss is disposed on the outer circumferential surface of the liquid injection and replacement member main body in the circumferential direction thereof, and is configured for cooperating with the housing to fix the liquid injection and replacement member main body.

In an embodiment, the sharing chamber is a gas chamber, and the gas chamber is in communication with the gas region of the inner cavity of each battery cell; and the second channel is in communication with the gas chamber.

In an embodiment, the housing is further provided with a gas chamber; the gas chamber is in communication with the gas region of the inner cavity of each battery cell; the repair mechanism includes a gas injection and exhaust member and a liquid injection and replacement member; the gas injection and exhaust member is configured for implementing gas replenishment or exhaust of the gas chamber and the inner cavity of each battery cell; and the liquid injection and replacement member is configured for replenishing electrolyte into the electrolyte sharing chamber and the inner cavity of each battery cell, or replacing the electrolyte in the electrolyte sharing chamber and the inner cavity of each battery cell. The gas injection and exhaust member and the liquid injection and replacement member are disposed on the housing, after a period of time of the charging and discharging cycle of the high-capacity battery, the electrolyte is reduced by decomposition and consumption, resulting in a reduction in the performance of the high-capacity battery, so that electrolyte may be replenished into the electrolyte sharing chamber and the inner cavity of each battery cell by the liquid injection and replacement member, so as to improve the performance of the high-capacity battery; or, after a period of time of the charging and discharging cycle of the high-capacity battery, the performance of the high-capacity battery is affected by the occurrence of impurities in the electrolyte, so that the electrolyte in the electrolyte sharing chamber and the inner cavity of each battery cell may also be replaced by the liquid injection and replacement member, so as to improve the performance of the high-capacity battery. The replacement herein may be partial replacement and may also be complete replacement. **In** addition, after the electrolyte region of the inner cavity of each battery cell is in communication with the electrolyte sharing chamber, electrolyte may be injected into the inner cavity of each battery cell and the electrolyte sharing chamber again by the liquid injection and replacement member, so as to ensure continuity of the electrolyte. During liquid replenishment and replacement, the operation space is relatively large, the operation is easy, and the structural stability is high. In addition, when an internal pressure of the battery is not conducive to liquid replenishment and replacement operations, the internal pressure of the battery may be changed by the gas injection and exhaust member, so that the flow of the electrolyte during liquid injection and replacement is smooth, and the electrolyte may also fully wet the electrode sheet of each battery cell.

In an embodiment, the housing includes a first cylinder body having two open ends, and end plate assemblies respectively fixed at the two open ends of the first cylinder body; the avoidance hole is formed on a first cylinder body top plate; the electrolyte sharing chamber is located on a first cylinder body bottom plate; the gas chamber is located on the first cylinder body top plate; and the gas injection and exhaust member and the liquid injection and replacement member are located on the end plate assemblies. The gas injection and exhaust member and the liquid injection and replacement member may be located on the same end plate assembly and may also be located on different end plate assemblies. When an energy storage device is assembled on the basis of such a high-capacity battery assembly, a plurality of high-capacity batteries are arranged in the width direction of the high-capacity batteries, so that the end plate assembly of each high-capacity battery is exposed, therefore, when the gas injection and exhaust member and the liquid injection and replacement member are disposed on the end plate assembly, liquid replenishment and replacement operations may be conveniently performed.

In an embodiment, the end plate assembly provided with the liquid injection and replacement member includes a first end sub-plate; the first end sub-plate is provided with a gas flow channel and an electrolyte flow channel; and the gas injection and exhaust member and the liquid injection and replacement member are disposed on an outer surface of the first end sub-plate; and
the gas injection and exhaust member includes a gas injection and exhaust member main body, and a first blocking member fixed on the gas injection and exhaust member main body; a first channel is formed on the gas injection and exhaust member main body, and the first blocking member is configured for blocking the first channel from the outer surface side of the first end sub-plate; the two ends of the gas flow channel are respectively in communication with the gas chamber and the first channel of the gas injection and exhaust member; the liquid injection and replacement member includes a liquid injection and replacement member main body, and a second blocking member fixed on the liquid injection and replacement member main body; a second channel is formed on the liquid injection and replacement member main body, and the second blocking member is configured for blocking the second channel from the outer surface side of the first end sub-plate; and the two ends of the electrolyte flow channel are respectively in communication with the electrolyte sharing chamber and the second channel of the liquid injection and replacement member. When the high-capacity battery is in a normal charging and discharging cycle state, the first blocking member is used to block the first channel, and the second blocking member is used to block the second channel to ensure the overall sealing performance of the housing.

In an embodiment, the gas injection and exhaust member main body is a columnar body, and the first channel is a through hole formed on the gas injection and exhaust member main body in the axial direction; the first blocking member is a first cover cap buckled on the gas injection and exhaust member main body; the liquid injection and replacement member is a columnar body, and the second channel is a through hole formed on the liquid injection and replacement member main body in the axial direction; and the second blocking member is a second cover cap buckled on the liquid injection and replacement member main body.

In order to further improve the sealing performance of the gas injection and exhaust member and the liquid injection and replacement member in the normal charging and discharging cycle process of the high-capacity battery, the first blocking member further includes a first hydraulic quick connector parent body sealed in the first channel; and the second blocking member further includes a second hydraulic quick connector parent body sealed in the second channel. Based on the hydraulic quick connector parent bodies, requirements of the liquid injection and replacement processes on the environment may be reduced while the sealing performance of the gas injection and exhaust member and the liquid injection and replacement member is improved.

In an embodiment, the first end sub-plate is provided with an unpacking apparatus operation port; and the other end plate assembly is provided with a first explosion venting channel and an explosion venting port, the two ends of the first explosion venting channel are respectively in communication with the gas chamber and the explosion venting port, and an explosion venting mechanism is sealed at the explosion venting port.

In an embodiment, the end plate assembly provided with the gas injection and exhaust member and the liquid injection and replacement member further includes a second end sub-plate; and the second end sub-plate is tightly attached to the outermost battery cell in the housing and is fixedly connected with the first end sub-plate.

In an embodiment, the second end sub-plate is fixedly connected with the first end sub-plate by a screw; and a gasket is disposed between the second end sub-plate and the first end plate, and the head of the screw sequentially passes through the second end sub-plate and the gasket to be connected with the first end sub-plate.

In an embodiment, openings are further formed on the first end sub-plate of the end plate assembly provided with the gas injection and exhaust member and the liquid injection and replacement member to serve as the unpacking apparatus operation port and the explosion venting port; and a gap between the first end sub-plate and the second end sub-plate serves as the first explosion venting channel, the two ends of the first explosion venting channel are respectively in communication with the gas chamber and the explosion venting port, and the explosion venting mechanism is sealed at the explosion venting port. When the energy storage device is assembled on the basis of such a high-capacity battery assembly, a plurality of high-capacity batteries are arranged in the width direction of the high-capacity batteries, so that the end plate assembly of each high-capacity battery is exposed, therefore when the liquid injection and replacement member, the unpacking apparatus operation port and the explosion venting port are disposed on the end plate assembly, corresponding operations may be conveniently performed.

In an embodiment, the repair mechanism includes a liquid injection and replacement member; the liquid injection and replacement member includes a columnar liquid injection and replacement member main body; the liquid injection and replacement member main body is fixed on the housing, a fifth channel penetrating through the electrolyte region of the inner cavity of the housing is formed on the liquid injection and replacement member main body, and a first pipe fitting is sleeved in the fifth channel; and the end portion of the first pipe fitting that is located outside the housing is sealed. After a period of time of the charging and discharging cycle of the high-capacity battery, the electrolyte is reduced by decomposition and consumption, resulting in a reduction in the performance, so that the end portion of the first pipe fitting that is located outside the housing may be opened, and electrolyte is injected into the inner cavity of the housing by the first pipe fitting, the first channel and the fifth channel, so as to improve the performance of the battery; or, after a period of time of the charging and discharging cycle of the high-capacity battery, the performance of the battery is affected by the occurrence of impurities in the electrolyte, so that the electrolyte in the inner cavity of the housing may also be replaced by the liquid injection and replacement member, so as to improve the performance of the battery. The replacement herein may be partial replacement and may also be complete replacement. After the liquid injection or liquid replacement operation is completed, the end portion of the first pipe fitting that is located outside the housing is sealed, therefore the operation is simple and convenient, and a plurality of liquid injection and replacement operations may be executed at the same time.

In an embodiment, a sixth channel penetrating through the gas region of the inner cavity of the housing is formed on the liquid injection and replacement member main body, and a second pipe fitting is sleeved in the sixth channel; and the end portion of the second pipe fitting that is located outside the housing is sealed. The gas region of the inner cavity of the housing may be communicated with the external environment based on the second pipe fitting and the sixth channel, so as to facilitate smooth liquid injection or liquid replacement.

In an embodiment, the first pipe fitting and the second pipe fitting are plastic pipes that do not react with the electrolyte, and the end portions located outside the housing are sealed in a heat-shrinkable extrusion sealing manner, therefore the sealing manner and structure are relatively simple while the sealing reliability is relatively high.

In order to further improve the sealing reliability of the liquid injection and replacement member main body in the charging and discharging cycle process of the battery, the liquid injection and replacement member further includes a sealing rubber plug; the fifth channel is a stepped through hole formed along the liquid injection and replacement member main body; the sixth channel is isolated from a small hole of the stepped through hole and penetrates through a large hole of the stepped through hole; the end portions of the first pipe fitting and the second pipe fitting that are located outside the housing are located in the large hole of the stepped through hole; and the sealing rubber plug is plugged into the large hole of the stepped through hole to seal the fifth channel and the sixth channel.

In an embodiment, a sealant layer is disposed on a step surface of the fifth channel, and the end portions of the first pipe fitting and the second pipe fitting that are located outside the housing extend out from the sealant layer. Based on the sealant layer, the stability of the first pipe fitting and the second pipe fitting in the fifth channel and the sixth channel may be improved, and meanwhile the sealing effect between the pipe fittings and the corresponding channels may further be achieved.

In an embodiment, the liquid injection and replacement member further includes a sealing end cover; and the sealing end cover is detachably fixed on the liquid injection and replacement member main body to seal the fifth channel and the sixth channel again, so that the sealing reliability of the liquid injection and replacement member main body in the charging and discharging cycle process of the battery may be further improved.

In an embodiment, the repair mechanism includes a liquid injection and replacement member; and the liquid injection and replacement member includes a liquid injection and replacement member main body and a blocking member;
the liquid injection and replacement member main body is columnar and is fixed on the housing, and a seventh channel penetrating through the electrolyte region of the inner cavity of the housing is formed on the liquid injection and replacement member main body; the blocking member includes n groups of sealing units, wherein n is an integer greater than or equal to 1; when n is equal to 1, the sealing units are disposed in the seventh channel to seal the seventh channel; and when n is greater than 1, the n groups of sealing units are sequentially stacked in the seventh channel in the axial direction of the seventh channel to seal the seventh channel; and
each group of sealing units includes a first sealing plug and a sealing coating, which are sequentially stacked in the axial direction of the seventh channel, the first sealing plug is located on the side close to the inner cavity of the housing, and the sealing coating is located on the side away from the inner cavity of the housing. After a period of time of the charging and discharging cycle of the battery, the electrolyte is reduced by decomposition and consumption, resulting in a reduction in the performance, so that the sealing units may be sequentially taken out, the sealing coating in each sealing unit may be removed by dissolving, tearing or in other manners, the sealing plug may be pulled out by using a tool, and then electrolyte is injected into the inner cavity of the housing by the seventh channel, so as to improve the performance of the battery; or, after a period of time of the charging and discharging cycle of the battery, the performance of the battery is affected by the occurrence of impurities in the electrolyte, so that the sealing units may also be taken out by the above process, and the electrolyte in the inner cavity of the housing may be replaced by the seventh channel, so as to improve the performance of the battery. After the liquid injection or liquid replacement operation is completed, the seventh channel is sealed from the outer side of the housing by using at least one group of sealing units, so that the operation is simple and convenient. In an embodiment of the present invention, twice sealing may be performed on the seventh channel on the basis of each group of sealing units, thereby ensuring that the sealing reliability at the location of the seventh channel is higher in the charging and discharging cycle process of the battery. In addition, in an embodiment of the present invention, the sealing units have simple structures, convenient manufacturing and sealing processes, and lower costs.

In an embodiment, in order to prevent the blocking member from falling out from the seventh channel due to the pressure of the inner cavity of the housing, in an embodiment of the present invention, an annular clamping groove is formed on an inner wall of the seventh channel in the circumferential direction thereof; and a limiting retainer ring is mounted in the annular clamping groove; an end surface of the outermost sealing unit in the seventh channel abuts against the limiting retainer ring, and the limiting retainer ring limits axial movement of the n groups of sealing units in the seventh channel, wherein the outermost sealing unit in the seventh channel is a sealing unit in the axial direction of the seventh channel that is farthest from the inner cavity of the housing.

In an embodiment, the blocking member further includes a second sealing plug; and the second sealing plug is stacked on the outer side of the outermost sealing unit in the axial direction of the seventh channel, and an end surface of the second sealing plug abuts against the limiting retainer ring. After the second sealing plug is additionally provided, the limiting retainer abuts against the second sealing plug, thereby avoiding the problem of the limiting retainer ring abutting against the sealing coating to break the sealing performance of the sealing coating.

In an embodiment, an eighth channel penetrating through the gas region of the inner cavity of the housing is formed on the liquid injection and replacement member main body; the seventh channel is a stepped through hole formed along the liquid injection and replacement member main body; the eighth channel is isolated from a small hole of the stepped through hole and penetrates through a large hole of the stepped through hole; and the blocking member is disposed in the large hole of the stepped through hole. Based on the eighth channel, the gas region of the inner cavity of the housing may be communicated with the external environment, so as to facilitate smooth liquid injection or liquid replacement. Meanwhile, after the seventh channel is designed to be the stepped through hole, the blocking member may block the seventh channel and the eighth channel at the same time, so that the structure is simple, and the operation is convenient.

In an embodiment, the large hole of the stepped through hole is a tapered hole, and a small end of the tapered hole is close to the small hole of the stepped through hole. It may be understood that the blocking member uses a tapered column structure adapted to the tapered hole, thereby facilitating the disassembly of the blocking member due to such a design.

In an embodiment, the liquid injection and replacement member further includes an electrolyte communication pipe section; one end of the electrolyte communication pipe section is fixed on the liquid injection and replacement member main body and penetrates through the seventh channel; and the other end of the electrolyte communication pipe section is configured for communicating with the electrolyte region of the inner cavity of the housing.

In an embodiment, a sealing varnish that does not react with the electrolyte is used as the sealing coating.

In an embodiment, the top of the housing is provided with a gas chamber, and each battery cell implements the intercommunication of the gas region of each battery cell by the gas chamber; the gas chamber is provided with a first opening in communication with the inner cavity of the gas chamber; the electrolyte sharing chamber is provided with a second opening in communication with the inner cavity of the electrolyte sharing chamber; and
the repair mechanism includes a liquid injection and replacement mechanism, and the liquid injection and replacement mechanism includes a first one-way valve and a second one-way valve; and the first one-way valve is disposed on the first opening, the second one-way valve is disposed on the second opening, and the first one-way valve and the second one-way valve have the same structure. The first one-way valve and the second one-way valve are disposed on the gas chamber and the electrolyte sharing chamber of the high-capacity battery, and the first one-way valve and the second one-way valve may only be opened from outside to inside, so that the first one-way valve and the second one-way valve may reliably seal the first opening and the second opening of the high-capacity battery when the high-capacity battery works normally. In addition, the first one-way valve and the second one-way valve may also be directly connected with a liquid replenishment and replacement apparatus after a period of time of use of the high-capacity battery without the need to perform corresponding disassembly or replacement, so that liquid replenishment and liquid replacement operations may be very conveniently performed on the high-capacity battery, and moreover, the liquid replenishment and liquid replacement operations may be executed multiple times.

In an embodiment, the first one-way valve includes a fixing sleeve, a sealing sleeve and a sealing assembly; the fixing sleeve is mounted on the first opening and is hermetically connected with the first opening; the sealing sleeve is mounted in the fixing sleeve, one end of the inner cavity of the sealing sleeve is provided with a spring limiting plate, the other end thereof is provided with a positioning plate, and both the spring limiting plate and the positioning plate are hollowed-out plates; the sealing assembly includes a third sealing plate, a sealing column and a compression spring, the sealing column is disposed in the sealing sleeve, the two ends of the sealing column respectively pass through the spring limiting plate and the positioning plate, the sealing column is provided with a spring baffle, the compression spring is sleeved on the sealing column and is located between the spring limiting plate and the spring baffle, the third sealing plate is disposed at the end of the sealing column that passes through the spring limiting plate, and the third sealing plate may seal the port of the sealing sleeve under the action of the compression spring; and the end of the sealing column that passes through the positioning plate extends to the outside of the sealing sleeve. When the one-way valve of the structure is opened, the one-way valve may only be opened by an external gas or liquid having a certain pressure or by an external acting force, so that reliable sealing of the first opening and the second opening may be achieved when the high-capacity battery works normally. Meanwhile, when the liquid replenishment and replacement operations are performed, the one-way valve is directly connected with the external liquid replenishment and replacement apparatus, and the one-way valve of the structure not only facilitates convenient opening during liquid replenishment and replacement, but also facilitates automatic sealing of the first opening and the second opening in a timely manner after the liquid replenishment and replacement are completed, thereby ensuring that the electrolyte in the high-capacity battery is not affected by external air.

In an embodiment, an inner wall of the fixing sleeve is provided with a first stepped hole, an outer wall of the sealing sleeve is provided with an annular boss, and the annular boss of the sealing sleeve cooperates with a step surface of the first stepped hole for positioning. Therefore, a reliable connection between the sealing sleeve and the fixing sleeve may be ensured, thereby preventing the sealing sleeve from being pushed away from the fixing sleeve by an excessive pressure of the external gas or liquid.

In an embodiment, the high-capacity battery assembly further includes a pressure relief valve, the pressure relief valve is connected to the second one-way valve, and the pressure relief valve includes an opening assembly and a pressure relief assembly; the pressure relief assembly includes an outer pipe section and a pressure relief film disposed in the outer pipe section; the outer pipe section is connected with the fixing sleeve; and the opening assembly includes an inner pipe section and a jacking and pressing plate, the inner pipe section is nested into the outer pipe section and is located on the end of the outer pipe section that is away from the pressure relief film, the jacking and pressing plate is a hollowed-out plate, which is fixed in the inner pipe section, and is configured for: when the pressure relief valve is connected with the second one-way valve, jacking and pressing the sealing column to open the second one-way valve, so that the inner cavity of the pressure relief valve is in communication with the inner cavity of the electrolyte sharing chamber.

In an embodiment, the outer pipe section is connected with the fixing sleeve by conical pipe threads, and a thread sealant is coated between connecting threads to improve the sealing reliability at the joint of the second one-way valve and the pressure relief valve.

In an embodiment, a first sealing ring is disposed between an outer wall of the inner pipe section and an inner wall of the fixing sleeve. The first sealing ring implements primary sealing of the pressure relief valve and the second one-way valve, meanwhile, the thread sealing between the outer pipe section of the pressure relief valve and the second one-way valve implements secondary sealing, and the twice sealing further ensures the sealing performance of the connection between the pressure relief valve and the second one-way valve.

In an embodiment, an inner wall of the outer pipe section is provided with an annular clamping platform, the outer wall of the inner pipe section is provided with an annular step, and the annular clamping platform of the outer pipe section performs axial positioning on the annular step of the inner pipe section, so that the outer pipe section drives the inner pipe section to move axially.

In an embodiment, the high-capacity battery assembly further includes a blocking cap, the blocking cap is connected to the first one-way valve, and the blocking cap is a circular sealing cover having an open end, which is configured for sealing the first opening.

In an embodiment, the blocking cap is connected with the first one-way valve by conical pipe threads, and a thread sealant is coated between connecting threads.

In an embodiment, the high-capacity battery assembly further includes two blocking caps, the two blocking caps are respectively connected to the first one-way valve and the second one-way valve, and the blocking caps are circular sealing covers having one open ends, which are configured for sealing the first opening and the second opening.

In an embodiment, the gas chamber and the electrolyte sharing chamber are formed by a housing, a plurality of battery cells are placed side by side in the housing, and an avoidance hole is formed on the top of the housing at a location corresponding to the polarity terminal of each battery cell, and after the polarity terminals of the battery cells pass through the avoidance hole, the battery cells are connected in parallel; and sharing chambers are respectively disposed at the top and the bottom of the housing, the sharing chamber at the top is a gas chamber, the sharing chamber at the bottom is an electrolyte sharing chamber, the first opening is disposed on the gas chamber, and the second opening is disposed on the electrolyte sharing chamber.

In an embodiment, the repair mechanism includes a liquid replenishment and replacement apparatus, and the liquid replenishment and replacement apparatus includes an outer box body, and a rotating assembly, a jacking and pushing assembly, a trepanning assembly, a liquid replenishment and replacement assembly and a hole sealing assembly, which are disposed in the outer box body;
the outer box body is provided with a liquid replenishment and replacement interface;
the trepanning assembly, the liquid replenishment and replacement assembly and the hole sealing assembly are all connected to the rotating assembly, and the rotating assembly is capable of respectively rotating the trepanning assembly, the liquid replenishment and replacement assembly and the hole sealing assembly to the liquid replenishment and replacement interface; and
the jacking and pushing assembly provides a linear thrust, so that the trepanning assembly, the liquid replenishment and replacement assembly and the hole sealing assembly move toward the liquid replenishment and replacement interface; and the trepanning assembly, the liquid replenishment and replacement assembly and the hole sealing assembly are capable of implementing trepanning, liquid replenishment and replacement, and hole sealing operations under an acting force of the jacking and pushing assembly.

The trepanning assembly, the liquid replenishment and replacement assembly and the hole sealing assembly are integrated in the outer box body, so that the integration level of the apparatus is better, the liquid replenishment and replacement costs are lower, and when liquid replenishment and replacement operations are performed on the battery, the trepanning, liquid replenishment and replacement, and hole sealing operations may be implemented by just connecting the battery once, so that the operations are simple.

In an embodiment, in the liquid replenishment and replacement apparatus, the rotating assembly comprises at least one rotary table and a rotation drive unit, and the rotation drive unit includes a rotating shaft and a rotating motor; and the trepanning assembly, the liquid replenishment and replacement assembly and the hole sealing assembly are all mounted on the rotary table, the rotary table is fixed on the rotating shaft, the rotating motor is connected with the rotating shaft, and the two ends of the rotating shaft are connected with the outer box body by bearings. The rotating assembly of the structure may reliably mount the trepanning assembly, the liquid replenishment and replacement assembly and the hole sealing assembly, and may also accurately rotate the trepanning assembly, the liquid replenishment and replacement assembly and the hole sealing assembly to the liquid replenishment and replacement interface.

In an embodiment, in the liquid replenishment and replacement apparatus, there are preferably two rotary tables, the two rotary tables may stably support the trepanning assembly, the liquid replenishment and replacement assembly and the hole sealing assembly, and may also reduce the number of parts of the entire apparatus as much as possible. A front turntable and a rear turntable are fixed by a plurality of screw rods, so that the structure of the entire rotating assembly is more stable.

In an embodiment, in the liquid replenishment and replacement apparatus, the jacking and pushing assembly includes a jacking and pushing motor, a jacking and pushing rod and a gear rack assembly, an output shaft of the jacking and pushing motor is connected with a gear to drive the gear to rotate, the gear rotates to drive a rack to move linearly, the jacking and pushing rod is connected with the rack, the jacking and pushing rod applies a linear thrust under the driving of the rack, the jacking and pushing assembly may not only accurately apply a forward linear thrust, but also withdraw the linear thrust reversely after a corresponding operation is completed.

In an embodiment, in the liquid replenishment and replacement apparatus, the end portion of the jacking and pushing rod at which the linear thrust is applied has a cambered surface, and the cambered surface forms a point contact when the thrust is applied, so that the jacking and pushing rod may apply the thrust more accurately.

In an embodiment, in the liquid replenishment and replacement apparatus, the trepanning assembly includes a mounting sleeve, a mounting rod and a trepanning unit, the mounting rod cooperates with the mounting sleeve to reliably mount the trepanning unit on the rotating assembly, and the trepanning unit may reliably form, on the battery, a channel in communication with the inner cavity of the battery, therefore the trepanning operation is simple and reliable.

In an embodiment, in the liquid replenishment and replacement apparatus, the trepanning assembly further includes a trepanning positioning spring, and the trepanning positioning spring is sleeved on an auger bit and is configured for controlling the feed amount of the trepanning unit; and under the jacking and pushing of the trepanning positioning spring, the feeding of the auger bit is relatively mild and stable, thereby avoiding a damage to the auger bit by sudden feeding. Meanwhile, the trepanning positioning spring may provide an acting force after the trepanning operation is completed, to restore the trepanning unit to an initial location, so as to facilitate the liquid replenishment and replacement operations.

In an embodiment, in the liquid replenishment and replacement apparatus, the liquid replenishment and replacement assembly mainly includes a liquid injection inner cylinder, a liquid injection outer cylinder and a liquid injection spring. The liquid replenishment and replacement assembly has a simple structure, and is capable of performing the liquid replenishment and replacement operations on the battery to improve the performance thereof.

In an embodiment, in the liquid replenishment and replacement apparatus, in order to ensure the sealing performance at the joint of the liquid injection inner cylinder and a liquid replenishment and replacement connector of the battery, an end portion of the liquid injection inner cylinder is provided with a tapered nozzle, and the liquid injection inner cylinder is hermetically connected with a channel of the liquid replenishment and replacement connector of the battery by the tapered nozzle.

In an embodiment, in the liquid replenishment and replacement apparatus, the hole sealing assembly includes a hole sealing spring, a hole sealing cylinder body and a hole sealing push rod, the hole sealing push rod is disposed in the hole sealing cylinder body and is capable of jacking and pushing the sealing plug under the action of the jacking and pushing assembly to seal the liquid replenishment and replacement connector of the battery. Therefore, the hole sealing assembly is simple in structure and reliable in hole sealing.

In an embodiment, the repair mechanism further includes a liquid replenishment and replacement connecting assembly; the liquid replenishment and replacement connecting assembly includes a first liquid replenishment and replacement connector and a second liquid replenishment and replacement connector; and an insertion section of the first liquid replenishment and replacement connector is inserted into a connecting sleeve of the second liquid replenishment and replacement connector, so as to implement a plug-in connection of the first liquid replenishment and replacement connector and the second liquid replenishment and replacement connector, partial pipelines of the connected first liquid replenishment and replacement connector and the second liquid replenishment and replacement connector overlap with each other, so that the length of a pipeline between the high-capacity battery and the liquid replenishment and replacement apparatus may be effectively reduced, so as to facilitate relevant operations of the liquid replenishment and replacement apparatus on the high-capacity battery. Meanwhile, the insertion section of the first liquid replenishment and replacement connector is inserted into the connecting sleeve of the second liquid replenishment and replacement connector, so as to implement plug-in positioning and mounting of the first liquid replenishment and replacement connector and the second liquid replenishment and replacement connector, therefore the positioning of the first liquid replenishment and replacement connector and the second liquid replenishment and replacement connector is more reliable, and the sealing performance between the first liquid replenishment and replacement connector and the second liquid replenishment and replacement connector may also be improved. The first liquid replenishment and replacement connector and the second liquid replenishment and replacement connector are connected by flanges, which are very convenient to connect and disassemble, and it is very convenient to connect and disassemble the liquid replenishment and replacement apparatus and the high-capacity battery due to this fixing manner.

In the liquid replenishment and replacement connecting assembly, a first sealing ring is disposed at the joint of a first connecting flange and a second connecting flange, the first sealing ring may ensure the sealing performance at the joint of the first liquid replenishment and replacement connector and the second liquid replenishment and replacement connector, meanwhile, a second sealing ring is further disposed between an annular boss of the first liquid replenishment and replacement connector and an annular notch of the second liquid replenishment and replacement connector, and the second sealing ring further improves the sealing performance at the joint of the first liquid replenishment and replacement connector and the second liquid replenishment and replacement connector.

In the liquid replenishment and replacement connecting assembly, the first liquid replenishment and replacement connector is fixedly connected with the high-capacity battery by an annular limiting boss on a connector body, and the connection manner may implement accurate mounting of the first liquid replenishment and replacement connector, and also facilitate the implementation of the sealing at the joint of the first liquid replenishment and replacement connector and the high-capacity battery.

In the liquid replenishment and replacement connecting assembly, an annular chamfer is disposed on the end portion of the connector body of the first liquid replenishment and replacement connector that is inserted into the second liquid replenishment and replacement connector, and the annular chamfer has a guiding and positioning effect, thereby facilitating the plug-in connection of the first liquid replenishment and replacement connector and the second liquid replenishment and replacement connector.

In the liquid replenishment and replacement connecting assembly, a channel in the first liquid replenishment and replacement connector includes a ninth channel and a tenth channel, which are isolated from each other, the ninth channel is configured for communicating with the electrolyte region of the high-capacity battery, and the tenth channel is configured for communicating with the gas region of the high-capacity battery. During liquid replenishment and replacement, the tenth channel communicates the gas region of the inner cavity of the high-capacity battery with the inner cavity of the liquid replenishment and replacement apparatus, and the internal pressure of the high-capacity battery is changed by the tenth channel, so that the flow of the electrolyte during liquid replenishment and replacement is smooth, and the electrolyte may also fully wet the electrode sheet of each battery cell in the high-capacity battery.

In the liquid replenishment and replacement connecting assembly, an electrolyte pipe section is connected to the ninth channel, the electrolyte pipe section is always immersed in the electrolyte region of the high-capacity battery, therefore when liquid replacement is required, the electrolyte in the inner cavity of the high-capacity battery may be extracted as much as possible, so that the liquid replacement is more thorough.

In the liquid replenishment and replacement connecting assembly, the connector body is further provided with a sealing channel penetrating through the channel, a rubber ring is disposed in the sealing channel, and when the sealing channel is blocked, the rubber ring is configured for cooperating with the sealing plug to realize reliable sealing of the sealing channel.

In the liquid replenishment and replacement connecting assembly, the ninth channel and the tenth channel are L-shaped channels, and the L-shaped channels facilitate the ninth channel and the tenth channel to respectively communicate with the electrolyte region and the gas region of the high-capacity battery.

In an embodiment, the repair mechanism includes a liquid injection and replacement and explosion venting pipe member; and the liquid injection and replacement and explosion venting member includes a liquid injection and replacement member and an explosion venting member;
the liquid injection and replacement member includes a columnar liquid injection and replacement member main body and a third blocking member; the liquid injection and replacement member main body is fixed on the housing, and a third channel penetrating through the electrolyte region of the inner cavity of the housing is formed on the liquid injection and replacement member main body; the third blocking member is configured for blocking the third channel; and the third blocking member may be disengaged from the third channel under the action of a thermal runaway pressure or temperature of a lithium-ion battery; and
the explosion venting pipe member includes an explosion venting pipe and an explosion venting film fixed in the explosion venting pipe; and the explosion venting pipe is coaxially and hermetically sleeved with the liquid injection and replacement member main body in a detachable manner.

After a period of time of the charging and discharging cycle of the battery, the electrolyte is reduced by decomposition and consumption, resulting in a reduction in the performance, so that the explosion venting pipe member may be disassembled to open the third blocking member, and electrolyte is replenished into the inner cavity of housing by the third channel on the liquid injection and replacement member main body, so as to improve the performance of the battery; or, after a period of time of the charging and discharging cycle of the battery, the performance of the battery is affected by the occurrence of impurities in the electrolyte, so that the electrolyte in the inner cavity of the housing may also be replaced by the liquid injection and replacement member, so as to improve the performance of the battery. The replacement herein may be partial replacement and may also be complete replacement. After the liquid replenishment or liquid replacement operation is completed, the third channel is blocked from the outer side of the housing by using the third blocking member, and the explosion venting pipe member is mounted, therefore the operation is simple and convenient, and the liquid injection and replacement operations may be executed multiple times. When thermal runaway occurs in the battery, under the action of an internal pressure or temperature, the third blocking member is disengaged from the third channel, enters the explosion venting pipe along with thermal runaway flue gas and a part of the electrolyte by the third channel, and breaks through the explosion venting film to be discharged. Based on the liquid injection and replacement and explosion venting member, three functions of liquid injection, liquid replacement and explosion venting of the lithium-ion battery may be completed, so that the lithium-ion battery having the functional member does not need to be provided with three corresponding members for the three functions, therefore the structure is simple, and the cost is lower.

In an embodiment, a fourth channel penetrating through the gas region of the inner cavity of the housing is further formed on the liquid injection and replacement member main body; the fourth channel and the third channel are isolated from each other; the third blocking member is further configured for blocking the fourth channel; and the fourth channel may be configured for communicating the gas region of the inner cavity of the housing with the external environment, so as to facilitate smooth liquid replenishment or liquid replacement.

In an embodiment, the third blocking member is solid paraffin filled in the third channel and the fourth channel.

In an embodiment, the liquid injection and replacement and explosion venting member further includes an electrolyte communication pipe and a gas communication pipe; the third channel penetrates through the electrolyte region of the inner cavity of the housing by the electrolyte communication pipe; and the fourth channel penetrates through the gas region of the inner cavity of the housing by the gas communication pipe.

In an embodiment, the liquid injection and replacement member main body is a cylinder; a first blind hole is formed in the axial direction of the cylinder; a second blind hole and a third blind hole, which are isolated from each other, are formed in the bottom of the blind hole in the axial direction of the cylinder; a fifth through hole and a sixth through hole penetrating through the second blind hole and the third blind hole are respectively formed in the radial direction of the cylinder; the second blind hole and the fifth through hole form the fourth channel; the third blind hole and the sixth through hole form the third channel; and the explosion venting pipe is hermetically sleeved in the first blind hole.

In an embodiment, an outer wall of the explosion venting pipe is in threaded connection with an inner wall of the first blind hole.

In an embodiment, one end of the fourth channel is located in the inner cavity of the housing and is in communication with the gas region of the inner cavity of the housing.

In an embodiment, one end of the electrolyte communication pipe is fixed with one end of the third channel, and the other end port of the electrolyte communication pipe is close to the housing bottom plate; and in the height direction of the housing, the highest location of the electrolyte communication pipe is higher than a liquid level of electrolyte in the inner cavity of the housing.

In an embodiment, the housing is further provided with a gas chamber; the gas chamber is in communication with the gas region of the inner cavity of each battery cell; the repair mechanism includes a functional interface; the functional interface includes a columnar body, a second explosion venting mechanism, a fourth blocking member and a fifth blocking member; a liquid channel, a gas channel and a second explosion venting channel are formed on the columnar body; one end port of the liquid channel is in communication with the electrolyte sharing chamber, and the other port is provided with the fourth blocking member; one end port of the gas channel is in communication with the gas chamber, and the other port is provided with the fifth blocking member; and one end port of the second explosion venting channel is in communication with the gas chamber, and the other port is provided with the second explosion venting mechanism. After a period of time of the charging and discharging cycle of the high-capacity battery, the electrolyte is reduced by decomposition and consumption, resulting in a reduction in the performance of the high-capacity battery, so that electrolyte may be replenished into the housing of the high-capacity battery by the liquid channel on the functional interface, so as to improve the high-capacity battery; or, after a period of time of the charging and discharging cycle of the high-capacity battery, the performance of the high-capacity battery is affected by the occurrence of impurities in the electrolyte, so that the electrolyte in the housing of the high-capacity battery may also be replaced by the liquid channel, so as to improve the performance of the high-capacity battery. The replacement herein may be partial replacement and may also be complete replacement. When the gas pressure in the high-capacity battery is not conducive to the liquid injection and replacement operations, the gas pressure in the high-capacity battery may be reduced by discharging gases to the outside by the gas channel, to ensure smooth flow of the electrolyte during liquid injection and replacement, and the electrolyte may also fully wet the electrode sheet of each battery cell. When thermal runaway occurs in the high-capacity battery, a thermal runaway flue gas generated in the high-capacity battery may be released by the second explosion venting channel, to avoid the occurrence of a more serious accident, thereby improving the safety of the high-capacity battery. The functional interface integrates the liquid channel, the gas channel and the second explosion vent channel on one columnar body, thereby facilitating the processing of parts and the assembly of the high-capacity battery.

In an embodiment, the housing includes a first cylinder body having two open ends, and end plate assemblies respectively fixed at the two open ends of the first cylinder body; the avoidance hole is formed on a first cylinder body top plate; the electrolyte sharing chamber is located on a first cylinder body bottom plate; the gas chamber is located on the first cylinder body top plate; and the functional interface is located on one of the end plate assemblies. When an energy storage device is assembled on the basis of such a high-capacity battery assembly, a plurality of high-capacity batteries are arranged in the width direction of the high-capacity batteries, so that the end plate assembly of each high-capacity battery is exposed, therefore when the functional interface is disposed on the end plate assembly, the liquid replenishment and replacement operations may be conveniently performed, and a reasonable layout of an explosion venting pipeline in the energy storage device may be facilitated.

In an embodiment, the end plate assembly provided with the functional interface includes a first end sub-plate, and the first end sub-plate is provided with a communication channel in communication with the gas channel or an electrolyte channel.

In an embodiment, the communication channel is composed of a groove formed on the first end sub-plate in the height direction or a blocking plate fixedly covered on the groove.

In an embodiment, the end plate assembly provided with the gas injection and exhaust member and the liquid injection and replacement member further includes a second end sub-plate; and the second end sub-plate is tightly attached to the outermost battery cell in the housing and is fixedly connected to the first end sub-plate.

In an embodiment, the second end sub-plate is fixedly connected with the first end sub-plate by a screw; and a gasket is disposed between the second end sub-plate and the first end plate, and the head of the screw sequentially passes through the second end sub-plate and the gasket to be connected with the first end sub-plate.

In an embodiment, the fourth blocking member is a plug provided with external threads; and the fourth blocking member has the same structure as the fifth blocking member.

In an embodiment, the second explosion venting mechanism is an explosion venting film.

In an embodiment, the repair mechanism is a slow-release lithium replenishment apparatus; the electrolyte sharing chamber is located at the bottom of the housing, and the slow-release lithium replenishment apparatus is disposed in the electrolyte sharing chamber;
the slow-release lithium replenishment apparatus includes an outer shell and lithium salt particles disposed in the outer shell, the outer shell is insoluble in the electrolyte, and at least one micropore is formed on a sidewall of the outer shell, so that lithium ions of the lithium salt particles are slowly released in the electrolyte in the housing. Therefore, continuous and slow lithium replenishment of the high-capacity battery is realized, and the defects of lithium dendrites and SEI film instability caused by excessively adding lithium ions at a time are avoided.

In an embodiment, an inorganic lithium salt that is difficult to dissolve in the electrolyte is selected as the lithium salt particles, when the inorganic lithium salt is dissolved in the electrolyte, the use amount is relatively large, the solubility in the electrolyte is lower, the released lithium ions may compensate for the loss of active lithium in the high-capacity battery, and may also repair an SEI film at the same time, thereby prolonging the cycle life of the high-capacity battery.

In an embodiment, the outer shell is a plastic outer shell that is convenient to process and lower in cost.

In an embodiment, one end of the slow-release lithium replenishment apparatus is detachably and hermetically mounted on a sidewall or an end portion of the hollow member, and the slow-release lithium replenishment apparatus of the structure may be replaced with a new slow-release lithium replenishment apparatus after the lithium salt particles in the housing are consumed.

In an embodiment, the slow-release lithium replenishment apparatus further includes a sealing cover fixedly connected with the outer shell, the sealing cover is provided with external threads, a through hole provided with internal threads is formed in a sidewall or an end portion of the housing, the sealing cover is in threaded connection with the through hole on the housing, and a sealing gasket is mounted at the threaded connection location for sealing.

In an embodiment, one end of the slow-release lithium replenishment apparatus is fixedly mounted on a sidewall or an end portion of the housing.

In an embodiment, the slow-release lithium replenishment apparatus further includes a fixing block, the fixing block is provided with a mounting column, the outer shell is sleeved on the mounting column, a sidewall or end portion of the housing is integrally provided with a mounting base, the fixing block is mounted in a through hole of the mounting base in an interference fit manner, and the fixing block is welded with an inner wall of the through hole of the mounting base.

In an embodiment, positive terminals of all battery cells are connected to serve as a total positive electrode, and negative terminals of all battery cells are connected to serve as a total negative electrode;
the repair mechanism includes an automatic lithium replenishment apparatus; the automatic lithium replenishment apparatus includes a lithium source, a lithium replenishment wire, a resistor and an inductive switch; and
the lithium source is placed in the electrolyte sharing chamber; one end of the lithium replenishment wire extends into the housing to be connected with the lithium source, and the other end of the lithium replenishment wire extends out from the housing to be connected with the total negative electrode; and the inductive switch and the resistor are sequentially disposed between the total negative electrode and the lithium source on the lithium replenishment wire outside the housing, the inductive switch is configured for detecting a discharging electrical signal of the high-capacity battery, so that the lithium replenishment wire is turned on or turned off. The lithium replenishment apparatus may implement automatic lithium replenishment during the operation of the battery, therefore compared with lithium replenishment by manual operation, the lithium replenishment efficiency is high. In addition, the battery is controlled by the inductive switch to perform lithium replenishment in a discharging phase, therefore compared with the existing continuous lithium replenishment, the service life of the lithium source is longer, thereby prolonging the cycle life of the battery. Third, the utilization rate of the lithium source of the automatic lithium replenishment apparatus is high, and the lithium precipitation phenomenon generated by long-term lithium replenishment is effectively avoided, thereby further prolonging the cycle life of the battery.

In an embodiment, the inductive switch is a current inductive switch for detecting the direction of current in a connecting cable between the battery and an external load.

In an embodiment, in order to better control the magnitude of lithium replenishment current to improve the lithium replenishment effect, the resistor is a sliding rheostat.

In an embodiment, the lithium source includes two copper mesh layers and a metal lithium layer disposed between the two copper mesh layers.

In an embodiment, the lithium replenishment apparatus further includes a lithium replenishment power supply, and the lithium replenishment power supply is configured for applying a voltage between the lithium source and the negative electrode in the discharging phase of the battery, so that the lithium replenishment current remains unchanged.

A second embodiment of the present invention provides a repair mechanism, the repair mechanism is connected with a high-capacity battery, and is configured for repairing the high-capacity battery having an attenuated capacity or inhibiting the attenuation speed of the high-capacity battery, so as to improve the performance of the high-capacity battery and prolong the cycle life of the high-capacity battery. The repair mechanism is any of the above repair mechanisms, and details are not described herein again.

A third embodiment of the present invention provides a method for repairing a high-capacity battery assembly, in which a high-capacity battery having an attenuated capacity is repaired or the attenuation speed of the high-capacity battery is inhibited by using a repair mechanism, so as to improve the performance of the high-capacity battery and prolong the cycle life of the high-capacity battery.

In an embodiment, after a set time of the charging and discharging cycle of the high-capacity battery, electrolyte is replenished into an electrolyte sharing chamber and the inner cavity of each battery cell by a liquid injection and replacement member, or electrolyte in the electrolyte sharing chamber and the inner cavity of each battery cell is replaced by the liquid injection and replacement member.

In an embodiment, the method may be executed by the following steps:
initial liquid injection step: during initial liquid injection of the high-capacity battery, a second one-way valve is opened by using a hydraulic pressure of the electrolyte, the electrolyte enters the inner cavity of the high-capacity battery by the second one-way valve, and after liquid injection is completed, the hydraulic pressure is removed, so that the second one-way valve is closed to complete an initial liquid injection operation of the high-capacity battery;
liquid replenishment step: the second one-way valve is opened by using the hydraulic pressure of the electrolyte, the electrolyte enters the high-capacity battery by the second one-way valve, meanwhile, a first one-way valve is opened by using an external acting force, a gas in the high-capacity battery is discharged by the first one-way valve, and after liquid replenishment is completed, the hydraulic pressure and the external acting force are removed, so that the first one-way valve and the second one-way valve are closed to complete a liquid replenishment operation of the high-capacity battery;
liquid replacement step: the first one-way valve is first opened by using a gas pressure, a gas enters the inner cavity of the high-capacity battery by the first one-way valve, meanwhile, the second one-way valve is opened by using an external acting force, the electrolyte in the high-capacity battery is drained by the second one-way valve, and after liquid drainage is completed, the gas pressure and the external acting force are removed, so that the first one-way valve and the second one-way valve are closed; and
then, the second one-way valve is opened by using the hydraulic pressure of the electrolyte, the electrolyte enters the high-capacity battery by the second one-way valve, meanwhile, the first one-way valve is opened by using an external acting force, and the gas in the high-capacity battery is discharged by the first one-way valve, so as to complete a liquid replacement operation of the high-capacity battery.

In an embodiment, the method further includes a vacuumizing step: before initial liquid injection is performed on the high-capacity battery, opening the first one-way valve or the second one-way valve by using an external acting force, and starting a vacuumizing apparatus to execute a vacuumizing operation on the high-capacity battery.

In an embodiment, the method further includes a formation and exhaust step: after the initial liquid injection of the high-capacity battery is completed, formation on the high-capacity battery is started, the first one-way valve is opened by using an external acting force during this process, and a gas generated inside the high-capacity battery during the formation is discharged by the first one-way valve, so as to complete formation and exhaust operations.

In an embodiment, the method may be executed by the following steps:
S1, connecting: a liquid replenishment and replacement interface of a liquid replenishment and replacement apparatus is connected with a liquid replenishment and replacement connector of a lithium-ion battery;
S2, trepanning: a rotating assembly rotates a trepanning assembly to the liquid replenishment and replacement interface;
   a jacking and pushing assembly provides a linear thrust, so that the trepanning assembly moves toward the liquid replenishment and replacement interface, and the trepanning assembly forms an open pore on the liquid replenishment and replacement connector of the lithium-ion battery; and the jacking and pushing assembly and the trepanning assembly restore to initial locations;
S3, liquid replenishment and replacement: the rotating assembly rotates a liquid replenishment and replacement assembly to the liquid replenishment and replacement interface; the jacking and pushing assembly provides a linear thrust, so that the liquid replenishment and replacement assembly moves toward the liquid replenishment and replacement interface, the liquid replenishment and replacement assembly is in butt joint with the open pore formed on the liquid replenishment and replacement connector of the lithium-ion battery, and then, the liquid replenishment and replacement assembly performs a liquid replenishment or liquid replacement operation on the lithium-ion battery; and the jacking and pushing assembly and the liquid replenishment and replacement assembly restore to initial locations;
S4, hole sealing: the rotating assembly rotates a hole sealing assembly to the liquid replenishment and replacement interface; the jacking and pushing assembly provides a linear thrust, so that the hole sealing assembly moves toward the liquid replenishment and replacement interface, the hole sealing assembly extrudes a sealing plug into the open pore of the liquid replenishment and replacement connector of the lithium-ion battery under the action of the jacking and pushing assembly, so as to seal the liquid replenishment and replacement connector of the high-capacity battery; and the jacking and pushing assembly and the hole sealing assembly restore to initial locations; and
S5, disassembly and separation: the liquid replenishment and replacement interface of the liquid replenishment and replacement apparatus is disassembled and separated from the liquid replenishment and replacement connector of the lithium-ion battery.

### Brief Description of the Drawings

Fig. 1 is a schematic structural diagram of a high-capacity battery in the background art;
Fig. 2 is a schematic diagram of a partial structure of a high-capacity battery in Embodiment 1;
Fig. 3 is a schematic structural diagram of an impurity removal member in Embodiment 1;
Fig. 4 is a schematic diagram of a partial structure of a high-capacity battery in Embodiment 2;
Fig. 5 is a curve chart of battery capacity retention rates in Embodiment 5, wherein abscissas represent the number of cycles, and ordinates represent capacity retention rates;
Fig. 6 is a schematic structural diagram of a high-capacity battery in Embodiment 6;
Fig. 7 is a partial exploded view of the high-capacity battery in Embodiment 6;
Fig. 8 is a section view of the high-capacity battery in Embodiment 6;
Fig. 9 is a partial exploded view of an end plate assembly in Embodiment 6 at one angle of view;
Fig. 10 is a partial exploded view of the end plate assembly in Embodiment 6 at another angle of view;
Fig. 11 is a partial exploded view of an end plate assembly in some embodiments;
Fig. 12 is a schematic structural diagram of an end plate assembly having a second end sub-plate in Embodiment 6;
Fig. 13 is a schematic structural diagram of a high-capacity battery in Embodiment 7;
Fig. 14 is a section view of the high-capacity battery in Embodiment 7;
Fig. 15 is a partial exploded view of an end plate assembly in Embodiment 7 at one angle of view;
Fig. 16 is a partial exploded view of the end plate assembly in Embodiment 7 at another angle of view;
Fig. 17 is a schematic structural diagram of another end plate assembly in Embodiment 7;
Fig. 18 is a schematic diagram of a partial structure of an end plate assembly in Embodiment 8;
Fig. 19 is a section view of the end plate assembly in Embodiment 8;
Fig. 20 is another section view of the end plate assembly in Embodiment 8;
Fig. 21 is a schematic diagram of a partial structure of a high-capacity battery in Embodiment 9;
Fig. 22 is a partial exploded schematic diagram of an end plate assembly in Embodiment 9;
Fig. 23 is a schematic diagram of a partial structure of a high-capacity battery in Embodiment 10;
Fig. 24 is a partial exploded schematic diagram of an end plate assembly in embodiment 10;
Fig. 25 is a schematic structural diagram of a high-capacity battery in Embodiment 11;
Fig. 26 is a section view of the high-capacity battery in Embodiment 11;
Fig. 27 is a schematic structural diagram of a second cylinder body fixed with a liquid injection and replacement member in Embodiment 11;
Fig. 28 is a section view of the second cylinder body fixed with the liquid injection and replacement member in Embodiment 11;
Fig. 29 is a schematic structural diagram of the second cylinder body in Embodiment 11;
Fig. 30 is a schematic structural diagram of a high-capacity battery in Embodiment 12;
Fig. 31 is a schematic structural diagram of a second cylinder body fixed with a liquid injection and replacement member in Embodiment 12;
Fig. 32 is a section view of the second cylinder body fixed with the liquid injection and replacement member in Embodiment 12;
Fig. 33 is a schematic diagram of a partial structure of a second cylinder body fixed with a liquid injection and replacement member in Embodiment 13;
Fig. 34 is a schematic structural diagram of a liquid injection and replacement member main body in Embodiment 13;
Fig. 35 is a schematic diagram of a partial structure of a second cylinder body fixed with a liquid injection and replacement member in Embodiment 14;
Fig. 36 is a schematic structural diagram of a liquid injection and replacement member main body in Embodiment 14;
Fig. 37 is an exploded view of a liquid injection and replacement member in Embodiment 15;
Fig. 38 is a partial exploded view of the liquid injection and replacement member in Embodiment 15;
Fig. 39 is a schematic structural diagram of a liquid injection and replacement member in Embodiment 16;
Fig. 40 is a schematic structural diagram of a liquid injection and replacement member main body in Embodiment 16;
Fig. 41 is an exploded schematic diagram of the liquid injection and replacement member in Embodiment 16;
Fig. 42 is a partial enlarged schematic diagram of the liquid injection and replacement member in Embodiment 16;
Fig. 43 is a schematic structural diagram of a liquid injection and replacement member in Embodiment 17;
Fig. 44 is a section view of a liquid injection and replacement member main body in Embodiment 18;
Fig. 45 is a section view of a liquid injection and replacement member in Embodiment 18;
Fig. 46 is a schematic structural diagram of a liquid injection and replacement member main body in Embodiment 19;
Fig. 47 is a schematic structural diagram of a liquid injection and replacement member main body in Embodiment 20;
Fig. 48 is a schematic structural diagram of a high-capacity battery in Embodiment 21;
Fig. 49 is a schematic diagram of a partial structure of the high-capacity battery in Embodiment 21;
Fig. 50 is a section view of the high-capacity battery in Embodiment 21;
Fig. 51 is a schematic structural diagram of a high-capacity battery in Embodiment 22;
Fig. 52 is a section view of the high-capacity battery in Embodiment 22;
Fig. 53 is a schematic diagram of a partial structure of the high-capacity battery in Embodiment 22;
Fig. 54 is a schematic structural diagram of a liquid injection and replacement member in Embodiment 23;
Fig. 55 is an exploded schematic diagram of the liquid injection and replacement member in Embodiment 23;
Fig. 56 is a section view of the liquid injection and replacement member in Embodiment 23;
Fig. 57 is a section view of another liquid injection and replacement member in Embodiment 23;
Fig. 58 is a section view of the liquid injection and replacement member additionally provided with an electrolyte flow pipe section in Embodiment 23;
Fig. 59 is a schematic diagram of a mounting structure of the liquid injection and replacement member in Embodiment 23;
Fig. 60 is a schematic structural diagram of the liquid injection and replacement member additionally provided with the electrolyte flow pipe section in Embodiment 23;
Fig. 61 is a schematic structural diagram of a quick-plug connector of the liquid injection and replacement member in Embodiment 23;
Fig. 62 is a section view of a liquid injection and replacement member in Embodiment 24;
Fig. 63 is an exploded schematic diagram of a liquid injection and replacement member in Embodiment 25;
Fig. 64 is a schematic structural diagram of the liquid injection and replacement member in Embodiment 25;
Fig. 65 is a schematic structural diagram of a liquid injection and replacement member in Embodiment 26;
Fig. 66 is a section view of the liquid injection and replacement member in Embodiment 26;
Fig. 67 is a section view of another liquid injection and replacement member in Embodiment 26;
Fig. 68 is a schematic structural diagram of a liquid injection and replacement member main body in Embodiment 27;
Fig. 69 is a schematic structural diagram of a liquid injection and replacement member main body in Embodiment 28;
Fig. 70 is a schematic structural diagram of a high-capacity battery in Embodiment 29;
Fig. 71 is a schematic diagram of a partial structure of the high-capacity battery in Embodiment 29;
Fig. 72 is a schematic structural diagram of a high-capacity battery in Embodiment 30;
Fig. 73 is a schematic diagram of a partial structure of the high-capacity battery in Embodiment 30;
Fig. 74 is a schematic structural diagram of a high-capacity battery in Embodiment 31;
Fig. 75 is a partial exploded view of the high-capacity battery in Embodiment 31;
Fig. 76 is a section view of the high-capacity battery in Embodiment 31;
Fig. 77 is a partial exploded view of an end plate assembly in Embodiment 31 at one angle of view;
Fig. 78 is a partial exploded view of the end plate assembly in Embodiment 31 at another angle of view;
Fig. 79 is a schematic structural diagram of another end plate assembly in Embodiment 31;
Fig. 80 is a schematic structural diagram of an end plate assembly provided with a second end sub-plate in Embodiment 32;
Fig. 81 is a schematic structural diagram of the end plate assembly provided with the second end sub-plate in Embodiment 32 at another angle of view;
Fig. 82 is a partial exploded view of an end plate assembly in Embodiment 33;
Fig. 83 is a schematic structural diagram of a liquid injection and replacement member in Embodiment 34;
Fig. 84 is a section view of the liquid injection and replacement member in Embodiment 34;
Fig. 85 is a schematic structural diagram of the liquid injection and replacement member provided with an electrolyte communication pipe in Embodiment 34;
Fig. 86 is a schematic structural diagram of a high-capacity battery in Embodiment 34;
Fig. 87 is a partial exploded view of the high-capacity battery in Embodiment 34;
Fig. 88 is a schematic structural diagram of the high-capacity battery provided with a heat transfer pipe in Embodiment 34;
Fig. 89 is a schematic diagram of a mounting structure of a liquid injection and replacement member and an end plate in Embodiment 34;
Fig. 90 is an exploded view of the liquid injection and replacement member and the end plate in Embodiment 34;
Fig. 91 is a schematic structural diagram of a liquid injection and replacement member in Embodiment 35;
Fig. 92 is a section view of the liquid injection and replacement member in Embodiment 35;
Fig. 93 is a schematic structural diagram of a liquid injection and replacement member in Embodiment 36;
Fig. 94 is a section view of the liquid injection and replacement member in Embodiment 36;
Fig. 95 is a partial exploded view of the liquid injection and replacement member in Embodiment 36;
Fig. 96 is a schematic structural diagram of a high-capacity battery in Embodiment 36;
Fig. 97 is a schematic structural diagram of a liquid injection and replacement member in Embodiment 37;
Fig. 98 is a partial exploded view of the liquid injection and replacement member in Embodiment 37;
Fig. 99 is a section view of the liquid injection and replacement member in Embodiment 37;
Fig. 100 is a schematic structural diagram of a high-capacity battery in Embodiment 37;
Fig. 101 is a schematic structural diagram of a liquid injection and replacement member in Embodiment 38;
Fig. 102 is a section view of the liquid injection and replacement member in Embodiment 38;
Fig. 103 is an enlarged view of a region a in Fig. 102;
Fig. 104 is a schematic structural diagram of the liquid injection and replacement member connected with an electrolyte communication pipe section in Embodiment 38;
Fig. 105 is a schematic structural diagram of a lithium-ion battery in Embodiment 38;
Fig. 106 is a partial exploded view of the lithium-ion battery in Embodiment 38;
Fig. 107 is a schematic structural diagram of the lithium-ion battery provided with a heat transfer pipe in Embodiment 38;
Fig. 108 is an exploded view of the liquid injection and replacement member and an end plate in Embodiment 38;
Fig. 109 is a section view of a liquid injection and replacement member in Embodiment 39;
Fig. 110 is an enlarged view of a region b in Fig. 109;
Fig. 111 is a section view of a liquid injection and replacement member in Embodiment 40;
Fig. 112 is a section view of the liquid injection and replacement member provided with a second sealing plug in Embodiment 40;
Fig. 113 is a section view of a liquid injection and replacement member in Embodiment 41;
Fig. 114 is a schematic structural diagram of a high-capacity battery in Embodiment 42;
Fig. 115 is a schematic structural diagram of a first one-way valve in Embodiment 42;
Fig. 116 is an exploded view of the high-capacity battery provided with a blocking cap and a pressure relief valve in Embodiment 42;
Fig. 117 is a section view of the cooperation of the first one-way valve and a second one-way valve with the blocking cap and the pressure relief valve in Embodiment 42;
Fig. 118 is a first partial enlarged schematic diagram of Fig. 117;
Fig. 119 is a second partial enlarged schematic diagram of Fig. 117;
Fig. 120 is a schematic diagram of liquid drainage during liquid replenishment and replacement of the high-capacity battery in Embodiment 42;
Fig. 121 is a schematic diagram of liquid injection during liquid replenishment and replacement of the high-capacity battery in Embodiment 42;
Fig. 122 is a section view of the cooperation of a first one-way valve and a second one-way valve with a first connecting pipe and a second connecting pipe in Embodiment 42;
Fig. 123 is a partial enlarged schematic diagram of Fig. 122;
Fig. 124 is a schematic diagram of a connection between a liquid replenishment and replacement apparatus and a high-capacity battery in Embodiment 43;
Fig. 125 is a schematic exploded view of the connection between the liquid replenishment and replacement apparatus and the high-capacity battery in Embodiment 43;
Fig. 126 is a section view of in an embodiment after a first liquid replenishment and replacement connector and a second liquid replenishment and replacement connector are connected;
Fig. 127 is a schematic diagram of a first liquid replenishment and replacement connector provided with an electrolyte pipe section in an embodiment;
Fig. 128 is a schematic structural diagram of a liquid replenishment and replacement apparatus in Embodiment 43;
Fig. 129 is a schematic structural diagram of the liquid replenishment and replacement apparatus (an outer box body is omitted) in Embodiment 43;
Fig. 130 is a schematic mounting diagram of a trepanning assembly in the liquid replenishment and replacement apparatus in Embodiment 43;
Fig. 131 is a schematic structural diagram of the trepanning assembly in the liquid replenishment and replacement apparatus in Embodiment 43;
Fig. 132 is a schematic mounting diagram of a liquid replenishment and replacement assembly and the trepanning assembly in the liquid replenishment and replacement apparatus in Embodiment 43;
Fig. 133 is a schematic structural diagram of the liquid replenishment and replacement assembly in the liquid replenishment and replacement apparatus in Embodiment 43;
Fig. 134 is a schematic structural diagram of a hole sealing assembly in the liquid replenishment and replacement apparatus in Embodiment 43;
Fig. 135 is a schematic structural diagram of a liquid injection and replacement and explosion venting member in Embodiment 44;
Fig. 136 is an exploded schematic diagram of the liquid injection and replacement and explosion venting member in Embodiment 44;
Fig. 137 is a section view of the liquid injection and replacement and explosion venting member in Embodiment 44;
Fig. 138 is a schematic structural diagram of the liquid injection and replacement and explosion venting member provided with an electrolyte communication pipe in Embodiment 44;
Fig. 139 is a schematic structural diagram of an explosion venting pipe member in Embodiment 44;
Fig. 140 is a schematic structural diagram of a lithium-ion battery in Embodiment 44;
Fig. 141 is a partial exploded schematic diagram of the lithium-ion battery in Embodiment 44;
Fig. 142 is a schematic structural diagram of the lithium-ion battery provided with a heat transfer pipe in Embodiment 44;
Fig. 143 is a partial section view of the lithium-ion battery in Embodiment 44;
Fig. 144 is a schematic diagram of an exploded structure of the liquid injection and replacement and explosion venting member and an end plate in Embodiment 44;
Fig. 145 is a schematic diagram of a mounting structure of the liquid injection and replacement and explosion venting member and the end plate in Embodiment 44;
Fig. 146 is a section view of a liquid injection and replacement member in Embodiment 45;
Fig. 147 is a schematic structural diagram of the liquid injection and replacement member in Embodiment 45;
Fig. 148 is a section view of a liquid injection and replacement and explosion venting member in Embodiment 45;
Fig. 149 is a schematic diagram of a structure provided with an electrolyte communication pipe and a gas communication pipe in Embodiment 45;
Fig. 150 is a partial section view of a lithium-ion battery in Embodiment 45;
Fig. 151 is a schematic structural diagram of a high-capacity battery in Embodiment 46;
Fig. 152 is a section view of the high-capacity battery in Embodiment 46;
Fig. 153 is a stereoscopic schematic diagram of a first end plate assembly in Embodiment 46;
Fig. 154 is a section view of Fig. 153;
Fig. 155 is a stereoscopic schematic diagram of a second end plate assembly in Embodiment 46;
Fig. 156 is a section view of Fig. 155;
Fig. 157 is a stereoscopic schematic diagram of an end plate assembly in Embodiment 47;
Fig. 158 is a first schematic structural diagram of a high-capacity battery in Embodiment 48 to Embodiment 49;
Fig. 159 is a second structural schematic diagram of the high-capacity battery in Embodiment 48 to Embodiment 49;
Fig. 160 is a schematic structural diagram of a slow-release lithium replenishment apparatus in Embodiment 48 to Embodiment 49;
Fig. 161 is a schematic diagram of a connection between the slow-release lithium replenishment apparatus and a hollow member in Embodiment 48 to Embodiment 49;
Fig. 162 is a schematic structural diagram of the high-capacity battery in Embodiment 48 to Embodiment 49;
Fig. 163 is a schematic diagram of the high-capacity battery (a first cover plate is omitted) in Embodiment 48 to Embodiment 49;
Fig. 164 is a first schematic diagram of an automatic lithium replenishment apparatus applied to a prismatic lithium-ion battery cell in Embodiment 50;
Fig. 165 is a second schematic diagram of the automatic lithium replenishment apparatus applied to the prismatic lithium-ion battery cell in Embodiment 50;
Fig. 166 is a first schematic diagram of an automatic lithium replenishment apparatus applied to a prismatic lithium-ion battery cell in Embodiment 51;
Fig. 167 is a second schematic diagram of the automatic lithium replenishment apparatus applied to the prismatic lithium-ion battery cell in Embodiment 51;
Fig. 168 is a diagram illustrating capacity change trends of a comparative sample, a charging lithium replenishment sample and a discharging lithium replenishment sample under 400 cycles;
Fig. 169 is a diagram illustrating capacity retention rate change trends of the comparative sample, the charging lithium replenishment sample and the discharging lithium replenishment sample under 400 cycles;
Fig. 170 is a schematic structural diagram of a high-capacity battery in Embodiment 52;
Fig. 171 is a schematic structural diagram of a high-capacity battery in Embodiment 53;
Fig. 172 is a schematic structural diagram of a high-capacity battery in Embodiment 54;
Fig. 173 is a schematic structural diagram of a liquid injection and replacement member fixed on a housing of a lithium-ion battery in Embodiment 55;
Fig. 174 is a partial exploded view of the liquid injection and replacement member fixed on the housing of the lithium-ion battery in Embodiment 55;
Fig. 175 is a schematic structural diagram of another liquid injection and replacement member in Embodiment 55;
Fig. 176 is a partial exploded view of a liquid injection and replacement member provided with an elastic blocking column in some other embodiments;
Fig. 177 is a schematic structural diagram of a liquid injection and replacement member fixed on a housing of a lithium-ion battery in Embodiment 56;
Fig. 178 is a partial exploded view of another liquid injection and replacement member in Embodiment 56;
Fig. 179 is a schematic structural diagram of a liquid injection and replacement member main body in Embodiment 57;
Fig. 180 is a schematic structural diagram of a liquid injection and replacement member main body in Embodiment 58;
Fig. 181 is a schematic structural diagram of a liquid injection and replacement member main body fixed on a housing of a lithium-ion battery in Embodiment 59;
Fig. 182 is a first section view of a liquid injection and replacement member in Embodiment 59;
Fig. 183 is a second section view of the liquid injection and replacement member in Embodiment 59;
Fig. 184 is a schematic structural diagram of a liquid injection and replacement member in Embodiment 60;
Fig. 185 is a schematic diagram of a partial structure of a liquid injection and replacement member in Embodiment 61;
Fig. 186 is an exploded view of the liquid injection and replacement member in Embodiment 61; and
Fig. 187 is a partial exploded view of the liquid injection and replacement member cooperating with a cover cap in Embodiment 61.

Reference signs in the drawings are as follows:
01. sub-pipeline; 02. intermediate connecting pipe; 03. lower cover plate of battery cell;
1. housing; 11. housing bottom plate; 12. housing top plate; 13. avoidance hole; 2. battery cell; 21. electrode terminal; 3. impurity removal member; 31. second through hole; 4. electrolyte sharing chamber; 6. electrode terminal adapter; 61. electrode terminal adapter main body; 8. limiting guide boss; 9. gas chamber;
23. first cylinder body; 231. first cylinder body bottom plate; 232. first cylinder body top plate; 24. end plate assembly; 241. first end sub-plate; 2411. electrolyte flow channel; 2412. outer surface of the first end sub-plate; 2413. unpacking apparatus operation port; 2414. gas flow channel; 242. liquid injection and replacement member; 2421. liquid injection and replacement member main body; 24211. first channel; 24212. second channel; 2422. blocking member; 24221. elastic blocking column; 243. second end sub-plate; 244. gasket; 245. annular fixing member; 246. rotating member; 26. first explosion venting channel; 27. explosion venting port; 28. third end sub-plate; 29. fourth end sub-plate; 210. first-stage step surface; 211. second-stage step surface; 212. third-stage step surface; 213. sealing plate; 214. first hot melting member; 215. sealing ring; 216. positioning block; 217. third through hole; 218. first identifier; 219. second identifier; 220. third identifier; 222. fourth through hole;
331. second cylinder body; 311. first sidewall; 3112. outer surface of the first sidewall; 3113. first blind hole; 362. cover cap; 363. hollow member; 364. first rubber ring; 365. second hot melting member; 37. hollow cavity;
4113. counter bore; 42. housing of a lithium-ion battery; 47. first hydraulic quick connector parent body; 48. second hydraulic quick connector parent body;
511. annular limiting boss; 52. electrolyte flow pipe section; 5421. mounting hole; 58. partition plate; 59. mounting space; 591. reinforcing rib; 513. counter bore;
6121. large hole of a stepped through hole; 6122. small hole of the stepped through hole; 663. quick-plug connector; 641. annular folded edge; 616. groove; 617. notch; 618. blocking column; 65. first sealing plate;
7211. second channel; 7422. second blocking member; 74222. second hydraulic quick connector parent body; 745. gas injection and exhaust member; 7451. gas injection and exhaust member main body; 74511. first channel; 7452. first blocking member; 74522. first hydraulic quick connector parent body;
83. first one-way valve; 84. second one-way valve; 85. blocking cap; 86. pressure relief valve; 87. first connecting pipe; 88. second connecting pipe; 89. liquid replenishment and replacement apparatus; 811. first opening; 812. second opening; 831. fixing sleeve; 832. sealing sleeve; 833. third sealing plate; 834. sealing column; 835. spring limiting plate; 836. positioning plate; 837. spring baffle; 838. compression spring; 8311. first stepped hole; 8312. annular sealing notch; 8321. annular boss; 861. inner pipe section; 862. jacking and pressing plate; 863. outer pipe section; 864. pressure relief film; 865. first sealing ring; 8611. annular step; 8631. ring-shaped clamping platform; 881. second pipe section; 882. jacking and pushing plate; 883. first pipe section; 884. second seal ring; 8811. annular bump; 8831. second stepped hole; 891. inert gas source; 892. gas pipeline; 893. gas collection apparatus; 894. electrolyte storage apparatus; 895. electrolyte collection apparatus; 896. liquid pipeline; 897. stop valve;
91. liquid replenishment and replacement apparatus; 92. high-capacity battery; 93. first liquid replenishment and replacement connector; 94. second replacement liquid liquid replenishment and replacement connector; 911. an outer box body; 912. rotating assembly; 913. jacking and pushing assembly; 914. trepanning assembly; 915. liquid replenishment and replacement assembly; 916. hole sealing assembly; 9111. lower cabin body; 9112. upper cover; 9113. liquid replenishment and replacement interface; 9114. support plate; 9115. guide sleeve; 9121. rotary table; 9122. rotating shaft; 9123. rotating motor; 9124. screw rod; 9125. bearing; 9131. jacking and pushing motor; 9132. jacking and pushing rod; 9133. gear; 9134. rack; 9141. mounting sleeve; 9142. mounting rod; 9143. trepanning motor; 9144. drill bit chuck; 9145. auger bit; 9146. trepanning positioning spring; 9151. liquid injection inner cylinder; 9152. liquid injection outer cylinder; 9153. liquid injection spring; 9154. tapered nozzle; 9155. strip-shaped through slot; 9161. hole sealing spring; 9162. hole sealing cylinder body; 9163. hole sealing push rod; 9164. sealing plug; 931. connector body; 932. first connecting flange; 933. first sealing boss; 934. annular boss; 935. channel; 936. annular chamfer; 937. electrolyte pipe section; 938. annular limiting boss; 939. rubber ring; 9341. first sealing surface; 9351. ninth channel; 9352. tenth channel; 941. connecting sleeve; 942. second connecting flange; 943. second sealing boss; 944. annular notch; 945. first sealing ring; 946. second sealing ring; 9441. second sealing surface;
101. liquid injection and replacement member; 1011. liquid injection and replacement member main body; 10112. third channel; 10113. fourth channel; 10114. first blind hole; 10115. second blind hole; 10116. third blind hole; 10117. fifth through hole; 10118. sixth through hole; 1012. third blocking member; 1013. electrolyte communication pipe; 1014. gas communication pipe; 102. explosion venting pipe member; 1021. explosion venting pipe; 1022. explosion venting film; 1033. end plate; 10331. first mounting hole; 1034. support member; 105. heat transfer pipe;
111. liquid injection and replacement member main body; 1112. fifth channel; 11121. large hole; 11122. small hole; 1113. first pipe fitting; 11131. free end of the first pipe fitting; 1115. sealant layer; 1117. sixth channel; 1118. second pipe fitting; 11181. free end of the second pipe fitting; 1131. second mounting hole; 1124. first explosion venting mechanism; 113. sealing rubber plug; 11310. O-shaped sealing ring; 1132. blind hole; 114. sealing end cover; 1141. sealing gasket;
121. liquid injection and replacement member main body; 1212. seventh channel; 12120. small hole; 12122. large hole; 12121. limiting retainer ring; 1213. eighth channel; 122. sealing unit; 1221. first sealing plug; 1222. sealing coating; 1223. second sealing plug; 1244. third mounting hole;
132. hollow member; 133. slow-release lithium replenishment apparatus; 1321. sharing chamber; 1322. sub-pipeline; 1323. hollow box body; 1324. cover plate; 1325. U-shaped shell; 1326. first cover plate; 1327. third cover plate; 1328. second cover plate; 13210. mounting base; 1332. lithium salt particle; 1333. sealing cover; 1334. fixing block; 1335. mounting column; 13311. micropore; 1331. outer shell;
14411. communication channel; 14412. groove; 14413. blocking plate; 146. functional interface; 1461. columnar body; 14611. liquid channel; 14612. gas channel; 14613. second explosion venting channel; 1462. second explosion venting mechanism; 1463. fourth blocking member; 1464. fifth blocking member; and
151. lithium source; 152. lithium replenishment wire; 153. resistor; 154. inductive switch; 155. prismatic lithium-ion battery cell; 156. load; 157. lithium replenishment power supply; 158. hollow pipe fitting; 1512. outer box; 151. bare battery cell; 1514. shell; 1515. upper cover plate; 1516. electrode terminal.

### Detailed Description of the Embodiments

To make the above objectives, features and advantages of the present invention more obvious and understandable, specific embodiments of the present invention will be described in detail below in combination with the drawings. Apparently, the embodiments described below are merely a part, but not all, of the embodiments of the present invention. All of other embodiments, obtained by those ordinary skilled in the art based on the embodiments in the present invention without any creative effort, should fall into the protection scope of the present invention.

Numerous specific details are set forth in the following description to facilitate a thorough understanding of the present invention. However, the present invention may also be implemented in other manners different from those described herein, and those skilled in the art may make similar promotions without departing from the connotations of the present invention. Therefore, the present invention is not limited by the specific embodiments disclosed below.

In the description of the present invention, it should be noted that orientation or location relationships indicated by terms such as "top and bottom" are orientation or location relationships shown on the basis of the drawings, and are merely for the convenience of describing the present invention and simplifying the description, but do not indicate or imply that referred apparatuses or elements must have specific orientations or must be constructed and operated in specific orientations, and thus cannot be understood as limitations to the present invention. In addition, the terms "first, second, third, fourth or the like" are configured for descriptive purposes only and cannot be construed as indicating or implying relative importance.

Embodiment 1 to Embodiment 5 provide a high-capacity battery assembly, including a housing, a repair mechanism, and a plurality of battery cells arranged in the housing. The inner cavity of each battery cell includes an electrolyte region and a gas region; the housing is provided with an electrolyte sharing chamber; the electrolyte sharing chamber is in communication with the electrolyte region of the inner cavity of each battery cell; an avoidance hole capable of enabling an electrode terminal of each battery cell to extend out is formed on a housing top plate; and the electrode terminal of each battery cell extends out from the avoidance hole on the housing top plate, and a region of the housing corresponding to the avoidance hole is fixed and sealed with a shell of the battery cell. The repair mechanism may be disposed inside the housing and may also be disposed outside the housing, and a high-capacity battery having an attenuated capacity is repaired on the basis of the repair mechanism, so as to improve the performance of the high-capacity battery and prolong the cycle life of the high-capacity battery. In addition, the repair mechanism may be integrally disposed with the high-capacity battery and may further be separately disposed, and when repair is required, the repair mechanism is connected with the high-capacity battery.

In Embodiment 1 to Embodiment 5, the repair mechanism may be used to improve the performance of the high-capacity battery and prolong the cycle life of the high-capacity battery at least in the following manners:
in a first aspect, the reduction of active lithium in the high-capacity battery may be inhibited; in a second aspect, electrolyte may be replenished into the high-capacity battery or electrolyte in the high-capacity battery may be replaced; in a third aspect, the formation of lithium dendrites of each battery cell may be inhibited; and in a fourth aspect, a thickened SEI may be thinned.

It should be noted that the electrode terminal of the battery cell 2 may refer to an original electrode terminal 21 of the battery cell 2, and may also be an electrode terminal after an electrode terminal adapter 6 is additionally disposed on the original electrode terminal 21 of the battery cell 2.

Embodiment 1 to Embodiment 5 are described in detail below in combination with the drawings.

### Embodiment 1

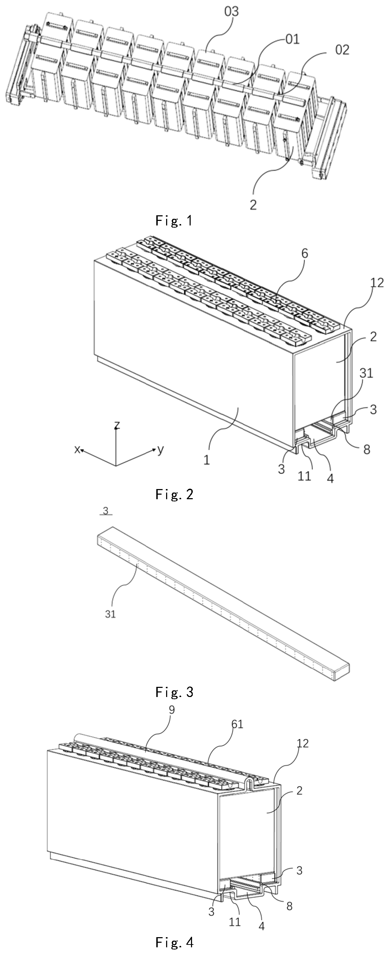

As shown in Fig. 2, the high-capacity battery in the present embodiment includes a rectangular housing 1. For ease of description, the length direction of the housing 1 may be defined as an x direction, the width direction of the housing 1 may be defined as a y direction, and the height direction of the housing 1 may be defined as a z direction. 12 battery cells 2 (in some other embodiments, the number of battery cells 2 may be adjusted according to requirements) are arranged in the rectangular housing 1 in the x direction, each battery cell 2 herein may be a prismatic cell, and the prismatic cell includes an upper cover plate, a lower cover plate, a cylinder body and a battery cell assembly; and the battery cell assembly herein may also be referred to as an electrode assembly, which is formed by arranging a positive electrode, a diaphragm and a negative electrode in sequence, and assembling the same by using a lamination or winding process. The upper cover plate, the cylinder body and the lower cover plate form a shell of the battery cell 2, and the battery cell assembly is disposed in the shell of the battery cell 2.

In the present embodiment, a repair mechanism is disposed between a housing bottom plate 11 and the bottom of each battery cell 2, and the repair mechanism in the present embodiment is an impurity removal member 3. As can be seen from Fig. 2 (end plates at the two ends of the high-capacity battery are removed in Fig. 2), in the present embodiment, two impurity removal members 3 are provided, which are respectively located on two sides of an electrolyte sharing chamber 4 and extend in the x direction. Both the two impurity removal members 3 are of hollow structures, inner cavities thereof are filled with an impurity removal material, and second through holes 31 penetrating through the inner cavity of the impurity removal member 3 and allowing electrolyte to pass through are formed in the impurity removal member 3, wherein the impurity removal material may be at least one of a 4A molecular sieve, a lithiated molecular sieve or α -alumina. During the operation of the high-capacity battery, the impurity removal material is always immersed in the electrolyte to remove impurities in the electrolyte, thereby avoiding impacts of the impurities on the performance of the electrolyte, and thus improving the charging and discharging cycle performance of such a high-capacity battery.

When the original electrode terminal 21 of each battery cell 2 needs to extend out from the avoidance hole 13 on a housing top plate 12, the size of the impurity removal member 3 needs to meet the following condition in the z direction: after each battery cell 2 is supported by using the impurity removal member 3, it is necessary to ensure that the original electrode terminal 21 of each battery cell 2 extends out from the avoidance hole 13 formed on the housing top plate 12.

When the original electrode terminal 21 of each battery cell 2 does not need to extend out from the avoidance hole 13 on the housing top plate 12 (as shown in Fig. 2), the size of the impurity removal member 3 needs to meet the following condition in the z direction: after each battery cell 2 is supported by using the impurity removal member 3, it is necessary to ensure that the original electrode terminal 21 of each battery cell 2 is in contact with an electrical connection portion of the electrode terminal adapter 6.

In some other embodiments, only one impurity removal member 3 may be provided, which extends in the x direction and is located on one side of the electrolyte sharing chamber 4; and one support member may be disposed on the other side of the electrolyte sharing chamber 4, the support member may be a solid member, which only plays a support role, but has lower impurity removal efficiency compared with the present embodiment.

In some other embodiments, the impurity removal member 3 may further be directly disposed in the electrolyte sharing chamber 4, and in order not to affect smooth unpacking of each battery cell 2 and an electrolyte sharing effect, the structure sizes of the impurity removal member 3, the electrolyte sharing chamber 4 and an unpacking apparatus need to meet specific requirements.

As can be seen from Fig. 3, the impurity removal member 3 in the present embodiment is a hollow box body having a rectangular cross section, which extends in the x direction and the length of which is the same as the length of the housing 1. The material of the impurity removal member 3 may be the same as the material of the housing 1, for example, an aluminum material may be selected, and a wall thickness thereof may be thinned as much as possible on the premise of meeting the support strength, so as to reduce the total weight of such a high-capacity battery.

In some other embodiments, the impurity removal member 3 may be a hollow box body having a semicircular cross section, wherein a planar bottom surface is in contact with the housing bottom plate 11, and a cambered surface is in contact with the lower cover plate of each battery cell 2. However, compared with the present embodiment, the support stability and structural regularity thereof are lower.

In some other embodiments, each battery cell 2 may correspond to one impurity removal member 3, and impurity removal members 3 of different heights may be selected according to the sizes of corresponding battery cells 2 in the z direction, so as to ensure that the original electrode terminals 21 of the battery cells 2 extend out from the avoidance hole 13 on the housing top plate 12, or the original electrode terminals 21 of the battery cells 2 are in contact with the electrical connection portions of the electrode terminal adapters 6. However, compared with the present embodiment, the assembly process thereof is relatively complicated, and after the battery cells 2 are pushed into the cylinder bodies, corresponding impurity removal members 3 need to be inserted between the bottoms of the battery cells 2 and the housing bottom plate 11, and the sizes of the impurity removal members 3 corresponding to the battery cells 2 in this manner are different in the z direction in most cases. In the present embodiment, a plurality of battery cells 2 are fixed as a whole, and the plurality of battery cells 2 are supported from the bottoms by using a lifting tool after the battery cells are pushed into the inner cavities of the cylinder bodies from any open ends of the cylinder bodies, so that the bottoms of the battery cells 2 are disengaged from the bottoms of the cylinder bodies; and then, strip-shaped impurity removal members 3 are inserted in the x direction, and the lifting tool is taken out.

In order to fill the impurity removal material as much as possible, the width of the impurity removal member 3 may be increased as much as possible without affecting the smooth unpacking of each battery cell 2. As can be seen from Fig. 4, in the present embodiment, the width of the impurity removal member 3 is the same as the widths of regions of the housing bottom plate 11 on both sides of the electrolyte sharing chamber 4. In order to limit the impurity removal member 3 in the y direction, an inner surface of the housing bottom plate 11 is provided with a limiting guide boss extending in the x direction; and the impurity removal member 3 is located between the limiting guide boss 8 and a sidewall of the housing 1. During the process of mounting the impurity removal member 3, the limiting guide boss further has a guiding role.

As can be seen from Fig. 3, in the present embodiment, second through holes 31 are formed on two sidewalls of the impurity removal member 3 that are parallel to an xz plane. In order not to affect the impurity removal effect, the size of the limiting guide boss is required to be less than the size of the impurity removal member 3 in the z direction. In addition, a certain gap may be reserved between the sidewall of the housing 1 and the impurity removal member 3, so that electrolyte may smoothly enter the inner cavity of the impurity removal member 3 to complete impurity removal.

In some other embodiments, in addition to being formed on the two sidewalls of the impurity removal member 3 that are parallel to an xz plane, the second through holes 31 may further be formed on a top surface and a bottom surface of the impurity removal member 3 that are parallel to an xy plane. Since the top surface and the bottom surface of the impurity removal member 3 are respectively in contact with the bottom of the battery cell 2 and the housing bottom plate 11, under the action of the gravity of the battery cell 2, the top surface of the impurity removal member 3 is tightly attached to the bottom of the battery cell 2, and the bottom surface of the impurity removal member 3 is tightly attached to the housing bottom plate 11, so that it is difficult for the electrolyte to pass through, and thus the impurity removal effect of the impurity removal member 3 cannot be effectively improved if the second through holes 31 are formed on the top surface and the bottom surface.

In order to avoid the problem of the performance of the battery cell 2 being damaged due to the fact that the impurity removal material located in the inner cavity of the impurity removal member 3 diffuses to the inner cavity of each battery cell 2 to be adsorbed on an electrode sheet or a diaphragm, the apertures of the second through holes 31 are further required to be less than the particle size of the impurity removal material. Of course, the impurity removal material may further be wrapped in a filter screen, and then is loaded into the inner cavity of the impurity removal member 3, so that the impurity removal material may be prevented by the filter screen from overflowing from the inner cavity of the impurity removal member 3. The impurity removal material may also be processed into a rod-shaped or large-volume block to solve similar technical problems.

On the premise of ensuring the support strength of the impurity removal member 3, the number of the second through holes 31 is as large as possible, and the second through holes 31 are uniformly distributed on the two sidewalls of the impurity removal member 3 that are parallel to the xz plane, so as to remove impurities in the electrolyte as much as possible.

### Embodiment 2

Different from Embodiment 1, the repair mechanism in the present embodiment is a liquid injection and replacement member disposed on the housing, and by means of the liquid injection and replacement member, electrolyte may be replenished into the high-capacity battery, a gas inside the high-capacity battery may be discharged or the electrolyte in the larger-capacity battery may be replaced.

For example, a through hole may be formed at a location where the housing of the high-capacity battery is in communication with the electrolyte-sharing chamber. In a normal charging and discharging cycle process of the high-capacity battery, the through hole may be blocked by a blocking member, and when liquid replenishment or liquid replacement is required, the blocking member may be disassembled, and by means of the through hole, electrolyte may be replenished into the electrolyte sharing chamber or the electrolyte in the electrolyte sharing chamber may be replaced.

For example, a through hole may further be formed at a location where the housing of the high-capacity battery is in communication with a gas chamber and the electrolyte sharing chamber. In the normal charging and discharging cycle process of the high-capacity battery, the through hole may be blocked by the blocking member, when liquid replenishment, exhaust or liquid replacement is required, the blocking member may be disassembled, and by means of the through hole, electrolyte may be replenished into the high-capacity battery, a gas may be discharged from the high-capacity battery or the electrolyte in the high-capacity battery may be replaced.

It should be noted that in the same high-capacity battery, the repair mechanism in the present embodiment may coexist with the repair mechanism in Embodiment 1, and may also be used separately.

### Embodiment 3

In the present embodiment, a magnetic stirring apparatus is additionally provided on the basis of Embodiment 2, the magnetic stirring apparatus includes a magneton and a magnetic stirrer; and the magneton is located in the electrolyte sharing chamber, and the magnetic stirring apparatus is disposed outside the housing to drive the magneton to rotate, so as to stir the electrolyte.

After electrolyte is injected into the electrolyte sharing chamber by the liquid injection and replacement member, the magnetic stirrer is started, so that the electrolyte injected by the liquid injection and replacement member may be uniformly mixed with original electrolyte, or after electrolyte is subsequently replenished, the electrolyte may be uniformly mixed with the original electrolyte in the electrolyte sharing chamber, thereby ensuring the distribution uniformity of lithium ions, and thus improving the performance of the high-capacity battery and prolonging the cycle life of the high-capacity battery.

In some other embodiments, the magnetic stirring apparatus may also be used alone in cooperation with the impurity removal member in Embodiment 1, and when the magnetic stirring apparatus is used in cooperation with the impurity removal member, impurities generated in the electrolyte may further be fully absorbed and adsorbed by the impurity removal mechanism.

In some other embodiments, the magnetic stirring apparatus may also be simultaneously used in cooperation with the impurity removal member in Embodiment 1 and the liquid injection and replacement member in Embodiment 2, thereby not only ensuring uniform distribution of the electrolyte after injection, but also enabling the impurities generated in the electrolyte to be fully absorbed and adsorbed by the impurity removal mechanism.

### Embodiment 4

Different from the above embodiments, in the present embodiment, on the basis of the above embodiments, the housing top plate 12 is provided with a protrusion portion in a direction away from the housing bottom plate 11 to serve as a gas chamber 9, and the gas chamber 9 covers a gas port of each battery cell 2. The remaining structures are the same as those in Embodiment 1, and thus details are not repeated herein again.

### Embodiment 5

Different from the above embodiments, the impurity removal material in the present embodiment is a lithiated molecular sieve and α-alumina, wherein a mass ratio of the lithiated molecular sieve to the α-alumina is 1: 1, and a mass percentage of the impurity removal material in the electrolyte is 3% to 10%.

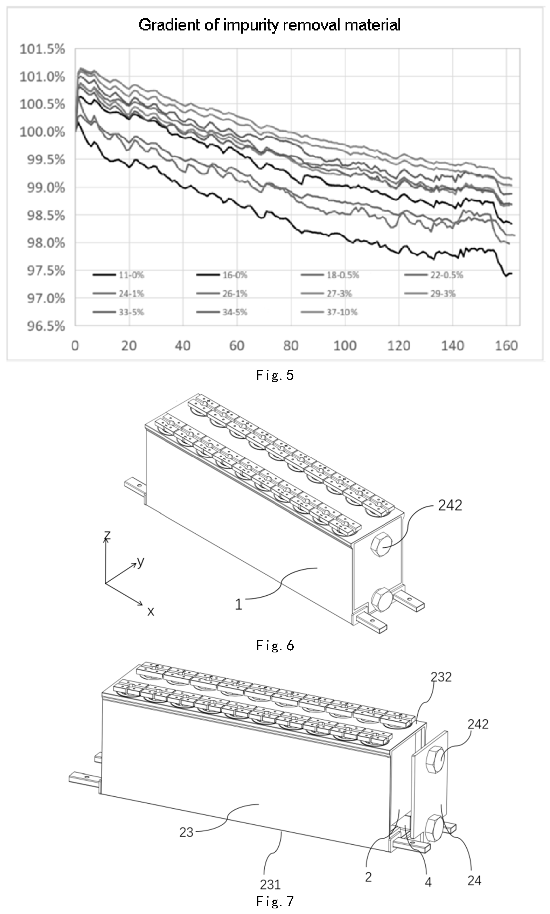

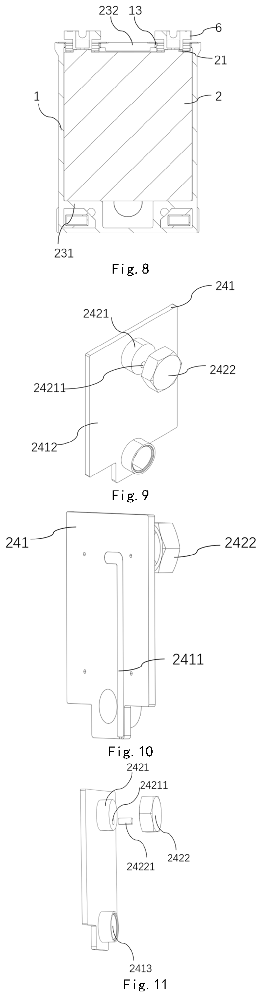

Specific experimental data may refer to Fig. 5. In Fig. 5, 11 high-capacity batteries are selected as experimental samples, and are respectively named as #11, #16, #18, #22, #24, #26, #27, #29, #33, #34 and #37 samples; the impurity removal material in each experimental sample is the lithiated molecular sieve and the α-alumina, and the mass ratio of the lithiated molecular sieve to the α-alumina is 1: 1; and the mass percentages of the impurity removal materials in different experimental samples in the electrolyte are different. In the #11 and #16 samples, no impurity removal material is added; and it can be seen from the figure that, when the mass percentage of the impurity removal material in the electrolyte is 3% to 10%, both capacity improvement and capacity retention have better effects.

Embodiment 6 to Embodiment 10 provide a high-capacity battery assembly, including a high-capacity battery and a repair mechanism, wherein the high-capacity battery includes a housing and m battery cells that are arranged in the housing and are connected in parallel, and m>1; and the battery cells herein may be prismatic cells and may also be a plurality of commercially available pouch cells connected in parallel. The inner cavity of each battery cell includes an electrolyte region and a gas region.

For ease of description, the length direction of the housing is defined as an x direction, the width direction of the housing is defined as a y direction, and the height direction of the housing is defined as a z direction.

The housing is provided with an electrolyte sharing chamber; the electrolyte sharing chamber is in communication with the electrolyte region of the inner cavity of each battery cell; the repair mechanism is a liquid injection and replacement member; and the liquid injection and replacement member is configured for replenishing electrolyte into the electrolyte sharing chamber and the inner cavity of each battery cell, or replacing the electrolyte in the electrolyte sharing chamber and the inner cavity of each battery cell.

It should be noted that Embodiment 6 to Embodiment 10 do not include a solution of using a port of the electrolyte sharing chamber as a liquid injection port.

The housing may use at least the following two structures:
the first structure includes a first cylinder body having two open ends (i.e., ports parallel to a yz plane are the open ends), and end plate assemblies respectively fixed at the two open ends of the first cylinder body (i.e., the end plate assemblies are parallel to the yz plane); and
the second structure includes a second cylinder body having open ends at the top and bottom (i.e., ports parallel to an xy plane are the open ends), and an upper cover plate and a lower cover plate, which are respectively fixed at the open ends at the top and bottom of the second cylinder body (i.e., both the upper cover plate and the lower cover plate are parallel to the xy plane); and in the structure, sidewalls in the second cylinder body that are parallel to the yz plane are referred to as the end plate assemblies.

In Embodiment 6 to Embodiment 10, the first structure is mainly taken as an example for description.

The electrolyte sharing chamber may be located on a first cylinder body side plate (a side plate parallel to an xz plane) or a first cylinder body bottom plate.

It should be noted herein that the electrolyte sharing chamber is an electrolyte accommodating cavity, and after the electrolyte sharing chamber is in communication with the electrolyte region of the inner cavity of each battery cell, it is necessary to ensure that in the entire high-capacity battery, the electrolyte is not in contact with the external environment.

A first cylinder body top plate (which is referred to as the upper cover plate in the second housing structure) may further be provided with a gas chamber, and the gas chamber covers a gas port at the top of each battery cell in the high-capacity battery. It should be noted that the gas port herein includes the following two meanings:
1) the gas port is a through hole, which is directly formed on the upper cover plate of each battery cell and penetrates through the inner cavity of the battery cell; and
   at this time, the inner cavity of the gas chamber is in communication with the gas region of the inner cavity of each battery cell by the gas port, the gas chamber serves as a gas sharing chamber of the battery cells, the gas regions of the battery cells may be communicated on the basis of the gas chamber to achieve a gas balance, so that gases in the battery cells are shared to ensure the consistency of the battery cells, thereby prolonging the cycle life of the high-capacity battery to a certain degree; and when thermal runaway occurs in any battery cell, a flue gas in the inner cavity of the battery cell enters the gas chamber, and is discharged from the gas chamber, thereby improving the safety of the high-capacity battery.
2) The gas port is an explosion venting port or an explosion-proof port disposed on the upper cover plate of each battery cell, and an explosion venting film is disposed at the explosion venting port or the explosion-proof port; and
   at this time, the gas chamber serves as a first explosion venting channel, and when the explosion venting film at the gas port of any battery cell is broken through by the flue gas in the inner cavity, the flue gas in the inner cavity of the battery cell is discharged from the gas chamber, thereby improving the safety of the high-capacity battery.

In order to improve the heat dissipation performance of such a high-capacity battery, an avoidance hole capable of enabling a polarity terminal of each battery cell to extend out is formed on the first cylinder body top plate; and the polarity terminal of each battery cell extends out from the avoidance hole, and a region of the first cylinder body top plate around the avoidance hole is fixed and sealed with a shell of the battery cell.

It should be noted that the polarity terminal of the battery cell herein may be an electrode terminal of the battery cell, in order to avoid the situation in which the electrode terminal of the battery cell serving as the polarity terminal cannot smoothly extend out from the avoidance hole, an electrode terminal adapter may further be connected to the electrode terminal of the battery cell, and an overall structure in which the electrode terminal of the battery cell cooperates with the electrode terminal adapter is used as the polarity terminal of the battery cell.

The liquid injection and replacement member may be fixed at any location of the housing, for example, the liquid injection and replacement member may be disposed on a sidewall of the first cylinder body that is parallel to the xz plane, and may further be disposed on an end plate assembly. After a period of time of a charging and discharging cycle of the high-capacity battery, the electrolyte is reduced by decomposition and consumption, resulting in a reduction in the performance of the high-capacity battery, so that electrolyte may be replenished into the electrolyte sharing chamber and the inner cavity of each battery cell by the liquid injection and replacement member, so as to improve the performance of the high-capacity battery; or, after a period of time of the charging and discharging cycle of the high-capacity battery, the performance of the high-capacity battery is affected by the occurrence of impurities in the electrolyte, so that the electrolyte in the electrolyte sharing chamber and the inner cavity of each battery cell may also be replaced by the liquid injection and replacement member, so as to improve the performance of the high-capacity battery. The replacement herein may be partial replacement and may also be complete replacement. In addition, after the electrolyte region of the inner cavity of each battery cell is in communication with the electrolyte sharing chamber, electrolyte may be injected into the inner cavity of each battery cell and the electrolyte sharing chamber again by the liquid injection and replacement member, so as to ensure continuity of the electrolyte.

An unpacking apparatus operation port may further be formed on the end plate assembly provided with the liquid injection and replacement member, and an unpacking apparatus extends into the electrolyte sharing chamber from the unpacking apparatus operation port, so as to unpack each battery cell, so that the electrolyte sharing chamber is in communication with the electrolyte region of the inner cavity of each battery cell (specifically, during unpacking, the unpacking apparatus extends into the electrolyte sharing chamber from the unpacking apparatus operation port, to open a sealing film sealed at the opening of the lower cover plate of each battery cell, and the sealing film may specifically use a sealing film disclosed in the Chinese patents CN218525645U and CN218525614U).

The unpacking apparatus operation port may also serve as an explosion venting port, and after unpacking, an explosion venting mechanism is hermetically welded on the end plate assembly at the periphery of the unpacking apparatus operation port. Correspondingly, the other end plate assembly may be a flat plate, which seals the other open end of the first cylinder body, meanwhile seals the open end of the electrolyte sharing chamber, and when the gas chamber is provided, also seals the open end of the gas chamber.

The explosion venting port may also be located on the other end plate assembly different from the unpacking apparatus operation port, the other end plate assembly is provided with a first explosion venting channel, and a gas inlet end of the first explosion venting channel is configured for communicating with the gas chamber of the high-capacity battery, and a gas outlet end thereof is configured for communicating with the explosion venting port.

Embodiment 6 to Embodiment 10 are described in detail below in combination with the drawings.

### Embodiment 6

As shown in Figs. 6-8, the high-capacity battery in the present embodiment includes a housing 1 and 10 battery cells 2 that are located in the housing and are connected in parallel, wherein the battery cells 2 are prismatic cells. In other embodiments, the number of the battery cells 2 may be adjusted according to actual needs. A through hole penetrating through the inner cavity of each battery cell 2 is formed in the bottom of a shell of each battery cell 2.

The housing 1 includes a first cylinder body 23 having two open ends, and end plate assemblies 24 respectively fixed at the two open ends of the first cylinder body 23; and
a first cylinder body bottom plate 231 is provided with an electrolyte sharing chamber 4 extending in the x direction; and the electrolyte sharing chamber 4 is in communication with the electrolyte region of the inner cavity of each battery cell 2 by the through hole of each battery cell 2.

An avoidance hole 13 capable of enabling the polarity terminal of each battery cell 2 to extend out is formed on a first cylinder body top plate 232; the polarity terminal of each battery cell 2 extends out from the avoidance hole 13, and a region of the first cylinder body top plate 232 around the avoidance hole 13 is fixed and sealed with the shell of the battery cell 2. It can be seen from the figures that in the present embodiment, the polarity terminal of the battery cell 2 refers to an overall structure in which the electrode terminal 21 of the battery cell cooperates with the electrode terminal adapter 6.

In combination with Fig. 9 and Fig. 10, one end plate assembly 24 in the present embodiment includes a first end sub-plate 241, which is sealed at one of the open ends of the first cylinder body 23 and the electrolyte sharing chamber 4; and the first end sub-plate 241 is provided with an electrolyte flow channel 2411 and is provided with a liquid injection and replacement member 242 on an outer surface 2412 of the first end sub-plate (wherein the outer surface 2412 of the first end sub-plate refers to the surface of the first end sub-plate 241 that is away from each battery cell 2 in the first cylinder body 23).

As can be seen from Fig. 10, the electrolyte flow channel 2411 in the present embodiment is a through hole formed on the first end sub-plate 241.

In some other embodiments, the electrolyte flow channel 2411 may further be a through slot formed on an inner surface of the first end sub-plate 241, but compared with the present embodiment, the electrolyte cannot be easily extracted.

As shown in Fig. 9, the liquid injection and replacement member 242 includes a liquid injection and replacement member main body 2421, and a blocking member 2422 fixed on the liquid injection and replacement member main body 2421; in the present embodiment, the liquid injection and replacement member main body 2421 is a cylinder, and in some other embodiments, a rectangular column, a semi-cylinder or the like may further be selected; and the liquid injection and replacement member main body 2421 and the first end sub-plate may be an integrated member and may also be separate members, if the liquid injection and replacement member main body 2421 and the first end sub-plate are an integrated member, a die-casting process may be configured for forming, and if the liquid injection and replacement member main body 2421 and the first end sub-plate are separate members, the liquid injection and replacement member main body 2421 may be fixed on the first end sub-plate by welding. A first through hole is formed on the liquid injection and replacement member main body 2421 in the axial direction of the liquid injection and replacement member main body 2421, to serve as a first channel 24211 to communicate with the electrolyte flow channel 2411.

The blocking member 2422 in the present embodiment is a cover cap (which may be a nut), which is buckled on the liquid injection and replacement member main body 2421, and is in threaded connection with the liquid injection and replacement member main body 2421, and a sealing ring 215 may be disposed at a threaded connection portion to improve the sealing performance of the location and to block the first channel 24211.

In some other embodiments, the cover cap may further be connected with the liquid injection and replacement member main body 2421 in an interference fit manner, but the disassembly is more difficult compared with the present embodiment.

In some other embodiments, as shown in Fig. 11, the blocking member 2422 may further include an elastic blocking column 24221 filled in the first channel 24211, so as to further ensure the sealing performance of the first channel 24211. The elastic blocking column 24221 may be made of a rubber material that does not react with the electrolyte, for example, fluororubber, nitrile rubber, natural rubber or ethylene propylene diene monomer rubber, etc.

After the end plate assembly 24 is fixed at the open end of the first cylinder body 23, the two ends of the electrolyte flow channel 2411 are respectively in communication with the electrolyte sharing chamber 4 and the first channel 24211 of the liquid injection and replacement member 242.

In order to facilitate unpacking, in the present embodiment, the first end sub-plate 241 may further be provided with an unpacking apparatus operation port 2413, the unpacking apparatus extends into the electrolyte sharing chamber 4 from the unpacking apparatus operation port 2413 to unpack each battery cell 2, so that the electrolyte sharing chamber 4 is in communication with the electrolyte region of the inner cavity of each battery cell 2 (specifically, during unpacking, the unpacking apparatus extends into the electrolyte sharing chamber 4 from the unpacking apparatus operation port 2413, to open the sealing film sealed at the through hole of the lower cover plate of each battery cell 2, and the sealing film may specifically use the sealing film disclosed in the Chinese patents CN218525645U and CN218525614U). It should be noted that after unpacking is completed, it is necessary to seal the unpacking apparatus operation port 2413 by the blocking member.

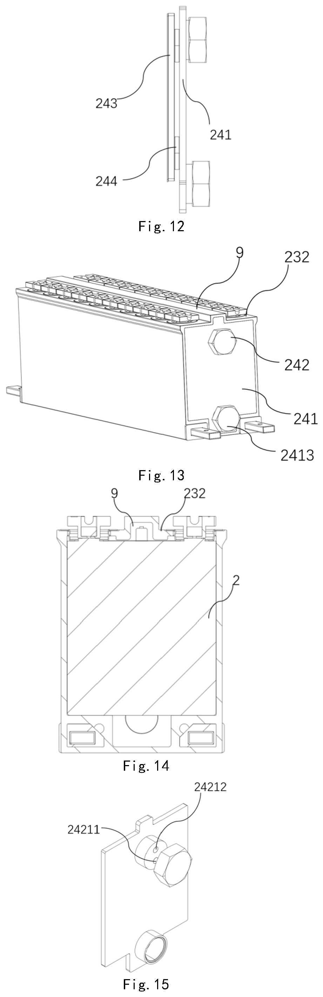

As shown in Fig. 12, in the present embodiment, a second end sub-plate 243 may further be disclosed between the first end sub-plate 241 and the outermost battery cell 2 in the housing 1, and the second end sub-plate 243 is tightly attached to the outermost battery cell 2 and is fixedly connected with the first end sub-plate 241.
by additionally providing the second end sub-plate 243, the size of the second end sub-plate 243 in the x direction may be adjusted to clamp all battery cells 2 in the x direction, thereby improving the stability of each battery cell 2 in the inner cavity of the housing 1, and avoiding the problem of reduced cycle performance of the high-capacity battery caused by the swelling of each battery cell 2.

In the present embodiment, the second end sub-plate 243 is fixed with the first end sub-plate 241 by a screw, and a gasket 244 may further be disposed between the first end sub-plate 241 and the second end sub-plate 243, and the head of the screw sequentially passes through the second end sub-plate 243 and the gasket 244 to be connected with the first end sub-plate 241. At this time, the thickness of the entire end plate assembly 24 may also be adjusted by adjusting the thickness (the size in the x direction) of the gasket 244, so as to clamp all battery cells 2.

In some other embodiments, the second end sub-plate 243 and the first end sub-plate 241 may further be connected by a rivet, which is relatively complicated compared with the screw.

When liquid replenishment is required, the operation may be performed by the following steps:
disassembling the cover cap;
stretching an electrolyte injection pipe into the first channel 24211, injecting electrolyte, and after liquid replenishment is completed, pulling out the electrolyte injection pipe; and
sealing and fixing the cover cap on the liquid injection and replacement member main body 2421 to block the first channel 24211.

When liquid replacement is required, the operation may be performed by the following steps:
disassembling the cover cap;
stretching the electrolyte injection pipe into the first channel 24211, and extracting the electrolyte; then, stretching the electrolyte injection pipe into the first channel 24211, and injecting new electrolyte; and after liquid injection is completed, pulling out the electrolyte injection pipe; and
sealing and fixing the cover cap on the liquid injection and replacement member main body 2421 to block the first channel 24211.

It should be noted that in the present embodiment, during liquid injection, if the pressure in the inner cavity of the housing 1 is too large, the problem of difficulty in liquid injection may occur.

### Embodiment 7

Different from Embodiment 6, as shown in Figs. 13-16, according to the high-capacity battery in the present embodiment, the first cylinder body top plate 232 is provided with a gas chamber 9; and the gas chamber 9 is in communication with the gas region of the inner cavity of each battery cell 2.

Correspondingly, a gas flow channel 2414 in communication with the gas chamber 9 is further formed on the first end sub-plate 241; and a second channel 24212 (a first through hole formed on the liquid injection and replacement member main body 2421) is formed on the liquid injection and replacement member main body 2421, and the blocking member 2422 is further configured for blocking the second channel 24212.

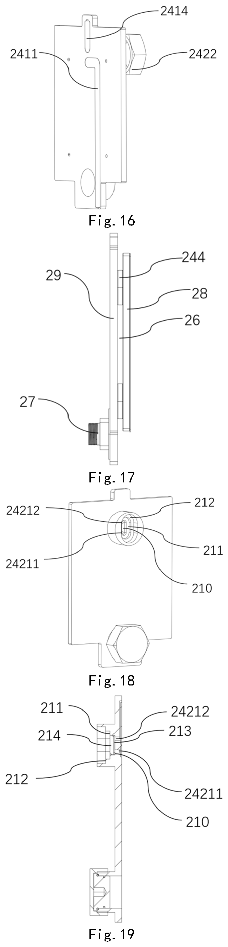

As shown in Fig. 15 and Fig. 16, the gas flow channel 2414 in the present embodiment is a through hole formed on the first end sub-plate 241; and
in some other embodiments, the gas flow channel 2414 may further be a through slot formed on the inner surface of the first end sub-plate 241, but compared with the present embodiment, a gas is easily dispersed throughout the housing 1.

In the present embodiment, in addition to the cover cap buckled on the liquid injection and replacement member main body 2421, the blocking member 2422 further includes elastic blocking columns 24221 sealed in the first channel 24211 and the second channel 24212, so as to ensure that the liquid injection and replacement member 242 has better sealing performance in a normal charging and discharging cycle process.

After the end plate assembly 24 is fixed at the open end of the first cylinder body 23, the two ends of the electrolyte flow channel 2411 are respectively in communication with the electrolyte sharing chamber 4 and the first channel 24211 of the liquid injection and replacement member 242, and the two ends of the gas flow channel 2414 are respectively in communication with the gas chamber 9 and the second channel 24212 of the liquid injection and replacement member 242.

When the end plate assembly further includes a second end sub-plate, the unpacking apparatus operation port 2413 on the first end sub-plate may also serve as an explosion venting port 27, and a gap between the first end sub-plate and the second end sub-plate may serve as the first explosion venting channel. The two ends of the first explosion venting channel 26 are respectively in communication with the gas chamber 9 and the explosion venting port 27, and an explosion venting mechanism is sealed at the explosion venting port 27. A hollow member provided with an explosion venting film at one end may be used as the explosion venting mechanism. When thermal runaway occurs in any battery cell 2, a thermal runaway flue gas enters the first explosion venting channel 26 from the gas chamber 9, and breaks through the explosion venting film to be discharged from the explosion venting port 27. When an energy storage device is assembled on the basis of such a high-capacity battery assembly, a plurality of high-capacity batteries are arranged in the width direction of the high-capacity batteries, so that the end plate assembly of each high-capacity battery is exposed, therefore when the liquid injection and replacement member, the unpacking apparatus operation port 2413 and the explosion venting port 27 are disposed on the end plate assembly, corresponding operations may be conveniently performed.

As shown in Fig. 17, in some other embodiments, a first explosion venting channel 26 and an explosion venting port 27 may further be disposed on the other end plate assembly 24 (the end plate assembly provided with no liquid injection and replacement member), the two ends of the first explosion venting channel 26 are respectively in communication with the gas chamber 9 and the explosion venting port 27, and an explosion venting mechanism is sealed at the explosion venting port 27. A hollow member provided with an explosion venting film at one end may be used as the explosion venting mechanism. When thermal runaway occurs in any battery cell 2, the thermal runaway flue gas enters the first explosion venting channel 26 from the gas chamber 9, and breaks through the explosion venting film to be discharged from the explosion venting port 27.

As can be seen from Fig. 17, the other end plate assembly 24 includes a third end sub-plate 28 and a fourth end sub-plate 29, the third end sub-plate 28 and the fourth end sub-plate 29 are parallel to each other and have a gap therebetween (the third end sub-plate 28 is tightly attached to the outermost battery cell 2 in the first cylinder body 23), and the gap is used as the first explosion venting channel 26 in the present embodiment.

In the present embodiment, the third end sub-plate 28 is fixed with the fourth end sub-plate 29 by a screw. It should be noted that in order to ensure that the first explosion venting channel 26 is formed between the third end sub-plate 28 and the fourth end sub-plate 29, in the x direction, the length of the screw should be greater than the gap between the third end sub-plate 28 and the fourth end sub-plate 29, and is less than the distance between an inner surface of the third end sub-plate 28 and an outer surface of the fourth end sub-plate 29 (the surface close to each battery cell 2 is defined as the inner surface). The head of the screw passes through the third end sub-plate 28 to be connected with the fourth end sub-plate 29. In order that the end plate assembly 24 may serve as a whole to better extrude each battery cell 2, as shown in Fig. 17, in the present embodiment, a gasket 244 is disposed between the third end sub-plate 28 and the fourth end sub-plate 29, and the head of the screw sequentially passes through the third end sub-plate 28 and the gasket 244 to be connected with the fourth end sub-plate 29, so as to avoid the gap between the third end sub-plate 28 and the fourth end sub-plate 29 becoming smaller or even disappearing when the battery cell 2 is extruded.

When liquid replenishment is required, the operation may be performed by the following steps:
disassembling the cover cap, and taking out the elastic blocking columns 24221 sealed in the first channel 24211 and the second channel 24212;
when there is a gas in the inner cavity of the housing 1, the gas overflows from the second channel 24212, so that it is easy to inject electrolyte into the inner cavity of the housing 1; and in order to ensure more smooth liquid injection, in this step, a gas extraction pipe may be inserted into the second channel 24212, an external gas extraction apparatus connected with the gas extraction pipe is started to perform gas extraction, so that a certain negative pressure is formed in the inner cavity of the housing 1;
then, stretching the electrolyte injection pipe into the first channel 24211, and injecting electrolyte, wherein during liquid injection, if the problem of difficulty in liquid injection occurs, the external gas extraction apparatus may be started, so that a certain negative pressure is formed in the inner cavity of the housing 1, and liquid injection is then performed; and
after liquid replenishment is completed, pulling out the electrolyte injection pipe and the gas extraction pipe; and sealing the elastic blocking columns 24221 in the first channel 24211 and the second channel 24212, and then sealing and fixing the cover cap on the liquid injection and replacement member main body 2421.

When liquid replacement is required, the operation may be performed by the following steps:
disassembling the cover cap, and taking out the elastic blocking columns 24221 sealed in the first channel 24211 and the second channel 24212;
stretching an electrolyte extraction pipe into the first channel 24211, and extracting electrolyte; when the electrolyte cannot be extracted, inserting a gas injection pipe into the second channel 24212 to inject a protective gas into the inner cavity of the housing 1, so as to perform liquid extraction; after liquid extraction is completed, taking out the electrolyte extraction pipe and the gas injection pipe, stretching the electrolyte injection pipe into the first channel 24211, and injecting new electrolyte; and after liquid injection is completed, pulling out the electrolyte injection pipe; and
sealing the elastic blocking columns 24221 in the first channel 24211 and the second channel 24212, and then the sealing and fixing the cover cap on the liquid injection and replacement member main body 2421.

Compared with Embodiment 6, in the present embodiment, during liquid extraction and liquid injection, by means of the second channel 24212, a gas is injected into the inner cavity of the housing 1 or the gas in the inner cavity of the housing 1 is discharged, so that liquid injection and replacement operations may be better implemented.

### Embodiment 8

Different from the above embodiments, in the present embodiment, on the basis of the above embodiments, the first channel 24211, or the first channel 24211 and the second channel 24212 on the liquid injection and replacement member main body 2421 are further blocked in a hot melting manner, and it is taken as an example for description below that the first channel 24211 and the second channel 24212 on the liquid injection and replacement member main body 2421 are blocked:
as shown in Fig. 18, in the present embodiment, coaxial multi-stage stepped holes are formed on the liquid injection and replacement member main body 2421, and the multi-stage stepped holes penetrate through the first channel 24211 and the second channel 24212; in the present embodiment, three-stage stepped holes are taken as an example, when leaving factory, as shown in Fig. 19, in the present embodiment, a sealing plate 213 may be only disposed on a first-stage step surface 210 (the step surface closest to the first channel 24211 and the second channel 24212 is defined as the first-stage step surface 210, the step surface farthest from the first channel 24211 and the second channel 24212 is defined as a third-stage step surface 212, the step surface located at the middle is defined as a second-stage step surface 211), and the first channel 24211 and the second channel 24212 are preliminarily sealed by using the sealing plate 213; then, a hot melting material is poured into a first-stage through hole having the sealing plate 213 in the hot melting manner to form a first hot melting member 214 after the hot melting material cools, so as to secondarily sealing the first channel 24211 and the second channel 24212; and it should be noted that, in addition to playing a role in preliminarily sealing the first channel 24211 and the second channel 24212, the sealing plate 213 may further prevent the hot melting material from flowing into the inner cavity of the housing 1. Under normal circumstances, the hot melting material is a material that does not react with the electrolyte, for example, fluororubber, nitrile rubber, natural rubber or ethylene propylene diene monomer rubber, and the like; and in addition, when the first channel 24211 and the second channel 24212 are filled with the elastic blocking columns 24221, the sealing plate 213 may further prevent the first hot melting member 214 from being connected with the elastic blocking columns 24221 during hot melting, resulting in the problem of difficulty in opening the first channel 24211 and the second channel 24212 subsequently.

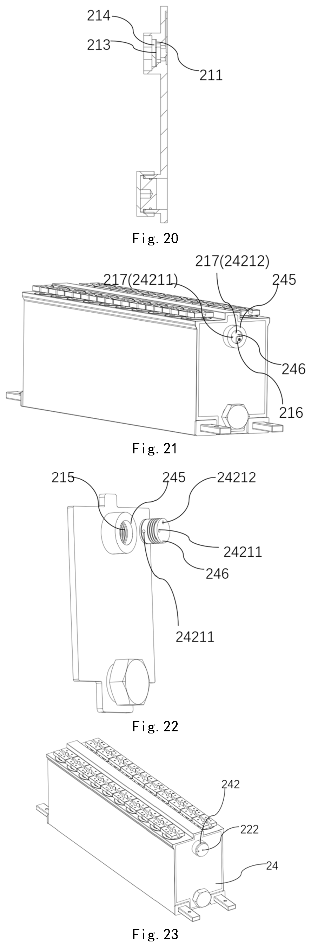

When liquid replenishment is required, the operation may be performed by the following steps:
disassembling the cover cap, and using a cutter to form, on the first hot melting member 214 and the sealing plate 213, open pores penetrating through the first channel 24211 and the second channel 24212;
when there is a gas in the inner cavity of the housing 1, the gas overflows from the second channel 24212, so that it is easy to inject electrolyte into the inner cavity of the housing 1; and in order to ensure more smooth liquid injection, in this step, the gas extraction pipe may be inserted into the second channel 24212, the external gas extraction apparatus connected with the gas extraction pipe is started to perform gas extraction, so that a certain negative pressure is formed in the inner cavity of the housing 1;
then, stretching the electrolyte injection pipe into the first channel 24211, and injecting electrolyte, wherein during liquid injection, if the problem of difficulty in liquid injection occurs, the external gas extraction apparatus may be started, so that a certain negative pressure is formed in the inner cavity of the housing 1, and liquid injection is then performed;
after liquid replenishment is completed, pulling out the electrolyte injection pipe and the gas extraction pipe; and preliminarily sealing the first channel 24211 and the second channel 24212 by using the elastic blocking columns 24221;
next, as shown in Fig. 20, fixing the sealing plate 213 on the second-stage step surface 211, and then pouring the hot melting material onto the sealing plate 213 and into a second-stage through hole (i.e., into a stepped hole where the sealing plate is located) for sealing, wherein in the present embodiment, during secondary sealing, the second-stage step surface 211 is used as a fixing surface of the sealing plate 213, therefore it is possible to avoid the problem of a sealing effect being unable to be achieved by using the sealing plate 213 due to the fact that when the first-stage step surface 210 is used as the sealing surface, the surface thereof is uneven because of the sealing plate 213 or the first hot melting member 214 remaining on the first-stage step surface 210 during first-time trepanning; and so on, when third-time sealing is performed, the sealing plate 213 may be fixed on the third-stage step surface 212; and
finally, after the hot melting material cools, sealing and fixing the cover cap on the liquid injection and replacement member main body 2421.

When liquid replacement is required, the operation may be performed by the following steps:
disassembling the cover cap, and using the cutter to form, on the first hot melting member 214 and the sealing plate 213, open pores penetrating through the first channel 24211 and the second channel 24212;
stretching the electrolyte extraction pipe into the first channel 24211, and extracting electrolyte; when the electrolyte cannot be extracted, inserting the gas injection pipe into the second channel 24212 to inject a protective gas into the inner cavity of the housing 1, so as to perform liquid extraction; after liquid extraction is completed, taking out the electrolyte extraction pipe and the gas injection pipe, stretching the electrolyte injection pipe into the first channel 24211, and injecting new electrolyte; and after liquid injection is completed, pulling out the electrolyte injection pipe; and
preliminarily sealing the first channel 24211 and the second channel 24212 by using the elastic blocking columns 24221; then, fixing the sealing plate 213 on the second-stage step surface 211, and pouring the hot melting material onto the sealing plate 213 and into the second-stage through-hole for sealing; and after the hot melting material cools, sealing and fixing the cover cap on the liquid injection and replacement member main body 2421.

Compared with Embodiment 7, in the present embodiment, in the charging and discharging cycle process of the high-capacity battery, the sealing performance at the location of the liquid injection and replacement member 242 is better.

### Embodiment 9

Different from the above embodiments, in the present embodiment, a liquid injection and replacement member main body 2421 of a different structural form is used. As shown in Fig. 21 and Fig. 22, the liquid injection and replacement member main body 2421 in the present embodiment includes an annular fixing member 245 and a rotating member 246; the rotating member 246 is coaxially located in the annular fixing member 245 and is in clearance fit with the annular fixing member 245, and may perform autorotation in the annular fixing member 245 under the action of an external force; and two third through holes are formed on the rotating member 246 to serve as the first channel 24211 and the second channel 24212, and by rotating the rotating member 246, the first channel 24211 is in communication with the electrolyte flow channel 2411, and the second channel 24212 is in communication with the gas flow channel 2414.

In order to prevent electrolyte from flowing out from a gap between the annular fixing member 245 and the rotating member 246, in the present embodiment, a sealing ring 215 may be additionally disposed on a cooperation portion therebetween for sealing, as shown in Fig. 22.

In addition, in order to rotate the rotating member 246 in place at one time during operation, in the present embodiment, an identifier may further be disposed on the annular fixing member 245, for example, the identifier may further be disposed at a location where the first channel 24211 is in communication with the electrolyte flow channel 2411, and when the port of the first channel 24211 is flush with the identifier, it is considered that the first channel 24211 is in communication with the electrolyte flow channel 2411, and the second channel 24212 is in communication with the gas flow channel 2414.

As shown in Fig. 21, in order to position the rotating member 246, a positioning block 216 may further be disposed on the annular fixing member 245, threaded holes are formed on the positioning block 216 and the rotating member 246, and when positioning is required, the positioning of the rotating member 246 in the annular fixing member 245 is implemented by using a screw.

When liquid replenishment is required, the operation may be performed by the following steps:
disassembling the cover cap, and rotating the rotating member 246, so that the first channel 24211 is in communication with the electrolyte flow channel 2411, and the second channel 24212 is in communication with the gas flow channel 2414;
when there is a gas in the inner cavity of the housing 1, the gas overflows from the second channel 24212, so that it is easy to inject electrolyte into the inner cavity of the housing 1; and in order to ensure more smooth liquid injection, in this step, the gas extraction pipe may be inserted into the second channel 24212, the external gas extraction apparatus connected with the gas extraction pipe is started to perform gas extraction, so that a certain negative pressure is formed in the inner cavity of the housing 1;
then, stretching the electrolyte injection pipe into the first channel 24211, and injecting electrolyte, wherein during liquid injection, if the problem of difficulty in liquid injection occurs, the external gas extraction apparatus may be started, so that a certain negative pressure is formed in the inner cavity of the housing 1, and liquid injection is then performed; and
after liquid replenishment is completed, pulling out the electrolyte injection pipe and the gas extraction pipe; preliminarily sealing the first channel 24211 and the second channel 24212 by using the elastic blocking columns 24221; rotating the rotating member 246, so that the first channel 24211 is isolated from the electrolyte flow channel 2411, and the second channel 24212 is isolated from the gas flow channel 2414; sealing the electrolyte flow channel 2411 and the gas flow channel 2414 again by using sidewalls of the rotating member 246; and then, sealing and fixing the cover cap on the liquid injection and replacement member main body 2421.

When liquid replacement is required, the operation may be performed by the following steps:
disassembling the cover cap, and rotating the rotating member 246, so that the first channel 24211 is in communication with the electrolyte flow channel 2411, and the second channel 24212 is in communication with the gas flow channel 2414;
stretching the electrolyte extraction pipe into the first channel 24211, and extracting electrolyte; when the electrolyte cannot be extracted, inserting the gas injection pipe into the second channel 24212 to inject a protective gas into the inner cavity of the housing 1, so as to perform liquid extraction; after liquid extraction is completed, taking out the electrolyte extraction pipe and the gas injection pipe, stretching the electrolyte injection pipe into the first channel 24211, and injecting new electrolyte; and after liquid injection is completed, pulling out the electrolyte injection pipe; and
preliminarily sealing the first channel 24211 and the second channel 24212 by using the elastic blocking columns 24221; then, rotating the rotating member 246, so that the first channel 24211 is isolated from the electrolyte flow channel 2411, and the second channel 24212 is isolated from the gas flow channel 2414, and sealing the electrolyte flow channel 2411 and the gas flow channel 2414 again by using the sidewalls of the rotating member 246; and then, sealing and fixing the cover cap on the liquid injection and replacement member main body 2421.

Compared with Embodiment 8, the sealing manner in the present embodiment is relatively simple, and in the charging and discharging cycle process of the high-capacity battery, the sealing performance at the location of the liquid injection and replacement member 242 is also better.

### Embodiment 10

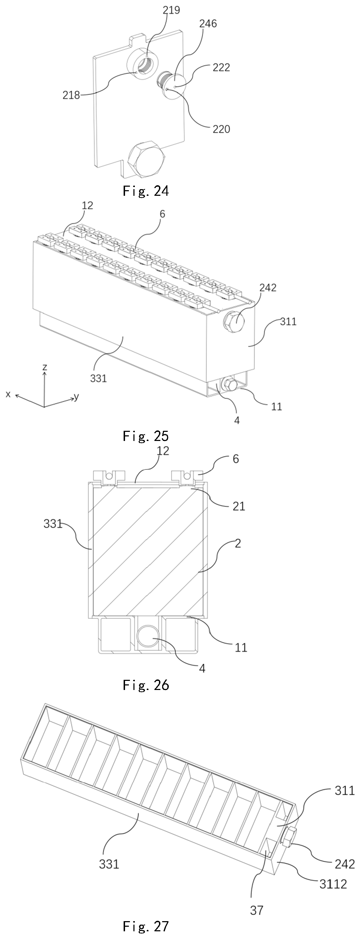

Different from Embodiment 9, in the present embodiment, only one fourth through hole 222 is formed on the rotating member 246, and as shown in Fig. 23 and Fig. 24, by rotating the rotating member 246, the fourth through hole is respectively in communication with the electrolyte flow channel 2411 and the gas flow channel 2414.

In order to rotate the rotating member 246 in place at one time during operation, identifiers may be disposed on both the rotating member 246 and the annular fixing member 245, a third identifier 220 is disposed on the rotating member, and a first identifier 218 and a second identifier 219 are respectively disposed on the annular fixing member 245 at locations corresponding to the electrolyte flow channel 2411 and the gas flow channel 2414; and when the third identifier 220 on the rotating member 246 points to the first identifier 218 on the annular fixing member 245, it is considered that the fourth through hole 222 is in communication with the electrolyte flow channel 2411, and when the third identifier 220 on the rotating member 246 points to the second identifier 219 on the annular fixing member 245, it is considered that the fourth through hole 222 is in communication with the gas flow channel 2414.

When liquid replenishment is required, the operation may be performed by the following steps:
disassembling the cover cap, and rotating the rotating member 246, so that the fourth through hole 222 is in communication with the electrolyte flow channel 2411;
when the pressure in the inner cavity of the housing 1 is too large, the rotating member 246 may be first rotated, so that the fourth through hole 222 is in communication with the gas flow channel 2414; the gas overflows from the fourth through hole 222, so that it is easy to inject electrolyte into the inner cavity of the housing 1; in order to ensure more smooth liquid injection, in this step, the gas extraction pipe may be inserted into the fourth through hole 222, the external gas extraction apparatus connected with the gas extraction pipe is started to perform gas extraction, so that a certain negative pressure is formed in the inner cavity of the housing 1; and in order to prevent external air from entering the inner cavity of the housing 1 from the fourth through hole 222, the step is preferably performed in a vacuum environment;
then, rotating the rotating member 246, so that the fourth through hole 222 is in communication with the electrolyte flow channel 2411, stretching the electrolyte injection pipe into the fourth through hole 222 in the vacuum environment, and injecting electrolyte, wherein during liquid injection, if the problem of difficulty in liquid injection occurs, the rotating member 246 may be rotated again, so that the fourth through hole 222 is in communication with the gas flow channel 2414, and liquid injection is then performed after exhaust or gas extraction is performed; and
after liquid replenishment is completed, pulling out the electrolyte injection pipe, and preliminarily sealing the fourth through hole 222 by using the elastic blocking column 24221; rotating the rotating member 246, so that the fourth through hole 222 is isolated from the electrolyte flow channel 2411 and the gas flow channel 2414; sealing the electrolyte flow channel 2411 and the gas flow channel 2414 again by using the sidewalls of the rotating member 246; and then, sealing and fixing the cover cap on the liquid injection and replacement member main body 2421.

When liquid replacement is required, the operation may be performed by the following steps:
disassembling the cover cap, and rotating the rotating member 246, so that the fourth through hole 222 is in communication with the electrolyte flow channel 2411;
stretching the electrolyte extraction pipe into the fourth through hole 222, and extracting electrolyte; when the electrolyte cannot be extracted, rotating the rotating member 246, so that the fourth through hole 222 is in communication with the gas flow channel 2414; inserting the gas injection pipe into the fourth through hole 222 to inject a protective gas into the inner cavity of the housing 1; rotating the rotating member 246 again, so that the fourth through hole 222 is in communication with the electrolyte flow channel 2411 to perform liquid extraction; after liquid extraction is completed, taking out the electrolyte extraction pipe, stretching the electrolyte injection pipe into the fourth through hole 222, and injecting new electrolyte; and after liquid injection is completed, pulling out the electrolyte injection pipe; and
preliminarily sealing the fourth through hole 222 by using the elastic blocking column 24221; then, rotating the rotating member 246, so that the fourth through hole 222 is isolated from the electrolyte flow channel 2411 and the gas flow channel 2414; sealing the electrolyte flow channel 2411 and the gas flow channel 2414 again by using the sidewalls of the rotating member 246; and then, sealing and fixing the cover cap on the liquid injection and replacement member main body 2421.

Compared with Embodiment 9, in the present embodiment, the structure of the rotating member 246 is relatively simple, and in the charging and discharging cycle process of the high-capacity battery, the sealing performance at the location of the liquid injection and replacement member 242 is also better.

Embodiment 11 to Embodiment 15 provide a high-capacity battery assembly, including a high-capacity battery and a repair mechanism, wherein the high-capacity battery includes a housing and m battery cells that are arranged in the housing and are connected in parallel, and m>1; and the battery cells herein may be prismatic cells and may also be a plurality of commercially available pouch cells connected in parallel. The inner cavity of each battery cell includes an electrolyte region and a gas region.

For ease of description, the length direction of the housing is defined as an x direction, the width direction of the housing is defined as a y direction, and the height direction of the housing is defined as a z direction.

The housing is provided with an electrolyte sharing chamber; the electrolyte sharing chamber is in communication with the electrolyte region of the inner cavity of each battery cell; and the repair mechanism is a liquid injection and replacement member, and the liquid injection and replacement member is configured for replenishing electrolyte into the electrolyte sharing chamber and the inner cavity of each battery cell, or replacing the electrolyte in the electrolyte sharing chamber and the inner cavity of each battery cell.

The housing may use at least the following two structures:
the first structure includes a first cylinder body having two open ends (i.e., ports parallel to a yz plane are the open ends), and end plate assemblies respectively fixed at the two open ends of the first cylinder body (i.e., the end plate assemblies are parallel to the yz plane); and
the second structure includes a second cylinder body having open ends at the top and bottom (i.e., ports parallel to an xy plane are the open ends), and a housing top plate and a housing bottom plate, which are respectively fixed at the open ends at the top and bottom of the second cylinder body (i.e., both the housing top plate and the housing bottom plate are parallel to the xy plane); and in the structure, a sidewall in the second cylinder body that is parallel to the yz plane is referred to as a first sidewall. The housing bottom plate and the second cylinder body may be an integrated member and may also be separate members.

In Embodiment 11 to Embodiment 15, the second structure is mainly taken as an example for description.

The electrolyte sharing chamber may be located on the housing bottom plate.

It should be noted herein that the electrolyte sharing chamber is an electrolyte accommodating cavity, and after the electrolyte sharing chamber is in communication with the electrolyte region of the inner cavity of each battery cell, it is necessary to ensure that in the entire high-capacity battery, the electrolyte is not in contact with the external environment.

The housing top plate may further be provided with a gas chamber, and the gas chamber covers a gas port at the top of each battery cell in the high-capacity battery. It should be noted that the gas port herein includes the following two meanings:
1) the gas port is a through hole, which is directly formed on the housing top plate of each battery cell and penetrates through the inner cavity of the battery cell; and
   at this time, the inner cavity of the gas chamber is in communication with the gas region of the inner cavity of each battery cell by the gas port, the gas chamber serves as a gas sharing chamber of the battery cells, and the gas regions of the battery cells may be communicated on the basis of the gas chamber to achieve a gas balance, so that gases in the battery cells are shared to ensure the consistency of the battery cells, thereby prolonging the cycle life of the high-capacity battery to a certain degree; and when thermal runaway occurs in any battery cell, a flue gas in the inner cavity of the battery cell enters the gas chamber, and is discharged from the gas chamber, thereby improving the safety of the high-capacity battery.
2) The gas port is an explosion venting port or an explosion-proof port disposed on the housing top plate of each battery cell, and an explosion venting film is disposed at the explosion venting port or the explosion-proof port; and
   at this time, the gas chamber serves as a first explosion venting channel, and when the explosion venting film at the gas port of any battery cell is broken through by the flue gas in the inner cavity, the flue gas in the inner cavity of the battery cell is discharged from the gas chamber, thereby improving the safety of the high-capacity battery.

In order to improve the heat dissipation performance of such a high-capacity battery, an avoidance hole capable of enabling a polarity terminal of each battery cell to extend out is formed on the housing top plate; and the polarity terminal of each battery cell extends out from the avoidance hole, and a region of the housing top plate around the avoidance hole is fixed and sealed with a shell of the battery cell.

It should be noted that the polarity terminal of the battery cell herein may be an electrode terminal of the battery cell, in order to avoid the situation in which the electrode terminal of the battery cell serving as the polarity terminal cannot smoothly extend out from the avoidance hole, an electrode terminal adapter may further be connected to the electrode terminal of the battery cell, and an overall structure in which the electrode terminal of the battery cell cooperates with the electrode terminal adapter is used as the polarity terminal of the battery cell.

The liquid injection and replacement member may be fixed at any location of the housing, for example, the liquid injection and replacement member may be disposed on the first sidewall (any one or two first sidewalls), after a period of time of a charging and discharging cycle of the high-capacity battery, the electrolyte is reduced by decomposition and consumption, resulting in a reduction in the performance of the high-capacity battery, so that electrolyte may be replenished into the electrolyte sharing chamber and the inner cavity of each battery cell by the liquid injection and replacement member, so as to improve the performance of the high-capacity battery; or, after a period of time of the charging and discharging cycle of the high-capacity battery, the performance of the high-capacity battery is affected by the occurrence of impurities in the electrolyte, so that the electrolyte in the electrolyte sharing chamber and the inner cavity of each battery cell may also be replaced by the liquid injection and replacement member, so as to improve the performance of the high-capacity battery. The replacement herein may be partial replacement and may also be complete replacement. In addition, after the electrolyte region of the inner cavity of each battery cell is in communication with the electrolyte sharing chamber, electrolyte may be injected into the inner cavity of each battery cell and the electrolyte sharing chamber again by the liquid injection and replacement member, so as to ensure continuity of the electrolyte.

Embodiment 11 to Embodiment 15 are described in detail below in combination with the drawings.

### Embodiment 11

As shown in Fig. 25 and Fig. 2, according to the high-capacity battery assembly in the present embodiment, the high-capacity battery includes a housing and 10 battery cells 2 that are located in the housing 1 and are connected in parallel, wherein the battery cells 2 are prismatic cells. In other embodiments, the number of the battery cells 2 may be adjusted according to actual needs. A through hole penetrating through the inner cavity of each battery cell 2 is formed in the bottom of a shell of each battery cell 2.

The housing includes a second cylinder body 331, and a housing top plate 12 and a housing bottom plate 11, which cover the open ends of the second cylinder body 331, wherein the housing top plate 12 and the housing bottom plate 11 are parallel to the xy plane; and
the housing bottom plate 11 is provided with an electrolyte sharing chamber 4 extending in the x direction; and the electrolyte sharing chamber 4 is in communication with the electrolyte region of the inner cavity of each battery cell 2 by the through hole of each battery cell 2.

An avoidance hole capable of enabling the polarity terminal of each battery cell 2 to extend out is formed on the housing top plate 12; the polarity terminal of each battery cell 2 extends out from the avoidance hole, and a region of the housing top plate 12 around the avoidance hole is fixed and sealed with the shell of the battery cell 2. It can be seen from the figures that in the present embodiment, the polarity terminal of the battery cell 2 refers to an overall structure in which the electrode terminal 21 of the battery cell cooperates with the electrode terminal adapter 6.

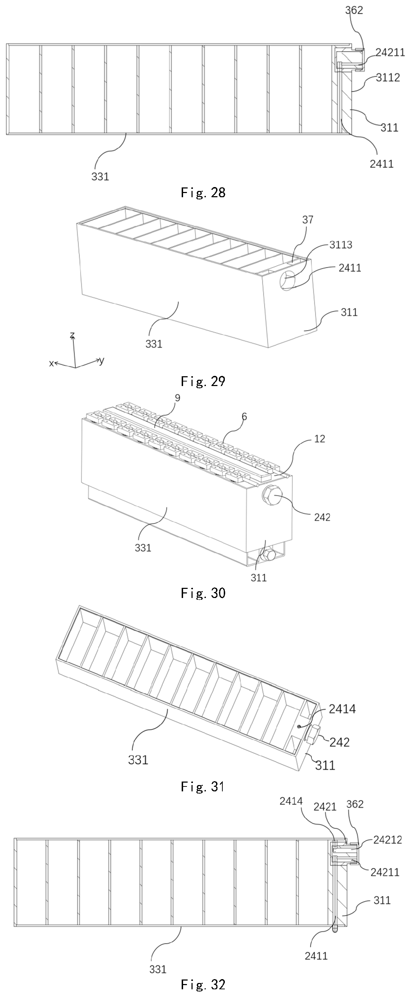

In combination with Fig. 27 and Fig. 28, in the present embodiment, one first sidewall 311 is provided with an electrolyte flow channel 2411, and the first sidewall 311 is provided with a liquid injection and replacement member 242; and it can be seen from the figures that partial structures of the liquid injection and replacement member 242 are located on an outer surface 3112 of the first sidewall, wherein the outer surface 3112 of the first sidewall refers to a surface of the first sidewall 311 that is away from each battery cell 2 in the second cylinder body 331.

As can be seen from Fig. 28, in the present embodiment, the electrolyte flow channel 2411 is formed on the first sidewall 311 in the z direction. The liquid injection and replacement member 242 includes a liquid injection and replacement member main body 2421, and a blocking member fixed on the liquid injection and replacement member main body 2421; in the present embodiment, the liquid injection and replacement member main body 2421 is a cylinder, and in some other embodiments, a rectangular column, a semi-cylinder or the like may further be selected; and a first channel 24211 is formed on the liquid injection and replacement member main body 2421 to communicate with the electrolyte flow channel 2411.

In combination with Fig. 29, in the present embodiment, in order to fix the liquid injection and replacement member 242 on the first sidewall 311, a first blind hole 3113 (an open end of the first blind hole 3113 is located on the outer surface 3112 of the first sidewall) is formed on the first sidewall 311 in the x direction, the liquid injection and replacement member main body 2421 is fixed in the first blind hole 3113 (the fixation may be performed by welding) and seals the first blind hole 3113, and the first blind hole 3113 penetrates through the electrolyte flow channel 2411.

In order to reduce material usage to reduce the material cost of the second cylinder body, a hollow cavity 37 isolated from the electrolyte flow channel is formed on the first sidewall. After the hollow cavity 37 is formed, the weight of the entire high-capacity battery may be reduced at the same time.

The blocking member in the present embodiment is a cover cap 362 (which may be a nut), which is buckled on the liquid injection and replacement member main body 2421, and is in threaded connection with the liquid injection and replacement member main body 2421, and a sealing ring may be disposed at a threaded connection portion to improve the sealing performance of the portion and to block the first channel 24211.

In some other embodiments, the cover cap 362 may further be connected with the liquid injection and replacement member main body 2421 in an interference fit manner, but the disassembly is more difficult compared with the present embodiment.

In some other embodiments, the blocking member may further include an elastic blocking column filled in the first channel 24211, so as to further ensure the sealing performance of the first channel 24211. The elastic blocking column may be made of a rubber material that does not react with the electrolyte, for example, fluororubber, nitrile rubber, natural rubber or ethylene propylene diene monomer rubber, etc.

After the high-capacity battery is assembled, the two ends of the electrolyte flow channel 2411 are respectively in communication with the electrolyte sharing chamber 4 and the first channel 24211 of the liquid injection and replacement member 242.

When liquid replenishment is required, the operation may be performed by the following steps:
disassembling the cover cap 362;
stretching an electrolyte injection pipe into the first channel 24211, injecting electrolyte, and after liquid replenishment is completed, pulling out the electrolyte injection pipe; and
sealing and fixing the cover cap 362 on the liquid injection and replacement member main body 2421 to block the first channel 24211.

When liquid replacement is required, the operation may be performed by the following steps:
disassembling the cover cap 362;
stretching an electrolyte extraction pipe into the first channel 24211, and extracting electrolyte; then, stretching the electrolyte injection pipe into the first channel 24211, and injecting new electrolyte; and after liquid injection is completed, pulling out the electrolyte injection pipe; and
sealing and fixing the cover cap 362 on the liquid injection and replacement member main body 2421 to block the first channel 24211.

It should be noted that in the present embodiment, during liquid injection, if the pressure in the inner cavity of the housing is too large, the problem of difficulty in liquid injection may occur.

### Embodiment 12

Different from Embodiment 11, as shown in Figs. 30-32, according to the high-capacity battery in the present embodiment, the housing top plate 12 is provided with a gas chamber 9; and the gas chamber 9 is in communication with the gas region of the inner cavity of each battery cell 2.

Correspondingly, a gas flow channel 2414 in communication with the gas chamber 9 is further formed on the first sidewall 311; and a second channel 24212 is formed on the liquid injection and replacement member main body 2421, and the blocking member is further configured for blocking the second channel 24212.

As shown in Fig. 32, in the present embodiment, the gas flow channel 2414 is formed on the first sidewall 311 in the z direction and is isolated from the electrolyte flow channel 2411; and the two ends of the gas flow channel 2414 respectively penetrate through the gas chamber 9 and the second channel 24212. The second channel 24212 is an L-shaped channel formed on the liquid injection and replacement member main body 2421, the L-shaped channel includes a horizontal channel and a vertical channel, and in order to facilitate processing, the longitudinal cross section of the horizontal channel is circular in the present embodiment.

In the present embodiment, in addition to the cover cap 362 buckled on the liquid injection and replacement member main body 2421, the blocking member further includes elastic blocking columns sealed in the first channel 24211 and the second channel 24212, so as to ensure that the liquid injection and replacement member 242 has better sealing performance in a normal charging and discharging cycle process.

After the high-capacity battery is assembled, the two ends of the electrolyte flow channel 2411 are respectively in communication with the electrolyte sharing chamber 4 and the first channel 24211 of the liquid injection and replacement member 242, and the two ends of the gas flow channel 2414 are respectively in communication with the gas chamber 9 and the second channel 24212 of the liquid injection and replacement member 242.

When liquid replenishment is required, the operation may be performed by the following steps:
disassembling the cover cap 362, and taking out the elastic blocking columns sealed in the first channel 24211 and the second channel 24212;
when there is a gas in the inner cavity of the housing 1, the gas overflows from the second channel 24212, so that it is easy to inject electrolyte into the inner cavity of the housing 1; and in order to ensure more smooth liquid injection, in this step, a gas extraction pipe may be inserted into the second channel 24212, an external gas extraction apparatus connected with the gas extraction pipe is started to perform gas extraction, so that a certain negative pressure is formed in the inner cavity of the housing;
then, stretching the electrolyte injection pipe into the first channel 24211, and injecting electrolyte, wherein during liquid injection, if the problem of difficulty in liquid injection occurs, the external gas extraction apparatus may be started, so that a certain negative pressure is formed in the inner cavity of the housing, and liquid injection is then performed; and
after liquid replenishment is completed, pulling out the electrolyte injection pipe and the gas extraction pipe; and sealing the elastic blocking columns in the first channel 24211 and the second channel 24212, and then sealing and fixing the cover cap 362 on the liquid injection and replacement member main body 2421.

When liquid replacement is required, the operation may be performed by the following steps:
disassembling the cover cap 362, and taking out the elastic blocking columns sealed in the first channel 24211 and the second channel 24212;
stretching the electrolyte extraction pipe into the first channel 24211, and extracting electrolyte; when the electrolyte cannot be extracted, inserting a gas injection pipe into the second channel 24212 to inject a protective gas into the inner cavity of the housing, so as to perform liquid extraction; after liquid extraction is completed, taking out the electrolyte extraction pipe and the gas injection pipe, stretching the electrolyte injection pipe into the first channel 24211, and injecting new electrolyte; and after liquid injection is completed, pulling out the electrolyte injection pipe; and
sealing the elastic blocking columns in the first channel 24211 and the second channel 24212, and then the sealing and fixing the cover cap 362 on the liquid injection and replacement member main body 2421.

Compared with Embodiment 11, in the present embodiment, during liquid injection and extraction, by means of the second channel 24212, a gas is injected into the inner cavity of the housing or the gas in the inner cavity of the housing is discharged, so that liquid injection and replacement operations may be better implemented.

### Embodiment 13

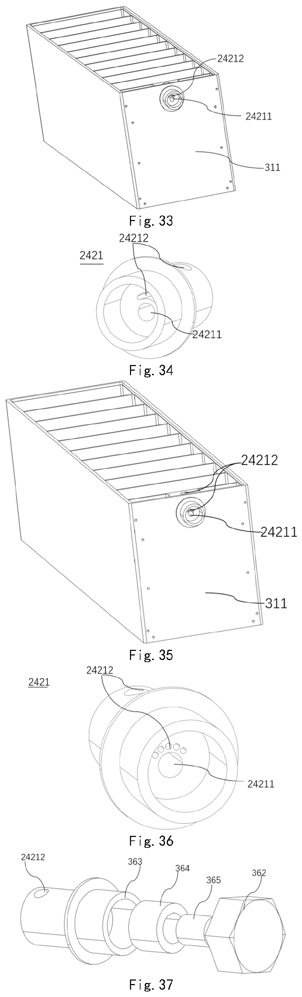

Different from Embodiment 12, as shown in Fig. 33 and Fig. 34, the second channel 24212 in the present embodiment is an L-shaped channel, which includes a horizontal channel and a vertical channel, wherein the longitudinal section of the horizontal channel is in a fan ring shape. The fan ring shape is concentric with the first channel 24211. Compared with Embodiment 12, under the condition that the vertical channel has the same open area, requirements for the radial size of the liquid injection and replacement member main body 2421 are smaller, and a gas inlet or outlet channel having the maximum open area may be formed on the liquid injection and replacement member main body 2421 having a limited volume, thereby further reducing the difficulty in liquid extraction or liquid injection.

### Embodiment 14

Different from Embodiment 12, as shown in Fig. 35 and Fig. 36, the second channel 24212 in the present embodiment includes a horizontal channel and a vertical channel, which penetrate through each other, wherein the horizontal channel is composed of a plurality of through holes in communication with the vertical channel, and the plurality of through holes are arranged along the same circumference.

Similar to the fan ring shape, in the present embodiment, under the condition that the vertical channel has the same open area, requirements for the radial size of the liquid injection and replacement member main body 2421 are smaller, and a gas inlet or outlet channel having the maximum open area may be formed on the liquid injection and replacement member main body 2421 having a limited volume, thereby further reducing the difficulty in liquid extraction or liquid injection.

### Embodiment 15

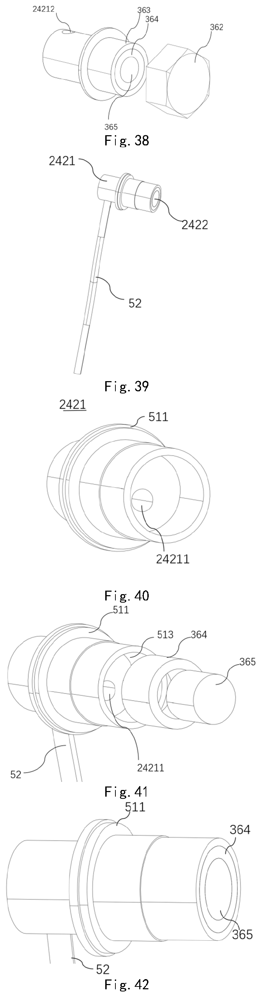

Different from the above embodiments, in the present embodiment, on the basis of the above embodiments, the first channel 24211, or the first channel 24211 and the second channel 24212 on the liquid injection and replacement member main body 2421 are further blocked in a hot melting manner, and it is taken as an example for description below that the first channel 24211 and the second channel 24212 on the liquid injection and replacement member main body 2421 are blocked:
as shown in Fig. 37 and Fig. 38, in the present embodiment, an upper end portion of the liquid injection and replacement member main body 2421 is provided with a hollow member 363 extending in the x direction; and the inner cavity of the hollow member 363 penetrates through the first channel 24211 and the second channel 24212. Under normal circumstances, the hollow member 363 is made of the same aluminum material as the housing; and in order to block the first channel 24211 and the second channel 24212 in the hot melting manner, in the present embodiment, a first rubber ring 364 is fixed in the hollow member 363 in an adhesive sealing manner, the first channel 24211 and the second channel 24212 are blocked in the first rubber ring 364 in the hot melting manner, and after a hot melting material cools, a second hot melting member 365 is formed in the first rubber ring 364. The first rubber ring 364 and the second hot melting member 365 are generally made of a rubber material that does not react with the electrolyte, for example, fluororubber, nitrile rubber, natural rubber or ethylene propylene diene monomer rubber, etc.

When liquid replenishment is required, the operation may be performed by the following steps:
disassembling the cover cap 362, and using a cutter to form, on the second hot melting member 365, an open pore penetrating through the first channel 24211 and the second channel 24212;
when there is a gas in the inner cavity of the housing, the gas overflows from the second channel 24212, so that it is easy to inject electrolyte into the inner cavity of the housing; and in order to ensure more smooth liquid injection, in this step, the gas extraction pipe may be inserted into the second channel 24212, the external gas extraction apparatus connected with the gas extraction pipe is started to perform gas extraction, so that a certain negative pressure is formed in the inner cavity of the housing;
then, stretching the electrolyte injection pipe into the first channel 24211, and injecting electrolyte, wherein during liquid injection, if the problem of difficulty in liquid injection occurs, the external gas extraction apparatus may be started, so that a certain negative pressure is formed in the inner cavity of the housing, and liquid injection is then performed;
after liquid replenishment is completed, pulling out the electrolyte injection pipe and the gas extraction pipe; and preliminarily sealing the first channel 24211 and the second channel 24212 by using the elastic blocking columns;
next, sealing the open pore in the hot melting manner; and
finally, after the hot melting material cools, sealing and fixing the cover cap 362 on the liquid injection and replacement member main body 2421.

When liquid replacement is required, the operation may be performed by the following steps:
disassembling the cover cap 362, and using the cutter to form, on the second hot melting member 365, an open pore penetrating through the first channel 24211 and the second channel 24212;
stretching the electrolyte extraction pipe into the first channel 24211, and extracting electrolyte; when the electrolyte cannot be extracted, inserting the gas injection pipe into the second channel 24212 to inject a protective gas into the inner cavity of the housing 1, so as to perform liquid extraction; after liquid extraction is completed, taking out the electrolyte extraction pipe and the gas injection pipe, stretching the electrolyte injection pipe into the first channel 24211, and injecting new electrolyte; and after liquid injection is completed, pulling out the electrolyte injection pipe; and
preliminarily sealing the first channel 24211 and the second channel 24212 by using the elastic blocking columns; then, pouring the hot melting material onto the trepanning portion; and after the hot melting material cools, sealing and fixing the cover cap 362 on the liquid injection and replacement member main body 2421.

In the present embodiment, in the charging and discharging cycle process of the high-capacity battery, the sealing performance at the location of the liquid injection and replacement member 242 is better.

Embodiment 16 to Embodiment 22 provide a liquid injection and replacement member and a lithium-ion battery (including a high-capacity battery) having the liquid injection and replacement member. The liquid injection and replacement member is mainly composed of a liquid injection and replacement member main body, an electrolyte flow pipe section and a blocking member; the liquid injection and replacement member main body is fixed on a housing of the lithium-ion battery, and a first channel penetrating through the inner cavity of the housing is formed on the liquid injection and replacement member main body; the electrolyte flow pipe section is located in the housing, and one end of the electrolyte flow pipe section is fixed on the liquid injection and replacement member main body and penetrates through the first channel; the other end of the electrolyte flow pipe section is in communication with an electrolyte region of the inner cavity of the housing; and the blocking member is configured for blocking the first channel from the outer side of the housing.

After a period of time of a charging and discharging cycle of the lithium-ion battery, electrolyte is reduced by decomposition and consumption, resulting in a reduction in the performance, so that the blocking member may be opened, and then electrolyte is replenished into the inner cavity of the housing from the first channel on the liquid injection and replacement member main body, so as to improve the performance of the lithium-ion battery; or, after a period of time of the charging and discharging cycle of the lithium-ion battery, the performance of the lithium-ion battery is affected by the occurrence of impurities in the electrolyte, so that the electrolyte in the inner cavity of the housing may also be replaced by the liquid injection and replacement member, so as to improve the performance of the lithium-ion battery. The replacement herein may be partial replacement and may also be complete replacement. After the liquid replenishment or liquid replacement operation is completed, the first channel is blocked from the outer side of the housing by using the blocking member, so that the operation is simple and convenient.

It should be noted that the lithium-ion battery may be a lithium-ion battery cell, and may also be a lithium-ion battery module (i.e., a high-capacity battery) having a housing.

If the lithium-ion battery is a lithium-ion battery cell, a fixing portion may be disposed at any location on a housing of the lithium-ion battery cell, the liquid injection-replacement member is fixed on the housing of the lithium-ion battery cell, and preferably, the liquid injection-replacement member is fixed on a liquid injection port of the lithium-ion battery cell, so as to implement the function of replenishing electrolyte or replacing the electrolyte.

If the lithium-ion battery is a lithium-ion battery module (which may also be referred to as a lithium-ion battery pack or a high-capacity battery), the liquid injection and replacement member may also be fixed at any portion of a housing of the lithium-ion battery module, and on the basis of the liquid injection and replacement member, electrolyte may be replenished into the inner cavity of the housing or the electrolyte in the inner cavity of the housing may be replaced.

Embodiment 16 to Embodiment 22 are further described below in combination the drawings.

### Embodiment 16

As shown in Fig. 39, it is a schematic structural diagram of a liquid injection and replacement member 242 in the present embodiment. The liquid injection and replacement member 242 in the present embodiment includes a liquid injection and replacement member main body 2421, an electrolyte flow pipe section 52, and a blocking member 2422 disposed on the liquid injection and replacement member main body 2421.

The liquid injection and replacement member main body 2421 is fixed on a housing 1 of the lithium-ion battery. As shown in Fig. 40, in the present embodiment, the liquid injection and replacement member main body 2421 is a cylinder, and in some other embodiments, a rectangular column, a semi-cylinder or the like may further be selected; and in order to conveniently fix the liquid injection and replacement member main body 2421 on the housing 1 of the lithium-ion battery, in the present embodiment, an annular limiting boss 511 is disposed on an outer circumferential surface of the liquid injection and replacement member main body 2421 in the circumferential direction thereof. A mounting hole is formed on the housing 1 of the lithium-ion battery, the liquid injection and replacement member main body 2421 is fixed in the mounting hole, and the annular limiting boss 511 is welded with a region of the housing 1 at the periphery of the mounting hole, so as to seal the mounting hole while implementing fixation.

A through hole is formed on the liquid injection and replacement member main body 2421 to serve as a first channel 24211, and the first channel 24211 may be a straight through hole or an L-shaped through hole. After the liquid injection and replacement member main body 2421 is fixed on the housing 1 of the lithium-ion battery, one end of the first channel 24211 is located outside the housing 1, and the other end thereof is located inside the housing 1 for communicating with the electrolyte flow pipe section 52.

One end of the electrolyte flow pipe section 52 is fixed on the liquid injection and replacement member main body 2421 and penetrates through the first channel 24211; and the other end thereof is configured for communicating with the electrolyte region of the inner cavity of the housing 1.

It should be noted that the end portion of the electrolyte flow pipe section that is in communication with the electrolyte region of the inner cavity of the housing may directly extend into the bottom of the inner cavity of the housing, and is always immersed in the electrolyte, therefore when liquid replacement is required, the electrolyte in the inner cavity of the housing may be extracted as much as possible, so that the liquid replacement is more thorough.

The electrolyte flow pipe section 52 and the liquid injection and replacement member main body 2421 may be an integrated member and may also be separate members, and when the electrolyte flow pipe section 52 and the liquid injection and replacement member main body 2421 are separate members, the electrolyte flow pipe section 52 is connected with the liquid injection and replacement member main body 2421 by welding or screwing. The electrolyte flow pipe section 52 is generally made of the same aluminum material as the liquid injection and replacement member main body 2421.

In the present embodiment, the blocking member 2422, as shown in Fig. 41 and Fig. 42, includes a first rubber ring 364 and a second hot melting member 365, and the first channel 24211 is blocked from the outer side of the housing 1 in a hot melting manner.

As can be seen from Fig. 41, in the present embodiment, a counter bore 513 penetrating through the first channel 24211 is formed in the axial direction of the liquid injection and replacement member main body 2421; under normal circumstances, the liquid injection and replacement member main body 2421 is made of the same aluminum material as the housing 1 of the lithium-ion battery; and in order to block the first channel 24211 in the hot melting manner, in the present embodiment, the first rubber ring 364 is fixed in the counter bore 513 in an adhesive sealing manner, the first channel 24211 is blocked in the first rubber ring 364 in the hot melting manner, and after a hot melting material cools, the second hot melting member 365 is formed in the first rubber ring 364. The first rubber ring 364 and the second hot melting member 365 are generally made of a rubber material that does not react with the electrolyte, for example, fluororubber, nitrile rubber, natural rubber or ethylene propylene diene monomer rubber, etc.

### Embodiment 17

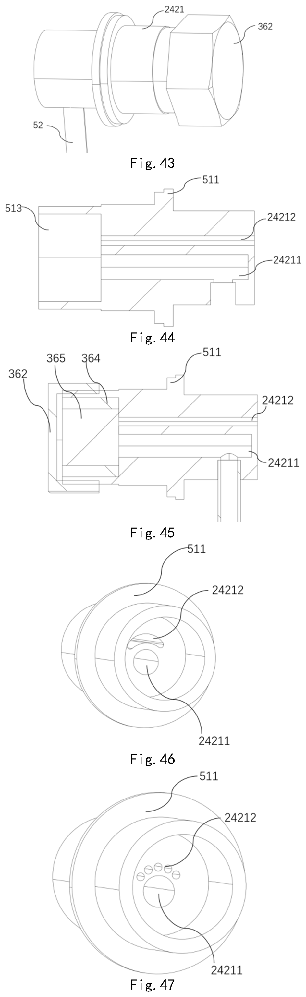

Different from Embodiment 16, as shown in Fig. 43, the blocking member 2422 in the present embodiment further includes a cover cap 362 (which may be a nut), which is buckled on the liquid injection and replacement member main body 2421, and is in threaded connection with the liquid injection and replacement member main body 2421, and a sealing ring may be disposed at a threaded connection portion to improve the sealing performance of the portion.

In the present embodiment, the first channel 24211 is blocked by twice sealing, thereby having a sealing effect.

In some other embodiments, the cover cap 362 may further be connected with the liquid injection and replacement member main body 2421 in an interference fit manner, but the disassembly is more difficult compared with the present embodiment.

In some other embodiments, the cover cap 362 may further be separately used as the blocking member 2422 to seal the first channel 24211, but compared with the present embodiment and Embodiment 16, the sealing reliability is worse.

### Embodiment 18

In the present embodiment, on the basis of the above embodiments, a second channel 24212 is formed on the liquid injection and replacement member main body 2421, and the blocking member 2422 in the above embodiments is further configured for blocking the second channel 24212, specifically as shown in Fig. 44 and Fig. 45.

In the present embodiment, another through hole is formed on the liquid injection and replacement member main body 2421 in the axial direction of the liquid injection and replacement member main body 2421 to serve as the second channel 24212; and as shown in Fig. 44, in order to facilitate processing, in the present embodiment, the second channel 24212 is a circular straight through hole. In some other embodiments, the second channel 24212 may also be an L-shaped through hole, and the cross section thereof may be adjusted according to actual needs. As long as it is ensured that the second channel 24212 is in communication with a gas region of the inner cavity of the housing 1, and by means of the second channel 24212, a protective gas may be injected into the inner cavity of the housing 1 or the gas in the inner cavity of the housing 1 may be discharged.

### Embodiment 19

Different from Embodiment 18, as shown in Fig. 46, in the present embodiment, the cross section of the second channel 24212 is in a fan ring shape, and the fan ring shape is concentric with the first channel 24211. Compared with Embodiment 18, under the condition that the second channel 24212 has the same open area, requirements for the radial size of the liquid injection and replacement member main body 2421 are smaller, and a gas inlet or outlet channel having the maximum open area may be formed on the liquid injection and replacement member main body 2421 having a limited volume, thereby further reducing the difficulty in liquid extraction or liquid injection.

### Embodiment 20

Different from Embodiment 18, as shown in Fig. 47, in the present embodiment, the second channel 24212 is composed of a plurality of through holes formed in the axial direction of the liquid injection and replacement member main body 2421, and the plurality of through holes are arranged along the same circumference.

Similar to the fan ring shape, in the present embodiment, under the condition that the second channel 24212 has the same open area, requirements for the radial size of the liquid injection and replacement member main body 2421 are smaller, and a gas inlet or outlet channel having the maximum open area may be formed on the liquid injection and replacement member main body 2421 having a limited volume, thereby further reducing the difficulty in liquid extraction or liquid injection.

### Embodiment 21

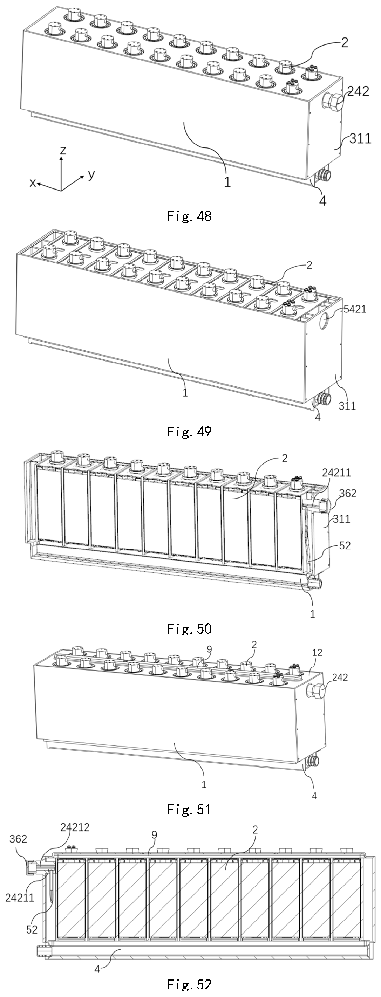

As shown in Fig. 48, the present embodiment is a lithium-ion battery and is specifically a high-capacity battery, including a housing 1, a liquid injection and replacement member 242 fixed on the housing 1, and m battery cells 2 that are arranged in the housing 1 and are connected in parallel, and m>1; and the battery cells 2 herein may be prismatic cells and may also be a plurality of commercially available pouch cells connected in parallel. The inner cavity of each battery cell 2 includes an electrolyte region and a gas region.

The housing 1 is provided with an electrolyte sharing chamber 4; and the electrolyte sharing chamber 4 is in communication with the electrolyte region of the inner cavity of each battery cell 2.

It should be noted herein that the electrolyte sharing chamber 4 is an electrolyte accommodating cavity, and after the electrolyte sharing chamber 4 is in communication with the electrolyte region of the inner cavity of each battery cell 2, it is necessary to ensure that in the entire high-capacity battery, the electrolyte is not in contact with the external environment.

In order to improve the heat dissipation performance of such a high-capacity battery, an avoidance hole capable of enabling a polarity terminal of each battery cell 2 to extend out is formed on the housing 1; and the polarity terminal of each battery cell 2 extends out from the avoidance hole, and a region of a cylinder body top plate around the avoidance hole is fixed and sealed with a shell of the battery cell 2.

It should be noted that the polarity terminal of the battery cell 2 herein may be an electrode terminal of the battery cell 2, in order to avoid the situation in which the electrode terminal of the battery cell 2 serving as the polarity terminal cannot smoothly extend out from the avoidance hole, an electrode terminal adapter may further be connected to the electrode terminal of the battery cell 2, and an overall structure in which the electrode terminal of the battery cell 2 cooperates with the electrode terminal adapter is used as the polarity terminal of the battery cell 2.

The liquid injection and replacement member 242 is fixed on the housing 1, and the other end of the electrolyte flow pipe section 52 is in communication with the electrolyte sharing chamber 4.

For ease of description, the length direction of the housing 1 is defined as an x direction, the width direction thereof is defined as a y direction, and the height direction thereof is defined as a z direction.

In the present embodiment, the liquid injection and replacement member 242 in Embodiment 16 or Embodiment 17 is used, the liquid injection and replacement member 242 may be fixed at any location of the housing 1, for example, in the present embodiment, the liquid injection and replacement member 242 is disposed on a first sidewall 311 of the first cylinder body (a sidewall parallel to a yz plane), after a period of time of the charging and discharging cycle of the high-capacity battery, the electrolyte is reduced by decomposition and consumption, resulting in a reduction in the performance of the high-capacity battery, so that electrolyte may be replenished into the electrolyte sharing chamber 4 and the inner cavity of each battery cell 2 by the liquid injection and replacement member 242, so as to improve the performance of the high-capacity battery; or, after a period of time of the charging and discharging cycle of the high-capacity battery, the performance of the high-capacity battery is affected by the occurrence of impurities in the electrolyte, so that the electrolyte in the electrolyte sharing chamber 4 and the inner cavity of each battery cell 2 may also be replaced by the liquid injection and replacement member 242, so as to improve the performance of the high-capacity battery. The replacement herein may be partial replacement and may also be complete replacement. In addition, after the electrolyte region of the inner cavity of each battery cell 2 is in communication with the electrolyte sharing chamber 4, electrolyte may be injected into the inner cavity of each battery cell 2 and the electrolyte sharing chamber 4 again by the liquid injection and replacement member 242, so as to ensure continuity of the electrolyte.

In combination with Fig. 49 and Fig. 50, in the present embodiment, a mounting hole 5421 adapted to the shape of the cross section of a liquid replenishment and replacement main body is formed in the first sidewall 311 of the housing 1, the liquid injection and replacement member main body 2421 is coaxially located in the mounting hole 5421, and the annular limiting boss 511 is hermetically welded with a peripheral region of the mounting hole 5421. When an energy storage device is assembled on the basis of such a high-capacity battery assembly, a plurality of high-capacity batteries are arranged in the width direction of the high-capacity batteries, so that the first sidewall 311 of each high-capacity battery is exposed, therefore, when the liquid injection and replacement member 242 is disposed on the first sidewall 311, liquid replenishment and replacement operations may be conveniently performed.

Liquid replenishment and replacement processes are described below by taking it as an example that the blocking member 2422 is the first rubber ring 364, the second hot melting member 365 and the cover cap 362:
when liquid replenishment is required, the operation may be performed by the following steps:
disassembling the cover cap 362, and using a cutter to form, on the second hot melting member 365, an open pore penetrating through the first channel 24211;
stretching an electrolyte injection pipe into the first channel 24211, and injecting electrolyte, and after liquid replenishment is completed, pulling out the electrolyte injection pipe; and
pouring the hot melting material onto the trepanning portion for sealing; and after the hot melting material cools, sealing and fixing the cover cap 362 on the liquid injection and replacement member main body 2421.

When liquid replacement is required, the operation may be performed by the following steps:
disassembling the cover cap 362, and using the cutter to form, on the second hot melting member 365, an open pore penetrating through the first channel 24211;
stretching an electrolyte extraction pipe into the first channel 24211, and extracting electrolyte; then, stretching the electrolyte injection pipe into the first channel 24211, and injecting new electrolyte; and after liquid injection is completed, pulling out the electrolyte injection pipe; and
pouring the hot melting material onto the trepanning portion for sealing; and after the hot melting material cools, sealing and fixing the cover cap 362 on the liquid injection and replacement member main body 2421.

It should be noted that in the present embodiment, during liquid injection, if the pressure in the inner cavity of the housing 1 is too large, the problem of difficulty in liquid injection may occur.

### Embodiment 22

Different from Embodiment 21, as shown in Fig. 51 and Fig. 52, in the present embodiment, the housing top plate 12 is provided with a gas chamber 9, and the gas chamber 9 covers a gas port at the top of each battery cell 2 in the high-capacity battery. The gas port herein is a through hole, which is directly formed on the upper cover plate of the battery cell 2 and penetrates through the through hole of the inner cavity of the battery cell 2; the inner cavity of the gas chamber 9 is in communication with the gas region of the inner cavity of each battery cell 2 by the gas port, the gas chamber 9 serves as a gas sharing chamber of the battery cells 2, the gas regions of the battery cells 2 may be communicated on the basis of the gas chamber 9 to achieve a gas balance, so that gases in the battery cells 2 are shared to ensure the consistency of the battery cells 2, thereby prolonging the cycle life of the high-capacity battery to a certain degree; and when thermal runaway occurs in any battery cell 2, a flue gas in the inner cavity of the battery cell 2 enters the gas chamber 9, and is discharged from the gas chamber 9, thereby improving the safety of the high-capacity battery.

Correspondingly, in the present embodiment, the liquid injection and replacement member 242 in Embodiment 18 is used, and the second channel 24212 is in communication with the gas chamber 9.

It should be noted that, since the electrolyte flow pipe section 52 is an elbow pipe, partial structures are not displayed in the section view of Fig. 52.

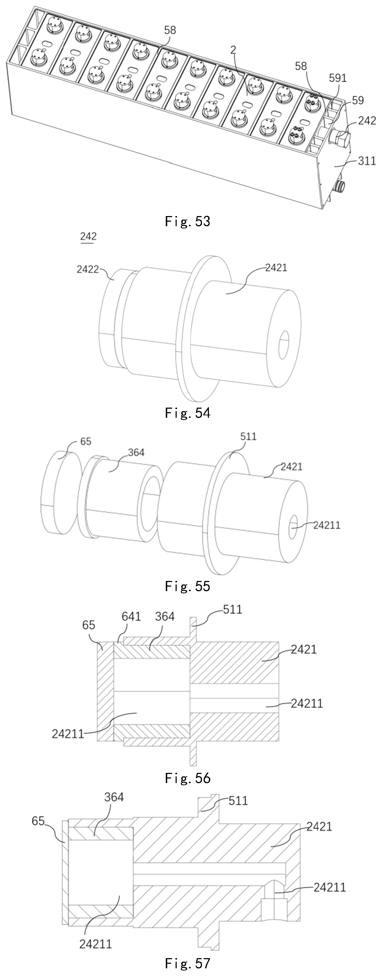

In the present embodiment, in order to improve the stability of the battery cells 2, as shown in Fig. 53, a plurality of partition plates 58 are disposed in the housing 1 to divide the housing 10 into 10 mounting cavities of the battery cells 2, and one battery cell 2 is fixed in each mounting cavity of the battery cell 2. by additionally providing the partition plates 58, it is possible to avoid the problem of reduced cycle performance of the high-capacity battery caused by the swelling of the battery cells 2; in addition, heat generated during the charging and discharging of each battery cell 2 may be transmitted to the outside by a second partition plate 58, thereby reducing the risk of thermal runaway; and the strength of a cylinder body may further be enhanced. As can be seen from Fig. 53, a mounting space 59 of the liquid injection and replacement member 242 is formed between the first sidewall 311 and the adjacent partition plate 58. In the present embodiment, there is a gap between the end of the liquid injection and replacement member 242 that is located in the mounting space 59 and the partition plate 58, thereby facilitating the communication of the second channel 24212 with the gas chamber 9. In order to improve the structural strength of the installation space 59, reinforcing ribs 591 may be additionally disposed in the mounting space 59.

Liquid replenishment and replacement processes in the present embodiment are described below by taking it as an example that the blocking member 2422 is the first rubber ring 364, the second hot melting member 365 and the cover cap 362:
when liquid replenishment is required, the operation may be performed by the following steps:
disassembling the cover cap 362, and using the cutter to form, on the second hot melting member 365, an open pore penetrating through the first channel 24211 and the second channel 24212;
when there is a gas in the inner cavity of the housing 1, the gas overflows from the second channel 24212, so that it is easy to inject electrolyte into the inner cavity of the housing 1; and in order to ensure more smooth liquid injection, in this step, a gas extraction pipe may be inserted into the second channel 24212, an external gas extraction apparatus connected with the gas extraction pipe is started to perform gas extraction, so that a certain negative pressure is formed in the inner cavity of the housing 1;
then, stretching the electrolyte injection pipe into the first channel 24211, and injecting electrolyte, wherein during liquid injection, if the problem of difficulty in liquid injection occurs, the external gas extraction apparatus may be started, so that a certain negative pressure is formed in the inner cavity of the housing 1, and liquid injection is then performed; and
after liquid replenishment is completed, pulling out the electrolyte injection pipe and the gas extraction pipe;
next, sealing the trepanning portion in the hot melting manner; and
finally, after the hot melting material cools, sealing and fixing the cover cap 362 on the liquid injection and replacement member main body 2421.

When liquid replacement is required, the operation may be performed by the following steps:
disassembling the cover cap 362, and using the cutter to form, on the second hot melting member 365, an open pore penetrating through the first channel 24211 and the second channel 24212;
stretching the electrolyte extraction pipe into the first channel 24211, and extracting electrolyte; when the electrolyte cannot be extracted, inserting a gas injection pipe into the second channel 24212 to inject a protective gas into the inner cavity of the housing 1, so as to perform liquid extraction; after liquid extraction is completed, taking out the electrolyte extraction pipe and the gas injection pipe, stretching the electrolyte injection pipe into the first channel 24211, and injecting new electrolyte; and after liquid injection is completed, pulling out the electrolyte injection pipe; and
then, pouring the hot melting material onto the trepanning portion for sealing; and after the hot melting material cools, sealing and fixing the cover cap 362 on the liquid injection and replacement member main body 2421.

Embodiment 23 to Embodiment 30 provide a liquid injection and replacement member and a lithium-ion battery having the liquid injection and replacement member. The liquid injection and replacement member is mainly composed of a liquid injection and replacement member main body and a blocking member, the liquid injection and replacement member main body is fixed on a housing of the lithium-ion battery, and a first channel penetrating through the inner cavity of the housing is formed on the liquid injection and replacement member main body; and the blocking member is configured for blocking the first channel from the outer side of the housing.

After a period of time of a charging and discharging cycle of the lithium-ion battery, electrolyte is reduced by decomposition and consumption, resulting in a reduction in the performance, so that the blocking member may be opened, and then electrolyte is replenished into the inner cavity of the housing from the first channel on the liquid injection and replacement member main body, so as to improve the performance of the lithium-ion battery; or, after a period of time of the charging and discharging cycle of the lithium-ion battery, the performance of the lithium-ion battery is affected by the occurrence of impurities in the electrolyte, so that the electrolyte in the inner cavity of the housing may also be replaced by the liquid injection and replacement member, so as to improve the performance of the lithium-ion battery. The replacement herein may be partial replacement and may also be complete replacement. After the liquid replenishment or liquid replacement operation is completed, the first channel is blocked from the outer side of the housing by using the blocking member, so that the operation is simple and convenient.

It should be noted that the first channel may penetrate through an electrolyte region of the inner cavity of the housing, and may further penetrate through a gas region of the inner cavity of the housing; and when penetrating through the gas region, the first channel may further serve as an exhaust channel.

It should also be noted that the lithium-ion battery may be a lithium-ion battery cell, and may also be a lithium-ion battery module having a housing.

If the lithium-ion battery is a lithium-ion battery cell, the liquid injection-replacement member may be fixed at any location of a housing of the lithium-ion battery cell, and preferably, the liquid injection-replacement member is fixed on a liquid injection port of the lithium-ion battery cell, so as to implement the function of replenishing electrolyte or replacing the electrolyte.

If the lithium-ion battery is a lithium-ion battery module (which may also be referred to as a lithium-ion battery pack or a high-capacity battery), the liquid injection and replacement member may also be fixed at any portion of a housing of the lithium-ion battery module, and on the basis of the liquid injection and replacement member, electrolyte may be replenished into the inner cavity of the housing or the electrolyte in the inner cavity of the housing may be replaced.

Embodiment 23 to Embodiment 30 are further described below in combination the drawings.

### Embodiment 23

As shown in Fig. 54, it is a schematic structural diagram of a liquid injection and replacement member 242 in the present embodiment. The liquid injection and replacement member 242 in the present embodiment includes a liquid injection and replacement member main body 2421, and a blocking member 2422 disposed on the liquid injection and replacement member main body 2421.

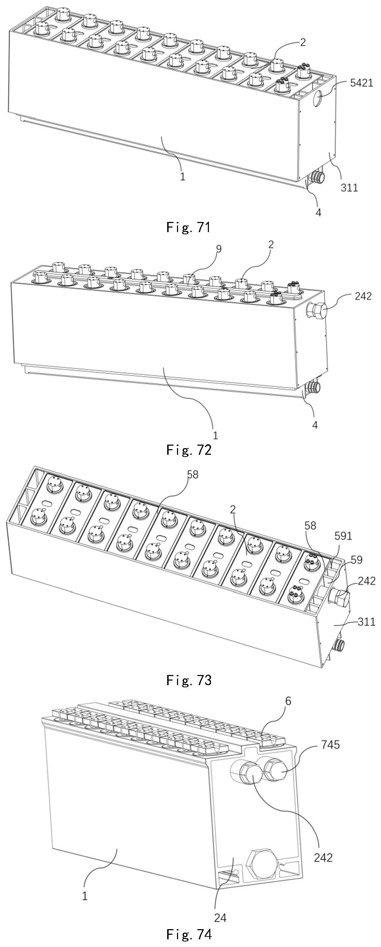

The liquid injection and replacement member main body 2421 is fixed on a housing 1 of the lithium-ion battery. As shown in Fig. 55, in the present embodiment, the liquid injection and replacement member main body 2421 is a cylinder, and in some other embodiments, a rectangular column, a semi-cylinder or the like may further be selected; and in order to conveniently fix the liquid injection and replacement member main body 2421 on the housing 1 of the lithium-ion battery, in the present embodiment, an annular limiting boss 511 is disposed on an outer circumferential surface of the liquid injection and replacement member main body 2421 in the circumferential direction thereof. A mounting hole 5421 (referring to Fig. 71) is formed on the housing 1 of the lithium-ion battery, the liquid injection and replacement member main body 2421 is fixed in the mounting hole 5421, and the annular limiting boss 511 is welded with a region of the housing 1 at the periphery of the mounting hole 5421, so as to seal the mounting hole 5421 while implementing fixation.

A through hole is formed on the liquid injection and replacement member main body 2421, the through hole may be the straight through hole as shown in Fig. 55 and Fig. 56 and may also be the L-shaped through hole as shown in Fig. 57, so as to serve as a first channel 24211. After the liquid injection and replacement member main body 2421 is fixed on the housing 1 of the lithium-ion battery, one end of the first channel 24211 is located outside the housing 1, and the other end thereof is located inside the housing 1 for communicating with the electrolyte region of the inner cavity of the housing 1.

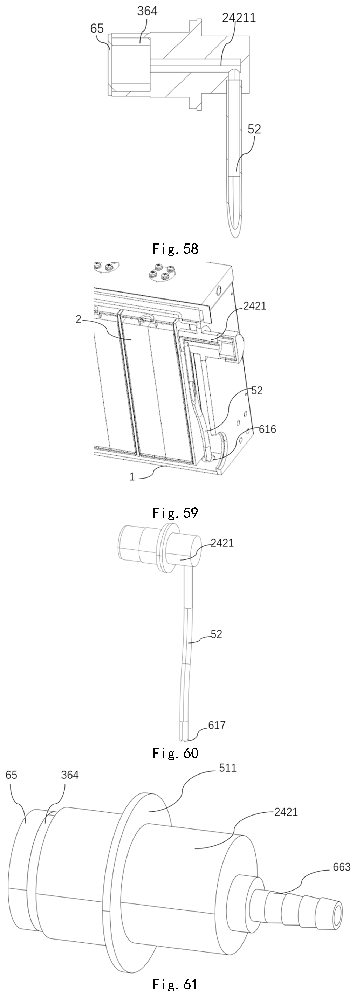

As shown in Fig. 58, in the present embodiment, by additionally providing an electrolyte flow pipe section 52, the first channel 24211 is in communication with the electrolyte region of the inner cavity of the housing 1, one end of the electrolyte flow pipe section 52 is fixed on the liquid injection and replacement member main body 2421 and penetrates through the first channel 24211; and the other end thereof is configured for communicating with the electrolyte region of the inner cavity of the housing 1.

It should be noted that the end portion of the electrolyte flow pipe section that is in communication with the electrolyte region of the inner cavity of the housing 1 may directly extend into the bottom of the inner cavity of the housing 1, and is always immersed in the electrolyte, therefore when liquid replacement is required, the electrolyte in the inner cavity of the housing 1 may be extracted as much as possible, so that the liquid replacement is more thorough. In order to achieve more thorough liquid replacement, as shown in Fig. 59 and Fig. 60, a housing bottom plate is provided with a groove 616, a plurality of notches 617 are formed in the end portion of the electrolyte flow pipe section 52, the electrolyte flow pipe section is directly stretched into the groove 616, and the electrolyte in the inner cavity of the housing may be substantially completely extracted by the electrolyte flow pipe section.

In some other embodiments, an electrolyte flow channel may be formed on the housing 1 to communicate with the first channel 24211, so that the first channel 24211 is in communication with the electrolyte region in the housing 1. However, compared with the present embodiment, the structure is relatively complicated, and when the electrolyte flow channel cannot extend to the bottom of the inner cavity of the housing 1, the situation of incomplete liquid replacement may also occur.

In the present embodiment, the electrolyte flow pipe section and the liquid injection and replacement member main body may be an integrated member and may also be separate members, and when the electrolyte flow pipe section and the liquid injection and replacement member main body 2421 are separate members, the electrolyte flow pipe section may be connected with the liquid injection and replacement member main body 2421 by welding or screwing, and the liquid injection and replacement member main body 2421 may also be connected with the electrolyte flow pipe section by a quick-plug connector 663 (as shown in Fig. 61, the electrolyte flow pipe section is not shown in the figure).

The electrolyte flow pipe section is generally made of the same aluminum material as the liquid injection and replacement member main body 2421, and may further be made of organic materials such as rubber that does not react with the electrolyte.

In the present embodiment, the blocking member 2422, as shown in Fig. 55 and Fig. 56, includes a first rubber ring 364 and a first sealing plate 65, and the first channel 24211 is blocked from the outer side of the housing 1 in a hot melting manner.

Under normal circumstances, the liquid injection and replacement member main body 2421 is made of the same aluminum material as the housing 1 of the lithium-ion battery; and in order to block the first channel 24211 in the hot melting manner, in the present embodiment, the first rubber ring 364 is fixed in the first channel 24211 in an adhesive sealing manner, and the first sealing plate 65 is fixed on a first end surface of the first rubber ring 364 in the hot melting manner, so as to block the first channel 24211, wherein the first end surface of the first rubber ring 364 is the end of the first rubber ring 364 that is away from the housing 1 of the lithium-ion battery; and the first rubber ring 364 and the first sealing plate 65 are generally made of a rubber material that does not react with the electrolyte, for example, fluororubber, nitrile rubber, natural rubber or ethylene propylene diene monomer rubber, etc.

As can be seen from Fig. 56, in the present embodiment, an axial length of the first rubber ring 364 is greater than an axial length of the first channel 24211; one end of the first rubber ring 364 extends out from the first channel 24211; the outer side of the end portion of the first rubber ring 364 that extends out from the first channel 24211 is provided with an annular folded edge 641 in the circumferential direction thereof; and the annular folded edge 641 is tightly attached to an end surface of the first channel 24211. by additionally providing the annular folded edge, the bonding strength between the first rubber ring 364 and the liquid injection and replacement member main body may be improved firstly; and secondly, a contact area between the first sealing plate 65 and the first rubber ring 364 may be increased, such that the bonding strength therebetween may be improved, and the sealing effect may further be improved.

When liquid replenishment and replacement are required, an open pore penetrating through the first channel 24211 is formed on the first sealing plate 65 by using a cutter; an electrolyte injection pipe is stretched into the first channel 24211, electrolyte is injected, and after liquid replenishment is completed, the electrolyte injection pipe is pulled out; and a hot melting material is poured in the open pore for sealing.

### Embodiment 24

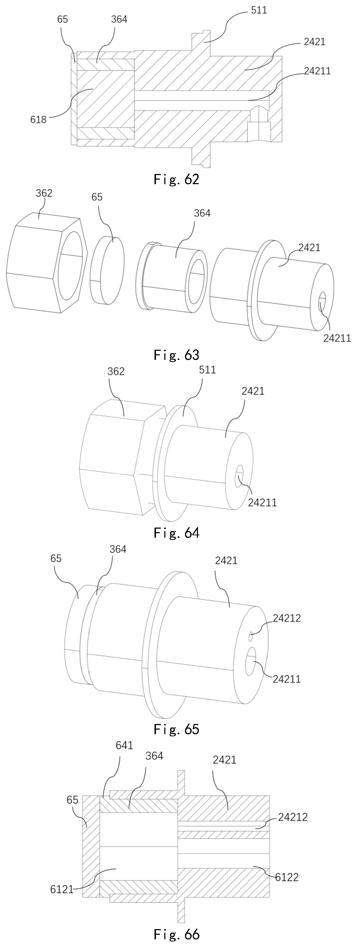

Different from embodiment 23, as shown in Fig. 62, the blocking member 2422 in the present embodiment further includes a blocking column 618 fixed in the first rubber ring 364 in the hot melting manner, and the first channel 24211 is blocked by twice sealing, thereby having a better sealing effect. When liquid replenishment and replacement are required, open pores penetrating through the first channel 24211 are formed on the first sealing plate 65 and the blocking column 618 by using the cutter; the electrolyte injection pipe is stretched into the first channel 24211, electrolyte is injected, and after liquid replenishment is completed, the electrolyte injection pipe is pulled out; and the hot melting material is poured into the open pore for sealing.

### Embodiment 25

Different from Embodiment 23, as shown in Fig. 63 and Fig. 64, the blocking member 2422 in the present embodiment further includes a cover cap 362 (which may be a nut), which is buckled on the liquid injection and replacement member main body 2421, and is in threaded connection with the liquid injection and replacement member main body 2421, and a sealing ring may be disposed at a threaded connection portion to improve the sealing performance of the portion.

In the present embodiment, the first channel 24211 is blocked by twice sealing or thrice sealing, thereby having a better sealing effect.

In some other embodiments, the cover cap 362 may further be connected with the liquid injection and replacement member main body 2421 in an interference fit manner, but the disassembly is more difficult compared with the present embodiment.

In some other embodiments, the cover cap 362 may further be separately used as the blocking member 2422 to seal the first channel 24211, but compared with the present embodiment and Embodiment 23, the sealing reliability is worse.

### Embodiment 26

In the present embodiment, on the basis of the above embodiments, a second channel 24212 is formed on the liquid injection and replacement member main body 2421, and the blocking member 2422 in the above embodiments is further configured for blocking the second channel 24212, specifically as shown in Figs. 65-67.

In the present embodiment, another through hole is formed on the liquid injection and replacement member main body 2421 in the axial direction of the liquid injection and replacement member main body 2421 to serve as the second channel 24212; and in order to facilitate processing, in the present embodiment, the second channel 24212 is a circular straight through hole. In some other embodiments, the second channel 24212 may also be an L-shaped through hole, and the cross section thereof may be adjusted according to actual needs. As long as it is ensured that the second channel 24212 is in communication with the gas region of the inner cavity of the housing 1, and by means of the second channel 24212, a protective gas may be injected into the inner cavity of the housing 1 or the gas in the inner cavity of the housing 1 may be discharged.

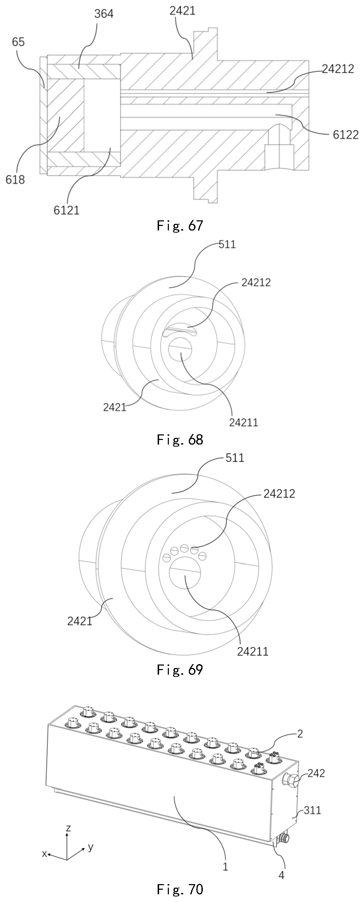

As can be seen from Fig. 66 and Fig. 67, in order to simultaneously block the first channel 24211 and the second channel 24212 by using the blocking member 2422 in Embodiment 23, in the present embodiment, the first channel 24211 is designed to be a stepped through hole formed in the axial direction of the liquid injection and replacement member main body 2421. The second channel 24212 is isolated from a small hole 6122 of the stepped through hole, and penetrates through a large hole 6121 of the stepped through hole; and the first rubber ring 364 is coaxially fixed in the large hole 6121 of the stepped through hole. The first sealing plate 65 is fixed on the first end surface of the first rubber ring 364 in the hot melting manner, so as to simultaneously block the first channel 24211 and the second channel 24212.

In Fig. 66, the axial length of the first rubber ring 364 is greater than an axial length of the large hole 6121 of the stepped through hole; one end of the first rubber ring 364 is tightly attached to a step surface of the stepped through hole, and the other end thereof extends out from the large hole 6121 of the stepped through hole; the outer side of the other end of the first rubber ring 364 is provided with an annular folded edge in the circumferential direction thereof; and the annular folded edge is tightly attached to an end surface of the large hole of the stepped through hole.

In Fig. 67, the first rubber ring 364 is further provided with a blocking column 618 therein, and in order to avoid the situation in which the head of the cutter or the liquid injection and replacement member main body 2421 is damaged due to the fact that the head of the cutter is in contact with the liquid injection and replacement member main body 2421 in the axial direction during trepanning, the axial length of the blocking column 618 is less than that of the large hole 6121 of the stepped through hole, so that a certain space is reserved between the blocking column 618 and the liquid injection and replacement member main body 2421 in the axial direction.

### Embodiment 27

Different from Embodiment 26, as shown in Fig. 68, in the present embodiment, the cross section of the second channel 24212 is in a fan ring shape, and the fan ring shape is concentric with the first channel 24211. Compared with Embodiment 25, under the condition that the second channel 24212 has the same open area, requirements for the radial size of the liquid injection and replacement member main body 2421 are smaller, and a gas inlet or outlet channel having the maximum open area may be formed on the liquid injection and replacement member main body 2421 having a limited volume, thereby further reducing the difficulty in liquid extraction or liquid injection.

### Embodiment 28

Different from Embodiment 26, as shown in Fig. 69, in the present embodiment, the second channel 24212 is composed of a plurality of through holes formed in the axial direction of the liquid injection and replacement member main body 2421, and the plurality of through holes are arranged along the same circumference.

Similar to the fan ring shape, in the present embodiment, under the condition that the second channel 24212 has the same open area, requirements for the radial size of the liquid injection and replacement member main body 2421 are smaller, and a gas inlet or outlet channel having the maximum open area may be formed on the liquid injection and replacement member main body 2421 having a limited volume, thereby further reducing the difficulty in liquid extraction or liquid injection.

### Embodiment 29

As shown in Fig. 70, the present embodiment is a lithium-ion battery and is specifically a high-capacity battery, including a housing 1, a liquid injection and replacement member 242 fixed on the housing 1, and 10 battery cells 2 that are arranged in the housing 1 and are connected in parallel; and the battery cells 2 in the present embodiment may be prismatic cells, and the specific number may be adjusted according to actual needs. The inner cavity of each battery cell 2 includes an electrolyte region and a gas region.

The housing 1 is provided with an electrolyte sharing chamber 4; and the electrolyte sharing chamber 4 is in communication with the electrolyte region of the inner cavity of each battery cell 2.

It should be noted herein that the electrolyte sharing chamber 4 is an electrolyte accommodating cavity, and after the electrolyte sharing chamber 4 is in communication with the electrolyte region of the inner cavity of each battery cell 2, it is necessary to ensure that in the entire high-capacity battery, the electrolyte is not in contact with the external environment.

In order to improve the heat dissipation performance of such a high-capacity battery, an avoidance hole capable of enabling a polarity terminal of each battery cell 2 to extend out is formed on the housing 1; and the polarity terminal of each battery cell 2 extends out from the avoidance hole, and a region of a cylinder body top plate around the avoidance hole is fixed and sealed with a shell of the battery cell 2.

It should be noted that the polarity terminal of the battery cell 2 herein may be an electrode terminal of the battery cell 2, in order to avoid the situation in which the electrode terminal of the battery cell 2 serving as the polarity terminal cannot smoothly extend out from the avoidance hole, an electrode terminal adapter may further be connected to the electrode terminal of the battery cell 2, and an overall structure in which the electrode terminal of the battery cell 2 cooperates with the electrode terminal adapter is used as the polarity terminal of the battery cell 2.

The liquid injection and replacement member 242 is fixed on the housing 1.

For ease of description, the length direction of the housing 1 is defined as an x direction, the width direction thereof is defined as a y direction, and the height direction thereof is defined as a z direction.

In the present embodiment, the liquid injection and replacement member 242 in Embodiment 23 or Embodiment 24 is used, the liquid injection and replacement member 242 may be fixed at any location of the housing 1, for example, in the present embodiment, the liquid injection and replacement member 242 is disposed on a first sidewall 311 of the first cylinder body (a sidewall parallel to a yz plane), after a period of time of the charging and discharging cycle of the high-capacity battery, the electrolyte is reduced by decomposition and consumption, resulting in a reduction in the performance of the high-capacity battery, so that electrolyte may be replenished into the electrolyte sharing chamber 4 and the inner cavity of each battery cell 2 by the liquid injection and replacement member 242, so as to improve the performance of the high-capacity battery; or, after a period of time of the charging and discharging cycle of the high-capacity battery, the performance of the high-capacity battery is affected by the occurrence of impurities in the electrolyte, so that the electrolyte in the electrolyte sharing chamber 4 and the inner cavity of each battery cell 2 may also be replaced by the liquid injection and replacement member 242, so as to improve the performance of the high-capacity battery. The replacement herein may be partial replacement and may also be complete replacement. In addition, after the electrolyte region of the inner cavity of each battery cell 2 is in communication with the electrolyte sharing chamber 4, electrolyte may be injected into the inner cavity of each battery cell 2 and the electrolyte sharing chamber 4 again by the liquid injection and replacement member 242, so as to ensure the continuity of the electrolyte.

In combination with Fig. 71, in the present embodiment, a mounting hole 5421 adapted to the shape of the cross section of a liquid replenishment and replacement main body is formed in the first sidewall 311 of the housing 1, the liquid injection and replacement member main body 2421 is coaxially located in the mounting hole 5421, and the annular limiting boss 511 is hermetically welded with a peripheral region of the mounting hole 5421. When an energy storage device is assembled on the basis of such a high-capacity battery assembly, a plurality of high-capacity batteries are arranged in the width direction of the high-capacity batteries, so that the first sidewall 311 of each high-capacity battery is exposed, therefore, when the liquid injection and replacement member 242 is disposed on the first sidewall 311, liquid replenishment and replacement operations may be conveniently performed.
liquid replenishment and replacement processes are described below by taking it as an example that the blocking member 2422 is the first rubber ring 364, the first sealing plate 65 and the cover cap 362:
when liquid replenishment is required, the operation may be performed by the following steps:
disassembling the cover cap 362, and using the cutter to form, on the first sealing plate 65, an open pore penetrating through the first channel 24211;
stretching the electrolyte injection pipe into the first channel 24211, and injecting electrolyte, and after liquid replenishment is completed, pulling out the electrolyte injection pipe; and
pouring the hot melting material onto the trepanning portion for sealing; and after the hot melting material cools, sealing and fixing the cover cap 362 on the liquid injection and replacement member main body 2421.

When liquid replacement is required, the operation may be performed by the following steps:
disassembling the cover cap 362, and using the cutter to form, on the first sealing plate 65, an open pore penetrating through the first channel 24211;
stretching an electrolyte extraction pipe into the first channel 24211, and extracting electrolyte; then, stretching the electrolyte injection pipe into the first channel 24211, and injecting new electrolyte; and after liquid injection is completed, pulling out the electrolyte injection pipe; and
pouring the hot melting material onto the trepanning portion for sealing; and after the hot melting material cools, sealing and fixing the cover cap 362 on the liquid injection and replacement member main body 2421.

It should be noted that in the present embodiment, during liquid injection, if the pressure in the inner cavity of the housing 1 is too large, the problem of difficulty in liquid injection may occur, and liquid injection is then performed after exhaust is performed.

### Embodiment 30

Different from Embodiment 29, as shown in Fig. 72, in the present embodiment, a top plate of the housing 1 is provided with a gas chamber 9, and the gas chamber 9 covers a gas port at the top of each battery cell 2 in the high-capacity battery. The gas port herein is a through hole, which is directly formed on the upper cover plate of the battery cell 2 and penetrates through the through hole of the inner cavity of the battery cell 2; the inner cavity of the gas chamber is in communication with the gas region of the inner cavity of each battery cell 2 by the gas port, the gas chamber serves as a gas chamber of the battery cells 2, the gas regions of the battery cells 2 may be communicated on the basis of the gas chamber to achieve a gas balance, so that gases in the battery cells 2 are shared to ensure the consistency of the battery cells 2, thereby prolonging the cycle life of the high-capacity battery to a certain degree; and when thermal runaway occurs in any battery cell 2, a flue gas in the inner cavity of the battery cell 2 enters the gas chamber, and is discharged from the gas chamber, thereby improving the safety of the high-capacity battery.

Correspondingly, in the present embodiment, the liquid injection and replacement member 242 in Embodiment 26 is used, and the second channel 24212 is in communication with the gas chamber 9.

In the present embodiment, in order to improve the stability of the battery cells 2, as shown in Fig. 73, a plurality of partition plates 58 are disposed in the housing 1 to divide the housing 10 into 10 mounting cavities of the battery cells 2, and one battery cell 2 is fixed in each mounting cavity of the battery cell 2. by additionally providing the partition plates 58, it is possible to avoid the problem of reduced cycle performance of the high-capacity battery caused by the swelling of the battery cells 2; in addition, heat generated during the charging and discharging of each battery cell 2 may be transmitted to the outside by a second partition plate 58, thereby reducing the risk of thermal runaway; and the strength of a cylinder body may further be enhanced. As can be seen from Fig. 73, a mounting space 59 of the liquid injection and replacement member 242 is formed between the first sidewall 311 and the adjacent partition plate 58. In the present embodiment, there is a gap between the end of the liquid injection and replacement member 242 that is located in the mounting space 59 and the partition plate 58, thereby facilitating the communication of the second channel 24212 with the gas chamber 9. In order to improve the structural strength of the installation space 59, reinforcing ribs 591 may be additionally disposed in the mounting space 59.

Liquid replenishment and replacement processes in the present embodiment are described below by taking it as an example that the blocking member 2422 is the first rubber ring 364, the first sealing plate 65 and the cover cap 362:
when liquid replenishment is required, the operation may be performed by the following steps:
disassembling the cover cap 362, and using the cutter to form, on the first sealing plate 65, an open pore penetrating through the first channel 24211 and the second channel 24212;
when there is a gas in the inner cavity of the housing 1, the gas overflows from the second channel 24212, so that it is easy to inject electrolyte into the inner cavity of the housing 1; and in order to ensure more smooth liquid injection, in this step, a gas extraction pipe may be inserted into the second channel 24212, an external gas extraction apparatus connected with the gas extraction pipe is started to perform gas extraction, so that a certain negative pressure is formed in the inner cavity of the housing 1;
then, stretching the electrolyte injection pipe into the first channel 24211, and injecting electrolyte, wherein during liquid injection, if the problem of difficulty in liquid injection occurs, the external gas extraction apparatus may be started, so that a certain negative pressure is formed in the inner cavity of the housing 1, and liquid injection is then performed; and
after liquid replenishment is completed, pulling out the electrolyte injection pipe and the gas extraction pipe;
next, sealing the trepanning portion in the hot melting manner; and
finally, after the hot melting material cools, sealing and fixing the cover cap 362 on the liquid injection and replacement member main body 2421.

When liquid replacement is required, the operation may be performed by the following steps:
disassembling the cover cap 362, and using the cutter to form, on the first sealing plate 65, an open pore penetrating through the first channel 24211 and the second channel 24212;
stretching the electrolyte extraction pipe into the first channel 24211, and extracting electrolyte; when the electrolyte cannot be extracted, inserting a gas injection pipe into the second channel 24212 to inject a protective gas into the inner cavity of the housing 1, so as to perform liquid extraction; after liquid extraction is completed, taking out the electrolyte extraction pipe and the gas injection pipe, stretching the electrolyte injection pipe into the first channel 24211, and injecting new electrolyte; and after liquid injection is completed, pulling out the electrolyte injection pipe; and
then, pouring the hot melting material onto the trepanning portion for sealing; and after the hot melting material cools, sealing and fixing the cover cap 362 on the liquid injection and replacement member main body 2421.

Embodiment 31 to Embodiment 33 provide a high-capacity battery assembly, including a high-capacity battery and a repair mechanism, wherein the high-capacity battery includes a housing and m battery cells that are arranged in the housing and are connected in parallel, and m>1; and the battery cells herein may be prismatic cells and may also be a plurality of commercially available pouch cells connected in parallel. The inner cavity of each battery cell includes an electrolyte region and a gas region.

For ease of description, the length direction of the housing is defined as an x direction, the width direction of the housing is defined as a y direction, and the height direction of the housing is defined as a z direction.

The housing is provided with an electrolyte sharing chamber and a gas chamber; the electrolyte sharing chamber is in communication with the electrolyte region of the inner cavity of each battery cell; the gas chamber is in communication with the gas region of the inner cavity of each battery cell; the repair mechanism includes a gas injection and exhaust member and a liquid injection and replacement member, and the gas injection and exhaust member is configured for replenishing a gas into the gas chamber and the inner cavity of each battery cell or discharging the gas; and the liquid injection and replacement member is configured for replenishing electrolyte into the electrolyte sharing chamber and the inner cavity of each battery cell, or replacing the electrolyte in the electrolyte sharing chamber and the inner cavity of each battery cell.

The housing may use at least the following two structures:
the first structure includes a first cylinder body having two open ends (i.e., ports in the first cylinder body that are parallel to a yz plane are the open ends), and end plate assemblies respectively fixed at the two open ends of the first cylinder body (i.e., the end plate assemblies are parallel to the yz plane); and
on the housing of the first structure, the electrolyte sharing chamber may be located on a first cylinder body side plate (the side plate parallel to an xz plane) or a first cylinder body bottom plate, and the gas chamber may be located on the first cylinder side plate (the side plate parallel to the xz plane) or a first cylinder body top plate, and the gas injection and exhaust member and the liquid injection and replacement member may be located at any location of the housing, as long as corresponding functions may be implemented.

The second structure includes a second cylinder body having open ends at the top and bottom (i.e., ports in the second cylinder body that are parallel to an xy plane are the open ends), and an upper cover plate and a lower cover plate, which are respectively fixed at the open ends at the top and bottom of the second cylinder body (i.e., both the upper cover plate and the lower cover plate are parallel to the xy plane); and in the structure, a sidewall in the second cylinder body that is parallel to the yz plane is referred to as the end plate assembly.

On the housing of the second structure, the electrolyte sharing chamber may be located on a second cylinder body side plate (the side plate parallel to the xz plane) or the lower cover plate, the gas chamber may be located on the second cylinder body side plate (the side plate parallel to the xz plane) or the upper cover plate, and the gas injection and exhaust member and the liquid injection liquid injection and replacement member may be located at any location of the housing, as long as corresponding functions may be implemented.

In Embodiment 31 to Embodiment 33, the first structure is mainly taken as an example for description.

It should be noted herein that the electrolyte sharing chamber is an electrolyte accommodating cavity, and after the electrolyte sharing chamber is in communication with the electrolyte region of the inner cavity of each battery cell, it is necessary to ensure that in the entire high-capacity battery, the electrolyte is not in contact with the external environment.

In order to improve the heat dissipation performance of such a high-capacity battery, an avoidance hole capable of enabling a polarity terminal of each battery cell to extend out is formed on the first cylinder body top plate; and the polarity terminal of each battery cell extends out from the avoidance hole, and a region of the first cylinder body top plate around the avoidance hole is fixed and sealed with a shell of the battery cell.

It should be noted that the polarity terminal of the battery cell herein may be an electrode terminal of the battery cell, in order to avoid the situation in which the electrode terminal of the battery cell serving as the polarity terminal cannot smoothly extend out from the avoidance hole, an electrode terminal adapter may further be connected to the electrode terminal of the battery cell, and an overall structure in which the electrode terminal of the battery cell cooperates with the electrode terminal adapter is used as the polarity terminal of the battery cell.

The gas injection and exhaust member and the liquid injection and replacement member may be located at any location of the housing, for example, the gas injection and exhaust member and the liquid injection and replacement member may be disposed on the sidewall of the first cylinder body that is parallel to the xz plane and may also be disposed on the end plate assembly. After a period of time of a charging and discharging cycle of the high-capacity battery, the electrolyte is reduced by decomposition and consumption, resulting in a reduction in the performance of the high-capacity battery, so that pressures in the electrolyte sharing chamber and the inner cavity of each battery cell may be changed by using the gas injection and exhaust member, and electrolyte may be smoothly replenished into the electrolyte sharing chamber and the inner cavity of each battery cell by the liquid injection and replacement member, so as to improve the performance of the high-capacity battery; or, after a period of time of the charging and discharging cycle of the high-capacity battery, the performance of the high-capacity battery is affected by the occurrence of impurities in the electrolyte, so that the electrolyte in the electrolyte sharing chamber and the inner cavity of each battery cell may also be replaced by the cooperation of the gas injection and exhaust member and the liquid injection and replacement member, so as to improve the performance of the high-capacity battery. The replacement herein may be partial replacement and may also be complete replacement. In addition, after the electrolyte region of the inner cavity of each battery cell is in communication with the electrolyte sharing chamber, electrolyte may be injected into the inner cavity of each battery cell and the electrolyte sharing chamber again by the cooperation of the gas injection and exhaust member and the liquid injection and replacement member, so as to ensure continuity of the electrolyte.

The gas injection and exhaust member and the liquid injection and replacement member may be located on the same end plate assembly, and may also be located on different end plate assemblies, and are preferably located on the same end plate assembly, so as to facilitate the operation; in addition, a liquid path unpacking apparatus operation portion may further be formed on the end plate assembly provided with the gas injection and exhaust member and the liquid injection and replacement member, an unpacking apparatus extends into the electrolyte sharing chamber from the liquid path unpacking apparatus operation port, so as to unpack each battery cell, so that the electrolyte sharing chamber is in communication with the electrolyte region of the inner cavity of each battery cell (specifically, during unpacking, the unpacking apparatus extends into the electrolyte sharing chamber from the liquid path unpacking apparatus operation port, to open a sealing film sealed at the opening of the lower cover plate of each battery cell, and the sealing film may specifically use a sealing film disclosed in the Chinese patents CN218525645U and CN218525614U). In order to not interfere with the gas injection and exhaust member and the liquid injection and replacement member, a gas path unpacking apparatus operation port may be disposed on the other end plate assembly, and the unpacking apparatus extends into the gas chamber from the gas path unpacking apparatus operation port to unpack each battery cell, so that the gas chamber is in communication with the gas region of the inner cavity of each battery cell (specifically, during unpacking, the unpacking apparatus extends into the gas chamber from the gas path unpacking apparatus operation port, to open a sealing film or an explosion venting film sealed at the opening of the upper cover plate of each battery cell).

The unpacking apparatus operation port may also serve as an explosion venting port, and after unpacking, an explosion venting mechanism is hermetically welded on the end plate assembly at the periphery of the unpacking apparatus operation port. Correspondingly, the other end plate assembly may be a flat plate, which seals the other open end of the first cylinder body, meanwhile seals the open end of the electrolyte sharing chamber, and when the gas chamber is provided, also seals the open end of the gas chamber.

The explosion venting port may also be located on the other end plate assembly different from the unpacking apparatus operation port, the end plate assembly is provided with a first explosion venting channel, and a gas inlet end of the first explosion venting channel is configured for communicating with the gas chamber of the high-capacity battery, and a gas outlet end thereof is configured for communicating with the explosion venting port.

Embodiment 31 to Embodiment 33 are described in detail below in combination with the drawings.

### Embodiment 31

As shown in Figs. 74-76, the high-capacity battery in the present embodiment includes a housing 1 and 10 battery cells 2 that are located in the housing 1 and are connected in parallel, wherein the battery cells 2 are prismatic cells. In other embodiments, the number of the battery cells 2 may be adjusted according to actual needs. Through holes penetrating through the inner cavity of each battery cell 2 are formed in the bottom and top of a shell of each battery cell 2.

The housing includes a first cylinder body 23 having two open ends, and end plate assemblies 24 respectively fixed at the two open ends of the first cylinder body 23; and
a first cylinder body bottom plate 231 is provided with an electrolyte sharing chamber 4 extending in the x direction; and the electrolyte sharing chamber 4 is in communication with the electrolyte region of the inner cavity of each battery cell 2 by the through hole of each battery cell 2.

A first cylinder body top plate 232 is provided with a gas chamber 9 extending in the x direction; and the gas chamber 9 is in communication with the gas region of the inner cavity of each battery cell 2 by the through hole of each battery cell 2.

An avoidance hole 13 capable of enabling the polarity terminal of each battery cell 2 to extend out is formed on the first cylinder body top plate 232; the polarity terminal of each battery cell 2 extends out from the avoidance hole 13, and the region of the first cylinder body top plate 232 around the avoidance hole 13 is fixed and sealed with the shell of the battery cell 2. It can be seen from the figures that in the present embodiment, the polarity terminal of the battery cell 2 refers to an overall structure in which the electrode terminal 21 of the battery cell cooperates with the electrode terminal adapter 6.

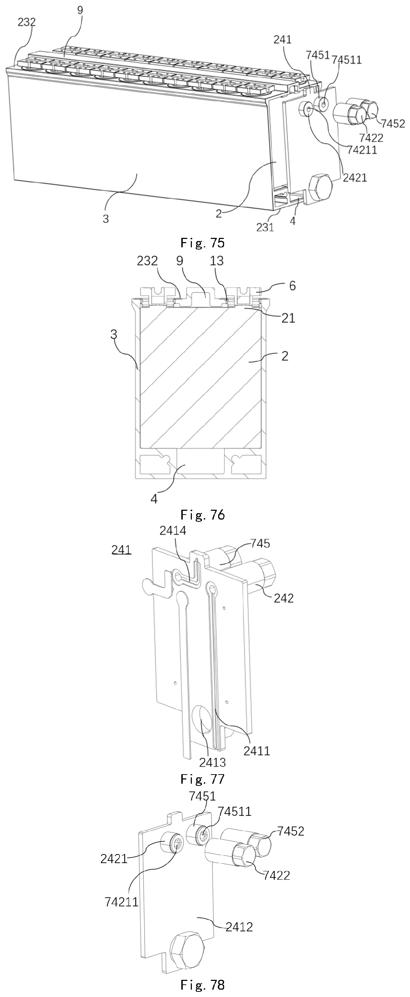

In combination with Fig. 77 and Fig. 78, in the present embodiment, one end plate assembly 24 includes a first end sub-plate 241, which is sealed at one of the open ends of the first cylinder body 23, the electrolyte sharing chamber 4 and the gas chamber 9; and the first end sub-plate 241 is provided with an electrolyte flow channel 2411 and a gas flow channel 2414, and a gas injection and exhaust member 745 and a liquid injection and replacement member 242 are disposed on an outer surface 2412 of the first end sub-plate (wherein the outer surface 2412 of the first end sub-plate refers to the surface of the first end sub-plate 241 that is away from each battery cell 2 in the first cylinder body 23); it can be seen from the figures that in the present embodiment, the electrolyte flow channel 2411 and the gas flow channel 2414 are two mutually isolated L-shaped through holes formed on the first end sub-plate 241, and each L-shaped through hole includes a horizontal hole and a vertical hole, wherein the horizontal hole is formed in the thickness direction of the first end sub-plate 241, and the vertical hole is formed in the height direction of the first end sub-plate 241; and in order to facilitate the formation of the vertical hole, a groove may be first formed on an inner surface of the first end sub-plate 241, and then the opening of the groove is covered with a cover plate to form the vertical hole.

In some other embodiments, the electrolyte flow channel 2411 may also be a through slot formed on the inner surface of the first end sub-plate 241, but compared with the present embodiment, the electrolyte cannot be easily extracted.

As shown in Fig. 77 and Fig. 78, the gas injection and exhaust member 745 includes a gas injection and exhaust member main body 7451 and a first blocking member 7452 fixed on the gas injection and exhaust member main body 7451; in the present embodiment, the gas injection and exhaust member main body 7451 is a cylinder, and in some other embodiments, a rectangular column, a semi-cylinder or the like may further be selected; and a gas via hole is formed on the gas injection and exhaust member main body 7451 in the axial direction of the gas injection and exhaust member main body 7451, to serve as a first channel 74511 to communicate with the gas flow channel 2414.

The liquid injection and replacement member 242 includes a liquid injection and replacement member main body 2421, and a second blocking member 7422 fixed on the liquid injection and replacement member main body 2421; in the present embodiment, the liquid injection and replacement member main body 2421 is a cylinder, and in some other embodiments, a rectangular column, a semi-cylinder or the like may further be selected; and an electrolyte via hole is formed on the liquid injection and replacement member main body 2421 in the axial direction of the liquid injection and replacement member main body 2421, to serve as a second channel 74211 to communicate with the electrolyte flow channel 2411.

The first blocking member 7452 and the second blocking member 7422 in the present embodiment are respectively a first cover cap and a second cover cap (which may be nuts), which are respectively buckled on the gas injection and exhaust member main body 7451 and the liquid injection and replacement member main body 2421, and are in threaded connection with the gas injection and exhaust member main body 7451 and the liquid injection and replacement member main body 2421, and sealing rings 215 may be disposed at threaded connection portions to improve the sealing performance of the portions and to block the first channel 74511 and the second channel 74211, respectively.

In some other embodiments, the corresponding cover caps may further be connected with the gas injection and exhaust member main body 7451 and the liquid injection and replacement member main body 2421 in an interference fit manner, but they are relatively difficult to disassemble compared with the present embodiment.

In some other embodiments, the first blocking member 7452 and the second blocking member 7422 may further include elastic blocking columns fixed in the first channel 74511 and the second channel 74211, so as to further ensure the sealing performance of the first channel 74511 and the second channel 74211. The elastic blocking columns may be made of a rubber material that does not react with the electrolyte, for example, fluororubber, nitrile rubber, natural rubber or ethylene propylene diene monomer rubber, etc.

After the end plate assembly 24 is fixed at the open end of the first cylinder body 23, the two ends of the gas flow channel 2414 are respectively in communication with the gas chamber 9 and the first channel 74511 of the gas injection and exhaust member 745. The two ends of the electrolyte flow channel 2411 are respectively in communication with the electrolyte sharing chamber 4 and the second channel 74211 of the liquid injection and replacement member 242.

In order to facilitate unpacking, as shown in Fig. 77 and Fig. 78, in the present embodiment, the first end sub-plate 241 may further be provided with an unpacking apparatus operation port 2413, an unpacking apparatus extends into the electrolyte sharing chamber 4 from the unpacking apparatus operation port 2413 to unpack each battery cell 2, so that the electrolyte sharing chamber 4 is in communication with the electrolyte region of the inner cavity of each battery cell 2 (specifically, during unpacking, the unpacking apparatus extends into the electrolyte sharing chamber 4 from the unpacking apparatus operation port 2413, to open a sealing film sealed at the through hole of the lower cover plate 03 of each battery cell 2, and the sealing film may specifically use a sealing film disclosed in the Chinese patents CN218525645U and CN218525614U). It should be noted that after unpacking is completed, it is necessary to seal the unpacking apparatus operation port 2413 by a sealing member.

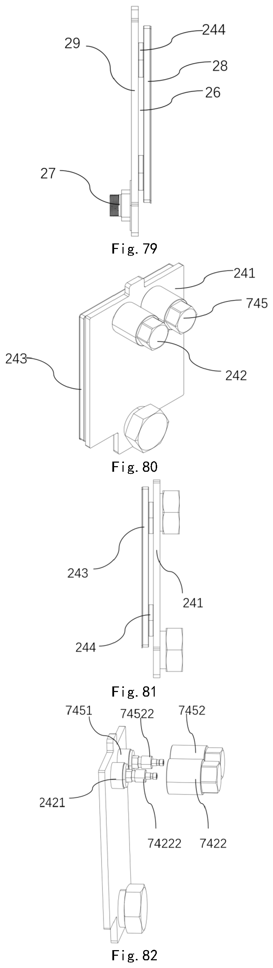

As shown in Fig. 79, in the present embodiment, a first explosion venting channel 26 and an explosion venting port 27 may further be disposed on the other end plate assembly 24 (which is not provided with the gas injection and exhaust member 745 and the liquid injection and replacement member 242) of the high-capacity battery, the two ends of the first explosion venting channel 26 are respectively in communication with the gas chamber 9 and the explosion venting port 27, and an explosion venting mechanism is sealed at the explosion venting port 27. A hollow member provided with an explosion venting film at one end may be used as the explosion venting mechanism. When thermal runaway occurs in any battery cell 2, a thermal runaway flue gas enters the first explosion venting channel 26 from the gas chamber 9, and breaks through the explosion venting film to be discharged from the explosion venting port 27.

As can be seen from Fig. 79, in the present embodiment, the other end plate assembly 24 includes a third end sub-plate 28 and a fourth end sub-plate 29, the third end sub-plate 28 and the fourth end sub-plate 29 are parallel to each other, and there is a gap therebetween (the third end sub-plate 28 is tightly attached to the outermost battery cell 2 in the first cylinder body 23), and the gap is used as the first explosion venting channel 26 in the present embodiment.

In the present embodiment, the third end sub-plate 28 is fixed with the fourth end sub-plate 29 by a screw. It should be noted that, in order to ensure that the first explosion venting channel 26 is formed between the third end sub-plate 28 and the fourth end sub-plate 29, in the x direction, the length of the screw should be greater than the gap between the third end sub-plate 28 and the fourth end sub-plate 29, and is less than the distance between an inner surface of the third end sub-plate 28 and an outer surface of the fourth end sub-plate 29 (the surface close to each battery cell 2 is defined as the inner surface). The head of the screw passes through the third end sub-plate 28 to be connected with the fourth end sub-plate 29. In order that the end plate assembly 24 may serve as a whole to better extrude each battery cell 2, as shown in Fig. 79, in the present embodiment, a gasket 244 is disposed between the third end sub-plate 28 and the fourth end sub-plate 29, and the head of the screw sequentially passes through the third end sub-plate 28 and the gasket 244 to be connected with the fourth end sub-plate 29, so as to avoid the gap between the third end sub-plate 28 and the fourth end sub-plate 29 becoming smaller or even disappearing when the battery cell 2 is extruded.

When liquid replenishment is required, the operation may be performed by the following steps:
disassembling the corresponding cover caps, and when elastic blocking columns are disposed in the first channel 74511 and the second channel 74211, taking out the elastic blocking columns sealed in the first channel 74511 and the second channel 74211;
when there is a gas in the inner cavity of the housing 1, the gas overflows from the first channel 74511, so that it is easy to inject electrolyte into the inner cavity of the housing 1; and in order to ensure more smooth liquid injection, in this step, a gas extraction pipe may be inserted into the first channel 74511, an external gas extraction apparatus connected with the gas extraction pipe is started to perform gas extraction, so that a certain negative pressure is formed in the inner cavity of the housing 1;
then, stretching the electrolyte injection pipe into the second channel 74211, and injecting electrolyte, wherein during liquid injection, if the problem of difficulty in liquid injection occurs, the external gas extraction apparatus may be started, so that a certain negative pressure is formed in the inner cavity of the housing 1, and liquid injection is then performed; and
after liquid replenishment is completed, pulling out the electrolyte injection pipe and the gas extraction pipe; and sealing the elastic blocking columns in the first channel 74511 and the second channel 74211, and then respectively sealing and fixing the corresponding cover caps on the liquid injection and replacement member main body 2421 and the gas injection and exhaust member main body 7451.

When liquid replacement is required, the operation may be performed by the following steps:
disassembling the corresponding cover caps, and taking out the elastic blocking columns sealed in the first channel 74511 and the second channel 74211;
stretching the electrolyte extraction pipe into the second channel 74211, and extracting electrolyte; when the electrolyte cannot be extracted, inserting a gas injection pipe into the first channel 74511 to inject a protective gas into the inner cavity of the housing 1, so as to perform liquid extraction; after liquid extraction is completed, taking out the electrolyte extraction pipe and the gas injection pipe, stretching the electrolyte injection pipe into the first channel 74511, and injecting new electrolyte; and after liquid injection is completed, pulling out the electrolyte injection pipe; and
sealing the elastic blocking columns in the first channel 74511 and the second channel 74211, and then sealing and fixing the corresponding cover cap on the liquid injection and replacement member main body 2421.

### Embodiment 32

Different from Embodiment 31, as shown in Fig. 80 and Fig. 81, in the present embodiment, a second end sub-plate 243 is disposed between the first end sub-plate 241 and the outermost battery cell 2 in the housing 1, and the second end sub-plate 243 is tightly attached to the outermost battery cell 2 and is fixedly connected with the first end sub-plate 241.
by additionally providing the second end sub-plate 243, the size of the second end sub-plate 243 in the x direction may be adjusted to clamp all battery cells 2 in the x direction, thereby improving the stability of each battery cell 2 in the inner cavity of the housing 1, and avoiding the problem of reduced cycle performance of the high-capacity battery caused by the swelling of each battery cell 2.

In the present embodiment, the second end sub-plate 243 is fixed with the first end sub-plate 241 by a screw, and a gasket 244 may further be disposed between the first end sub-plate 241 and the second end sub-plate 243, and the head of the screw sequentially passes through the second end sub-plate 243 and the gasket 244 to be connected with the first end sub-plate 241. At this time, the thickness of the entire end plate assembly 24 may also be adjusted by adjusting the thickness (the size in the x direction) of the gasket 244, so as to clamp all battery cells 2.

When the second end sub-plate 243 is provided, the unpacking apparatus operation port 2413 and the explosion venting port 27 may be the same opening, and the gap between the first end sub-plate 241 and the second end sub-plate 243 serves as the first explosion venting channel 26.

Correspondingly, the other end plate assembly 24 (which is not provided with the gas injection and exhaust member 745 and the liquid injection and replacement member 242) may be a flat plate, which seals the other open end of the first cylinder body 23, and meanwhile seals the open ends of the electrolyte sharing chamber 4 and the gas chamber 9.

### Embodiment 33

Different from the above embodiments, as shown in Fig. 82, in the present embodiment, the first blocking member 7452 and the second blocking member 7422 may further include a first hydraulic quick connector parent body 74522 and a second hydraulic quick connector parent body 74222, which are respectively fixed on the first channel 74511 and the second channel 74211; and after the corresponding first cover cap and the second cover cap are respectively buckled on the gas injection and exhaust member main body 7451 and the liquid injection and replacement member main body 2421, the first hydraulic quick connector parent body 74522 and the second hydraulic quick connector parent body 74222 are respectively located in the inner cavities of the first cover cap and the second cover cap.

When liquid replenishment is required, the operation may be performed by steps similar to those in Embodiment 31, and the difference lies in that:
in the present embodiment, since the first hydraulic quick connector parent body 74522 and the second hydraulic quick connector parent body 74222 are further respectively disposed in a first through hole and a second through hole, after the corresponding first cover cap and the second cover cap are disassembled, the first through hole and the second through hole are still in a sealed state due to the sealing of the corresponding first hydraulic quick connector parent body 74522 and the second hydraulic quick connector parent body 74222; and in addition, in the present embodiment, it is necessary to use the gas extraction pipe, the gas injection pipe, the electrolyte injection pipe and the electrolyte extraction pipe, which are connected with hydraulic quick connector child bodies, and when gas extraction and gas injection or liquid injection and liquid extraction are required, the hydraulic quick connector child bodies are inserted into the corresponding parent bodies to open the corresponding hydraulic quick connector parent bodies, so that the first channel 74511 and the second channel 74211 are in communication with the gas extraction pipe, the gas injection pipe, the electrolyte injection pipe and the electrolyte extraction pipe. After the operations are completed, the hydraulic quick connector child bodies are pulled out, the corresponding hydraulic quick connector parent bodies seal the first channel 74511 and the second channel 74211, and finally the first cover cap and the second cover cap are sealed and fixed on the liquid injection and replacement member main body 2421 and the gas injection and exhaust member main body 7451, respectively.

Embodiment 34 to Embodiment 37 provide a functional member (i.e., a repair mechanism) for a lithium-ion battery, and a high-capacity battery having the functional member. Liquid injection and liquid replacement of the lithium-ion battery may be completed on the basis of the functional member, and for ease of understanding, the functional member is defined as a liquid injection and replacement member.

The lithium-ion battery may be a battery cell and may also be a lithium-ion battery module having a housing.

If the lithium-ion battery is a battery cell (which includes a housing and at least one group of electrode assemblies located in the housing, and the inner cavity of the housing includes an electrolyte region and a gas region), the liquid injection and replacement member may be fixed at any location of the housing of the battery cell, and preferably, the liquid injection and replacement member is fixed at the location of an original liquid injection port of the battery cell, so as to implement the function of injecting electrolyte or replacing the electrolyte.

If the lithium-ion battery is a lithium-ion battery module having a housing (the lithium-ion battery module includes a housing and at least two battery cells located in the housing, the inner cavity of the housing penetrates through the inner cavity of each battery cell, the inner cavity of the housing includes an electrolyte region and a gas region, and the lithium-ion battery module may also be referred to as a lithium-ion battery pack or a high-capacity battery), the liquid injection and replacement member may also be fixed at any location of the housing of the lithium-ion battery module, and on the basis of the liquid injection and replacement member, electrolyte may be injected into the inner cavity of the housing or the electrolyte in the inner cavity of the housing may be replaced.

Specifically, the liquid injection and replacement member in Embodiment 34 to Embodiment 37 mainly includes a columnar liquid injection and replacement member main body; the liquid injection and replacement member main body is fixed on the housing of the lithium-ion battery, and a fifth channel penetrating through the electrolyte region of the inner cavity of the housing is formed on the liquid injection and replacement member main body; and a first pipe fitting is sleeved in the fifth channel.

After the liquid injection and replacement member main body is fixed on the housing of the lithium-ion battery, a free end of the first pipe fitting extends to the outside of the housing, and the end of the fifth channel to which the first pipe fitting is not fixed is located inside the housing and is in communication with the electrolyte region of the inner cavity of the housing.

During the charging and discharging operation of the lithium-ion battery, the end portion of the first pipe fitting that is located outside the housing (i.e., the free end of the first pipe fitting) is sealed; and when liquid injection and replacement operations are performed, it is necessary to open the end portion of the first pipe fitting that is located outside the housing, and the liquid injection and replacement operations are implemented on the basis of the first pipe fitting and the fifth channel.

After a period of time of a charging and discharging cycle of the lithium-ion battery, the electrolyte is reduced by decomposition and consumption, resulting in a reduction in the performance, so that the end portion of the first pipe fitting that is located outside the housing may be opened, and electrolyte is injected into the inner cavity of the housing by the first pipe fitting and the fifth channel, so as to improve the performance of the lithium-ion battery; or, after a period of time of the charging and discharging cycle of the lithium-ion battery, the performance of the lithium-ion battery is affected by the occurrence of impurities in the electrolyte, so that the electrolyte in the inner cavity of the housing may also be replaced by the liquid injection and replacement member, so as to improve the performance of the lithium-ion battery. The replacement herein may be partial replacement and may also be complete replacement. In addition, after the liquid injection or liquid replacement operation is completed, the end portion of the first pipe fitting that is located outside the housing is sealed, so that the operation is simple and convenient.

Embodiment 34 to Embodiment 37 are further described below in combination the drawings.

### Embodiment 34

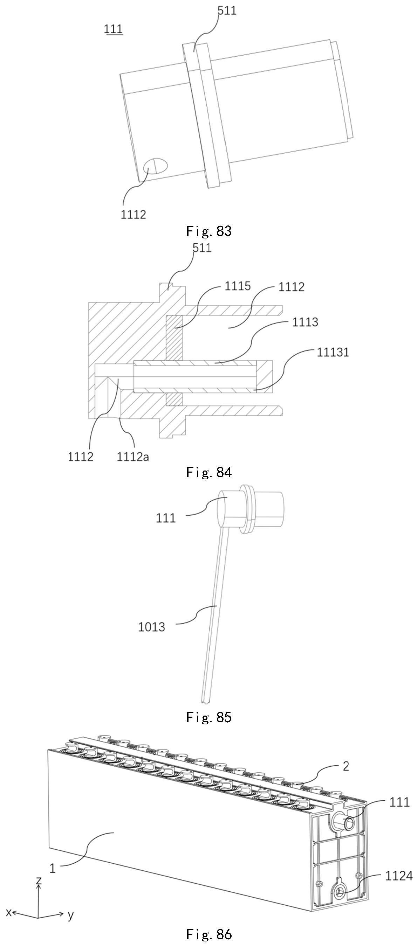

As shown in Fig. 83, it is a schematic structural diagram of a liquid injection and replacement member in the present embodiment. The liquid injection and replacement member includes a liquid injection and replacement member main body 111.

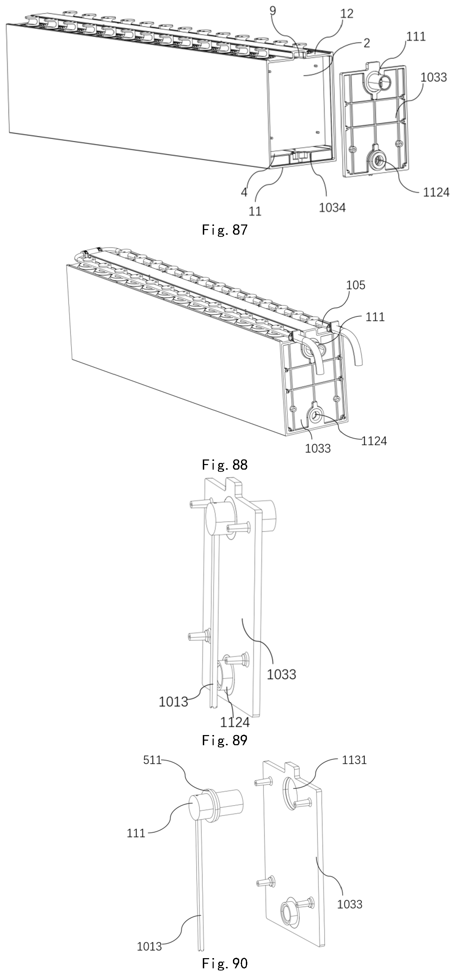

The liquid injection and replacement member main body 111 is fixed on the housing of the lithium-ion battery. In the present embodiment, the liquid injection and replacement member main body 111 is a cylinder, and in some other embodiments, a rectangular column, a semi-cylinder or the like may further be selected; and in order to conveniently fix the liquid injection and replacement member main body 111 on the housing of the lithium-ion battery, in the present embodiment, an annular limiting boss 511 is disposed on an outer circumferential surface of the liquid injection and replacement member main body 111 in the circumferential direction thereof. A second mounting hole 1131 is formed on the housing of the lithium-ion battery, the liquid injection and replacement member main body 111 is fixed in the second mounting hole 1131, and the annular limiting boss 511 is welded with a region of the housing 1 at the periphery of the second mounting hole 1131, so as to seal the second mounting hole 1131 while implementing fixation (specifically as shown in Fig. 90).

A through hole is formed on the liquid injection and replacement member main body 111 to serve as a fifth channel 1112, and the fifth channel 1112 may be a straight through hole and may also be an L-shaped through hole (as shown in Fig. 48, the fifth channel 1112 is an L-shaped through hole in the present embodiment).

In the present embodiment, a first pipe fitting 1113 is sleeved in the fifth channel 1112, and after the liquid injection and replacement member main body 111 is fixed on the housing of the lithium-ion battery, a free end 11131 of the first pipe fitting is located outside the housing 1, and the end of the fifth channel 1112 to which the first pipe fitting 1113 is not fixed (the port shown by 1112 a in Fig. 84) is located inside the housing 1, and is in communication with the electrolyte region of the inner cavity of the housing 1.

During the charging and discharging operation of the lithium-ion battery, the free end 11131 of the first pipe fitting is sealed; and when liquid injection and replacement operations are performed, it is necessary to open the free end 11131 of the first pipe fitting, and the liquid injection and replacement operations are implemented on the basis of the first pipe fitting 1113 and the fifth channel 1112.

In the present embodiment, the first pipe fitting 1113 is made of a **PP** (polypropylene) material that does not react with the electrolyte, and the free end 11131 of the first pipe fitting is sealed in a heat-shrinkable extrusion sealing manner.

In some other embodiments, the first pipe fitting 1113 may further be made of other plastic or rubber materials that do not react with the electrolyte.

In some other embodiments, the first pipe fitting 1113 may further be made of other hard materials that do not react with the electrolyte, for example, metal materials such as aluminum and copper, and correspondingly, a sealing plug or a sealing cover may be fixed and sealed at the free end 11131 of the first pipe fitting for sealing.

In order to further improve the stability of the first pipe fitting 1113 on the liquid injection and replacement member main body 111 and to ensure the sealing performance between the first pipe fitting 1113 and the fifth channel 1112 at the same time, as shown in Fig. 84, in the present embodiment, the fifth channel is designed to be a stepped through hole formed along the liquid injection and replacement member main body; and a sealant is poured onto a step surface of the fifth channel, a sealant layer 1115 is formed after the sealant solidifies, and the sealant layer may not only play a role in fixing the first pipe fitting 1113, and but also play a role in sealing a gap between the first pipe fitting 1113 and the fifth channel 1112.

It should be noted that the free end 11131 of the first pipe fitting needs to extend out from the sealant layer 1115.

In order to perform more thorough liquid replacement, as shown in Fig. 85, in the present embodiment, an electrolyte communication pipe 1013 is connected to the end of the fifth channel 1112 that is located inside the housing, and fifth channel 1112 is in communication with the electrolyte region of the housing in the housing by the electrolyte communication pipe 1013.

One end of the electrolyte communication pipe 1013 is fixed on the liquid injection and replacement member main body 111 and penetrates through the fifth channel 1112, and the other end thereof is configured for communicating with the electrolyte region of the inner cavity of the housing.

It should be noted that the end portion of the electrolyte communication pipe 1013 that is in communication with the electrolyte region of the inner cavity of the housing may directly extend into the bottom of the inner cavity of the housing, and is always immersed in the electrolyte, therefore when liquid replacement is required, the electrolyte in the inner cavity of the housing may be extracted as much as possible, so that the liquid replacement is more thorough.

The electrolyte communication pipe 1013 and the liquid injection and replacement member main body 111 may be an integrated member and may also be separate members, and when the electrolyte communication pipe 1013 and the liquid injection and replacement member main body 111 are separate members, the electrolyte communication pipe 1013 may be connected with the liquid injection and replacement member main body 111 by welding or screwing. The electrolyte communication pipe 1013 is generally made of the same aluminum material as the liquid injection and replacement member main body 111.

As shown in Fig. 86, it is a schematic structural diagram of a lithium-ion battery in the present embodiment, and the lithium-ion battery is specifically a high-capacity battery, including a housing 1 and a plurality of battery cells 2 arranged in the housing 1.

The battery cells 2 in the present embodiment are prismatic cells, 13 battery cells 2 are provided, and the inner cavity of each battery cell 2 includes an electrolyte region and a gas region. In other embodiments, the number of the battery cells 2 may be adjusted according to actual needs, and the forms of the battery cells 2 may also be adjusted according to actual needs.

A rectangular housing 1 is used in general. For ease of description, the length direction of the housing 1 is defined as an x direction, the width direction thereof is defined as a y direction, and the height direction thereof is defined as a z direction.

In Embodiment 34 to Embodiment 37, the structure of the housing 1 is not specifically limited, and at least the following two structures may be used:
the first structure includes a first cylinder body having two open ends (i.e., ports parallel to a yz plane are the open ends), and end plates respectively fixed at the two open ends of the first cylinder body (i.e., the end plates are parallel to the yz plane); and
the second structure includes a second cylinder body having open ends at the top and bottom (i.e., ports parallel to an xy plane are the open ends), and an upper cover plate and a lower cover plate, which are respectively fixed at the open ends at the top and bottom of the second cylinder body (i.e., both the upper cover plate and the lower cover plate are parallel to the xy plane).

In the following description, the cover plates in the housing 1 that are parallel to the xy plane are respectively defined as a housing top plate 12 and a housing bottom plate 11, and the cover plate parallel to the yz plane is referred to as an end plate 1033.

The inner cavity of the housing 1 is in communication with the inner cavities of all battery cells 2. Preferably, a sharing chamber may be disposed in the housing 1, and the inner cavity of the sharing chamber is in communication with the inner cavities of all battery cells 2 to achieve the above communication effect.

It should be noted that:
the sharing chamber may be an electrolyte sharing chamber 4 (as shown in Fig. 87), the battery cells 2 may be located in a unified electrolyte environment by the electrolyte sharing chamber 4, thereby ensuring the uniformity of the electrolyte in the battery cells 2, improving the performance of the high-capacity battery and prolonging the charging and discharging cycle life of the high-capacity battery. The electrolyte sharing chamber 4 herein is a liquid channel, which is located between the housing bottom plate 11 and each battery cell 2 and extends in the length direction of the housing 1 (the x direction), the liquid channel may be integrally formed with the housing bottom plate 11, and may also be formed by disposing a support member 1034 between the lower cover plate of the battery cell 2 and the housing bottom plate 11.

The housing top plate 12 is provided with a gas sharing chamber 9 in the x direction (as shown in Fig. 87), and the inner cavity of the gas sharing chamber 9 is in communication with the gas region of the inner cavity of each battery cell 2. A gas balance of each battery cell 2 is realized by the gas sharing chamber 9, so that the performance of the high-capacity battery may also be improved, and the charging and discharging cycle life of the high-capacity battery may also be prolonged.

In some other embodiments, only the electrolyte sharing chamber 4 may be provided.

In order to improve the heat dissipation performance of such a high-capacity battery, an avoidance hole capable of enabling a polarity terminal of each battery cell 2 to extend out is formed on the housing top plate 12; and the polarity terminal of each battery cell 2 extends out from the avoidance hole, and a region of the housing top plate 12 around the avoidance hole is fixed and sealed with a shell of the battery cell 2.

It should be noted that the polarity terminal of the battery cell 2 herein may be an electrode terminal of the battery cell 2, in order to avoid the situation in which the electrode terminal of the battery cell 2 serving as the polarity terminal cannot smoothly extend out from the avoidance hole or an extension height does not meet set requirements, an electrode terminal adapter may further be connected to the electrode terminal of the battery cell 2, and an overall structure in which the electrode terminal of the battery cell 2 cooperates with the electrode terminal adapter is used as the polarity terminal of the battery cell 2.

In order to further improve the heat dissipation performance of the high-capacity battery in the above embodiments, as shown in Fig. 88, the high-capacity battery in the present embodiment further includes a heat transfer pipe 105.

In the present embodiment, a clamping portion of the heat transfer pipe 105 is disposed at a location where the polarity terminal extends out from the avoidance hole, and the heat transfer pipe 105 is fixed in the clamping portion of the heat transfer pipe 105, so that the heat transfer pipe 105 is directly connected with the polarity terminal of the high-capacity battery, therefore heat on the polarity terminal with relatively concentrated heat may be exported in a timely manner, thereby improving the heat dissipation effect of the high-capacity battery. In addition, when the temperature of the high-capacity battery is lower than a set threshold value, a heat transfer medium with a higher temperature is injected into the heat transfer pipe 105 to heat the high-capacity battery; and by controlling the temperature of the heat transfer medium, it may be ensured that the high-capacity battery always operates at a normal working temperature.

As can be seen in combination with Figs. 86-89, in the present embodiment, a first explosion venting mechanism 1124 is fixed on the end plate 1033 of the housing 1. In the present embodiment, the first explosion venting mechanism 1124 is close to the housing bottom plate 11, and preferably directly faces the electrolyte sharing chamber 4. When thermal runaway occurs in any battery cell 2, a thermal runaway flue gas and a part of electrolyte break through an explosion venting film of the first explosion venting mechanism 1124 to be discharged from the first explosion venting mechanism 1124.

In the present embodiment, the liquid injection and replacement member is fixed on the end plate 1033 of the housing 1. In the present embodiment, the liquid injection and replacement member is close to the housing top plate 12, the fifth channel 1112 is in communication with the electrolyte region of the inner cavity of the housing 1 by the electrolyte communication pipe 1013, the end portion of the electrolyte communication pipe 1013 that is in communication with the electrolyte region of the inner cavity of the housing 1 extends into the bottom of the inner cavity of the housing 1 as much as possible, and is always immersed in the electrolyte, therefore when liquid replacement is required, the electrolyte in the inner cavity of the housing 1 may be extracted as much as possible, so that the liquid replacement is more thorough.

As shown in Fig. 90, in the present embodiment, a second mounting hole 1131 adapted to the shape of the cross section of the liquid injection and replacement main body is formed in the end plate 1033 of the housing 1, the liquid injection and replacement member main body 111 is coaxially located in the second mounting hole 1131, and the annular limiting boss 511 is hermetically welded with a peripheral region of the second mounting hole 1131. When an energy storage device is assembled on the basis of such a high-capacity battery assembly, a plurality of high-capacity batteries are arranged in the width direction of the high-capacity batteries, so that the end plate 1033 of each high-capacity battery is exposed. Therefore, when the liquid injection and replacement member is disposed on the end plate 1033, the liquid injection and replacement operations may be conveniently performed.

After a period of time of the charging and discharging cycle of the high-capacity battery, the electrolyte is reduced by decomposition and consumption, resulting in a reduction in the performance of the high-capacity battery, so that electrolyte may be injected into the inner cavity of the housing 1 and the inner cavity of each battery cell 2 by the liquid injection and replacement member, so as to improve the performance of the high-capacity battery; or, after a period of time of the charging and discharging cycle of the high-capacity battery, the performance of the high-capacity battery is affected by the occurrence of impurities in the electrolyte, so that the electrolyte in the inner cavity of the housing 1 and the inner cavity of each battery cell 2 may also be replaced by the liquid injection and replacement member, so as to improve the performance of the high-capacity battery. The replacement herein may be partial replacement and may also be complete replacement. In addition, after the electrolyte region of the inner cavity of each battery cell 2 is in communication with the electrolyte sharing chamber 4, electrolyte may be injected into the inner cavity of each battery cell 2 and the electrolyte sharing chamber 4 again by the liquid injection and replacement member, so as to ensure the continuity of the electrolyte.

Liquid injection and replacement processes of the high-capacity battery in the present embodiment are described below:
when liquid injection is required, the operation may be performed by the following steps:
shearing a heat-shrinkable extrusion section of the first pipe fitting 1113 to open the end portion of the first pipe fitting 1113 that is located outside the housing 1;
connecting an electrolyte injection pipe with the first pipe fitting 1113, injecting electrolyte, and after liquid injection is completed, pulling out the electrolyte injection pipe; and
sealing, in the heat-shrinkable extrusion sealing manner, the end portion of the first pipe fitting 1113 that is located outside the housing 1.

When liquid replacement is required, the operation may be performed by the following steps:
shearing the heat-shrinkable extrusion section of the first pipe fitting 1113 to open the end portion of the first pipe fitting 1113 that is located outside the housing 1;
connecting an electrolyte extraction pipe with the first pipe fitting 1113, and extracting electrolyte; then, connecting the electrolyte injection pipe with the first pipe fitting 1113, and injecting new electrolyte; and after liquid injection is completed, pulling out the electrolyte injection pipe; and
sealing, in the heat-shrinkable extrusion sealing manner, the end portion of the first pipe fitting 1113 that is located outside the housing 1.

It should be noted that in the present embodiment, during liquid injection, if the pressure in the inner cavity of the housing 1 is too large, the problem of difficulty in liquid injection may occur.

### Embodiment 35

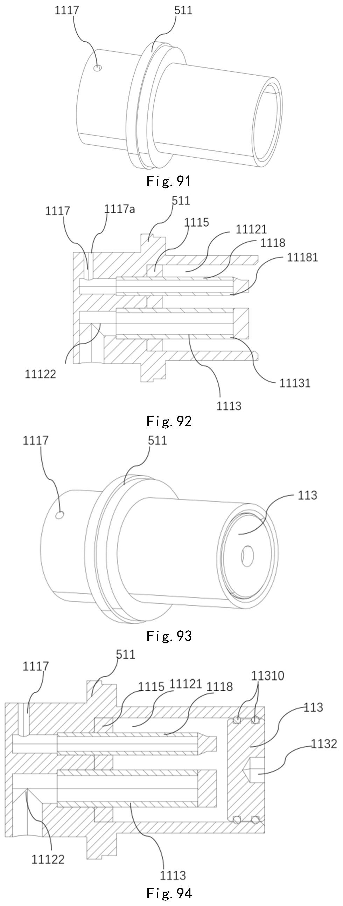

As shown in Fig. 91 and Fig. 92, on the basis of Embodiment 34, in the present embodiment, a sixth channel 1117 penetrating through the gas region of the inner cavity of the housing is formed on the liquid injection and replacement member main body 111, and a second pipe fitting 1118 is sleeved in the sixth channel 1117; and the end portion of the second pipe fitting 1118 that is located outside the housing (the end portion may be defined as a free end 11181 of the second pipe fitting) is sealed.

Similar to the fifth channel 1112, the sixth channel 1117 may be a straight through hole and may also be an L-shaped through hole.

In Fig. 92, the fifth channel is a stepped through hole formed along the liquid injection and replacement member main body; the sixth channel is L-shaped through hole, which is isolated from a small hole 11122 of the stepped through hole and penetrates through a large hole 11121 of the stepped through hole; and the end portions of the first pipe fitting 1113 and the second pipe fitting 1118 that are located outside the housing are located in the large hole 11121 of the stepped through hole.

It should be noted that when the sealant layer 1115 is disposed on the step surface of the fifth channel, the free end 11181 of the second pipe fitting also needs to extend out from the sealant layer 1115.

After the liquid injection and replacement member main body 111 is fixed on the housing of the lithium-ion battery, the free end 11181 of the second pipe fitting is located outside the housing, and the end of the sixth channel 1117 to which the second pipe fitting 1118 is not fixed (the port shown by 1117a in Fig. 92) is located inside the housing, and is in communication with the gas region of the inner cavity of the housing.

During the charging and discharging operation of the lithium-ion battery, the free end 11181 of the second pipe fitting is sealed; and when liquid injection and replacement operations are performed, it is necessary to open the free end 11181 of the second pipe fitting, by means of the second pipe fitting 1118 and the sixth channel 1117, a protective gas is injected into the inner cavity of the housing or the gas in the inner cavity of the housing is discharged, so as to change the internal pressure of the battery, so that the flow of the electrolyte during liquid injection and replacement is smooth, and the electrolyte may also fully wet an electrode sheet of each battery cell 2.

In the present embodiment, the second pipe fitting 1118 is made of a PP (polypropylene) material that does not react with the electrolyte, and is sealed in the heat-shrinkable extrusion sealing manner.

In some other embodiments, the second pipe fitting 1118 may further be made of other plastic or rubber materials that do not react with the electrolyte.

In some other embodiments, the second pipe fitting 1118 may further be made of other hard materials that do not react with the electrolyte, for example, metal materials such as aluminum and copper, and correspondingly, a sealing plug or a sealing cover or the like may be fixed and sealed on the free end 11181 of the second pipe fitting for sealing.

The high-capacity battery in the present embodiment differs from the high-capacity battery in Embodiment 34 in that, the above liquid injection and replacement member is used in the present embodiment, and the remaining structures are the same as those in Embodiment 34, therefore details are not described herein again.

Liquid injection and replacement processes of the high-capacity battery in the present embodiment are described below:
when liquid injection is required, the operation may be performed by the following steps:
shearing heat-shrinkable extrusion sections of the first pipe fitting 1113 and the second pipe fitting 1118 to open the end portions of the first pipe fitting 1113 and the second pipe fitting 1118 that are located outside the housing 1;
when there is a gas in the inner cavity of the housing 1, the gas overflows from the sixth channel 1117 and the second pipe fitting 1118 in sequence, so that it is easy to inject electrolyte into the inner cavity of the housing 1; and in order to ensure more smooth liquid injection, in this step, a gas extraction pipe may be inserted into the second pipe fitting 1118 (or the gas extraction pipe is connected with the second pipe fitting 1118), an external gas extraction apparatus connected with the gas extraction pipe is started to perform gas extraction, so that a certain negative pressure is formed in the inner cavity of the housing 1;
then, connecting the electrolyte injection pipe with the first pipe fitting 1113, and injecting electrolyte, wherein during liquid injection, if the problem of difficulty in liquid injection occurs, the external gas extraction apparatus may be started, so that a certain negative pressure is formed in the inner cavity of the housing 1, and liquid injection is then performed; and
after liquid injection is completed, pulling out the electrolyte injection pipe and the gas extraction pipe; and
next, sealing, in the heat-shrinkable extrusion sealing manner, the end portions of the first pipe fitting 1113 and the second pipe fitting 1118 that are located outside the housing 1.

When liquid replacement is required, the operation may be performed by the following steps:
shearing the heat-shrinkable extrusion sections of the first pipe fitting 1113 and the second pipe fitting 1118 to open the end portions of the first pipe fitting 1113 and the second pipe fitting 1118 that are located outside the housing 1;
connecting the electrolyte extraction pipe with the first pipe fitting 1113, and extracting electrolyte; when the electrolyte cannot be extracted, inserting a gas injection pipe into the second pipe fitting 1118, or connecting the gas injection pipe with the second pipe fitting 1118, so as to inject a protective gas into the inner cavity of the housing 1 to perform liquid extraction; after liquid extraction is completed, taking out the electrolyte extraction pipe and the gas injection pipe, connecting the electrolyte injection pipe with the first pipe fitting 1113, and injecting new electrolyte; and after liquid injection is completed, pulling out the electrolyte injection pipe; and
then, sealing, in the heat-shrinkable extrusion sealing manner, the end portions of the first pipe fitting 1113 and the second pipe fitting 1118 that are located outside the housing 1.

After the sixth channel 1117 and the second pipe fitting 1118 are additionally provided in the present embodiment, it is easier to perform the liquid injection or liquid replacement operation compared with Embodiment 34.

### Embodiment 36

As shown in Figs. 93-95, different from the above embodiments, in the present embodiment, the fifth channel and the sixth channel are further sealed by using a sealing rubber plug 113.

As can be seen from Fig. 94, the end portions of the first pipe fitting 1113 and the second pipe fitting 1118 that are located outside the housing 1 are located in the large hole 11121 of the fifth channel; and the sealing rubber plug 113 is plugged into the large hole 11121 to seal the fifth channel and the sixth channel. In order to further improve the sealing performance, an O-ring sealing ring 11310 is disposed between the sealing rubber plug 113 and a hole wall of the large hole 11121.

In the present embodiment, the sealing rubber plug 113 is made of a Teflon rubber material that does not react with the electrolyte, and other rubber materials that do not react with the electrolyte may further be used in some other embodiments.

In addition, a blind hole 1132 may be further formed on the sealing rubber plug 113, so that the sealing rubber plug 113 may be conveniently pulled out from the large hole 11121 by using a tool.

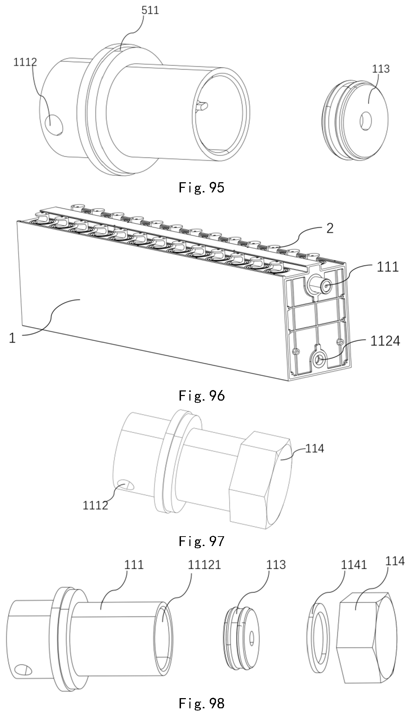

As shown in Fig. 96, it is a schematic structural diagram of a high-capacity battery in the present embodiment. Different from the high-capacity battery in Embodiment 35, in the present embodiment, the above liquid injection and replacement member is used in the present embodiment, and the remaining structures are the same as those in Embodiment 35, therefore details are not described herein again.

With regard to the high-capacity battery corresponding to the present embodiment, the liquid injection and replacement processes thereof are similar to those in Embodiment 35, except that when liquid injection or liquid replacement is required, the sealing rubber plug 113 needs to be pulled out first, the heat-shrinkable extrusion sections of the first pipe fitting 1113 and the second pipe fitting 1118 are then sheared to open the end portions of the first pipe fitting 1113 and the second pipe fitting 1118 that are located outside the housing 1; and after liquid injection and replacement are completed, the end portions of the first pipe fitting 1113 and the second pipe fitting 1118 that are located outside the housing 1 are sealed in the heat-shrinkable extrusion sealing manner, and then the large hole 11121 needs to be sealed by using the sealing rubber plug 113. The remaining steps are similar to those in Embodiment 35, and thus details are not described herein again.

### Embodiment 37

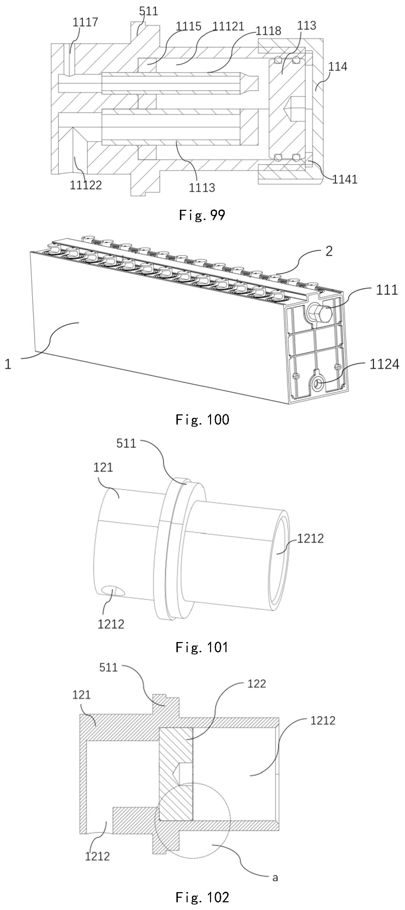

Different from the above embodiments, as shown in Figs. 97-99, in the present embodiment, secondary sealing is further performed on the large hole 11121 by using a sealing end cover 114. It is taken as an example in Fig. 98 and Fig. 99 that the sealing end cover 114 is additionally provided on the basis of Embodiment 36.

In order to further ensure the sealing performance, sealing gaskets 1141 may further be additionally disposed on end portions of the sealing end cover 114 and the blind hole 1132.

The sealing end cover 114 is detachably fixed on the liquid injection and replacement member main body 111, for example, the sealing end cover 114 may be buckled on the liquid injection and replacement member main body 111 in a threaded connection manner, and may further be fixed on the liquid injection and replacement member main body 111 in an interference fit manner, but the disassembly and assembly are relatively difficult in the interference fit manner compared with the threaded connection manner, therefore the sealing end cover 114 is fixed on the liquid injection and replacement member main body 111 in the threaded connection manner in the present embodiment.

As shown in Fig. 100, it is a schematic structural diagram of a high-capacity battery in the present embodiment. Different from the high-capacity battery in Embodiment 36, the above liquid injection and replacement member is used in the present embodiment, and the remaining structures are the same as those in Embodiment 36, therefore details are not described herein again.

With regard to the high-capacity battery corresponding to the present embodiment, the liquid injection and replacement processes thereof are similar to those in Embodiment 36, except that when liquid injection or liquid replacement is required, the sealing end cover 114 needs to be disassembled first, the sealing rubber plug 113 is pulled out, and the heat-shrinkable extrusion sections of the first pipe fitting 1113 and the second pipe fitting 1118 are then sheared to open the end portions of the first pipe fitting 1113 and the second pipe fitting 1118 that are located outside the housing 1; and after liquid injection and replacement are completed, the end portions of the first pipe fitting 1113 and the second pipe fitting 1118 that are located outside the housing 1 are sealed in the heat-shrinkable extrusion sealing manner, the large hole 11121 is sealed by using the sealing rubber plug 113, and then it is necessary to secondarily sealing the large hole 11121 by using the sealing end cover 114. The remaining steps are similar to those in Embodiment 36, and thus details are not described herein again.

Embodiment 38 to Embodiment 41 provide a functional member for a lithium-ion battery. Liquid injection and liquid replacement of the lithium-ion battery may be completed on the basis of the functional member, and for ease of understanding, the functional member is defined as a liquid injection and replacement member.

The lithium-ion battery may be a battery cell and may also be a lithium-ion battery module having a housing.

If the lithium-ion battery is a battery cell (which includes a housing and at least one group of electrode assemblies located in the housing, and the inner cavity of the housing includes an electrolyte region and a gas region), the liquid injection and replacement member may be fixed at any location of the housing of the battery cell, and preferably,the liquid injection and replacement member is fixed at the location of an original liquid injection port of the battery cell, so as to implement the function of injecting electrolyte or replacing the electrolyte.

If the lithium-ion battery is a lithium-ion battery module having a housing (the lithium-ion battery module includes a housing and at least two battery cells located in the housing, the inner cavity of the housing penetrates through the inner cavity of each battery cell, the inner cavity of the housing includes an electrolyte region and a gas region, and the lithium-ion battery module may also be referred to as a lithium-ion battery pack or a high-capacity battery), the liquid injection and replacement member may also be fixed at any location of the housing of the lithium-ion battery module, and on the basis of the liquid injection and replacement member, electrolyte may be injected into the inner cavity of the housing or the electrolyte in the inner cavity of the housing may be replaced.

Specifically, the liquid injection and replacement member in the present invention mainly includes a columnar liquid injection and replacement member main body; and the liquid injection and replacement member main body is fixed on the housing of the lithium-ion battery, and a seventh channel penetrating through the electrolyte region of the inner cavity of the housing is formed on the liquid injection and replacement member main body.

In a charging and discharging cycle process of the lithium-ion battery, a blocking member blocks the seventh channel from the outer side of the housing; and when liquid injection and replacement operations are performed, it is necessary to open the blocking member, and the liquid injection and replacement operations are implemented on the basis of the seventh channel.

The blocking member in the present invention includes at least one group of sealing units, and the locations of the sealing units on the seventh channel may be arranged according to the number of the sealing units:
1. when one group of sealing units is provided, the sealing units are disposed in the seventh channel to seal the seventh channel; and
2. when a plurality of groups (two or more groups) of sealing units are provided, the plurality of groups of sealing units are sequentially stacked in the seventh channel in the axial direction of the seventh channel to seal the seventh channel.

Specifically, each group of sealing units includes a first sealing plug and a sealing coating, which are sequentially stacked in the axial direction of the seventh channel, the first sealing plug is located on the side close to the inner cavity of the housing for preliminarily sealing the seventh channel, and the sealing coating is located on the side away from the inner cavity of the housing for secondarily sealing the seventh channel.

After a period of time of a charging and discharging cycle of the lithium-ion battery, the electrolyte is reduced by decomposition and consumption, resulting in a reduction in the performance, so that the sealing units may be sequentially taken out, the sealing coating in each sealing unit may be removed by dissolving, tearing or in other manners, the first sealing plug may be pulled out by using a tool (specifically, as shown in Fig. 102, a threaded blind hole may be formed in the first sealing plug, and the first sealing plug is pulled out by using a tool provided with a threaded rod adapted to the threaded blind hole), and then electrolyte is injected into the inner cavity of the housing by the seventh channel, so as to improve the performance of the lithium-ion battery; or, after a period of time of the charging and discharging cycle of the lithium-ion battery, the performance of the lithium-ion battery is affected by the occurrence of impurities in the electrolyte, so that the sealing units may also be taken out by the above process, and the electrolyte in the inner cavity of the housing is replaced by the seventh channel, so as to improve the performance of the lithium-ion battery. The replacement herein may be partial replacement and may also be complete replacement. After the liquid injection or liquid replacement operation is completed, the seventh channel is blocked from the outer side of the housing by using at least one group of sealing units, so that the operation is simple and convenient.

Twice sealing may be performed on the seventh channel on the basis of each group of sealing units, thereby ensuring that the sealing reliability at the location of the seventh channel is high during the charging and discharging cycle of the battery. In addition, in the present invention, the sealing units have simple structures, convenient manufacturing and sealing processes, and lower costs.

Embodiment 38 to Embodiment 41 are further described below in combination the drawings.

### Embodiment 38

As shown in Fig. 101, it is a schematic structural diagram of a liquid injection and replacement member in the present embodiment. The liquid injection and replacement member in the present embodiment includes a liquid injection and replacement member main body 121, and a blocking member disposed on the liquid injection and replacement member main body 121.

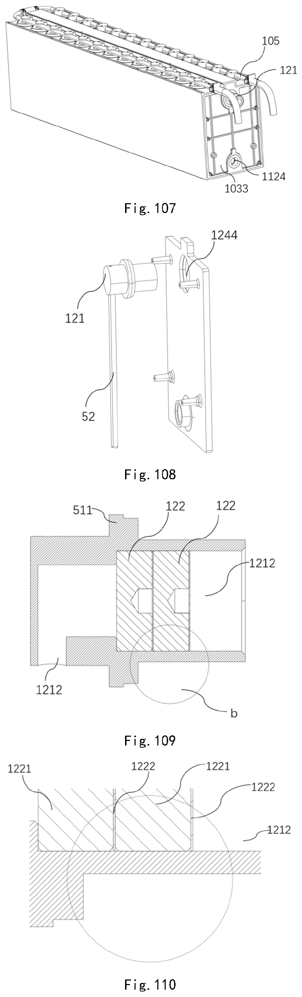

The liquid injection and replacement member main body 121 is fixed on a housing 1 of the lithium-ion battery. As can be seen in combination with Fig. 102, in the present embodiment, the liquid injection and replacement member main body 121 is a cylinder, and in some other embodiments, a rectangular column, a semi-cylinder or the like may further be selected; and in order to conveniently fix the liquid injection and replacement member main body 121 on the housing 1 of the lithium-ion battery, in the present embodiment, an annular limiting boss 511 is disposed on an outer circumferential surface of the liquid injection and replacement member main body 121 in the circumferential direction thereof. A third mounting hole 1244 is formed on the housing 1 of the lithium-ion battery (as shown in Fig. 108), the liquid injection and replacement member main body 121 is fixed in the third mounting hole 1244, and the annular limiting boss 511 is welded with a region of the housing 1 at the periphery of the third mounting hole 1244, so as to seal the third mounting hole 1244 while implementing fixation.

A through hole is formed on the liquid injection and replacement member main body 121 to serve as a seventh channel 1212, and the seventh channel 1212 may be a straight through hole and may also be an L-shaped through hole (as shown in Fig. 101 and Fig. 102, the seventh channel 1212 is an L-shaped through hole in the present embodiment).

After the liquid injection and replacement member main body 121 is fixed on the housing 1 of the lithium-ion battery, one end of the seventh channel 1212 is located outside the housing 1, and the other end thereof is located inside the housing 1 for communicating with the electrolyte region of the inner cavity of the housing 1.

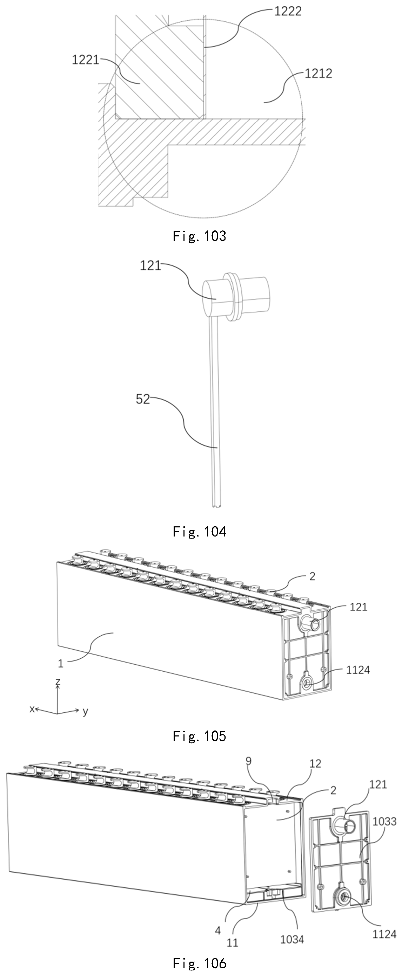

As shown in Fig. 104, in the present embodiment, by additionally providing an electrolyte communication pipe section 52, the seventh channel 1212 is in communication with the electrolyte region of the inner cavity of the housing 1, one end of the electrolyte communication pipe section 52 is fixed on the liquid injection and replacement member main body 121 and penetrates the seventh channel 1212, and the other end thereof is configured for communicating with the electrolyte region of the inner cavity of the housing 1.

It should be noted that, the end portion of the electrolyte communication pipe section 52 that is in communication with the electrolyte region of the inner cavity of the housing 1 may directly extend into the bottom of the inner cavity of the housing 1, and is always immersed in the electrolyte, therefore when liquid replacement is required, the electrolyte in the inner cavity of the housing may be extracted as much as possible, so that the liquid replacement is more thorough.

In some other embodiments, an electrolyte flow channel may be formed on the housing 1 to communicate with the seventh channel 1212, so that the seventh channel 1212 is in communication with the electrolyte region in the housing 1. However, compared with the present embodiment, the structure is relatively complicated, and when the electrolyte flow channel cannot extend to the bottom of the inner cavity of the housing 1, the situation of incomplete liquid replacement may also occur.

In the present embodiment, the electrolyte communication pipe section 52 and the liquid injection and replacement member main body 121 may be an integrated member and may also be separate members, and when the electrolyte communication pipe section 52 and the liquid injection and replacement member main body 121 are separate members, the electrolyte communication pipe section 52 may be connected with the liquid injection and replacement member main body 121 by welding or screwing.

The electrolyte communication pipe section 52 is generally made of the same aluminum material as the liquid injection and replacement member main body 121, and may further be made of organic materials such as rubber that does not react with the electrolyte.

In the present embodiment, the blocking member, as shown in Fig. 102 and Fig. 103, includes a group of sealing units 122, and the sealing unit 122 includes a first sealing plug 1221 and a sealing coating 1222, which are stacked in the axial direction of the seventh channel 1212; and the first sealing plug 1221 is located on the side close to the inner cavity of the housing 1 for preliminarily sealing the seventh channel 1212, and the sealing coating 1222 is located on the side away from the inner cavity of the housing 1 for secondarily sealing the seventh channel 1212.

In the present embodiment, the first sealing plug 1221 is generally made of a rubber material that does not react with the electrolyte, for example, fluororubber, nitrile rubber, natural rubber or ethylene propylene diene monomer rubber, etc. The sealing coating 1222 is generally made of sealing paint or sealing varnish that does not react with the electrolyte, and covers an outer end surface of the first sealing plug 1221 and a seam between the first sealing plug 1221 and an inner wall of the seventh channel 1212 (an inner wall of the L-shaped through hole) on the basis of a coating method, wherein the outer end surface of the first sealing plug 1221 refers to the end surface of the first sealing plug 1221 that is away from the inner cavity of the housing 1 in the length direction of the seventh channel 1212.

When liquid injection and replacement are required, the coating is removed by using a varnish remover, and the first sealing plug 1221 is pulled out; and liquid injection and replacement operations are performed by the seventh channel 1212, and after the liquid injection and replacement operations are completed, the first sealing plug 1221 is plugged into the seventh channel 1212, and the sealing coating 1222 is coated on the outer end surface of the first sealing plug 1221 and the seam between the first sealing plug 1221 and the inner wall of the seventh channel 1212.

As shown in Fig. 105 and Fig. 106, it is a schematic structural diagram of a lithium-ion battery in the present embodiment, and the lithium-ion battery is specifically a high-capacity battery, including a housing 1 and a plurality of battery cells 2 arranged in the housing 1.

The battery cells 2 in the present embodiment are prismatic cells, 13 battery cells 2 are provided, and the inner cavity of each battery cell 2 includes an electrolyte region and a gas region. In other embodiments, the number of the battery cells 2 may be adjusted according to actual needs, and the forms of the battery cells 2 may also be adjusted according to actual needs.

A rectangular housing 1 is used in general. For ease of description, the length direction of the housing 1 is defined as an x direction, the width direction of the housing 1 is defined as a y direction, and the height direction of the housing 1 is defined as a z direction.

The structure of the housing 1 is not specifically limited in the present invention, and at least the following two structures may be used:
the first structure includes a cylinder body having two open ends (i.e., ports parallel to a yz plane are the open ends), and end plates respectively fixed at the two open ends of the cylinder body (i.e., the end plates are parallel to the yz plane); and
the second structure includes a cylinder body having open ends at the top and bottom (i.e., ports parallel to an xy plane are the open ends), and an upper cover plate and a lower cover plate, which are respectively fixed at the open ends at the top and bottom of the cylinder body (i.e., both the upper cover plate and the lower cover plate are parallel to the xy plane).

In the following description, the cover plates in the housing 1 that are parallel to the xy plane are respectively defined as a housing top plate 12 and a housing bottom plate 11, and the cover plate parallel to the yz plane is referred to as an end plate 1033.

The inner cavity of the housing 1 is in communication with the inner cavities of all battery cells 2. Preferably, a sharing chamber may be disposed in the housing 1, and the inner cavity of the sharing chamber is in communication with the inner cavities of all battery cells 2 to achieve the above communication effect.

It should be noted that:
the sharing chamber may be an electrolyte sharing chamber 4 (as shown in Fig. 106), the battery cells 2 may be located in a unified electrolyte environment by the electrolyte sharing chamber 4, thereby ensuring the uniformity of the electrolyte in the battery cells 2, improving the performance of the high-capacity battery and prolonging the charging and discharging cycle life of the high-capacity battery. The electrolyte sharing chamber 4 herein is a liquid channel, which is located between the housing bottom plate 11 and each battery cell 2 and extends in the length direction of the housing 1 (the x direction), the liquid channel may be integrally formed with the housing bottom plate 11, and may also be formed by disposing a support member 1034 between the lower cover plate of the battery cell 2 and the housing bottom plate 11.

The housing top plate 12 is provided with a gas chamber 9 in the x direction (as shown in Fig. 106), and the inner cavity of the gas chamber 9 is in communication with the gas region of the inner cavity of each battery cell 2. A gas balance of each battery cell 2 is realized by the gas chamber 9, so that the performance of the high-capacity battery may also be improved, and the charging and discharging cycle life of the high-capacity battery may also be prolonged.

In some other embodiments, only the electrolyte sharing chamber 4 may be provided.

In order to improve the heat dissipation performance of such a high-capacity battery, an avoidance hole capable of enabling a polarity terminal of each battery cell 2 to extend out is formed on the housing top plate 12; and the polarity terminal of each battery cell 2 extends out from the avoidance hole, and a region of the housing top plate 12 around the avoidance hole is fixed and sealed with a shell of the battery cell 2.

It should be noted that the polarity terminal of the battery cell 2 herein may be an electrode terminal of the battery cell 2, in order to avoid the situation in which the electrode terminal of the battery cell 2 serving as the polarity terminal cannot smoothly extend out from the avoidance hole or an extension height does not meet set requirements, an electrode terminal adapter may further be connected to the electrode terminal of the battery cell 2, and an overall structure in which the electrode terminal of the battery cell 2 cooperates with the electrode terminal adapter is used as the polarity terminal of the battery cell 2.

In order to further improve the heat dissipation performance of the high-capacity battery in the above embodiments, as shown in Fig. 107, the high-capacity battery in the present embodiment further includes a heat transfer pipe 105.

In the present embodiment, a clamping portion of the heat transfer pipe 105 is disposed at a location where the polarity terminal extends out from the avoidance hole, and the heat transfer pipe 105 is fixed in the clamping portion of the heat transfer pipe 105, so that the heat transfer pipe 105 is directly connected with the polarity terminal of the high-capacity battery, therefore heat on the polarity terminal with relatively concentrated heat may be exported in a timely manner, thereby improving the heat dissipation effect of the high-capacity battery. In addition, when the temperature of the high-capacity battery is lower than a set threshold value, a heat transfer medium with a higher temperature is injected into the heat transfer pipe 105 to heat the high-capacity battery; and by controlling the temperature of the heat transfer medium, it may be ensured that the high-capacity battery always operates at a normal working temperature.

As can be seen in combination with Figs. 105-107, in the present embodiment, a first explosion venting mechanism 1124 is fixed on the end plate 1033 of the housing 1. In the present embodiment, the first explosion venting mechanism 1124 is close to the housing bottom plate 11, and preferably directly faces the electrolyte sharing chamber 4. When thermal runaway occurs in any battery cell 2, a thermal runaway flue gas and a part of electrolyte break through an explosion venting film of the first explosion venting mechanism 1124 to be discharged from the first explosion venting mechanism 1124.

In the present embodiment, the liquid injection and replacement member is fixed on the end plate 1033 of the housing 1. In the present embodiment, the liquid injection and replacement member is close to the housing top plate 12, the seventh channel 1212 is in communication with the electrolyte region of the inner cavity of the housing 1 by the electrolyte communication pipe section 52, the end portion of the electrolyte communication pipe section 52 that is in communication with the electrolyte region of the inner cavity of the housing 1 extends into the bottom of the inner cavity of the housing 1 as much as possible, and is always immersed in the electrolyte, therefore when liquid replacement is required, the electrolyte in the inner cavity of the housing 1 may be extracted as much as possible, so that the liquid replacement is more thorough.

As shown in Fig. 108, in the present embodiment, a third mounting hole 1244 adapted to the shape of the cross section of the liquid injection and replacement main body is formed in the end plate 1033 of the housing 1, the liquid injection and replacement member main body 121 is coaxially located in the third mounting hole 1244, and the annular limiting boss 511 is hermetically welded with a peripheral region of the third mounting hole 1244. When an energy storage device is assembled on the basis of such a high-capacity battery assembly, a plurality of high-capacity batteries are arranged in the width direction of the high-capacity batteries, so that the end plate 1033 of each high-capacity battery is exposed. Therefore, when the liquid injection and replacement member is disposed on the end plate 1033, liquid injection and replacement operations may be conveniently performed.

After a period of time of the charging and discharging cycle of the high-capacity battery, the electrolyte is reduced by decomposition and consumption, resulting in a reduction in the performance of the high-capacity battery, so that electrolyte may be injected into the inner cavity of the housing 1 and the inner cavity of each battery cell 2 by the liquid injection and replacement member, so as to improve the performance of the high-capacity battery; or, after a period of time of the charging and discharging cycle of the high-capacity battery, the performance of the high-capacity battery is affected by the occurrence of impurities in the electrolyte, so that the electrolyte in the inner cavity of the housing 1 and the inner cavity of each battery cell 2 may also be replaced by the liquid injection and replacement member, so as to improve the performance of the high-capacity battery. The replacement herein may be partial replacement and may also be complete replacement. In addition, after the electrolyte region of the inner cavity of each battery cell 2 is in communication with the electrolyte sharing chamber 4, electrolyte may be injected into the inner cavity of each battery cell 2 and the electrolyte sharing chamber 4 again by the liquid injection and replacement member, so as to ensure the continuity of the electrolyte.

Liquid injection and replacement processes of the high-capacity battery in the present embodiment are described below:
when liquid injection is required, the operation may be performed by the following steps:
removing the sealing coating 1222 by using a varnish remover, and taking out the first sealing plug 1221;
inserting an electrolyte injection pipe into the seventh channel 1212, injecting electrolyte, and after liquid injection is completed, pulling out the electrolyte injection pipe; and
plugging the first sealing plug 1221 into the seventh channel 1212, and coating the sealing coating 1222 on the outer end surface of the first sealing plug 1221 and the seam between the first sealing plug 1221 and the inner wall of the seventh channel 1212.

When liquid replacement is required, the operation may be performed by the following steps:
removing the sealing coating 1222 by using the varnish remover, and taking out the first sealing plug 1221;
communicating an electrolyte extraction pipe with the seventh channel 1212, and extracting electrolyte; then, communicating the electrolyte injection pipe with the seventh channel 1212, and injecting new electrolyte; and after liquid injection is completed, pulling out the electrolyte injection pipe; and
plugging the first sealing plug 1221 into the seventh channel 1212, and coating the sealing coating 1222 on the outer end surface of the first sealing plug 1221 and the seam between the first sealing plug 1221 and the inner wall of the seventh channel 1212.

It should be noted that in the present embodiment, during liquid injection, if the pressure in the inner cavity of the housing 1 is too large, the problem of difficulty in liquid injection may occur.

### Embodiment 39

As shown in Fig. 109, different from Embodiment 38, the blocking member in the present embodiment includes two groups of sealing units 122, and the two groups of sealing units 122 are sequentially stacked in the seventh channel 1212 in the axial direction of the seventh channel 1212.

As shown in Fig. 110, the sealing units 122 in the present embodiment are the same as the sealing units 122 in Embodiment 38, and each sealing unit includes a first sealing plug 1221 and a sealing coating 1222, which are stacked in the axial direction of the seventh channel 1212; and the first sealing plug 1221 is located on the side close to the inner cavity of the housing 1 for preliminarily sealing the seventh channel 1212, and the sealing coating 1222 is located on the side away from the inner cavity of the housing 1 for secondarily sealing the seventh channel 1212.

In the present embodiment, quartic sealing is performed on the seventh channel 1212 on the basis of the two groups of sealing units 122. In some other embodiments, the blocking member may further include three or more groups of sealing units 122 for performing quartic or more sealing on the seventh channel 1212. In the present embodiment, the number of the sealing units 122 is increased in the seventh channel 1212, therefore compared with Embodiment 38, in the charging and discharging cycle process of the lithium-ion battery, the sealing reliability at the location of the seventh channel is higher.

The high-capacity battery in the present embodiment differs from the high-capacity battery in Embodiment 38 in that the above liquid injection and replacement member is used in the present embodiment, and the remaining structures are the same as those in Embodiment 38, therefore details are not described herein again.

The liquid injection and replacement processes of the high-capacity battery are similar to those in Embodiment 38, except that, before liquid injection and replacement are performed, the two groups of sealing units 122 need to be taken out, and after the liquid injection and replacement are completed, the seventh channel 1212 is sealed by using the two groups of sealing units 122.

### Embodiment 40

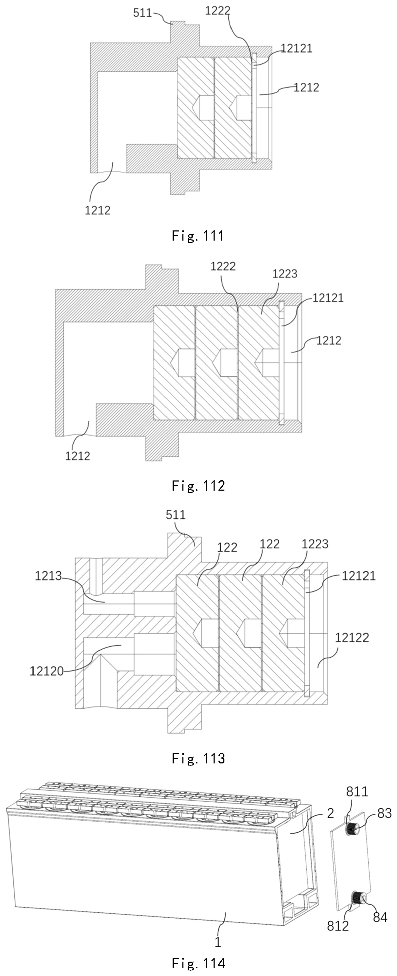

As shown in Fig. 111, it is a section view of a liquid injection and replacement member in the present embodiment. Different from Embodiment 39, in the present embodiment, a limiting structure is disposed in the seventh channel 1212 for limiting the blocking member in the seventh channel 1212 in the axial direction of the seventh channel 1212, so as to prevent the blocking member from falling off from the seventh channel 1212 under the action of the pressure in the inner cavity of the housing 1.

In the present embodiment, an annular clamping groove is formed on the inner wall of the seventh channel 1212 in the circumferential direction thereof, and a limiting retainer ring 12121 is mounted in the annular clamping groove; and the limiting retainer ring 12121 abuts against the sealing coating 1222 in the outermost sealing unit 122 in the seventh channel 1212, wherein the outermost sealing unit 122 in the seventh channel 1212 is the sealing unit 122 farthest from the inner cavity of the housing 1 in the axial direction of the seventh channel 1212, that is, the sealing unit 122 located on the rightmost side in Fig. 111. When the pressure in the inner cavity of the housing 1 is relatively large, the blocking member does not fall off from the seventh channel 1212 under the blocking of the limiting retainer ring 12121.

In the present embodiment, a clamp spring may be used as the limiting retainer ring 12121, sealing varnish may be used as the sealing coating 1222, since the thickness of the coating is relatively small, when the limiting retainer ring 12121 directly abuts against the sealing coating 1222, the integrity of the sealing coating 1222 may be destroyed, and thus affecting the sealing effect of the sealing coating 1222.

In order to solve the problem, as shown in Fig. 112, a second sealing plug 1223 is additionally disposed on the outer side of the outermost sealing unit 122 in the seventh channel 1212, so that the limiting retainer ring 12121 abuts against the second sealing plug 1223. The second sealing plug 1223 may not only achieve the effect of sealing the seventh channel 1212 again, but also prevent the influence of the limiting retainer ring 12121 on the sealing coating 1222.

The high-capacity battery in the present embodiment differs from the high-capacity battery in Embodiment 39 in that the above liquid injection and replacement member is used in the present embodiment, and the remaining structures are the same as those in Embodiment 39, therefore details are not described herein again.

The liquid injection and replacement processes of the high-capacity battery are similar to those in Embodiment 38, except that, before liquid injection and replacement are performed, the limiting retainer ring 12121, the second sealing plug 1223 and the two groups of sealing units 122 need to be sequentially taken out, after the liquid injection and replacement are completed, the seventh channel 1212 is sealed by using the two groups of sealing units 122 and the second sealing plug 1223, and the limiting retainer ring 12121 is mounted to limit the entire blocking member.

### Embodiment 41

As shown in Fig. 113, it is a section view of a liquid injection and replacement member in the present embodiment. Different from the above embodiments, in the present embodiment, on the basis of the above embodiments, an eighth channel 1213 penetrating through the gas region of the inner cavity of the housing 1 is formed on the liquid injection and replacement member main body 121, the blocking member in the above embodiments is further configured for blocking the eighth channel 1213, the gas region in the inner cavity of the housing 1 is in communication with the external environment by the eighth channel 1213, so as to change the internal pressure of the battery, so that the flow of the electrolyte during liquid injection and replacement is smooth, and the electrolyte may also fully wet an electrode sheet of each battery cell 2.

Fig. 113 is described by taking the liquid injection and replacement member in Embodiment 40 as an example.

In the present embodiment, another through hole is formed on the liquid injection and replacement member main body 121 in the axial direction of the liquid injection and replacement member main body 121 to serve as the eighth channel 1213, and the eighth channel 1213 may be a straight through hole and may also be an L-shaped through hole (as shown in Fig. 113). The eighth channel 1213 is in communication with the gas region of the inner cavity of the housing 1, and by means of the eighth channel 1213, a protective gas may be injected into the inner cavity of the housing 1 or the gas in the inner cavity of the housing 1 may be discharged.

As can be seen from Fig. 113, in order to simultaneously block the seventh channel 1212 and the eighth channel 1213 by using the blocking member in Embodiment 40, the seventh channel 1212 is designed to be a stepped through hole formed in the axial direction of the liquid injection and replacement member main body 121 in the present embodiment. The eighth channel 1213 is isolated from a small hole 12120 of the stepped through hole and penetrates through a large hole 12122 of the stepped through hole; and the blocking member is disposed in the large hole 12122 of the stepped through hole to simultaneously block the seventh channel 1212 and the eighth channel 1213.

In order to facilitate the disassembly of the blocking member, the large hole of the stepped through hole is a tapered hole, and a small end of the tapered hole is close to the small hole of the stepped through hole. Correspondingly, the blocking member uses a tapered column structure adapted to the tapered hole.

The high-capacity battery in the present embodiment differs from the high-capacity battery in Embodiment 40 in that the above liquid injection and replacement member is used in the present embodiment, and the remaining structures are the same as those in Embodiment 40, therefore details are not described herein again.

Liquid injection and replacement processes of the high-capacity battery in the present embodiment are described below:
when liquid injection is required, the operation may be performed by the following steps:
disassembling the blocking member:
disassembling the limiting retainer ring, pulling out the second sealing plug 1223, sequentially disassembling the right sealing unit and the left sealing unit, removing the sealing coating 1222 in each sealing unit by using the varnish remover, and pulling out the first sealing plug 1221 by using a corresponding tool;
liquid injection:
   when there is a gas in the inner cavity of the housing 1, the gas overflows from the eighth channel 1213 in sequence, so that it is easy to inject electrolyte into the inner cavity of the housing 1; and in order to ensure more smooth liquid injection, in this step, the gas extraction pipe may be inserted into the eighth channel 1213, the external gas extraction apparatus connected with the gas extraction pipe is started to perform gas extraction, so that a certain negative pressure is formed in the inner cavity of the housing 1;
   then, inserting the electrolyte injection pipe into the seventh channel 1212, and injecting electrolyte, wherein during liquid injection, if the problem of difficulty in liquid injection occurs, the external gas extraction apparatus may be started, so that a certain negative pressure is formed in the inner cavity of the housing 1, and liquid injection is then performed;
   after liquid injection is completed, pulling out the electrolyte injection pipe and the gas extraction pipe; and
   blocking the seventh channel and the eighth channel by using the blocking member:
      first performing preceding twice sealing on the seventh channel and the eighth channel by using the left sealing unit, which specifically includes: plugging the first sealing plug 1221 into the seventh channel 1212, and coating the sealing coating 1222 on the outer end surface of the first sealing plug 1221 and the seam between the first sealing plug 1221 and the inner wall of the seventh channel 1212; then, performing subsequent twice sealing on the seventh channel and the eighth channel by using the right sealing unit, which specifically includes: plugging the first sealing plug 1221 on the right side into the seventh channel 1212 and abutting against the sealing coating 1222 of the left sealing unit, and coating the sealing coating 1222 on the outer end surface of the first sealing plug 1221 and the seam between the first sealing plug 1221 and the inner wall of the seventh channel 1212; and finally, plugging the second sealing plug into the seventh channel 1212, and mounting the limiting retainer ring 12121 in the annular clamping groove to jack the second sealing plug 1223.

When liquid replacement is required, the operation may be performed by the following steps:
disassembling the blocking member:
   disassembling the limiting retainer ring, pulling out the second sealing plug 1223, sequentially disassembling the right sealing unit and the left sealing unit, removing the sealing coating 1222 in each sealing unit by using the varnish remover, and pulling out the first sealing plug 1221 by using the corresponding tool;
liquid replacement:
   inserting the electrolyte extraction pipe into the seventh channel 1212, and extracting electrolyte; when the electrolyte cannot be extracted, inserting the gas injection pipe into the eighth channel 1213 to inject a protective gas into the inner cavity of the housing 1, so as to perform liquid extraction; after liquid extraction is completed, taking out the electrolyte extraction pipe and the gas injection pipe, inserting the electrolyte injection pipe into the seventh channel 1212, and injecting new electrolyte; and after liquid injection is completed, pulling out the electrolyte injection pipe; and
blocking the seventh channel and the eighth channel by using the blocking member:
   first performing preceding twice sealing on the seventh channel and the eighth channel by using the left sealing unit, which specifically includes: plugging the first sealing plug 1221 into the seventh channel 1212, and coating the sealing coating 1222 on the outer end surface of the first sealing plug 1221 and the seam between the first sealing plug 1221 and the inner wall of the seventh channel 1212; then, performing subsequent twice sealing on the seventh channel and the eighth channel by using the right sealing unit, which specifically includes: plugging the first sealing plug 1221 on the right side into the seventh channel 1212 and abutting against the sealing coating 1222 of the left sealing unit, and coating the sealing coating 1222 on the outer end surface of the first sealing plug 1221 and the seam between the first sealing plug 1221 and the inner wall of the seventh channel 1212; and finally, plugging the second sealing plug into the seventh channel 1212, and mounting the limiting retainer ring 12121 in the annular clamping groove to jack the second sealing plug 1223.

In the present embodiment, the eighth channel 1213 is additionally provided, therefore compared with the above embodiments, it is easier to perform the liquid injection or the liquid replacement operation.

An existing high-capacity battery includes a plurality of sequentially arranged battery cells, the electrolyte region and the gas region of each battery cell are communicated by a sharing chamber, so that the battery cells are in a unified electrolyte sharing system or a unified gas sharing system, thereby reducing the differences between the battery cells to a certain extent, and prolonging the cycle life of the high-capacity battery. The sharing chamber may be specifically formed by a hollow member or a housing, so as to form high-capacity batteries in different structural forms, and the high-capacity batteries in different structural forms are described below.
1. When the sharing chamber is formed by a hollow member, the specific structure of the high-capacity battery is as follows:
   the high-capacity battery includes a battery pack main body and a hollow member; the battery pack main body includes a plurality of sequentially arranged battery cells, the number of the battery cells may be adjusted according to actual capacity requirements, and the battery cells are connected in parallel by electrical connectors; and each battery cell may be a prismatic cell, and such a prismatic cell includes an upper cover plate, a lower cover plate, a cylinder body, an electrode assembly and electrolyte; the upper cover plate, the lower cover plate and the cylinder body form a battery shell, and the upper cover plate is provided with a polarity terminal for leading out the current of the battery cell; the hollow member is of a split structure, which is mainly composed of a hollow box body having an opening at one end, and a cover plate for covering the opening; and
   the number of hollow members is set according to requirements; when one hollow member is provided, the hollow member is fixedly connected with a sidewall of the battery pack main body, the hollow member implements the intercommunication of the electrolyte region and the gas region of each battery cell, the inner cavity at the top of the hollow member is a gas chamber, and the inner cavity at the bottom of the hollow member is an electrolyte sharing chamber, and the specific structure of the hollow member is detailed in the Chinese patent CN117477063A; and when a plurality of hollow members are provided, one of the hollow members is fixedly connected with the upper cover plates of the battery cells, so that the gas regions of the battery cells are in communication with each other, the inner cavity of the hollow member is a gas chamber, and the other hollow member is connected with the lower cover plates of the battery cells, so that the electrolyte regions of the battery cells are in communication with each other, the inner cavity of the hollow member is an electrolyte sharing chamber, and the specific structure of the hollow member is detailed in the Chinese patent CN219892382U.
2. When the sharing chamber is formed by the housing, the specific structure of the high-capacity battery is as follows:
   the high-capacity battery includes a housing 1 and a plurality of battery cells 2; the number of the battery cells may be adjusted according to actual capacity requirements, each battery cell may be a prismatic cell, and such a prismatic cell includes an upper cover plate, a lower cover plate, a cylinder body, an electrode assembly and electrolyte; and the upper cover plate, the lower cover plate and the cylinder body form a battery shell, and the upper cover plate is provided with a polarity terminal for leading out the current of the battery cell; and
   the plurality of battery cells are placed side by side in the housing, and the top and the bottom of the housing are respectively provided with sharing chambers, wherein the sharing chamber at the top is a gas chamber, and the sharing chamber at the bottom is an electrolyte sharing chamber, so that the gas regions and electrolyte regions of the battery cells are in communication with each other; an avoidance hole is formed at a location on the top of the housing corresponding to the polarity terminal of each battery cell; and the polarity terminals of the battery cells pass through the avoidance hole to realize the parallel connection of the battery cells. The specific structure of the housing of the high-capacity battery is as follows:
      1) the housing includes a first cylinder body, an upper sealing cover and a lower sealing cover; both the top and the bottom of the first cylinder body are open, the upper sealing cover is sealed and fixed (welded) at the top of the first cylinder body, an avoidance hole capable of enabling the polarity terminal of each battery cell to extend out is formed on the upper sealing cover, the lower sealing cover is sealed and fixed (welded) at the bottom of the first cylinder body, meanwhile, the upper sealing cover is provided with a gas chamber, and the lower sealing cover is provided with an electrolyte sharing chamber;
      2) the housing includes a U-shaped shell, a first cover plate, a third cover plate and a second cover plate; the first cover plate and the third cover plate respectively cover two opposite open ends of the U-shaped shell; the second cover plate covers the open end at the top of the U-shaped shell and is hermetically connected with the open end, an avoidance hole capable of enabling the polarity terminal of each battery cell to extend out is formed on the second cover plate, meanwhile, the second cover plate is provided with a gas chamber, and the bottom of the U-shaped shell is provided with an electrolyte sharing chamber; and
      3) the housing includes a first cylinder body, a front end plate and a rear end plate; both the front and the rear of the first cylinder body are open, the front end plate is sealed and fixed (welded) on the front of the first cylinder body, and the rear end plate is sealed and fixed (welded) on the rear of the first cylinder body, an avoidance hole capable of enabling the polarity terminal of each battery cell to extend out is formed on the top of the first cylinder body, the top of the first cylinder body is provided with a gas chamber, and the bottom of the first cylinder body is provided with an electrolyte sharing chamber.

Regardless of the high-capacity battery in which structure form as described above, after a period of time of the charging and discharging cycle of the high-capacity battery, the electrolyte is reduced by decomposition and consumption, so that the electrolyte in the high-capacity battery cannot meet the requirements, resulting in a reduction in the performance; or after a period of time of the charging and discharging cycle of the high-capacity battery, the performance of the lithium-ion battery is affected by the occurrence of impurities in the electrolyte, resulting in reduced performance and a shortened cycle life of the high-capacity battery, and at this time, a liquid injection or liquid replacement operation may be performed on the high-capacity battery to improve the performance of the high-capacity battery.

On this basis, Embodiment 42 provides a high-capacity battery, a gas chamber and an electrolyte sharing chamber of the high-capacity battery are provided with a first opening and a second opening, the first opening is provided with a first one-way valve, the second opening is provided with a second one-way valve, and the first one-way valve and the second one-way valve may only be opened from outside to inside, and may only be opened by an external acting force, or opened by a gas or liquid having a certain pressure. When the high-capacity battery works normally, the first one-way valve and the second one-way valve may reliably seal the first opening and the second opening. When liquid replenishment and replacement are performed on the high-capacity battery, corresponding liquid replenishment and replacement operations may be performed just by connecting the first one-way valve and the second one-way valve with a liquid replenishment and replacement apparatus, so that the operation is simple.

The structure and the liquid replenishment and replacement processes of the high-capacity battery are described below on the basis that the gas chamber and the electrolyte sharing chamber are formed by a housing, and the housing includes a first cylinder body, a front end plate and a rear end plate.

As shown in Fig. 114, the high-capacity battery in the present Embodiment 42 includes a housing 1 and a plurality of battery cells 2, the plurality of battery cells 2 are placed side by side in the housing 1, an avoidance hole is formed on the top of the housing 1 at a location corresponding to a polarity terminal of each battery cell 2, and after the polarity terminals of the battery cells 2 pass through the avoidance hole, the parallel connection of the battery cells 2 is realized. The top and the bottom of the housing 1 are respectively provided with sharing chambers, the sharing chamber at the top is a gas chamber, the sharing chamber at the bottom is an electrolyte sharing chamber, and the gas chamber and the electrolyte sharing chamber implement the intercommunication of the gas region and the electrolyte region of each battery cell 2.

The gas chamber is provided with a first opening 811 in communication therewith, and the electrolyte sharing chamber is provided with a second opening 812 in communication therewith; during specific settings, the first opening 811 is in communication with the gas chamber, and is generally configured for gas intake or exhaust, the second opening 812 is in communication with the electrolyte sharing chamber and is configured for liquid feed or drainage, at this time, the first opening 811 may be disposed on an upper portion of the housing 1, and the second opening 812 may be disposed on a lower portion of the housing 1. At the same time, the first opening 811 is provided with a first one-way valve 83, and the second opening 812 is provided with a second one-way valve 84, and the first one-way valve 83 and the second one-way valve 84 reliably seal the first opening 811 and the second opening 812 when the high-capacity battery works normally, so as to meet the sealing reliability of the high-capacity battery during long-term use.

The first one-way valve 83 and the second one-way valve 84 have the same structure, and may only be opened by an external gas or liquid having a certain pressure (the pressure of the gas or the liquid is greater than the pressure of a gas or liquid in the inner cavity of the high-capacity battery) or an external acting force, so that the first opening 811 and the second opening 812 may be reliably sealed when the high-capacity battery works normally. When liquid replenishment or liquid replacement is performed on the high-capacity battery, the liquid replenishment and replacement apparatus is respectively connected with the first one-way valve 83 and the second one-way valve 84 to complete corresponding liquid replenishment and replacement operations, so that the operation is simple.

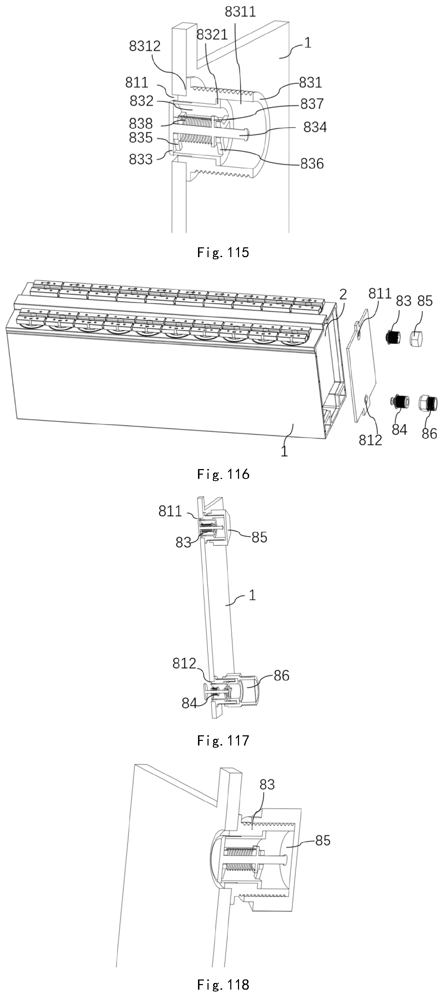

In the present Embodiment 42, the structures of the first one-way valve 83 and the second one-way valve 84 are as follows:
as shown in Fig. 115, the first one-way valve 83 includes a fixing sleeve 831, a sealing sleeve 832 and a sealing assembly; the fixing sleeve 831 is fixedly mounted on the first opening 811 and is hermetically connected with the first opening 811; the sealing sleeve 832 is mounted in the fixing sleeve 831, and the sealing sleeve 832 cooperates with the sealing assembly to seal the first opening 811; and when the sealing sleeve 832 is connected with the sealing assembly, one end of the inner cavity of the sealing sleeve 832 is provided with a spring limiting plate 835, the other end thereof is provided with a positioning plate 836, and both the spring limiting plate 835 and the positioning plate 836 are of hollowed-out plate structures.

The sealing assembly includes a third sealing plate 833, a sealing column 834 and a compression spring 838, the sealing column 834 is disposed in the sealing sleeve 832, the two ends of the sealing column 834 respectively pass through the spring limiting plate 835 and the positioning plate 836, the sealing column 834 is provided with a spring baffle 837, the compression spring 838 is sleeved on the sealing column 834 and is located between the spring limiting plate 835 and the spring baffle 837, the third sealing plate 833 is sleeved on the end of the sealing column 834 that passes through the spring limiting plate 835, and the third sealing plate 833 may seal a port of the sealing sleeve 832 under the action of the compression spring 838; and the end of the sealing column 834 that passes through the positioning plate 836 extends to the outside of the sealing sleeve 832, the sealing column 834 overcomes an acting force of the compression spring 838 under the action of an external force, so as to drive the third sealing plate 833 to move toward the inner cavity of the high-capacity battery, so that the third sealing plate 833 is away from the sealing sleeve 832, at this time, the inner cavity of the high-capacity battery is in communication with the outside, and the first one-way valve 83 is opened.

It should be noted that the size of the spring baffle 837 is required to be less than the size of the inner cavity of the sealing sleeve 832, or the spring baffle 837 is a hollowed-out plate, meanwhile, both the spring limiting plate 835 and the positioning plate 836 are hollowed-out plates, and when the third sealing plate 833 is away from the sealing sleeve 832, the gas or liquid may pass through the first one-way valve 83.

As shown in Fig. 115, in the present Embodiment 42, an inner wall of the fixing sleeve 831 is provided with a first stepped hole 8311, an outer wall of the sealing sleeve 832 is provided with an annular boss 8321, and the annular boss 8321 of the sealing sleeve 832 cooperates with a step surface of the first stepped hole 8311 for positioning. In this structure, when the pressure of the external gas or liquid is too large, a reliable connection between the sealing sleeve 832 and the fixing sleeve 831 may be ensured, thereby preventing the sealing sleeve 832 from being pushed away from the fixing sleeve 831 when the pressure of the external gas or liquid is too large.

As shown in Fig. 115, in the present Embodiment 42, an end surface of a connection end of the fixing sleeve 831 with the high-capacity battery is provided with an annular sealing notch 8312, the annular sealing notch 8312 of the fixing sleeve 831 is connected with the first opening 811 on the high-capacity battery in an embedded cooperation manner, at this time, a transverse plane of the annular sealing notch 8312 and the first opening 811 on the high-capacity battery form a sealing surface, and a vertical plane of the annular sealing notch 8312 and the first opening 811 on the high-capacity battery form a sealing surface, thereby realizing double sealing sleeves between the fixing sleeve 831 and the first opening 811 of the high-capacity battery, and thus improving the reliability of the joint of the first one-way valve 83 and the high-capacity battery.

The first one-way valve 83 is mainly configured for gas intake and exhaust during liquid replenishment, and the working principles thereof are as follows:
as shown in Fig. 115, when the high-capacity battery works normally, under the acting force of the compression spring 838, the spring baffle 837 is jacked by an acting force of the spring toward the outside of the high-capacity battery, at this time, the sealing column 834 drives the third sealing plate 833 to simultaneously move toward the outside of the high-capacity battery, and the third sealing plate 833 blocks the port of the sealing sleeve 832, so that the first one-way valve 83 is closed to realize sealing.

When it is necessary to perform liquid drainage on the high-capacity battery, the first one-way valve 83 needs to perform a corresponding gas intake operation, at this time, when the external gas having a certain pressure (the pressure of the gas is greater than the pressure of the gas in the inner cavity of the high-capacity battery) passes through the sealing sleeve 832, the gas acts on the third sealing plate 833 (the compression spring is compressed), the third sealing plate 833 moves toward the inner cavity of the high-capacity battery, so that the third sealing plate 833 is away from the sealing sleeve 832, and the first one-way valve 83 is opened to perform the corresponding gas intake operation.

When it is necessary to perform liquid injection on the high-capacity battery, the first one-way valve 83 needs to perform a corresponding exhaust operation, at this time, the first one-way valve 83 is opened under an external acting force, the external acting force acts on the sealing column 834, and the sealing column 834 overcomes the acting force of the compression spring 838 to drive the third sealing plate 833 to move toward the inner cavity of the high-capacity battery, so that the third sealing plate 833 is away from the sealing sleeve 832, and the first one-way valve 83 is opened to perform the corresponding exhaust operation.

The second one-way valve 84 is mainly configured for liquid feed and liquid drainage during liquid replenishment and replacement, and the working principles thereof are as follows:
as shown in Fig. 115, in the present Embodiment 42, the structure of the second one-way valve 84 is the same as that of the first one-way valve 83, and when the high-capacity battery works normally, the second one-way valve 84 seals the second opening 812.

When it is necessary to perform liquid drainage on the high-capacity battery, the second one-way valve 84 is opened by an external acting force, the external acting force acts on the sealing column 834, and the sealing column 834 overcomes the acting force of the compression spring 838 to drive the third sealing plate 833 to move toward the inner cavity of the high-capacity battery, so that the third sealing plate 833 is away from the sealing sleeve 832, at this time, the inner cavity of the high-capacity battery is in communication with the outside, and the second one-way valve 84 is opened to perform a corresponding liquid drainage operation.

When it is necessary to perform liquid injection on the high-capacity battery, when the external liquid having a certain pressure (the pressure of the liquid is greater than the pressure of the liquid in the inner cavity of the high-capacity battery) passes through the sealing sleeve 832, the liquid acts on the third sealing plate 833 (the compression spring is compressed), the third sealing plate 833 moves toward the inner cavity of the high-capacity battery, so that the third sealing plate 833 is away from the sealing sleeve 832, at this time, the inner cavity of the high-capacity battery is in communication with the outside, and the second one-way valve 84 is opened to perform a corresponding liquid replenishment operation.

After liquid replenishment and replacement are completed, the first one-way valve 83 and the second one-way valve 84 are directly disassembled and separated from the liquid replenishment and replacement apparatus, at this time, under the acting force of the compression spring 838, the spring baffle 837 is jacked by the acting force of the spring toward the outside of the high-capacity battery, at this time, the sealing column 834 drives the third sealing plate 833 to simultaneously move toward the outside of the high-capacity battery, so that the third sealing plate 833 blocks the port of the sealing sleeve 832, and the first one-way valve 83 and the second one-way valve 84 may automatically seal the first opening 811 and the second opening 812.

As shown in Fig. 116 and Fig. 117, when the high-capacity battery works normally, in order to ensure the sealing performance of the first opening 811 and the second opening 812, blocking caps 85 may further be mounted on the first one-way valve 83 and the second one-way valve 84, at this time, the first one-way valve 83 implements preliminary sealing of the first opening 811, and the blocking cap 85 implements secondary sealing of the first opening 811; and the second one-way valve 84 implements preliminary sealing of the second opening 812, and the blocking cap 85 implements secondary sealing of the second opening 812. When the high-capacity battery works normally, the blocking caps 85, the first one-way valve 83 and the second one-way valve 84 implement reliable sealing of the first opening 811, the second opening 812. When the high-capacity battery requires liquid replenishment and replacement, the blocking caps 85 are disassembled from the first one-way valve 83 and the second one-way valve 84 by an external force, and the first one-way valve 83 and the second one-way valve 84 are connected with connecting pipelines of the liquid replenishment and replacement apparatus 89 to perform corresponding liquid replenishment and replacement operations.

As shown in Fig. 118, the specific structure and connection of the blocking cap 85 are described below by taking the blocking cap 85 and the first one-way valve 83 as an example. In the present Embodiment 42, the blocking cap 85 is a circular sealing cover having an open end, during specific connection, the circular sealing cover may be connected with the first one-way valve 83 in an interference fit manner, and a sealant is coated at a cooperation location, or external threads are disposed on the first one-way valve 83, an inner wall of the circular sealing cover is provided with internal threads, and the first one-way valve 83 is in threaded connection with the blocking cap 85 to improve the sealing performance thereof. Preferably, the threads are conical pipe threads, and the conical pipe threads have more reliable sealing performance than conventional threads; and meanwhile, the threaded connection location is provided with a thread sealant, and the thread sealant has better sealing performance reliability than Teflon tapes and gaskets, so that the sealing reliability at the joint of the first one-way valve 83 and the blocking cap 85 may be improved.

As shown in Fig. 116 and Fig. 117, no blocking cap is mounted on the second one-way valve 84, at this time, a pressure relief valve 86 is mounted on the second one-way valve 84, and after the pressure relief valve 86 is connected with the second one-way valve 84, the second one-way valve 84 may be opened, so that a pressure relief channel of the pressure relief valve 86 is in communication with the electrolyte sharing chamber. When the high-capacity battery works normally, the pressure relief valve 86 and the second one-way valve 84 implement good sealing of the second opening 812. When thermal runaway occurs in any battery cell 2 in the high-capacity battery, the pressure relief valve 86 is opened, a thermal runaway flue gas is discharged from the second opening 812 to realize ordered emission of the thermal runaway flue gas, thereby improving the safety of the high-capacity battery. Meanwhile, the pressure relief valve 86 is mounted on the second one-way valve 84, so that the pressure relief valve 86 and the second one-way valve 84 are integrally mounted, thereby reducing the number of openings on the high-capacity battery, and improving the reliability of the high-capacity battery in use.

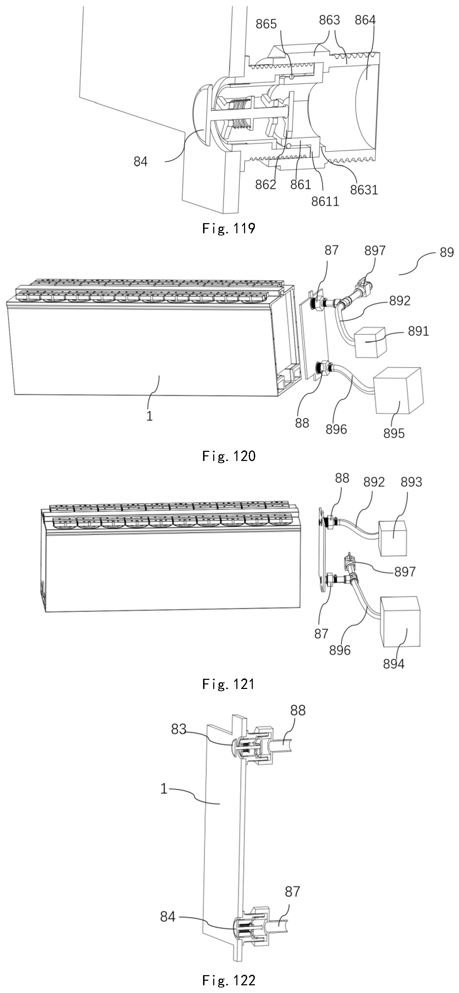

As shown in Fig. 119, the pressure relief valve 86 in the present Embodiment 42 includes an opening assembly and a pressure relief assembly; the pressure relief assembly includes an outer pipe section 863 and a pressure relief film 864 disposed in the outer pipe section 863; and the two ends of the outer pipe section 863 are respectively connected with the second one-way valve 84 and a flue gas pipeline; and the pressure relief film 864 seals the second opening 812 when the high-capacity battery works normally, and is broken through by a high-pressure thermal runaway flue gas when thermal runaway occurs in any battery cell 2 in the high-capacity battery, so as to discharge the thermal runaway flue gas. The opening assembly includes an inner pipe section 861 and a jacking and pressing plate 862 disposed in the inner pipe section 861, the jacking and pressing plate 862 is a hollowed-out plate, which is fixed in the inner pipe section 861 and is configured for opening the second one-way valve 84 when the pressure relief valve 86 is connected with the second one-way valve 84; and the inner pipe section 861 is nested into the outer pipe section 863, and is located at the end of the outer pipe section 863 that is close to the second one-way valve 84, and when the outer pipe section 863 is connected with the second one-way valve 84, the inner pipe section 861 moves toward the second one-way valve 84, thereby driving the jacking and pressing plate 862 to move to open the second one-way valve 84.

As shown in Fig. 119, in the present Embodiment 42, an inner wall of the outer pipe section 863 is provided with an annular clamping platform 8631, an outer wall of the inner pipe section 861 is provided with an annular step 8611, and the annular clamping platform 8631 of the outer pipe section 863 performs axial positioning on the annular step 8611 of the inner pipe section 861, so that the outer pipe section 863 drives the inner pipe section 861 to move axially. In this way, the outer pipe section 863 and the inner pipe section 861 may be separately processed and assembled, therefore the overall processing and manufacturing are simpler, and the cost is lower.

When the pressure relief valve 86 is specifically connected with the second one-way valve 84, the outer pipe section 863 may be connected with the second one-way valve 84 in the interference fit manner, or external threads are disposed on the second one-way valve 84, the inner wall of the outer pipe section 863 is provided with internal threads, and the second one-way valve 84 is in threaded connection with the pressure relief valve 86, thereby improving the sealing performance thereof. Preferably, the threads are conical pipe threads, and the conical pipe threads have more reliable sealing performance than conventional threads; and meanwhile, the threaded connection portion is provided with a thread sealant, and the thread sealant has better sealing performance reliability than Teflon tapes and gaskets, so that the sealing reliability at the joint of the second one-way valve 84 and the pressure relief valve 86 may be improved. Meanwhile, when the outer pipe section 863 is connected with the flue gas pipeline, the connection may also be an interference fit connection or a threaded connection, at this time, the end of the outer pipe section 863 that is away from the second one-way valve 84 is provided with external threads, and the flue gas pipeline is provided with internal threads. At this time, the inner pipe section 861 is located at the end of the outer pipe section 863 that is provided with internal threads, and the pressure relief film 864 is disposed at the end of the outer pipe section 863 that is provided with external threads.

As shown in Fig. 119, when the pressure relief valve 86 is connected with the second one-way valve 84, the jacking and pressing plate 862 is in contact with the sealing column 834 of the second one-way valve 84, during the process of connecting the pressure relief valve 86 with the second one-way valve 84, the jacking and pressing plate 862 jacks the sealing column 834 of the second one-way valve 84 toward the high-capacity battery, so that the second one-way valve 84 is opened, and at this time, the inner cavity of the inner pipe section 861 is in communication with the inner cavity of the high-capacity battery.

In addition, in order to further ensure the sealing performance between the pressure relief valve 86 and the second one-way valve 84, a sealing ring groove may further be disposed on the outer wall of the inner pipe section 861, a second sealing ring 884 is mounted in the sealing ring groove, the second sealing ring 884 implements preliminary sealing of the inner pipe section 861 and the second one-way valve 84, and meanwhile, thread sealing between the outer pipe section 863 and the second one-way valve 84 implements secondary sealing.

As shown in Figs. 120-123, after the high-capacity battery works for a period of time, it is necessary to perform a liquid replenishment or a liquid replacement operation thereon, when the liquid replenishment and liquid replacement are performed on the high-capacity battery, the high-capacity battery needs to be connected with an external liquid replenishment and replacement apparatus 89, at this time, the blocking cap 85 and the pressure relief valve 86 need to be disassembled, and the first one-way valve 83 and the second one-way valve 84 are respectively connected with the liquid replenishment and replacement apparatus 89. In order to conveniently connect the high-capacity battery with the liquid replenishment and replacement apparatus 89, the first one-way valve 83 and the second one-way valve 84 are further provided with a first connecting pipe 87 and a second connecting pipe 88, the first connecting pipe 87 and the second connecting pipe 88 are respectively mounted on the first one-way valve 83 and the second one-way valve 84 to connect the high-capacity battery with the liquid replenishment and replacement apparatus 89, so as to perform corresponding liquid drainage, liquid injection, liquid replacement, etc.

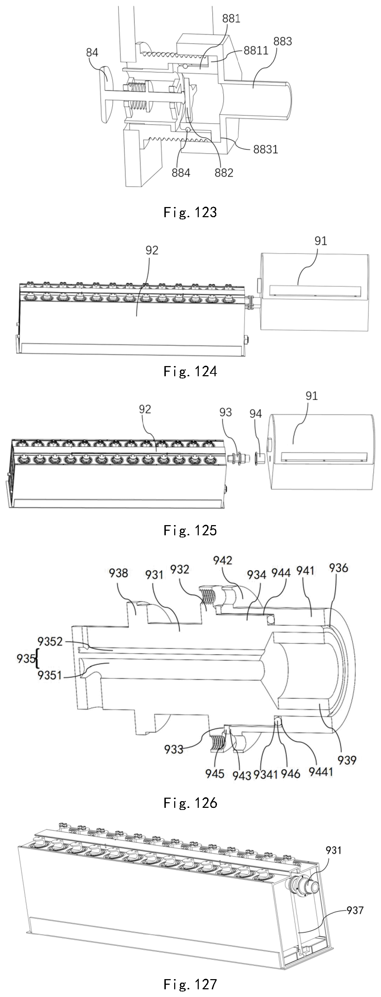

In the present Embodiment 42, the structures of the first connecting pipe 87 and the second connecting pipe 88 are as follows:
as shown in Fig. 122 and Fig. 123, the second connecting pipe 88 includes a jacking and pressing assembly, and a connecting assembly; the jacking and pressing assembly includes a second pipe section 881 and a jacking and pushing plate 882 disposed in the second pipe section 881, and the jacking and pushing plate 882 is a hollowed-out plate, which is fixed in the second pipe section 881 and is configured for opening the second one-way valve 84 when the second connecting pipe 88 is connected with the second one-way valve 84; and the connecting assembly includes a first pipe section 883, the second pipe section 881 is nested into the first pipe section 883 and is located at the end of the first pipe section 883 that is close to the second one-way valve 84, and the two ends of the first pipe section 883 are respectively connected with the second one-way valve 84 and a pipeline of the liquid replenishment and replacement apparatus 89.

When the second connecting pipe 88 is specifically connected with the second one-way valve 84, the first pipe section 883 may be connected with the second one-way valve 84 in the interference fit manner, and a sealant is coated at the cooperation location, or external threads are disposed on the second one-way valve 84, an inner wall of the first pipe section 883 is provided with internal threads, and the second one-way valve 84 is in threaded connection with the second connecting pipe 88. Preferably, the threads are conical pipe threads, and the conical pipe threads have more reliable sealing performance than conventional threads; and meanwhile, the threaded connection portion is provided with a thread sealant, and the thread sealant has better sealing performance reliability than Teflon tapes and gaskets, so that the sealing reliability at the joint of the second one-way valve 84 and the second connecting pipe 88 may be improved.

In addition, in order to further ensure the sealing performance between the second connecting pipe 88 and the second one-way valve 84, a sealing ring groove may further be disposed on an outer wall of the second pipe section 881, a second sealing ring 884 is mounted in the sealing ring groove, the second sealing ring 884 implements preliminary sealing of the second pipe section 881 and the second one-way valve 84, and meanwhile, thread sealing between the first pipe section 883 and the second one-way valve 84 implements secondary sealing.

As shown in Fig. 13, when the second connecting pipe 88 is connected with the second one-way valve 84, the first pipe section 883 moves axially toward the second one-way valve 84, meanwhile, the second pipe section 881 and the first pipe section 883 move synchronously toward the second one-way valve 84, the jacking and pushing plate 882 is in contact with the sealing column 834 of the second one-way valve 84, and during the process of connecting the first pipe section 883 with the second one-way valve 84, the jacking and pushing plate 882 jacks the sealing column 834 of the second one-way valve 84 toward the high-capacity battery, so that the second one-way valve 84 is opened, and at this time, the inner cavity of the second pipe section 881 is in communication with the inner cavity of the high-capacity battery.

Specifically, a second stepped hole is formed in the first pipe section 883, the outer wall of the second pipe section 881 is provided with an annular bump 8811, a step surface of the second stepped hole 8831 performs axially positioning on the annular bump 8811 of the second pipe section 881, so that the first pipe section 883 drives the second pipe section 881 to move axially, so as to open the one-way valve. In this way, the second pipe section 881 and the first pipe section 883 may be separately processed and assembled, therefore the overall processing and manufacturing are simpler, and the cost is lower.

In the present Embodiment 42, the structure of the first connecting pipe 87 is similar to the structure of the second connecting pipe 88, but differs from the second connecting pipe 88 in that the jacking and pressing assembly in the first connecting pipe 87 does not include the jacking and pushing plate 882, and only includes the second pipe section 881, and specific structure thereof is not described in detail again.

By means of the first one-way valve 83 and the second one-way valve 84, an initial liquid injection operation of the high-capacity battery may be completed, and after the high-capacity battery is configured for a period of time, liquid replenishment or liquid replacement is performed thereon by the liquid replenishment and replacement apparatus 89, so as to improve the performance thereof. The liquid replenishment and replacement apparatus 89 may specifically include an inert gas source 891, a gas collection apparatus 893, an electrolyte storage apparatus 894, an electrolyte collection apparatus 895, a gas pipeline 892, a liquid pipeline 896, and a stop valve 897.

Vacuuming step:
before initial liquid injection is performed on the high-capacity battery, the second connecting pipe 88 is mounted on the first one-way valve 83 or the second one-way valve 84, the second connecting pipe 88 actively opens the first one-way valve 83 or the second one-way valve 84, and a vacuumizing apparatus is started to perform a vacuumizing operation on the high-capacity battery.

Initial liquid injection process:
when initial liquid injection is performed on the high-capacity battery, the first connecting pipe 87 is mounted on the second one-way valve 84, the electrolyte storage apparatus is connected with the first connecting pipe 87 by the liquid pipeline, and at this time, the stop valve still needs to be mounted on the liquid pipeline. Prior to the initial liquid injection, the stop valve is opened, the electrolyte storage apparatus is started, the electrolyte storage apparatus fills the liquid pipeline, the first connecting pipe 87 and the second one-way valve 84 with electrolyte, and then, the stop valve is closed. Subsequently, the electrolyte having a certain pressure opens the second one-way valve 84, the electrolyte enters the inner cavity of the high-capacity battery by the second one-way valve 84, and a hydraulic pressure is removed after the liquid injection is completed, so that the second one-way valve is closed to complete the initial liquid injection operation of the high-capacity battery.

Formation and exhaust process:
after the initial liquid injection of the high-capacity battery is completed, formation on the high-capacity battery is started, the second connecting pipe 88 is mounted on the first one-way valve 83, the second connecting pipe 88 opens the first one-way valve 83, and a gas generated in the high-capacity battery during the formation is discharged by the first one-way valve 83, so as to complete formation and exhaust operations.

Liquid replenishment process:
after a period of time of a charging and discharging cycle of the high-capacity battery, the capacity is attenuated, for example, when the capacity is attenuated to be lower than 95%, a liquid replenishment operation is performed on the high-capacity battery regularly or irregularly; and
as shown in Fig. 121, the blocking cap 85 and the pressure relief valve are removed from the high-capacity battery, the second connecting pipe 88 is mounted on the first one-way valve 83, the gas collection apparatus 893 is connected with the second connecting pipe 88 by the gas pipeline 892, the first connecting pipe 87 is mounted on the second one-way valve 84, the electrolyte storage apparatus 894 is connected with the first connecting pipe 87 by the liquid pipeline 896, and at this time, the stop valve 897 still needs to be mounted on the liquid pipeline 896. Prior to liquid replenishment, the stop valve 897 is opened, the electrolyte storage apparatus 894 is started, the electrolyte storage apparatus 894 fills the liquid pipeline 896, the first connecting pipe 87 and the second one-way valve 84 with electrolyte, and then the stop valve 897 is closed. Subsequently, the second one-way valve 84 is opened by the hydraulic pressure of the electrolyte, the electrolyte in the electrolyte storage apparatus 894 enters the high-capacity battery by the second one-way valve 84, meanwhile, the second connecting pipe 88 opens the first one-way valve 83, the gas in the high-capacity battery is discharged into the gas collection apparatus 893 by the first one-way valve 83 under the action of the electrolyte, and after liquid replenishment is completed, the hydraulic and the second connecting pipes 88 are removed, so that the first one-way valve 83 and the second one-way valve 84 are closed, so as to complete the liquid replenishment operation of the high-capacity battery.

Electrolyte is replenished during liquid replenishment, and in actual operations, solvents for improving the performance of the high-capacity battery may also be replenished, for example, an additive, a lithium replenishment agent, etc.

Liquid replacement process:
after a period of time of the charging and discharging cycle of the high-capacity battery, the capacity is attenuated, for example, when the capacity is attenuated to be lower than 90%, a liquid replacement operation is performed on the high-capacity battery regularly or irregularly, and when liquid replacement is performed on the high-capacity battery, a liquid drainage operation is first performed, and then a liquid injection operation is performed.

As shown in Fig. 120, when liquid drainage is performed on the high-capacity battery, the blocking cap 85 and the pressure relief valve 86 are removed from the high-capacity battery, then the first connecting pipe 87 is mounted on the first one-way valve 83, the inert gas source 891 is connected with the first connecting pipe 87 by the gas pipeline 892, the second connecting pipe 88 is mounted on the second one-way valve 84, and the electrolyte collection apparatus 895 is connected with the second connecting pipe 88 by the liquid pipeline 896, and at this time, the stop valve 897 may further be mounted on the gas pipeline 892. Prior to liquid drainage, the stop valve 897 is opened, the inert gas source 891 is started, and an inert gas in the inert gas source 891 purges the gas pipeline 892, the first connecting pipe 87 and the first one-way valve 83, so that the air in the pipeline is discharged by the stop valve 897, and after the purging is completed, the stop valve 897 is closed. Subsequently, the inert gas source 891 performs pressurization gas intake to open the first one-way valve 4 by a gas pressure, the gas enters the inner cavity of the high-capacity battery by the first one-way valve 4, meanwhile, the second connecting pipe 88 opens the second one-way valve 84, the electrolyte in the high-capacity battery is discharged from the second one-way valve 84 into the electrolyte collection apparatus 895 under the action of the high-pressure inert gas, until all the electrolyte in the high-capacity battery is completely drained, and after the liquid drainage is completed, the gas pressure and the second connecting pipe 88 are removed, so that the first one-way valve 83 and the second one-way valve 84 are closed; and
as shown in Fig. 121, when liquid injection is performed on the high-capacity battery, the first connecting pipe 87 and the second connecting pipe 88 are disassembled from the first one-way valve 83 and the second one-way valve 84, the second connecting pipe 88 is then mounted on the first one-way valve 83, the gas collection apparatus 893 is connected with the second connecting pipe 88 by the gas pipeline 892, the first connecting pipe 87 is mounted on the second one-way valve 84, the electrolyte storage apparatus 894 is connected with the first connecting pipe 87 by the liquid pipeline 896, and at this time, the stop valve 897 may further be mounted on the liquid pipeline 896. Prior to liquid injection, the stop valve 897 is opened, the electrolytic solution storage device 894 is started, the electrolyte storage apparatus 894 fills the liquid pipeline 896, the first connecting pipe 87 and the second one-way valve 84 with electrolyte, and then, the stop valve 897 is closed. The second one-way valve 84 is opened by the hydraulic pressure of the electrolyte, the electrolyte in the electrolyte storage apparatus 894 enters the high-capacity battery by the second one-way valve 84, meanwhile, the second connecting pipe 88 is screwed, the second connecting pipe 88 opens the first one-way valve 83, and under the action of the electrolyte, the gas in the high-capacity battery is discharged into the gas collection apparatus 893 by the first one-way valve 83, so as to complete the liquid replacement operation of the high-capacity battery.

### Embodiment 43

In use scenarios of an existing lithium-ion battery, in order to meet greater capacity requirements, the existing method is to connect a plurality of battery cells together in a series-parallel combined manner to form a high-capacity battery. The high-capacity battery includes a plurality of sequentially arranged battery cells, and electrolyte regions and gas regions of the battery cells are in communication with each other by a sharing chamber, so that the battery cells are in a unified electrolyte sharing system or a unified gas sharing system, thereby reducing the differences between the battery cells to a certain extent, and prolonging the cycle life of the high-capacity battery. The sharing chamber may be specifically formed by a hollow member or an outer shell, so as to form high-capacity batteries in different structural forms, and the high-capacity batteries in different structural forms are described below.
1. When the sharing chamber is formed by a hollow member, the specific structure of the high-capacity battery is detailed in the Chinese patent CN117477063A and the Chinese patent CN219892382U; and
2. when the sharing chamber is formed by the outer shell, the specific structure of the high-capacity battery is as follows:
   the high-capacity battery includes an outer shell and a plurality of battery cells; the number of the battery cells may be adjusted according to actual capacity requirements, the plurality of battery cells are placed in the outer shell side by side, and the top and the bottom of the outer shell are respectively provided with sharing chambers, wherein the sharing chamber at the top is a gas sharing chamber, and the sharing chamber at the bottom is an electrolyte sharing chamber, so that the gas regions and the electrolyte regions of the battery cells are in communication with each other. A through hole is formed at the top of the outer shell at a location corresponding to a polarity terminal of each battery cell; and after the polarity terminals of the battery cells pass through the through hole, the battery cells are connected in parallel.

Regardless of the high-capacity battery in which structure form as described above, after a period of time of a charging and discharging cycle of the high-capacity battery, the electrolyte is reduced by decomposition and consumption, so that the electrolyte in the high-capacity battery cannot meet the requirements, resulting in a reduction in the performance, and at this time, a liquid replenishment operation may be performed on the high-capacity battery to improve the performance of the high-capacity battery; or after a period of time of the charging and discharging cycle of the high-capacity battery, impurities occur in the electrolyte, resulting in reduced performance and a shortened cycle life of the high-capacity battery, and at this time, a liquid replacement operation may be performed on the high-capacity battery to improve the performance of the high-capacity battery.

As shown in Fig. 124 and Fig. 125, Embodiment 43 provides a liquid replenishment and replacement apparatus 91, the liquid replenishment and replacement apparatus 91 may automatically open a liquid replenishment and replacement connector on a high-capacity battery 92 after the high-capacity battery 92 works for a period of time, to replenish electrolyte into the high-capacity battery 92, so as to improve the performance of the high-capacity battery 92; or, after a period of time of the charging and discharging cycle of the high-capacity battery 92, the liquid replenishment and replacement apparatus 91 automatically opens the liquid replenishment and replacement connector on the high-capacity battery 92, to replace the electrolyte in the high-capacity battery 92. After the liquid replenishment or the liquid replacement operation is completed, the liquid replenishment and replacement apparatus 91 may automatically block the liquid replenishment and replacement connector, so that the liquid replenishment and replacement operations are simple and convenient, and meanwhile, the liquid replenishment and replacement operations may be performed multiple times.

As shown in Fig. 126, the liquid replenishment and replacement apparatus 91 in Embodiment 43 includes an outer box body 911, and a rotating assembly 912, a jacking and pushing assembly 913, a trepanning assembly 914, a liquid replenishment and replacement assembly 915 and a hole sealing assembly 916, which are disposed in the outer box body 911; the rotating assembly 912 may rotate along a set axis, the trepanning assembly 914, the liquid replenishment and replacement assembly 915 and the hole sealing assembly 916 are all connected to the rotating assembly 912, and may rotate along with the rotating assembly 912; and the jacking and pushing assembly 913 is disposed on the same side of the trepanning assembly 914, the liquid replenishment and replacement assembly 915 and the hole sealing assembly 916, and may provide a linear thrust when the trepanning assembly 914, the liquid replenishment and replacement assembly 915 and the hole sealing assembly 916 perform corresponding trepanning, liquid replenishment and replacement, and hole sealing operations. The outer box body 911 is provided with a liquid replenishment and replacement interface 9113 in butt joint with the high-capacity battery 92, and the trepanning, liquid replenishment and replacement and hole sealing operations are all performed by the liquid replenishment and replacement interface 9113; when the liquid replenishment and replacement operations are performed, the liquid replenishment and replacement interface 9113 on the outer box body 911 is connected with the high-capacity battery 92, and then the trepanning assembly 914, the replacement liquid assembly 915 and the hole sealing assembly 916 are rotated to the liquid replenishment and replacement interface 9113 under the work of the rotating assembly 912, and under the operation of the jacking and pushing assembly 913, the corresponding trepanning, liquid replenishment and replacement and hole sealing operations may be implemented.

According to the liquid replenishment and replacement apparatus 91 in Embodiment 43, the trepanning assembly 914, the liquid replenishment and replacement assembly 915 and the hole sealing assembly 916 are integrated, so that the apparatus has good integration. Therefore, when the liquid replenishment and replacement operations are performed on the high-capacity battery 92, trepanning, liquid replenishment and replacement and hole sealing operations may be implemented just by connecting the high-capacity battery 92 once, so that the operation is simple. The assemblies such as the outer box body 911, the rotating assembly 912, the jacking and pushing assembly 913, the trepanning assembly 914, the liquid replenishment and replacement assembly 915 and the hole sealing assembly 916 may be specifically implemented in a variety of structures, as long as corresponding functions may be met, and the specific structures of the outer box body 911, the rotating assembly 912, the jacking and pushing assembly 913, the trepanning assembly 914, the liquid replenishment and replacement assembly 915 and the hole sealing assembly 916 are exemplarily described below.

Outer box body:
the shape of the outer box body 911 in the present Embodiment 43 is not required in general, and it may be a circular box body and may also be a rectangular box body. In order to meet, as much as possible, the miniaturization design of the liquid replenishment and replacement apparatus 91 in use and requirements for stable support in use, the bottom of the outer box body 911 is of a rectangular structure, and the top thereof is of a semicircular structure, wherein the rectangular structure at the bottom meets the stable support requirements, and the semicircular structure at the top matches the rotating assembly 912 to meet the requirements of miniaturization and esthetics. As shown in Fig. 126, in the present Embodiment 43, the outer box body 911 includes a lower bin body 9111 and an upper cover 9112, the lower bin body 9111 is of a box body structure having a semicircular opening at the top, and in addition, a support plate 9114 is disposed in the lower bin body 9111, so as to stably support the rotating assembly 912, the jacking and pushing assembly 913, the trepanning assembly 914, the liquid replenishment and replacement assembly 915, the hole sealing assembly 916, and the like, and the support plate 9114 is generally disposed parallel to a front end plate and a rear end plate of the lower bin body 9111. The upper cover 9112 is an arc-shaped cover plate, which is disposed at the open end of the lower bin body 9111. The lower bin body 9111 and the upper cover 9112 form a confined space, which is generally filled with an inert gas for providing an environment isolated from the external air when the components therein work.

The lower bin body 9111 is provided with the liquid replenishment and replacement interface 9113 connected with the high-capacity battery 92, and the trepanning assembly 914, the liquid replenishment and replacement assembly 915 the hole sealing assembly 916 execute corresponding operations by the liquid replenishment and replacement interface 9113, for example, trepanning, liquid injection, liquid replacement, hole sealing, etc. When the liquid replenishment and replacement apparatus 91 is connected with the high-capacity battery 92, not only the detachability at the joint is required, but also it is necessary to ensure the sealing performance at the joint.

At this time, as shown in Fig. 125, a first liquid replenishment and replacement connector 93 is disposed on the high-capacity battery 92, a second liquid replenishment and replacement connector 94 is disposed on the liquid replenishment and replacement interface 9113 of the outer box body 911, and a detachable connection and a hermetical connection between the high-capacity battery 92 and the liquid replenishment and replacement apparatus 91 are implemented by the first liquid replenishment and replacement connector 93 and the second liquid replenishment and replacement connector 94. The first liquid replenishment and replacement connector 93 and the second liquid replenishment and replacement connector 94 are connected by flanges, and are sealed by a sealing ring between the flanges.

The structures of the first liquid replenishment and replacement connector 93 and the second liquid replenishment and replacement connector 94 are described in detail below.

As shown in Fig. 125 and Fig. 126, the first liquid replenishment and replacement connector 93 is mounted on the high-capacity battery 92, and includes a connector body 931, the connector body 931 is fixed on the high-capacity battery 92, and a channel 935 penetrating through the inner cavity of the high-capacity battery 92 is formed on the connector body 931; and an outer wall of the connector body 931 is provided with a first connecting flange 932, and the first connecting flange 932 divides the connector body 931 into a connection section and an insertion section.

The second liquid replenishment and replacement connector 94 is mounted on the liquid replenishment and replacement apparatus, and includes a connecting sleeve 941, the connecting sleeve 941 is fixed on the liquid replenishment and replacement interface of the liquid replenishment and replacement apparatus 91, and an end portion of the connecting sleeve 941 is provided with a second connecting flange 942. It should be noted that a radial end surface refers to an end surface perpendicular to the axis of the first connecting flange 932 and the axis of the second connecting flange 942.

As shown in Fig. 126, when the first liquid replenishment and replacement connector 93 and the second liquid replenishment and replacement connector 94 are connected, the insertion section of the first liquid replenishment and replacement connector 93 is inserted into the connecting sleeve 941 of the second liquid replenishment and replacement connector 94, and then is fixed by the first connecting flange 932 and the second connecting flange 942. The insertion section of the first liquid replenishment and replacement connector 93 is inserted into the connecting sleeve 941 of the second liquid replenishment and replacement connector 94, so as to realize a plug-in connection of the first liquid replenishment and replacement connector 93 and the second liquid replenishment and replacement connector 94, and partial pipelines of the connected first liquid replenishment and replacement connector 93 and the second liquid replenishment and replacement connector 94 overlap with each other, so that the length of an intermediate pipeline between the high-capacity battery and the liquid replenishment and replacement apparatus may be effectively reduced, thereby facilitating the trepanning and hole sealing operations on the high-capacity battery by the liquid replenishment and replacement apparatus. Meanwhile, the insertion section of the first liquid replenishment and replacement connector 93 is inserted into the connecting sleeve 941 of the second liquid replenishment and replacement connector 94, so as to implement plug-in positioning and mounting of the first liquid replenishment and replacement connector 93 and the second liquid replenishment and replacement connector 94, therefore the positioning of the first liquid replenishment and replacement connector 93 and the second liquid replenishment and replacement connector 94 is more reliable, and the sealing performance between the first liquid replenishment and replacement connector 93 and the second liquid replenishment and replacement connector 94 is improved. Meanwhile, the first liquid replenishment and replacement connector 93 and the second liquid replenishment and replacement connector 94 are connected by the first connecting flange 932 and the second connecting flange 942, the high-capacity battery 92 and the liquid replenishment and replacement apparatus 91 are not required to rotate relative to each other due to this connection mode, so that the connection is very convenient.

As shown in Fig. 126, the radial end surface of the first connecting flange 932 that is close to the insertion section is provided with a first sealing boss 933, and the radial end surface of the second connecting flange 942 that is away from the connecting sleeve 941 is provided with a second sealing boss 943; and a first sealing ring 945 is disposed between the first sealing boss 933 and the second sealing boss 943, the first sealing ring 945 is extruded after the first connecting flange and the second connecting flange are connected by bolts, therefore not only may the axial sealing at the sealing location be implemented, but radial sealing at the sealing location may also be implemented.

As shown in Fig. 126, in order to further improve the connection sealing performance of the first liquid replenishment and replacement connector 93 and the second liquid replenishment and replacement connector 94, the insertion section of the connector body 931 is further provided with an annular boss 934 connected with the first connecting flange 932, and the radial end surface of the annular boss 934 that is away from the first connecting flange 932 is a first sealing surface 9341; an inner wall of the connecting sleeve 941 is provided with an annular notch 944, and the radial end surface of the annular notch 944 that is away from the second connecting flange 942 is a second sealing surface 9441; a second sealing ring 946 is disposed between the second sealing boss 943 and the second sealing surface 9441; and the first sealing ring 945 and the second sealing ring 946 implement twice sealing of the joint of the first liquid replenishment and replacement connector 93 and the second liquid replenishment and replacement connector 94, so that after the high-capacity battery 92 is connected with the liquid replenishment and replacement apparatus 91, the sealing performance is very reliable.

As shown in Fig. 126, in the first liquid replenishment and replacement connector 93, the connection section of the connector body 931 is further provided with an annular limiting boss 938, the annular limiting boss 938 is configured for cooperating with the outer shell of the high-capacity battery 92 to fix the first liquid replenishment and replacement connector 93. A mounting hole is formed in the outer shell of the high-capacity battery 92, the connector body 931 is fixed in the mounting hole, and the annular limiting boss 938 is welded with a region of the housing at the periphery of the mounting hole to seal the mounting hole while implementing fixation. The connection mode may not only implement the accurate mounting of the first liquid replenishment and replacement connector 93, but also facilitate the sealing of the joint of the first liquid replenishment and replacement connector 93 and the high-capacity battery 92.

As shown in Fig. 126, in addition, in the first liquid replenishment and replacement connector 93, an annular chamfer 936 is disposed on the end surface of the connector body 931 in the first liquid replenishment and replacement connector 93 that is inserted into the second liquid replenishment and replacement connector 94, and the annular chamfer 936 has a guiding and positioning effect, thereby facilitating the plug-in connection of the first liquid replenishment and replacement connector 93 and the second liquid replenishment and replacement connector 94.

In the present embodiment, as shown in Fig. 126, the channel 935 in the first liquid replenishment and replacement connector 93 includes a ninth channel 9351 and a tenth channel 9352, which are isolated from each other, the ninth channel 9351 is configured for communicating with the electrolyte region of the high-capacity battery 92, and the tenth channel 9352 is configured for communicating with the gas region of the high-capacity battery 92. During liquid replenishment and replacement, the tenth channel 9352 communicates the gas region of the inner cavity of the high-capacity battery 92 with the inner cavity of the liquid replenishment and replacement apparatus, and the internal pressure of the battery is changed by the tenth channel 9352, so that the flow of the electrolyte during the liquid replenishment and replacement is smooth, and the electrolyte may also fully wet an electrode sheet of each battery cell.

In other embodiments, the channel 935 formed on the connector body 931 may be a single channel, the single channel is in communication with the electrolyte region in the high-capacity battery 92, and liquid replenishment and liquid replacement are performed on the high-capacity battery 92 by the channel 935.

In the present embodiment, the ninth channel 9351 and the tenth channel 9352 may be circular straight through holes and may also be L-shaped through holes, and it is only necessary to ensure that the ninth channel 9351 and the tenth channel 9352 are respectively in communication with the electrolyte region and the gas region in the high-capacity battery 92. In the present embodiment, since the gas region of the high-capacity battery 92 is generally above the outer shell and the electrolyte is generally below the outer shell, at this time, the ninth channel 9351 and the tenth channel 9352 are preferably L-shaped flow channels, and the L-shaped flow channels facilitate the respective communication of the ninth channel 9351 and the tenth channel 9352 with the electrolyte region and the gas region of the high-capacity battery 92.

As shown in Fig. 127, the ninth channel 9351 may further be in communication with the electrolyte region of the high-capacity battery 92 by an electrolyte pipe section 937, and the end portion of the electrolyte pipe section 937 that is in communication with the electrolyte region of the inner cavity of the housing may directly extend into the bottom of the inner cavity of the housing of the high-capacity battery, and is always immersed in the electrolyte, therefore when liquid replacement is required, the electrolyte in the inner cavity of the housing may be extracted as much as possible, so that the liquid replacement is more thorough.

The electrolyte pipe section 937 and the connector body 931 may be an integrated member and may also be separate members, and when the electrolyte pipe section 937 and the connector body 931 are separate members, the electrolyte pipe section 937 may be connected with the connector body 931 by welding or screwing, and the connector body 931 may also be connected with the electrolyte pipe section 937 by a quick-plug connector; and the electrolyte pipe section 937 is generally made of the same aluminum material as the connector body 931.

In addition, as shown in Fig. 126, in order to conveniently block the channel 935 in the first liquid replenishment and replacement connector 93, the connector body 931 is further provided with a sealing channel penetrating through the channel 935, a rubber ring 939 is disposed in the sealing channel, and when the sealing channel is blocked, the rubber ring 939 is configured for cooperating with a sealing plug 9164 to realize reliable sealing of the sealing channel. The rubber collar 939 is generally made of a rubber material that does not react with the electrolyte, for example, fluororubber, nitrile rubber, natural rubber or ethylene propylene diene monomer rubber, etc.

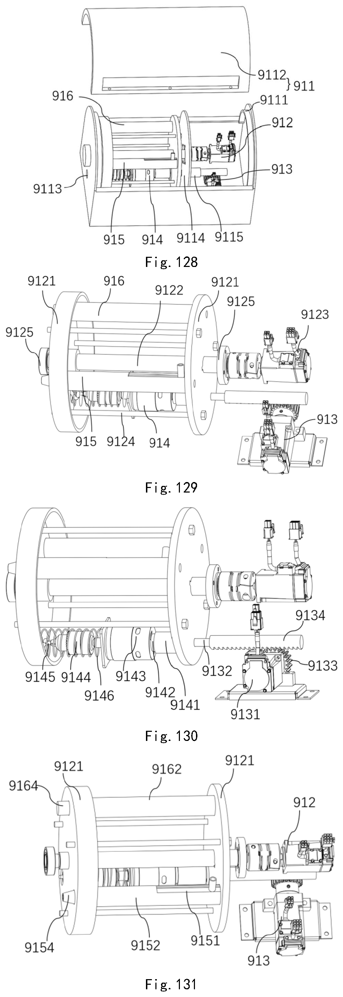

Rotating assembly:
as shown in Fig. 128 and Fig. 129, the rotating assembly 912 in the present Embodiment 43 is mainly configured for driving the trepanning assembly 914, the liquid replenishment and replacement assembly 915 the hole sealing assembly 916 to rotate, so as to sequentially rotate the trepanning assembly 914, the liquid replenishment and replacement assembly 915 and the hole sealing assembly 916 to the liquid replenishment and replacement interface 9113, to execute corresponding trepanning, liquid replenishment and replacement, and hole sealing operations.

In the present Embodiment 43, the rotating assembly 912 includes at least one rotary table 9121 and a rotation drive unit, and the rotation drive unit is mainly configured for driving the rotary table 9121 to rotate. The trepanning assembly 914, the liquid replenishment and replacement assembly 915 and the hole sealing assembly 916 are all mounted on the rotary table 9121, and the rotary table 9121 may sequentially rotate the trepanning assembly 914, the liquid replenishment and replacement assembly 915 and the hole sealing assembly 916 to the liquid replenishment and replacement interface 9113 under the work of the rotation drive unit. During specific mounting, a rotation axis of the rotary table 9121 is taken as a center line, the trepanning assembly 914, the liquid replenishment and replacement assembly 915 and the hole sealing assembly 916 are uniformly distributed in the circumferential direction of the rotary table 9121.

One or more rotary tables 9121 may be provided.

When there is only one rotary table 9121, certain requirements are proposed for the mounting locations of the trepanning assembly 914, the liquid replenishment and replacement assembly 915 and the hole sealing assembly 916, and the trepanning assembly 914, the liquid replenishment and replacement assembly 915 and the hole sealing assembly 916 are preferably mounted at middle locations of the single rotary table 9121, so as to ensure the stability of the assemblies during rotation;
when there are two rotary tables 9121, a front rotary table and a rear rotary table are included, wherein the front rotary table is disposed on the side of the outer box body 911 that is provided with the liquid replenishment and replacement interface 9113, the rear rotary table is disposed on the side in the outer box body 911 that is away from the liquid replenishment and replacement interface 9113, and the two ends of the trepanning assembly 914, the two ends of the liquid replenishment and replacement assembly 915 and the two ends of the hole sealing assembly 916 are respectively connected with the front rotary table and the rear rotary table;
when there are three or more rotary tables 9121, the plurality of rotary tables 9121 are sequentially arranged, which sequentially include a front rotary table, an intermediate rotary table 9121 and a rear rotary table, there is at least one intermediate rotary table 9121, and after the trepanning assembly 914, the liquid replenishment and replacement assembly 915 and the hole sealing assembly 916 pass through the intermediate rotary table 9121, the two ends thereof are respectively connected with the front rotary table and the rear rotary table; and
in the present embodiment 43, there are preferably two rotary tables 9121, and the two rotary tables 9121 may not only stably support the trepanning assembly 914, the liquid replenishment and replacement assembly 915 and the hole sealing assembly 916, but also reduce the number of parts of the entire apparatus as much as possible. At the same time, the front rotary table and the rear rotary table may also be fixed by a plurality of screw rods 9124, and the plurality of screw rods 9124 are uniformly distributed in the circumferential direction of the rotary table 9121, so that the structure of the entire rotating assembly 912 is more stable.

The rotation drive unit in the present embodiment includes a rotating shaft 9122 and a rotating motor 9123; the rotating motor 9123 is disposed on one side of the rear rotary table and is connected with the rotating shaft 9122 by a coupling; the rotating shaft 9122 passes through the front rotary table and the rear rotary table, and is fixedly connected with the front rotary table and the rear rotary table; and when the rotating motor 9123 works, the rotating shaft 9122 is driven to rotate, at this time, the rotating shaft 9122 drives the front rotary table and the rear rotary table to rotate synchronously, so as to rotate the trepanning assembly 914, the liquid replenishment and replacement assembly 915 and the hole sealing assembly 916 on the rotary table 9121 to the liquid replenishment and replacement interface 9113 of the outer box body 911.

In addition, a bearing 9125 is disposed between the two ends of the rotating shaft 9122 and the outer box body 911, so that the entire rotating assembly 912 is mounted on the outer box body 911, and during specific mounting, one end of the rotating shaft 9122 is mounted on the front end plate of the lower bin body 9111 by the bearing 9125, and the other end thereof is mounted on the support plate 9114 by the bearing 9125.

Jacking and pushing assembly:
as shown in Fig. 128 and Fig. 130, the jacking and pushing assembly 913 in the present Embodiment 43 is disposed in the outer box body 911, is disposed on the same side of the trepanning assembly 914, the liquid replenishment and replacement assembly 915 and the hole sealing assembly 916, provides a linear thrust for mainly driving the trepanning assembly 914, the liquid replenishment and replacement assembly 915 and the hole sealing assembly 916 to move toward the high-capacity battery 92 after the trepanning assembly 914, the liquid replenishment and replacement assembly 915 and the hole sealing assembly 916 are rotated to the liquid replenishment and replacement interface 9113 of the outer box body 911, so as to complete corresponding trepanning, liquid replenishment and replacement, and hole sealing operations. In the present Embodiment 43, the jacking and pushing assembly 913 is specifically mounted on the side of the rear rotary table that is away from the front rotary table, and the specific structure thereof is as follows:
first, the jacking and pushing assembly includes a linear motor and a jacking and pushing rod, the jacking and pushing rod is connected with an output shaft of the linear motor, the linear motor outputs a linear thrust, and the jacking and pushing rod transmits the linear thrust to the trepanning assembly 914, the liquid replenishment and replacement assembly 915 and the hole sealing assembly 916 in the front; and
second, the jacking and pushing assembly 913 includes a jacking and pushing motor 9131, a jacking and pushing rod 9132 and a gear rack assembly; an output shaft of the jacking and pushing motor 9131 is connected with a gear 9133 in the gear rack assembly to drive the gear 9133 to rotate, the gear 9133 rotates to drive a rack 9134 to move linearly, the jacking and pushing rod 9132 is connected with the rack 9134, and the jacking and pushing rod 9132 applies a linear thrust under the driving of the rack 9134.

The above structures may apply the linear thrust to the jacking and pushing rod 9132, so that the trepanning assembly 914, the liquid replenishment and replacement assembly 915 and the hole sealing assembly 916 may move toward the high-capacity battery 92, and pass through the liquid replenishment and replacement interface 9113 on the outer box body 911 to execute subsequent trepanning, liquid replenishment and replacement, and hole sealing operations.

Meanwhile, an end portion of the jacking and pushing rod 9132 is set to be a cambered surface, the cambered surface is in point contact when applying the thrust, so that the jacking and pushing rod 9132 may more uniformly and accurately apply the thrust. In addition, a motor mounting base may further be disposed in the outer box body 911, so that the jacking and pushing motor 9131 is reliably mounted in the outer box body 911.

In addition, as shown in Fig. 128, a guide sleeve 9115 is disposed on the support plate 9114 in the outer box body 911, the guide sleeve 9115 is fixed on the side surface of the support plate 9114 that is away from the rotary table 9121, the jacking and pushing rod 9132 passes through the guide sleeve 9115 to apply a thrust, and the guide sleeve 9115 not only provides certain guidance for the movement of the jacking and pushing rod 9132, but also supports the jacking and pushing rod 9132, so as to prevent the jacking and pushing rod 9132 from disengaging from the gear 9133 when the amount of movement of the jacking and pushing rod 9132 is too large.

Trepanning assembly:
as shown in Fig. 128, Fig. 130 and Fig. 131, the trepanning assembly 914 in the present Embodiment 43 is mainly configured for taking out the sealing plug on the high-capacity battery 92, so as to open the liquid replenishment and replacement connector of the high-capacity battery 92, thereby facilitating subsequent liquid replenishment and replacement operations. The trepanning assembly 914 includes a mounting sleeve 9141, a mounting rod 9142 and a trepanning unit; and the trepanning unit includes a trepanning motor 9143, a drill bit chuck 9144 and an auger bit 9145, and the trepanning motor 9143 is connected with the auger bit 9145 by the drill bit chuck 9144.

The mounting sleeve 9141 is fixedly mounted on an end surface of the rear rotary table, the mounting rod 9142 is sleeved in the mounting sleeve 9141, one end of the mounting rod 9142 is connected with the jacking and pushing rod 9132 of the jacking and pushing assembly 913, the other end thereof extends out from the mounting sleeve 9141 to be fixedly connected with the outer shell of the trepanning motor 9143, and the mounting rod 9142 cooperates with the mounting sleeve 9141 to mount the trepanning unit on the rear rotary table. Meanwhile, the mounting rod 9142 transmits the linear thrust on the jacking and pushing rod 9132 to the trepanning motor 9143, and the jacking and pushing rod 9132 pushes the entire trepanning unit to move toward the high-capacity battery.

When the jacking and pushing assembly 913 applies the linear thrust to the trepanning unit, the trepanning motor 9143 works, so that the auger bit 9145 may rotate along an axis, the auger bit 9145 rotates while advancing under the coaction of the jacking and pushing assembly 913 and the trepanning motor 9143, until the auger bit 9145 is spirally inserted into the sealing plug of the high-capacity battery 92, the trepanning motor 9143 then stops working, the jacking and pushing assembly 913 applies an acting force in a reverse direction to pull out the sealing plug, and then the liquid replenishment and replacement connector of the high-capacity battery 92 is opened to form a channel in communication with the inner cavity of the high-capacity battery 92.

In addition, the trepanning assembly 914 further includes a trepanning positioning spring 9146, the trepanning positioning spring 9146 is sleeved on the auger bit 9145 for controlling the feed amount of the auger bit 9145, and under the acting force of the trepanning positioning spring 9146, the movement of the auger bit 9145 is relatively mild and stable, thereby avoiding a damage to the auger bit 9145 by sudden movement. Meanwhile, the trepanning positioning spring 9146 may provide an acting force after a trepanning operation is completed, to coact with the jacking and pushing assembly 913 to pull out the sealing plug; and at the same time, the trepanning motor 9143, the drill bit chuck 9144 and the auger bit 9145 may also be restored to initial locations, and the liquid replenishment and replacement connector of the high-capacity battery 92 is removed, so as to facilitate the next operation.

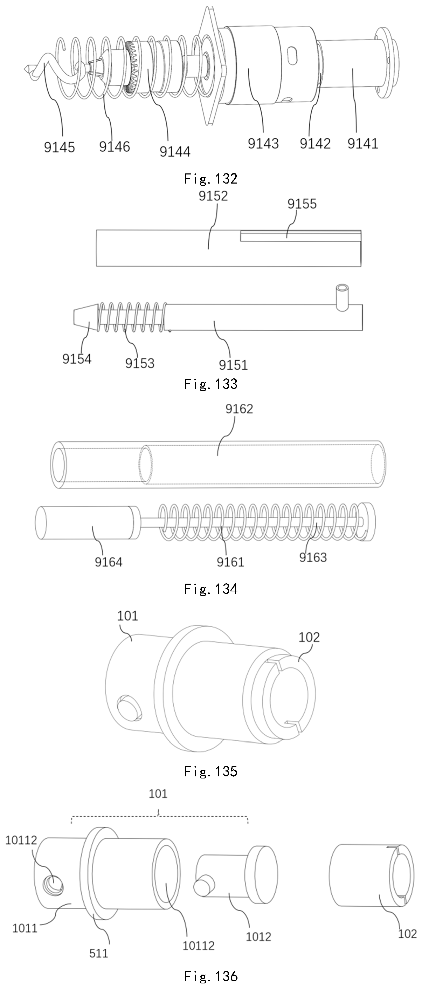

Liquid replenishment and replacement assembly:
as shown in Fig. 132 and Fig. 133, the liquid replenishment and replacement assembly 915 in the present Embodiment 43 mainly performs a liquid replenishment or liquid replacement operation on the high-capacity battery 92 after the trepanning operation is completed, and the liquid replenishment and replacement assembly 915 mainly includes a liquid injection inner cylinder 9151, a liquid injection outer cylinder 9152 and a liquid injection spring 9153; the two ends of the liquid injection outer cylinder 9152 are respectively connected with the front rotary table and the rear rotary table, the liquid injection inner cylinder 9151 is disposed in the liquid injection outer cylinder 9152 and is configured for connecting with an external pipeline, and after the entire liquid replenishment and replacement assembly 915 is rotated to the liquid replenishment and replacement interface 9113, the jacking and pushing assembly 913 pushes the liquid injection inner cylinder 9151 to be connected with the liquid replenishment and replacement connector of the high-capacity battery 92, so as to perform gas extraction, liquid injection or liquid extraction operations. In addition, it should be noted that since the liquid injection inner cylinder 9151 moves axially relative to the liquid injection outer cylinder 9152, the liquid injection outer cylinder 9152 is provided with a strip-shaped through slot 9155, so that a hose of the liquid injection inner cylinder 9151 and the external pipeline moves in the strip-shaped through slot 9155.

As shown in Fig. 133, the liquid injection spring 9153 is disposed in the liquid injection outer cylinder 9152, and provides an acting force to restore the liquid injection inner cylinder 9151 to the initial location after the liquid injection inner cylinder 9151 completes related operations. In the present Embodiment 43, the liquid injection spring 9153 is mounted in the following manner: the liquid injection inner cylinder 9151 is set to be a variable-diameter cylinder, and the liquid injection spring 9153 is sleeved on a cylinder body of the variable-diameter cylinder that has a smaller size.

In addition, in order to ensure the sealing performance of the joint of the liquid injection inner cylinder 9151 and the liquid replenishment and replacement connector of the high-capacity battery 92, an end portion of the liquid injection inner cylinder 9151 is provided with a tapered nozzle 9154, and the liquid injection inner cylinder 9151 is hermetically connected with a channel of the liquid replenishment and replacement connector of the high-capacity battery 92 by the tapered nozzle 9154.

Hole sealing assembly:
as shown in Fig. 132 and Fig. 134, the hole sealing assembly 916 in the present Embodiment 43 mainly seals the channel on the liquid replenishment and replacement connector of the high-capacity battery 92 by using the sealing plug 9164 after liquid replenishment and replacement are completed. The hole sealing assembly 916 includes a hole sealing spring 9161, a hole sealing cylinder body 9162 and a hole sealing push rod 9163; and the two ends of the hole sealing cylinder body 9162 are respectively connected with the front rotary table and the rear rotary table, the hole sealing push rod 9163 is disposed in the hole sealing cylinder body 9162 and may jack and push the sealing plug 9164 under the action of the jacking and pushing assembly 913, so that the sealing plug 9164 is squeezed into the channel on the liquid replenishment and replacement connector of the high-capacity battery 92, so as to seal the liquid replenishment and replacement connector of the high-capacity battery 92. The sealing plug 9164 is generally a rubber sealing plug or a plastic sealing plug, which may be made into a conical structure having a smaller size at one end and a greater size at the other end, so as to quickly and accurately enter the channel of the liquid replenishment and replacement connector, and meanwhile, the size of the large end of the sealing plug is slightly greater than the size of the channel of the liquid replenishment and replacement connector channel, so that the sealing plug 9164 may reliably seal the channel of the liquid replenishment and replacement connector. After the sealing plug 9164 is pushed into the channel of the liquid replenishment and replacement connector, a sealant may further be coated on the sealing plug 9164 and the liquid replenishment and replacement connector after the entire liquid replenishment and replacement apparatus is separated from the high-capacity battery, so as to further improve the sealing reliability.

The hole sealing spring 9161 is disposed in the hole sealing cylinder body 9162, and provides an acting force to restore the hole sealing push rod 9163 to the initial location after the hole sealing push rod 9163 completes a hole sealing operation. In the present Embodiment 43, the hole sealing spring 9161 is mounted in the following manner: the hole sealing spring 9161 is sleeved on the hole sealing push rod 9163, one end of the hole sealing spring 9161 is limited by an annular step disposed on an inner wall of the hole sealing cylinder body 9162, and the other end of the hole sealing spring 9161 is limited by a baffle disposed on the hole sealing push rod 9163. Meanwhile, in order to enable the hole sealing push rod 9163 to conveniently jack and push the sealing plug 9164, a push plate may further be installed on an end portion of the hole sealing push rod 9163, so that the hole sealing push rod 9163 may conveniently apply a relatively uniform acting force on the sealing plug 9164, to push the entire sealing plug 9164 outward.

The working process of performing liquid replenishment and replacement on the high-capacity battery 92 by the liquid replenishment and replacement apparatus 91 is as follows:
S1, connecting:
   the first liquid replenishment and replacement connector 93 on the high-capacity battery 92 is connected with the second liquid replenishment and replacement connector 94 on the liquid replenishment and replacement apparatus 91;
S2, trepanning:
   the rotation drive unit drives the rotary table 9121 to rotate, and the rotary table 9121 drives the trepanning assembly 914 to rotate to the liquid replenishment and replacement interface 9113 of the outer box body 911;
   the jacking and pushing motor 9131 in the jacking and pushing assembly 913 is started, the jacking and pushing rod 9132 jacks and pushes the trepanning unit forward until the auger bit 9145 in the trepanning unit is in contact with the first liquid replenishment and replacement connector 93 of the high-capacity battery 92, meanwhile, the trepanning motor 9143 works, the auger bit 9145 opens the first liquid replenishment and replacement connector 93 of the high-capacity battery 92 under the action of the trepanning motor 9143, to form a channel in communication with the inner cavity of the high-capacity battery 92; and after trepanning is completed, the jacking and pushing motor 9131 in the jacking and pushing assembly 913 rotates reversely, and the entire jacking and pushing assembly 913 moves backward to restore to the initial location; and at this time, under an acting force of the trepanning positioning spring 9146, the trepanning unit exits the liquid replenishment and replacement interface 9113 of the outer box body 911 to restore to the initial location;
S3, liquid replenishment and replacement:
   the rotation drive unit drives the rotary table 9121 to rotate, so as to rotate the liquid replenishment and replacement assembly 915 to the liquid replenishment and replacement interface 9113 of the outer box body 911, and meanwhile, the liquid injection inner cylinder 9151 is connected with the external pipeline by a connecting hose;
   the jacking and pushing motor 9131 in the jacking and pushing assembly 913 is started, the jacking and pushing rod 9132 jacks and pushes the liquid replenishment and replacement assembly 915 forward until the liquid injection inner cylinder 9151 is connected with the channel on the first liquid replenishment and replacement connector 93 of the high-capacity battery 92, and subsequently, liquid replenishment and replacement operations such as liquid injection or liquid drainage are performed on the high-capacity battery 92; and after the liquid replenishment and replacement are completed, the jacking and pushing motor 9131 in the jacking and pushing assembly 913 rotates reversely, and the entire jacking and pushing assembly 913 moves backward to restore to the initial location, and at this time, under an acting force of the liquid injection spring 9153, the liquid injection inner cylinder 9151 exits the liquid replenishment and replacement interface 9113 of the outer box body 911 to restore to the initial location;
S4, hole sealing:
   the rotation drive unit drives the rotary table 9121 to rotate, so as to rotate the hole sealing assembly 916 to the liquid replenishment and replacement interface 9113 of the outer box body 911;
   the jacking and pushing assembly 913 is started to jack and push the hole sealing assembly 916 forward, the hole sealing assembly 916 extrudes the sealing plug 9164 into the channel on the first liquid replenishment and replacement connector 93 of the high-capacity battery 92 under the action of the jacking and pushing assembly 913, so as to seal the first liquid replenishment and replacement connector 93; and after the hole sealing operation is completed, the jacking and pushing motor 9131 in the jacking and pushing assembly 913 rotates reversely, and the entire jacking and pushing assembly 913 moves backward to restore to the initial location, and at this time, under the action of the hole sealing spring 9161, the hole sealing push rod 9163 restores to the initial location; and
S5, disassembly and separation:
   the first liquid replenishment and replacement connector 93 on the high-capacity battery 92 is disassembled and separated from the second liquid replenishment and replacement connector 94 on the liquid replenishment and replacement apparatus 91; and a sealant is coated on the sealing plug 9164 and the liquid replenishment and replacement connectors, so as to further improve the sealing reliability.

### Embodiment 44

Embodiment 44 to Embodiment 45 provide a functional member for a lithium-ion battery. On the basis of the functional member, liquid injection, liquid replacement and explosion venting of the lithium-ion battery may be completed, and for ease of understanding, the functional member is defined as a liquid injection and replacement and explosion venting member.

The lithium-ion battery may be a lithium-ion battery cell and may also be a lithium-ion battery module having a housing.

If the lithium-ion battery is a lithium-ion battery cell (including a housing and at least one group of electrode assemblies located in the housing), the liquid injection and replacement and explosion venting member may be fixed at any location on the housing of the lithium-ion battery cell, the liquid injection and replacement and explosion venting member is preferably fixed on an original liquid injection port of the lithium-ion battery cell, so as to implement the function of injecting electrolyte or replacing the electrolyte; and meanwhile, when thermal runaway occurs in the lithium-ion battery cell, a part of electrolyte and a thermal runaway flue gas in the inner cavity of the housing are discharged from the liquid injection and replacement and explosion venting member.

If the lithium-ion battery is a lithium-ion battery module having a housing (the lithium-ion battery module includes a housing and at least two battery cells located in the housing, the inner cavity of the housing is in communication with the inner cavity of each battery cell, and the lithium-ion battery module may also be referred to as a lithium-ion battery pack or a high-capacity battery), the liquid injection and replacement and explosion venting member may also be fixed at any location of the housing of the lithium-ion battery module, and on the basis of the liquid injection and replacement and explosion venting member, electrolyte may be injected into the inner cavity of the housing or the electrolyte in the inner cavity of the housing may be replaced; and meanwhile, when thermal runaway occurs in any battery cell, a part of electrolyte and the thermal runaway flue gas in the inner cavity of the housing are discharged from the liquid injection and replacement and explosion venting member.

In Embodiment 44 to Embodiment 45, the above three functions may be implemented on the basis of one member, so that it is not necessary to provide three corresponding members for the three functions in the lithium-ion battery having the functional member. Therefore, the structure is simple, and the operation is convenient.

Specifically, the liquid injection and replacement and explosion venting member in Embodiment 44 to Embodiment 45 is mainly composed of a liquid injection and replacement member and an explosion venting pipe member, the liquid injection and replacement member and the explosion venting pipe member are connected with each other, liquid injection and replacement operations are implemented on the basis of the liquid injection and replacement member, and an explosion venting function is implemented on the basis of the explosion venting pipe member.

The liquid injection and replacement member includes a columnar liquid injection and replacement member main body and a third blocking member; the liquid injection and replacement member main body is fixed on the housing of the lithium-ion battery, and a third channel penetrating through an electrolyte region of the inner cavity of the housing is formed on the liquid injection and replacement member main body; and during the charging and discharging operation of the lithium-ion battery, the third blocking member is configured for blocking the third channel, and when the liquid injection and replacement operations are performed, the third blocking member needs to be disassembled, and the liquid injection and replacement operations are implemented on the basis of the third channel.

The explosion venting pipe member includes an explosion venting pipe and an explosion venting film fixed in the explosion venting pipe; and the explosion venting pipe is coaxially and hermetically sleeved with the liquid injection and replacement member main body in a detachable manner, and a threaded connection or n interference fit connection may be specifically used.

After a period of time of a charging and discharging cycle of the lithium-ion battery, electrolyte is reduced by decomposition and consumption, resulting in a reduction in the performance, so that the explosion venting pipe member may be disassembled to take out the third blocking member, and then electrolyte is injected into the inner cavity of the housing by the third channel, so as to improve the performance of the lithium-ion battery; or, after a period of time of the charging and discharging cycle of the lithium-ion battery, the performance of the lithium-ion battery is affected by the occurrence of impurities in the electrolyte, so that the electrolyte in the inner cavity of the housing may also be replaced by the liquid injection and replacement and explosion venting member, so as to improve the performance of the lithium-ion battery. The replacement herein may be partial replacement and may also be complete replacement. After the liquid injection or liquid replacement operation is completed, the third channel is blocked by using the third blocking member, and the explosion venting pipe member is connected with the liquid injection and replacement member main body, so that the operation is simple and convenient.

When thermal runaway occurs in the lithium-ion battery, under the action of an internal pressure or temperature, the third blocking member is disengaged from the third channel, enters the explosion venting pipe along with the thermal runaway flue gas and a part of electrolyte by the third channel, and breaks through the explosion venting film to be discharged.

It should be noted herein that the third blocking member is usually a solid substance, which is located in the third channel and does not react with the electrolyte; and the disengagement of the third blocking member from the third channel at least includes the following two situations:
1. under the action of a thermal runaway pressure, the third blocking member directly disengages from the third channel, enters the explosion venting pipe along with the thermal runaway flue gas and a part of electrolyte by the third channel, and breaks through the explosion venting film to be discharged.
2. Under the action of a thermal runaway temperature, the solid-state third blocking member is melted to a molten state or a liquid state to be disengaged from the third channel, enters the explosion venting pipe along with the thermal runaway flue gas and a part of electrolyte by the third channel, and breaks through the explosion venting film to be discharged. In this case, in a normal charging and discharging cycle process of the lithium-ion battery, the third blocking member is in a solid state to block the third channel, and is changed into the molten state or the liquid state under the thermal runaway temperature of the lithium-ion battery, thereby losing the blocking effect, a phase-change material may be selected in general, and such a phase-change material is in the solid state under a normal charging and discharging cycle temperature of the lithium-ion battery, and is in the liquid state or a gaseous state under the thermal runaway temperature of the lithium-ion battery, for example, paraffin (the melting point thereof usually ranges from 50°C to 70°C), the normal charging and discharging cycle temperature of the lithium-ion battery is about 20°C to 30° C, so that the paraffin is in the solid state under the temperature to seal the third channel; and the thermal runaway temperature of the lithium-ion battery is much higher than 70°C, therefore when thermal runaway occurs in the lithium-ion battery, the paraffin is melted to the liquid state, thus losing the blocking function.

Embodiment 44 to Embodiment 45 are further described below in combination with the drawings.

### Embodiment 44

As shown in Fig. 135, it is a schematic structural diagram of a liquid injection and replacement and explosion venting member in the present embodiment. The liquid injection and replacement and explosion venting member includes a liquid injection and replacement member 101 and an explosion venting pipe member 102.

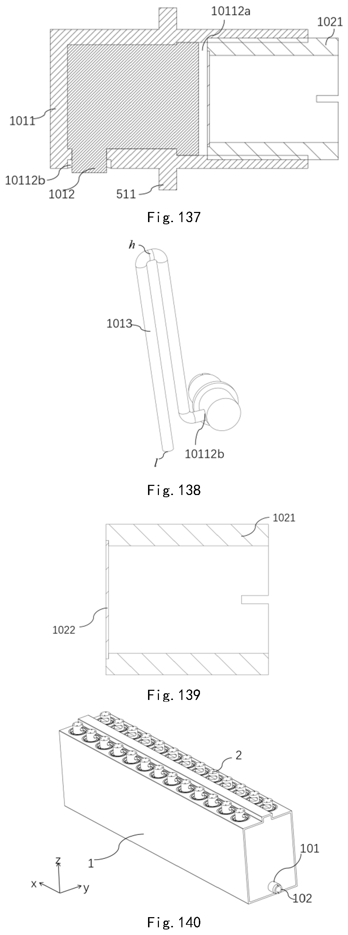

As can be seen in combination with Fig. 136 and Fig. 137, the liquid injection and replacement member 101 includes a liquid injection and replacement member main body 1011 and a third blocking member 1012.

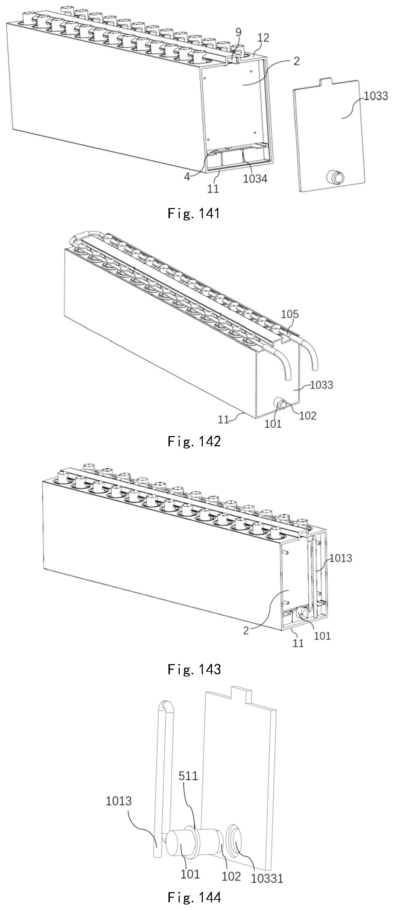

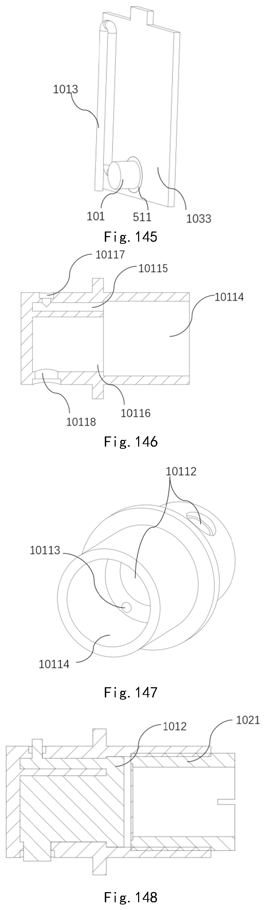

The liquid injection and replacement member main body 1011 is fixed on a housing 1 of the lithium-ion battery. In the present embodiment, the liquid injection and replacement member main body 1011 is a cylinder, and in some other embodiments, a rectangular column, a semi-cylinder or the like may further be selected; and in order to conveniently fix the liquid injection and replacement member main body 1011 on the housing 1 of the lithium-ion battery, in the present embodiment, an annular limiting boss 511 is disposed on an outer circumferential surface of the liquid injection and replacement member main body 1011 in the circumferential direction thereof. A first mounting hole 10331 is formed on the housing 1 of the lithium-ion battery, the liquid injection and replacement member main body 1011 is fixed in the first mounting hole 10331, and the annular limiting boss 511 is welded with a region of the housing 1 at the periphery of the first mounting hole 10331, so as to seal the first mounting hole 10331 while implementing fixation (specifically as shown in Fig. 144 and Fig. 145).

A through hole is formed on the liquid injection and replacement member main body 1011 to serve as a third channel 10112, and the third channel 10112 may be a straight through hole and may also be an L-shaped through hole (as shown in Fig. 136 and Fig. 137, the third channel 10112 is an L-shaped through hole in the present embodiment). After the liquid injection and replacement member main body 1011 is fixed on the housing 1 of the lithium-ion battery, one end (the port shown by 11112a in Fig. 137) of the third channel 10112 is located outside the housing 1, and the other end (the port shown by 10112b in Fig. 137) thereof is located inside the housing 1 and is in communication with an electrolyte region in the inner cavity of the housing 1.

In order to avoid the situation in which if the third blocking member 1012 is opened, the electrolyte in the inner cavity of the housing 1 leaks from the third channel 10112, as shown in Fig. 138, in the present embodiment, the third channel 10112 is in communication with the electrolyte region in the inner cavity of the housing 1 by an electrolyte communication pipe 1013; and in the height direction of the housing 1, the highest location (the location shown by h in Fig. 138) of the electrolyte communication pipe 1013 is higher than the liquid level of electrolyte in the inner cavity of the housing 1, and the end portion (the location shown by 1 in Fig. 138) of the electrolyte communication pipe 1013 that is in communication with the electrolyte region in the inner cavity of the housing 1 extends into the bottom of the inner cavity of the housing 1 as much as possible, and is always immersed in the electrolyte, therefore when liquid replacement is required, the electrolyte in the inner cavity of the housing 1 may be extracted as much as possible, so that the liquid exchange is more thorough.

The electrolyte communication pipe 1013 and the liquid injection and replacement member main body 1011 may be an integrated member and may also be separate members, and when the electrolyte communication pipe 1013 and the liquid injection and replacement member main body 1011 are separate members, the electrolyte communication pipe 1013 is connected with the liquid injection and replacement member main body 1011 by welding or screwing. The electrolyte communication pipe 1013 is generally made of the same aluminum material as the liquid injection and replacement member main body 1011.

The third blocking member 1012 in the present embodiment is solid paraffin, which is blocked in the third channel 10112. When blocking is performed, liquid paraffin is directly poured into the third channel 10112, and after the liquid paraffin cools, the solid paraffin is formed to block the third channel 10112.

In some other embodiments, the third blocking member 1012 may further use other phase-change materials, which meet requirements (being in the solid state under the normal charging and discharging cycle temperature of the lithium ion battery, and in the liquid state or the gaseous state under the thermal runaway temperature of the lithium ion battery) and does not react with the electrolyte.

In some other embodiments, the third blocking member 1012 may further be a rubber member, but the bonding strength between the rubber member and the third channel needs to be defined, and the third blocking member 1012 may directly disengage from the third channel 10112 only under the thermal runaway pressure, enters an explosion venting pipe 1021 along with the thermal runaway flue gas and a part of electrolyte by the third channel 10112, and breaks through an explosion venting film 1022 to be discharged. The third channel 10112 corresponding to the solution is preferably a straight through hole.

As shown in Fig. 139, the explosion venting pipe member 102 in the present embodiment includes the explosion venting pipe 1021 and the explosion venting film 1022 fixed in the explosion venting pipe 1021; and
as can be seen in combination with Fig. 137, in the present embodiment, the explosion venting pipe 1021 is sleeved in one end of the third channel 10112, and may be specifically fixed and sealed in a threaded connection manner.

In other embodiments, the explosion venting pipe 1021 may be connected with the third channel 10112 in an interference fit manner; and
in other embodiments, the explosion venting pipe 1021 may further be sleeved outside one end of the third channel 10112, and may be specifically fixed and sealed in a threaded or interference fit manner. The location of the explosion venting film 1022 in the explosion venting pipe 1021 may be adjusted according to a connection location of the explosion venting pipe 1021 and the third channel 10112. If the explosion venting pipe 1021 is sleeved in the third channel 10112, the location of the explosion venting film 1022 is not particularly limited, the explosion venting film 1022 may be located at any location in the explosion venting pipe 1021, and is preferably located at the end of the explosion venting pipe 1021 that is close to the third blocking member 1012, thereby preventing a damage to the explosion venting film 1022 due to exposure. If the explosion venting pipe 1021 is sleeved outside the third channel 10112, the explosion venting film 1022 needs to be fixed at the end of the explosion venting pipe 1021 that is away from the third blocking member 1012, so that the explosion venting film 1022 is vulnerable to damage by an external force.

As shown in Fig. 140, it is a schematic structural diagram of a lithium-ion battery in the present embodiment, and the lithium-ion battery is specifically a high-capacity battery, including a housing 1 and a plurality of battery cells 2 arranged in the housing 1.

The battery cells 2 in the present embodiment are prismatic cells, 13 battery cells 2 are provided, and the inner cavity of each battery cell 2 includes an electrolyte region and a gas region. In other embodiments, the number of the battery cells 2 may be adjusted according to actual needs, and the forms of the battery cells 2 may also be adjusted according to actual needs.

A rectangular housing 1 is used in general. For ease of description, the length direction of the housing 1 is defined as an x direction, the width direction of the housing 1 is defined as a y direction, and the height direction of the housing 1 is defined as a z direction.

In Embodiment 44 to Embodiment 45, the structure of the housing 1 is not specifically limited, and at least the following two structures may be used:
the first structure includes a first cylinder body having two open ends (i.e., ports parallel to a yz plane are the open ends), and end plates respectively fixed at the two open ends of the first cylinder body (i.e., the end plates are parallel to the yz plane); and
the second structure includes a second cylinder body having open ends at the top and bottom (i.e., ports parallel to an xy plane are the open ends), and an upper cover plate and a lower cover plate, which are respectively fixed at the open ends at the top and bottom of the second cylinder body (i.e., both the upper cover plate and the lower cover plate are parallel to the xy plane).

In the following description, the cover plates in the housing 1 that are parallel to the xy plane are respectively defined as a housing top plate 12 and a housing bottom plate 11, and the cover plate parallel to the yz plane is referred to as an end plate 1033.

The inner cavity of the housing 1 is in communication with the inner cavities of all battery cells 2. Preferably, a sharing chamber may be disposed in the housing 1, and the inner cavity of the sharing chamber is in communication with the inner cavities of all battery cells 2 to achieve the above communication effect.

It should be noted that:
the sharing chamber may be an electrolyte sharing chamber 4 (as shown in Fig. 141), the battery cells 2 may be located in a unified electrolyte environment by the electrolyte sharing chamber 4, thereby ensuring the uniformity of the electrolyte in the battery cells 2, improving the performance of the high-capacity battery and prolonging the charging and discharging cycle life of the high-capacity battery. The electrolyte sharing chamber 4 herein is a liquid channel, which is located between the housing bottom plate 11 and each battery cell 2 and extends in the length direction of the housing 1 (the x direction), the liquid channel may be integrally formed with the housing bottom plate 11, and may also be formed by disposing a support member 1034 between the lower cover plate of the battery cell 2 and the housing bottom plate 11.

The housing top plate 12 is provided with a gas chamber 9 in the x direction, and the inner cavity of the gas chamber 9 is in communication with the gas region of the inner cavity of each battery cell 2. A gas balance of each battery cell 2 is realized by the gas chamber, so that the performance of the high-capacity battery may also be improved, and the charging and discharging cycle life of the high-capacity battery may also be prolonged.

In some other embodiments, only the electrolyte sharing chamber 4 may be provided.

In order to improve the heat dissipation performance of such a high-capacity battery, an avoidance hole capable of enabling a polarity terminal of each battery cell 2 to extend out is formed on the housing top plate 12; and the polarity terminal of each battery cell 2 extends out from the avoidance hole, and a region of the housing top plate 12 around the avoidance hole is fixed and sealed with a shell of the battery cell 2.

It should be noted that the polarity terminal of the battery cell 2 herein may be an electrode terminal of the battery cell 2, in order to avoid the situation in which the electrode terminal of the battery cell 2 serving as the polarity terminal cannot smoothly extend out from the avoidance hole, an electrode terminal adapter may further be connected to the electrode terminal of the battery cell 2, and an overall structure in which the electrode terminal of the battery cell 2 cooperates with the electrode terminal adapter is used as the polarity terminal of the battery cell 2.

In order to further improve the heat dissipation performance of the high-capacity battery in the above embodiments, as shown in Fig. 142, the high-capacity battery in the present embodiment further includes a heat transfer pipe 105.

In the present embodiment, a clamping portion of the heat transfer pipe 105 is disposed at a location where the polarity terminal extends out from the avoidance hole, and the heat transfer pipe 105 is fixed in the clamping portion of the heat transfer pipe 105, so that the heat transfer pipe 105 is directly connected with the polarity terminal of the high-capacity battery, therefore heat on the polarity terminal with relatively concentrated heat may be exported in a timely manner, thereby improving the heat dissipation effect of the high-capacity battery. In addition, when the temperature of the high-capacity battery is lower than a set threshold value, a heat transfer medium with a higher temperature is injected into the heat transfer pipe 105 to heat the high-capacity battery; and by controlling the temperature of the heat transfer medium, it may be ensured that the high-capacity battery always operates at a normal working temperature.

The liquid injection and replacement and explosion venting member is fixed on the end plate 1033 of the housing, and the liquid injection and replacement and explosion venting member is close to the housing bottom plate 11 in the present embodiment. Therefore, in order to avoid the situation in which if the third blocking member 1012 is opened, the electrolyte in the inner cavity of the housing 1 leaks from the third channel 10112, as shown in Fig. 143, in the present embodiment, the third channel 10112 is in communication with the electrolyte region in the inner cavity of the housing 1 by the electrolyte communication pipe 1013; and in the height direction of the housing 1, the highest location of the electrolyte communication pipe 1013 is higher than the liquid level of electrolyte in the inner cavity of the housing 1, and the end portion of the electrolyte communication pipe 1013 that is in communication with the electrolyte region in the inner cavity of the housing 1 extends into the bottom of the inner cavity of the housing 1 as much as possible, and is always immersed in the electrolyte, therefore when liquid replacement is required, the electrolyte in the inner cavity of the housing 1 may be extracted as much as possible, so that the liquid exchange is more thorough.

In combination with Fig. 144 and Fig. 145, in the present embodiment, a first mounting hole 10331 adapted to the shape of the cross section of the liquid injection and replacement main body is formed in the end plate 1033 of the housing, the liquid injection and replacement member main body 1011 is coaxially located in the first mounting hole 10331, and the annular limiting boss 511 is hermetically welded with a peripheral region of the first mounting hole 10331. When an energy storage device is assembled on the basis of such a high-capacity battery assembly, a plurality of high-capacity batteries are arranged in the width direction of the high-capacity batteries, so that the end plate 1033 of each high-capacity battery is exposed. Therefore, when the liquid injection and replacement and explosion venting member is disposed on the end plate 1033, liquid injection and replacement operations may be conveniently performed.

After a period of time of the charging and discharging cycle of the high-capacity battery, the electrolyte is reduced by decomposition and consumption, resulting in a reduction in the performance of the high-capacity battery, so that electrolyte may be replenished into the inner cavity of the housing 1 and the inner cavity of each battery cell 2 by the liquid injection and replacement and explosion venting member, so as to improve the performance of the high-capacity battery; or, after a period of time of the charging and discharging cycle of the high-capacity battery, the performance of the high-capacity battery is affected by the occurrence of impurities in the electrolyte, so that the electrolyte in the inner cavity of the housing 1 and the inner cavity of each battery cell 2 may also be replaced by the liquid injection and replacement and explosion venting member, so as to improve the performance of the high-capacity battery. The replacement herein may be partial replacement and may also be complete replacement. In addition, after the electrolyte region of the inner cavity of each battery cell 2 is in communication with the electrolyte sharing chamber 4, electrolyte may be injected into the inner cavity of each battery cell 2 and the electrolyte sharing chamber 4 again by the liquid injection and replacement and explosion venting member, so as to ensure the continuity of the electrolyte.

When thermal runaway occurs in the lithium-ion battery, under the action of an internal pressure or temperature, the solid paraffin is melted to be disengaged from the third channel 10112, enters the explosion venting pipe 1021 along with the thermal runaway flue gas and a part of electrolyte by the electrolyte communication pipe 1013 and the third channel 10112, and breaks through the explosion venting film 1022 to be discharged.

In some other embodiments, a material, which is easily melted at a high temperature (the thermal runaway temperature) may also be selected as the electrolyte communication pipe 1013; and under the thermal runaway temperature, the electrolyte communication pipe 1013 is melted, enters the explosion venting pipe 1021 along with the thermal runaway flue gas and a part of electrolyte by the third channel 10112, and breaks through the explosion venting film 1022 to be discharged.

Liquid injection and replacement processes are described below:
when liquid injection is required, the operation may be performed by the following steps:
disassembling the explosion venting pipe member 102, and performing heating to melt the paraffin, and extracting liquid paraffin;
stretching an electrolyte injection pipe into the third channel 10112, injecting electrolyte, and after liquid injection is completed, pulling out the electrolyte injection pipe; and
pouring the liquid paraffin into the third channel 10112, and after the paraffin solidifies, fixing the explosion venting pipe member 102 on the liquid injection and replacement member main body 1011.

When liquid replacement is required, the operation may be performed by the following steps:
disassembling the explosion venting pipe member 102, and performing heating to melt the paraffin, and extracting liquid paraffin;
stretching an electrolyte extraction pipe into the third channel 10112, extracting electrolyte; then, stretching the electrolyte injection pipe into the third channel 10112, injecting new electrolyte; and after liquid injection is completed, pulling out the electrolyte injection pipe; and
pouring the liquid paraffin into the third channel 10112, and after the paraffin solidifies, fixing the explosion venting pipe member 102 on the liquid injection and replacement member main body 1011.

It should be noted that in the present embodiment, during liquid injection, if the pressure in the inner cavity of the housing 1 is too large, the problem of difficulty in liquid injection may occur.

### Embodiment 45

On the basis of Embodiment 44, in the present embodiment, as shown in Figs.146-148, a fourth channel 10113 is formed on the liquid injection and replacement member main body 1011, and the third blocking member 1012 in the above embodiment is further configured for blocking the fourth channel 10113.

In the present embodiment, a first blind hole 10114 is formed in the axial direction of the cylinder; a second blind hole 10115 and a third blind hole 10116, which are isolated from each other, are formed in the bottom of the blind hole in the axial direction of the cylinder; a fifth through hole 10117 and a sixth through hole 10118, which penetrate through the second blind hole 10115 and the third blind hole 10116, are respectively formed in the radial direction of the cylinder; the second blind hole 10115 and the fifth through hole 10117 form the fourth channel 10113; the third blind hole 10116 and the sixth through hole 10118 form the third through channel 10112; and the explosion venting pipe 1021 is hermetically sleeved in the first blind hole 10114.

In some other embodiments, the fourth channel 10113 may also be a straight through hole, and the cross section thereof may be adjusted according to actual needs, as long as it is ensured that the fourth channel 10113 is in communication with the gas region of the inner cavity of the housing 1, and by means of the fourth channel 10113, a protective gas may be injected into the inner cavity of the housing 1 or the gas in the inner cavity of the housing 1 may be discharged.

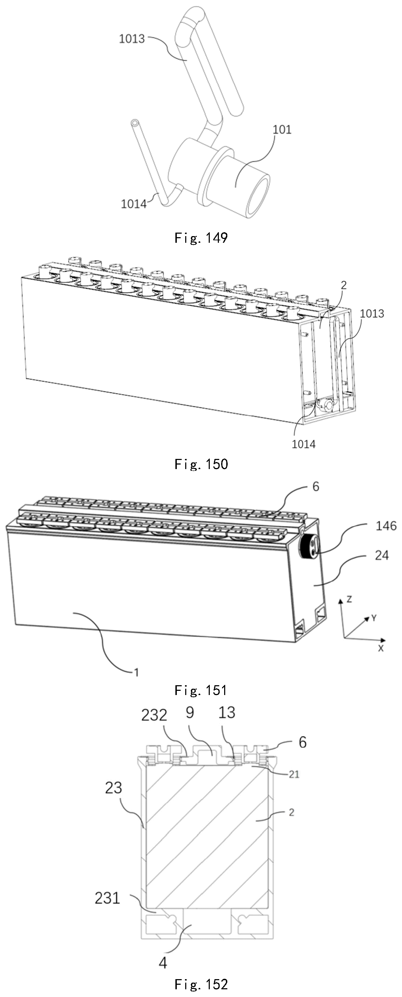

After the liquid injection and replacement member main body 1011 is fixed on the housing 1 of the lithium-ion battery, one end of the fourth channel 10113 is located outside the housing 1, and the other end thereof is located inside the housing 1 and is in communication with the gas region of the inner cavity of the housing 1. Specifically, the fourth channel 10113 may further be communicated with the gas region of the inner cavity of the housing 1 by a gas communication pipe 1014 (as shown in Fig. 149).

As shown in Fig. 150, it is a partial section view of a high-capacity battery in the present embodiment, different from the high-capacity battery in Embodiment 44, the above liquid injection and replacement and explosion venting member is used in the present embodiment, and the remaining structures are the same as those in Embodiment 44, therefore details are not described herein again.

Liquid injection and replacement processes in the present embodiment are described below:
when liquid injection is required, the operation may be performed by the following steps:
disassembling the explosion venting pipe member 102, and performing heating to melt the paraffin, and extracting liquid paraffin;
when there is a gas in the inner cavity of the housing 1, the gas overflows from the fourth channel 10113, so that it is easy to inject electrolyte into the inner cavity of the housing 1; and in order to ensure more smooth liquid injection, in this step, a gas extraction pipe may be inserted into the fourth channel 10113, an external gas extraction apparatus connected with the gas extraction pipe is started to perform gas extraction, so that a certain negative pressure is formed in the inner cavity of the housing 1;
then, stretching the electrolyte injection pipe into the third channel 10112, and injecting electrolyte, wherein during liquid injection, if the problem of difficulty in liquid injection occurs, the external gas extraction apparatus may be started, so that a certain negative pressure is formed in the inner cavity of the housing 1, and liquid injection is then performed;
after liquid replenishment is completed, pulling out the electrolyte injection pipe and the gas extraction pipe; and
then, pouring the liquid paraffin into the third channel 10112 and the fourth channel 10113, and after the paraffin solidifies, fixing the explosion venting pipe member 102 on the liquid injection and replacement member main body 1011.

When liquid replacement is required, the operation may be performed by the following steps:
disassembling the explosion venting pipe member 102, and performing heating to melt the paraffin, and extracting liquid paraffin;
stretching the electrolyte extraction pipe into the third channel 10112, extracting electrolyte; when the electrolyte cannot be extracted, inserting a gas injection pipe into the fourth channel 10113 to inject a protective gas into the inner cavity of the housing 1, so as to perform liquid extraction; after liquid extraction is completed, taking out the electrolyte extraction pipe and the gas injection pipe, stretching the electrolyte injection pipe into the third channel 10112, and injecting new electrolyte; and after liquid injection is completed, pulling out the electrolyte injection pipe; and
then, pouring the liquid paraffin into the third channel 10112 and the fourth channel 10113, and after the paraffin solidifies, fixing the explosion venting pipe member 102 on the liquid injection and replacement member main body 1011.

After the fourth channel 10113 is additionally provided, it is easier to perform the liquid injection or liquid replacement operation compared with Embodiment 44.

Embodiment 46 to Embodiment 47 provide a high-capacity battery assembly, including a high-capacity battery and a repair mechanism, wherein the high-capacity battery includes a housing and m battery cells that are arranged in the housing and are connected in parallel, and m>1; and the battery cells herein may be prismatic cells and may also be a plurality of commercially available pouch cells connected in parallel. The inner cavity of each battery cell includes an electrolyte region and a gas region.

For ease of description, the length direction of the housing is defined as an x direction, the width direction of the housing is defined as a y direction, and the height direction of the housing is defined as a z direction.

The housing is provided with an electrolyte sharing chamber and a gas chamber; the electrolyte sharing chamber is in communication with the electrolyte region of the inner cavity of each battery cell; the gas chamber is in communication with the gas region of the inner cavity of each battery cell; the repair mechanism is a functional interface, the functional interface includes a columnar body, a second explosion venting mechanism, a fourth blocking member and a fifth blocking member; a liquid channel, a gas channel and a second explosion venting channel are formed on the columnar body; one end port of the liquid channel is in communication with the electrolyte sharing chamber, and the other port is provided with the fourth blocking member; one end port of the gas channel is in communication with the gas chamber, and the other port is provided with the fifth blocking member; and one end port of the second explosion venting channel is in communication with the gas chamber, and the other port is provided with the second explosion venting mechanism.

The housing may use at least the following two structures:
the first structure includes a first cylinder body having two open ends (i.e., ports in the first cylinder body that are parallel to a yz plane are the open ends), and end plate assemblies respectively fixed at the two open ends of the first cylinder body (i.e., the end plate assemblies are parallel to the yz plane); and
on the housing of the first structure, the electrolyte sharing chamber may be located on a first cylinder body side plate (the side plate parallel to an xz plane) or a first cylinder body bottom plate, and the gas chamber may be located on the first cylinder side plate (the side plate parallel to the xz plane) or a first cylinder body top plate, and the functional interface may be located at any location of the housing, as long as corresponding functions may be implemented.

The second structure includes a second cylinder body having open ends at the top and bottom (i.e., ports in the second cylinder body that are parallel to an xy plane are the open ends), and an upper cover plate and a lower cover plate, which are respectively fixed at the open ends at the top and bottom of the second cylinder body (i.e., both the upper cover plate and the lower cover plate are parallel to the xy plane); and in the structure, a sidewall in the second cylinder body that is parallel to the yz plane is referred to as the end plate assembly.

On the housing of the second structure, the electrolyte sharing chamber may be located on a second cylinder body side plate (the side plate parallel to the xz plane) or the lower cover plate, the gas chamber may be located on the second cylinder body side plate (the side plate parallel to the xz plane) or the upper cover plate, and the functional interface may be located at any location of the housing, as long as corresponding functions may be implemented.

In the following embodiments, the first structure is mainly taken as an example for description.

It should be noted herein that the electrolyte sharing chamber is an electrolyte accommodating cavity, and after the electrolyte sharing chamber is in communication with the electrolyte region of the inner cavity of each battery cell, it is necessary to ensure that in the entire high-capacity battery, the electrolyte is not in contact with the external environment.

In order to improve the heat dissipation performance of such a high-capacity battery, an avoidance hole capable of enabling a polarity terminal of each battery cell to extend out is formed on the first cylinder body top plate; and the polarity terminal of each battery cell extends out from the avoidance hole, and a region of the first cylinder body top plate around the avoidance hole is fixed and sealed with a shell of the battery cell.

It should be noted that the polarity terminal of the battery cell herein may be an electrode terminal of the battery cell, in order to avoid the situation in which the electrode terminal of the battery cell serving as the polarity terminal cannot smoothly extend out from the avoidance hole, an electrode terminal adapter may further be connected to the electrode terminal of the battery cell, and an overall structure in which the electrode terminal of the battery cell cooperates with the electrode terminal adapter is used as the polarity terminal of the battery cell.

The functional interface may be located at any location of the housing, for example, the functional interface may be disposed on the sidewall of the first cylinder body that is parallel to the xz plane and may further be disposed on the end plate assembly. After a period of time of a charging and discharging cycle of the high-capacity battery, the electrolyte is reduced by decomposition and consumption, resulting in a reduction in the performance of the high-capacity battery, so that the pressure in the inner cavity of the housing may be changed by using the gas channel of the functional interface, and electrolyte is smoothly replenished into the inner cavity of the housing by the liquid channel, so as to improve the performance of the high-capacity battery; or, after a period of time of the charging and discharging cycle of the high-capacity battery, the performance of the high-capacity battery is affected by the occurrence of impurities in the electrolyte, so that the electrolyte in the inner cavity of the housing may also be replaced by the cooperation of the functional interface, so as to improve the performance of the high-capacity battery. The replacement herein may be partial replacement and may also be complete replacement. In addition, after the electrolyte region of the inner cavity of each battery cell is in communication with the electrolyte sharing chamber, electrolyte may be injected into the housing again by the cooperation of the functional interface, so as to ensure continuity of the electrolyte.

In order to enable the electrolyte sharing chamber to be communicated with the electrolyte region of the inner cavity of each battery cell and to enable the gas chamber to be communicated with the gas region of the inner cavity of each battery cell, it is necessary to unpack each battery cell. In the present embodiment, the battery cell is provided with a dissoluble assembly that is dissoluble in electrolyte, after the electrolyte dissolves the dissoluble assembly, a first opening for communicating the inner cavity of the battery cell with the electrolyte sharing chamber and a second opening for communicating the inner cavity of the battery cell with the gas chamber are formed on the battery cell. The dissoluble assembly may use a sealing film disclosed in the Chinese patents CN219144296U and CN218525645U.

Embodiment 46 to Embodiment 47 are described in detail below in combination with the drawings.

### Embodiment 46

As shown in Figs. 151-152, the high-capacity battery in the present embodiment includes a housing 1 and 10 battery cells 2 that are located in the housing 1 and are connected in parallel, wherein the battery cells 2 are prismatic cells. In other embodiments, the number of the battery cells 2 may be adjusted according to actual needs. Through holes penetrating through the inner cavity of each battery cell 2 are formed in the bottom and top of a shell of each battery cell 2.

The housing 1 includes a first cylinder body 23 having two open ends, and end plate assemblies 24 respectively fixed at the two open ends of the first cylinder body 23; and one of the end plate assemblies 24 is provided with a functional interface;
a first cylinder body bottom plate 231 is provided with an electrolyte sharing chamber 4 extending in the x direction; and the electrolyte sharing chamber 4 is in communication with the electrolyte region of the inner cavity of each battery cell 2 by the through hole of each battery cell 2.

A first cylinder body top plate 232 is provided with a gas chamber 9 extending in the x direction; and the gas chamber 9 is in communication with the gas region of the inner cavity of each battery cell 2 by the through hole of each battery cell 2.

An avoidance hole 13 capable of enabling the polarity terminal of each battery cell 2 to extend out is formed on the first cylinder body top plate 232; the polarity terminal of each battery cell 2 extends out from the avoidance hole 13, and a region of the first cylinder body top plate 232 around the avoidance hole 13 is fixed and sealed with the shell of the battery cell 2. It can be seen from the figures that in the present embodiment, the polarity terminal of the battery cell 2 refers to an overall structure in which the electrode terminal 21 of the battery cell cooperates with the electrode terminal adapter 6.

The functional interface 146 includes a columnar body 1461, a second explosion venting mechanism 1462, a fourth blocking member 1463 and a fifth blocking member 1464; a liquid channel 14611, a gas channel 14612 and a second explosion venting channel 14613 are formed on the columnar body 1461; one end port of the liquid channel 14611 is in communication with the electrolyte sharing chamber 4, and the other port is provided with the fourth blocking member 1463; one end port of the gas channel 14612 is in communication with the gas chamber 9, and the other port is provided with the fifth blocking member 1464; and one end port of the second explosion venting channel 14613 is in communication with the gas chamber 9, and the other port is provided with the second explosion venting mechanism 1462.

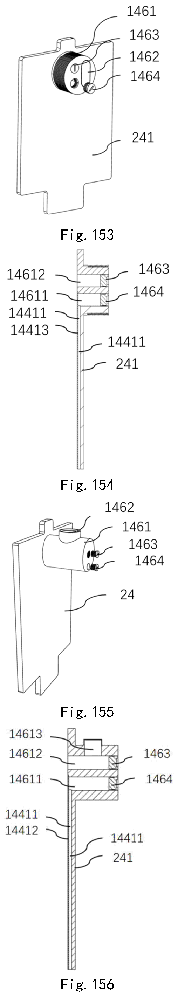

In combination with Fig. 153 and Fig. 154, in the present embodiment, the end plate assembly 24 provided with the functional interface 146 includes a first end sub-plate 241, which is sealed at one of the open ends of the first cylinder body 23, the electrolyte sharing chamber 4 and the gas chamber 9; and the first end sub-plate 241 is provided with a communication channel 14411, and the functional interface 146 is disposed on an outer surface of the first end sub-plate (the outer surface of the first end sub-plate refers to the surface of the first end sub-plate 241 that is away from each battery cell 2 in the first cylinder body 23); and it can be seen from the figures that in the present embodiment, the communication channel 14411 is a vertical through hole formed on the first end sub-plate 241, in order to facilitate the formation of the vertical through hole, a groove 14412 may be first formed on an inner surface of the first end sub-plate 241, and then the opening of the groove is covered with a blocking plate 14413 to form the vertical through hole.

When the functional interface 146 is disposed on the first end sub-plate 241 at a location close to the gas chamber 9, the communication channel 14411 is configured for communicating the liquid channel 14611 with the electrolyte sharing chamber 4, and when the functional interface 146 is disposed on the first end sub-plate 241 at a location close to the electrolyte sharing chamber 4, the communication channel 14411 is configured for communicating the gas channel 14612 with the gas chamber 9.

In some other embodiments, the communication channel may further be formed by casting or 3D printing during the process of fabricating the first end sub-plate 241.

The fourth blocking member 1463 and the fifth blocking member 1464 in the present embodiment are respectively plugs that are in threaded connection with the end portions of the liquid channel and the gas channel and are provided with external thread, and when the plugs are mounted, a sealant may further be disposed on a threaded connection portion, thereby improving the sealing performance of the portions.

In some other embodiments, the fourth blocking member 1463 and the fifth blocking member 1464 may further be plugs that are mounted in the liquid channel and the gas channel in an interference extrusion manner, but the disassembly is more difficult compared with the present embodiment.

In some other embodiments, the fourth blocking member 1463 and the fifth blocking member 1464 may further be blocking sheets for respectively sealing the gas channel and the liquid channel in a hot melting manner, but it is more cumbersome to seal and open the gas channel and the liquid channel in the blocking manner.

It should be noted that the liquid channel 14611, the gas channel 14612 and the second explosion venting channel 14613 may be three horizontal through holes independently formed on the columnar body; or as shown in Fig. 155 and Fig. 156, the liquid channel 14611 and the gas channel 14612 are each a separate horizontal through hole, the second explosion venting channel 14613 is a vertical hole formed on the columnar body, one end of the vertical hole is in communication with the gas channel or the liquid channel, and the other end of the vertical hole is provided with the second explosion explosion venting mechanism. The second explosion venting mechanism may be an explosion venting film or an explosion venting valve. In order to facilitate the manufacturing, the second explosion venting mechanism in the present embodiment is an explosion venting film, the explosion venting film may be mounted on the second explosion venting channel subsequently, and may also be a layer of weak region reserved on the port of the second explosion venting channel when the second explosion venting channel is processed.

Correspondingly, the other end plate assembly 24 (provided with no functional interface) in the present embodiment may be a flat plate, which seals the other open end of the first cylinder body 23, and meanwhile seals the open ends of the electrolyte sharing chamber 4 and the gas chamber 9.

When liquid injection is required, the operation may be performed by the following steps:
taking out the plugs disposed in the gas channel 14612 and the liquid channel 14611;
when there is a gas in the inner cavity of the housing 1, the gas overflows from the gas channel 14612, so that it is easy to inject electrolyte into the inner cavity of the housing 1 by the liquid channel; and in order to ensure more smooth liquid injection, in this step, a gas extraction pipe may be inserted into the gas channel 14612, an external gas extraction apparatus connected with the gas extraction pipe is started to perform gas extraction, so that a certain negative pressure is formed in the inner cavity of the housing 1;
then, stretching an electrolyte injection pipe into the liquid channel 14611, and injecting electrolyte; and
after liquid replenishment is completed, pulling out the electrolyte injection pipe and the gas extraction pipe; and sealing the plugs in the gas channel 14612 and the liquid channel 14611 again.

When liquid replacement is required, the operation may be performed by the following steps:
taking out the plugs disposed in the gas channel 14612 and the liquid channel 14611;
stretching an electrolyte extraction pipe into the liquid channel 14611 to directly extract electrolyte; when the electrolyte cannot be extracted, inserting a gas injection pipe into the gas channel 14612, so as to inject a protective gas into the inner cavity of the housing 1 to perform liquid extraction; after liquid extraction is completed, taking out the electrolyte extraction pipe and the gas injection pipe, stretching the electrolyte injection pipe into the liquid channel 14611, and injecting new electrolyte; and after liquid injection is completed, pulling out the electrolyte injection pipe; and
sealing the plugs in the gas channel 14612 and the liquid channel 14611 again.

### Embodiment 47

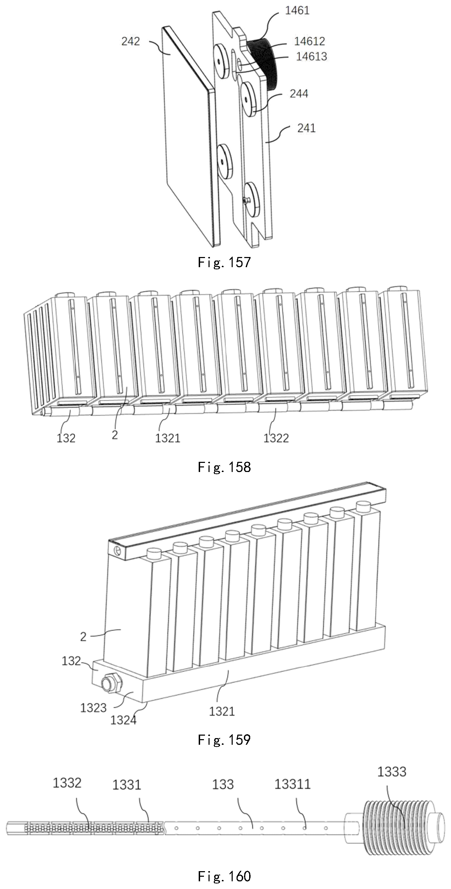

Different from Embodiment 46, as shown in Fig. 157, in the present embodiment, a second end sub-plate 243 is disposed between the first end sub-plate 241 and the outermost battery cell 2 in the housing 1, and the second end sub-plate 243 is tightly attached to the outermost battery cell 2 and is fixedly connected with the first end sub-plate 241.

By additionally providing the second end sub-plate 243, the size of the second end sub-plate 243 in the x direction may be adjusted to clamp all battery cells 2 in the x direction, thereby improving the stability of each battery cell 2 in the inner cavity of the housing 1, and avoiding the problem of reduced cycle performance of the high-capacity battery caused by the swelling of each battery cell 2.

In the present embodiment, the second end sub-plate 243 is fixed with the first end sub-plate 241 by a screw, and a gasket 244 may further be disposed between the first end sub-plate 241 and the second end sub-plate 243, and the head of the screw sequentially passes through the second end sub-plate 243 and the gasket 244 to be connected with the first end sub-plate 241. At this time, the thickness of the entire end plate assembly 24 may also be adjusted by adjusting the thickness (the size in the x direction) of the gasket 244, so as to clamp all battery cells 2.

### Embodiment 48

As shown in Fig. 158 and Fig. 159, the high-capacity battery in the present embodiment includes a battery pack main body and a hollow member 132. The battery pack main body includes a plurality of battery cells 2 arranged in an X direction, the number of the battery cells 2 may be adjusted according to actual needs, and the battery cells 2 are connected in parallel by electrical connectors. When the high-capacity battery is formed, an electrolyte cavity of each battery cell 2 is in communication with the hollow member 132.

In the present embodiment, it is taken as an example that the battery cell 2 is a prismatic cell, which includes a battery shell and an electrode assembly disposed in the battery shell, the battery shell includes an upper cover plate, a lower cover plate and a cylinder body, and the upper cover plate is provided with a positive electrode terminal and a negative electrode terminal for leading out the current of the battery cell 2. When each battery cell 2 is mounted with the hollow member 132, each battery cell 2 may be disposed outside the hollow member 132, that is, mounted in an external manner; and the connection between each battery cell 2 and the hollow member 132 is described in detail below.
1) As shown in Fig. 158, the battery cells 2 are spliced by sub-pipelines 1322 disposed on the lower cover plates of the battery cells 2, so as to form the hollow member 132, the inner cavity of the hollow member 132 forms a sharing chamber 1321 of the high-capacity battery, so that the battery cells 2 are located in the same electrolyte system, and the hollow member 132 of this structure may specifically refer to the patent CN219144456U;
2) the battery shell of each battery cell is provided with an opening, the hollow member is a main pipeline, the main pipeline is connected with the opening on the battery shell of each battery cell by a branch pipeline, the inner cavity of the hollow member 132 is a sharing chamber, so that the battery cells 2 are located in the same electrolyte system, and the hollow member 132 of this structure may specifically refer to the patent CN218957802U; and
3) as shown in Fig. 159, the hollow member 132 is of a split structure, which is mainly composed of a hollow box body 1323 having an opening at one end, and a cover plate 1324 for covering the opening; and in order to facilitate subsequent processing and assembly, the hollow box body 1323 having a rectangular cross section is preferably used. The hollow box body 1323 extends in the X direction, and is fixed on a cylinder body sidewall or the lower cover plate of each battery cell 2. A plurality of first through holes are formed on the sidewall of the hollow member 132 that is connected with each battery cell 2, the inner cavity of each battery cell 2 is in communication with the inner cavity of the hollow member 132 by the first through holes, the electrolyte in each battery cell 2 may enter the hollow member 132 from the opening and the first through holes on the cylinder body or the lower cover plate, and the inner cavity of the hollow member 132 is the sharing chamber 1321, so that the battery cells 2 are located in the same electrolyte system.

In the high-capacity battery, the electrolyte cavities of the battery cells 2 are communicated by the hollow member 132, so that the battery cells 2 are in a unified electrolyte system, thereby reducing the differences between the battery cells 2 and improving the consistency between the battery cells 2 to a certain extent, and thus prolonging the cycle life of the high-capacity battery. However, after the high-capacity battery is configured for a period of time, the capacity of the high-capacity battery is gradually attenuated along with the consumption of lithium ions, resulting in a limited cycle life of the high-capacity battery.

Based on this, a slow-release lithium replenishment apparatus 133 is added in the hollow member 132 in Embodiment 48 to Embodiment 49, when the slow-release lithium replenishment apparatus 133 is in contact with the electrolyte in the hollow member 132, the slow-release lithium replenishment apparatus 133 continuously and slowly replenishes lithium to the high-capacity battery, so that the lithium ions in the high-capacity battery are kept within a suitable range, thereby avoiding the problem of reduced performance of the high-capacity battery caused by too few or too many lithium ions.

As shown in Fig. 160, the slow-release lithium replenishment apparatus 133 provided in the present embodiment includes an outer shell 1331 and a lithium source disposed in the outer shell 1331. The outer shell 1331 is of a thin-walled structure, the lithium source is wrapped in the inner cavity thereof, and the wall thickness of the outer shell 1331 is as small as possible, and in the present embodiment, the wall thickness thereof is 1-3 mm. The shape of the outer shell 1331 is not required, and the outer shell 1331 specifically may be a circular sleeve structure and may also be rectangular thin-shell structure. The outer shell 1331 specifically is made of a material insoluble in electrolyte, and is preferably made of plastic insoluble in electrolyte taking the manufacturing cost into account, for example, is specifically made of PP, PE or PVC, etc.

In the present embodiment, the lithium source is lithium salt particles 1332, which may be partially filled in the outer shell 1331 and may also be completely filled in the outer shell 1331. When the lithium salt particles 1332 are completely filled in the inner cavity of the outer shell 1331, the lithium salt particles 1332 are tightly filled in the inner cavity of the outer shell 1331 in general, that is, the lithium salt particles 1332 are compacted and filled in the housing.

When the slow-release lithium replenishment apparatus 133 is in contact with the electrolyte, the electrolyte may only be in contact with the lithium salt particles 1332 in the outer shell 1331 by micropores 13311, that is, only the lithium salt particles 1332 at the micropores 13311 may be dissolved in the electrolyte to achieve lithium replenishment, and then the lithium salt at the micropores 13311 is gradually dissolved, so that lithium ions in the lithium salt are slowly released into the electrolyte, thereby compensating for active lithium lost during the use or storage of the high-capacity battery, and thus prolonging the cycle life of the high-capacity battery.

The lithium salt particles 1332 may be organic lithium salt particles and may also be inorganic lithium salt particles. In the present embodiment, the lithium salt particles are inorganic lithium salt particles that are difficult to be dissolved in the electrolyte, so that the slowly released lithium salt particles have a greater use amount and lower solubility in the electrolyte, and the lithium salt particles are gradually dissolved in the electrolyte along with the loss of active lithium during the use or storage of the high-capacity battery, the lithium ions slowly released by the lithium salt particles may continuously compensate for the loss of active lithium and repair an SEI film, thereby prolonging the cycle life of the high-capacity battery. When the lithium salt is an inorganic lithium salt, it is generally selected from lithium nitrate, lithium carbonate, lithium sulfate, lithium sulfite or lithium sulfide.

In the present embodiment, the outer shell 1331 is characterized in that a sidewall thereof is provided with at least one micropore 13311, and is preferably provided with a plurality of micropores 13311, the micropores 13311 are not required in terms of shape, and thus may be circular holes, square holes, elliptical holes or strip-shaped holes, etc. The sizes of the micropores 13311 are generally related to the speed at which the lithium salt particles 1332 release lithium ions, the smaller the sizes of the micropores 13311 are, the smaller the contact areas with the electrolyte are, and the slower the release speed of the lithium ions is. In addition, the sizes of the micropores 13311 on the outer shell 1331 are related to the solubility of the lithium salt, and if the solubility of the lithium salt in the electrolyte is relatively high, the micropores 13311 are made as small as possible, and if the solubility of the lithium salt in the electrolyte is relatively low, the sizes of the micropores 13311 may be slightly greater. In the present embodiment, the sizes of the micropores 13311 on the outer shell 1331 are generally millimeters, for example, may range from 0.5mm and 3mm.

When the slow-release lithium replenishment apparatus 133 is mounted, the entire slow-release lithium replenishment apparatus 133 may be placed in the inner cavity of the hollow member 132, or one end thereof is fixedly mounted on the hollow member 132, and one end thereof may also be detachably mounted on the hollow member 132, preferably, one end of the slow-release lithium replenishment apparatus 133 is detachably mounted on the hollow member 132. The slow-release lithium replenishment apparatus 133 of this structure may be replaced with a new slow-release lithium replenishment apparatus 133 after the lithium salt particles 1332 are consumed.

As shown in Fig. 160, when the slow-release lithium replenishment apparatus 133 is detachably connected with the hollow member 132, a sealing cover 1333 may be disposed at one end of the outer shell 1331, the sealing cover 1333 is provided with external threads, a through hole provided with internal threads is formed in a sidewall or an end portion of the hollow member 132, the sealing cover 1333 is in threaded connection with the through hole of the hollow member 132, and a sealing gasket may also be mounted at the threaded connection location for sealing.

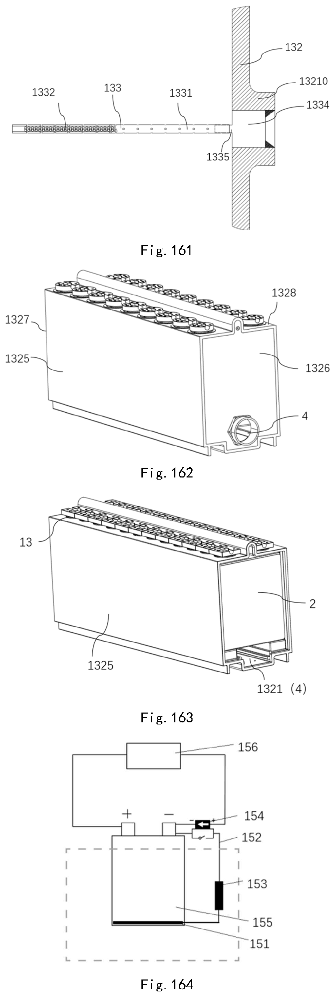

As shown in Fig. 161, when the slow-release lithium replenishment apparatus 133 is fixedly connected with the hollow member 132, the slow-release lithium replenishment apparatus 133 further includes a fixing block 1334, the fixing block 1334 is provided with a mounting column 1335, the outer shell 1331 is sleeved on the mounting column 1335, a sidewall or an end portion of the hollow member 132 is integrally provided with a mounting base 13210, the mounting base 13210 is provided with a through hole, the fixing block 35 of the slow-release lithium replenishment apparatus 133 is mounted in the through hole of the mounting base 13210 by interference fit, and then the fixing block 1334 is fixed with an inner wall of the through hole of the mounting base 13210 by welding.

In other embodiments, the entire slow-release lithium replenishment apparatus 133 is placed inside the hollow member 132 by the following operations: disassembling a plug or a valve on a liquid injection port of the hollow member 132, placing the slow-release lithium replenishment apparatus 133 in the electrolyte of the hollow member 132, and then sealing the liquid injection port by using the plug or the valve. When the lithium salt is in contact with the electrolyte in the hollow member 132 and dissolved in the electrolyte, the released lithium ions may compensate for the loss of active lithium.

### Embodiment 49

As shown in Fig. 162 and Fig. 163, the high-capacity battery in the present embodiment includes a battery pack main body and a hollow member 132. The battery pack main body includes a plurality of battery cells 2 arranged in an X direction, the number of the battery cells 2 may be adjusted according to actual capacity requirements, and the battery cells 2 are connected in parallel by electrical connectors. When the high-capacity battery is formed, an electrolyte cavity of each battery cell 2 is in communication with the hollow member 132.

In the present embodiment, it is taken as an example that the battery cell 2 is a prismatic cell, which includes a battery shell and an electrode assembly disposed in the battery shell, the battery shell includes an upper cover plate, a lower cover plate and a cylinder body, and the upper cover plate is provided with a positive electrode terminal and a negative electrode terminal for leading out the current of the battery cell 2. When each battery cell 2 is mounted with the hollow member 132, each battery cell 2 may be disposed inside the hollow member 132, that is, mounted in an internal manner. The mounting and connection of each battery cell 2 and the hollow member 132 are described in detail below.

As shown in Fig. 162 and Fig. 163, when each battery cell 2 is disposed inside the hollow member 132, the hollow member 132 is the housing of the entire battery pack main body, wherein the bottom of the hollow member 132 may be provided with an electrolyte sharing chamber 4. In the structure, the inner cavity of the hollow member 132 is a closed cavity, and after the battery pack main body is mounted on the hollow member 132, the sealing performance of the entire cavity needs to be ensured. Since the battery pack main body needs to be built in, the hollow member 132 is also of a split structure, and the specific structure thereof is as follows:
1) the hollow member includes a first cylinder body, an upper sealing cover and a lower sealing cover; both the top and the bottom of the first cylinder body are open, the upper sealing cover is sealed and fixed (welded) to the top of the first cylinder body, the lower sealing cover is sealed and fixed (welded) to the bottom of the first cylinder body, and the lower sealing cover is provided with a sharing chamber extending in an X direction;
2) the hollow member includes a first cylinder body, a front sealing cover and a rear sealing cover; the front and the rear first cylinder body are both open, the front sealing cover is sealed and fixed (welded) to the front of the first cylinder body, the rear sealing cover is sealed and fixed (welded) to the rear of the first cylinder body, and the bottom of the first cylinder body is provided with a sharing chamber extending in the X direction; and
3) as shown in Fig. 162 and Fig. 163, the hollow member 132 including a U-shaped shell 1325, a first cover plate 1326, a third cover plate 1327 and a second cover plate 1328; the first cover plate 1326 and the third cover plate 1327 respectively cover two opposite open ends of the U-shaped shell 1325; and the second cover plate 1328 covers an open end at the top of the U-shaped shell 1325 and is hermetically connected with the open end, and an avoidance hole 13 capable of enabling an electrode terminal of each battery cell 2 to extend out is formed on the second cover plate 1328. After each battery cell 2 is mounted in the hollow member 132, the electrode terminal of each battery cell 2 extends out from the avoidance hole 13, a housing region corresponding to the avoidance hole 13 is fixed and sealed with a battery shell of the battery cell 2, and specifically, the edge of the avoidance hole 13 may be welded with the battery shell of the battery cell 2 in a peripheral region of the electrode terminal to realize sealing. In addition, the U-shaped shell 1325 and the second cover plate 1328 may also be an integrated member, the integrated member is convenient to process and has a lower processing cost at the same time. The bottom of the U-shaped shell 1325 is provided with a sharing chamber 1321 extending in the X direction.

A slow-release lithium replenishment apparatus 133 is disposed in the sharing chamber 1321, and the slow-release lithium replenishment apparatus in the present embodiment has the same structure as the slow-release lithium replenishment apparatus in Embodiment 48. With the continuous working of the high-capacity battery, the slow-release lithium replenishment apparatus 133 may continuously and slowly replenish lithium to the high-capacity battery, thereby greatly reducing the capacity attenuation speed of the high-capacity battery due to the loss of lithium ions, and prolonging the service life of cyclic charging and discharging of the high-capacity battery.

In a charging and discharging process of the lithium-ion battery, lithium ions are embedded and disengaged between a positive electrode sheet and a negative electrode sheet back and forth, and the lithium ions are inevitably consumed due to structural changes of positive and negative electrode active materials, the decomposition of the electrolyte, the formation and destruction of a solid electrolyte interphase (SEI) film on the surface of the negative electrode active material, such that the capacity of the lithium-ion battery is continuously attenuated, and it is difficult to have a longer cycle life.

In order to overcome such problems, the positive electrode or negative electrode material is generally generally optimized to improve the active lithium in the lithium-ion battery in the prior art. However, such solutions need to adjust the preparation process of the positive and negative electrodes, so that the production cost of the entire battery is relatively high. In the prior art, there are also solutions of using lithium metal as a third electrode for lithium replenishment. However, the chemical properties of the lithium metal are very active, and thus are easy to react with moisture in the air, therefore requirements for the environment (air humidity, oxygen content, or the like) and devices in a lithium replenishment process are higher, and thus the process difficulty is increased. Meanwhile, lithium powder is prone to floating in the air, further resulting in a higher safety risk in the lithium replenishment process. In addition, when lithium is directly replenished on the basis of the lithium metal, the problems such as lithium precipitation on the interface of the negative electrode, and even a short circuit inside the battery caused by excessive lithium replenishment may occur easily.

In Embodiment 50 to Embodiment 54, a lithium source is disposed in the battery, and the lithium source is controlled to generate current between the lithium source and the negative electrode of the battery for lithium replenishment only during the discharging of the battery, and does not perform lithium replenishment on the battery during the discharging and resting of the battery, and automatic lithium replenishment during the discharging may be implemented without requiring additional manual operations after a lithium replenishment apparatus is mounted.

The shape of the lithium source may be set according to requirements, the shape thereof should adapt to the shape of a corresponding mounting space in the lithium-ion battery in general, and a flaky (which may also referred to as being platelike) or a columnar (which may also referred to as being strip-shaped or band shaped) lithium source is generally selected. The lithium source includes a lithium metal layer, and a metal carrier, which is located between the lithium metal layer and a shell and is configured for supporting the lithium metal layer. The material of the metal carrier is not specifically limited. As an example, the material of the metal carrier may be selected from copper, copper alloy, nickel, nickel alloy, titanium, titanium alloy, silver, silver alloy or stainless steel. Optionally, the material of the metal carrier is selected from copper, copper alloy or stainless steel. The shape of the metal carrier is not specifically limited, and may be selected according to actual needs. The lithium metal layer may be disposed on the surface of the metal carrier by rolling.

Embodiment 50 to Embodiment 54 are further described below in combination with the drawings.

### Embodiment 50

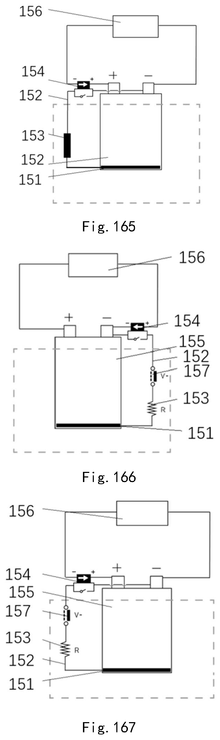

As shown in Fig. 164 and Fig. 165, the present embodiment provides an automatic lithium replenishment apparatus, the automatic lithium replenishment apparatus includes a lithium source 151, a lithium replenishment wire 152, a resistor 153 and an inductive switch 154, and the automatic lithium replenishment apparatus is applied to a prismatic lithium-ion battery cell 155 in the present embodiment;
the lithium source 151 is disposed in the inner cavity of the prismatic lithium-ion battery cell 155, and the lithium source 151 may be fixed on one side of an electrode assembly of the prismatic lithium-ion battery cell 155 in a vertical placement manner (i.e., the lithium source is parallel to a sidewall of a housing of the prismatic lithium-ion battery cell), and may also be fixed between the electrode assembly of the prismatic lithium-ion battery cell 155 and the bottom of the housing of the prismatic lithium-ion battery cell 155 in a horizontal placement manner, and it should be noted that the lithium source 151 needs to be immersed in electrolyte; and
specifically, in the present embodiment, the lithium source 151 includes two copper mesh layers, and a metal lithium layer disposed between the two copper mesh layers. In some other embodiments, the lithium source is composed of a layer of copper foil and a metal lithium layer disposed on the copper foil. However, compared with the lithium source structure in the present embodiment in which the two copper mesh layers clamp one metal lithium layer, the lithium source structure has higher stability.

One end of the lithium replenishment wire 152 extends into the prismatic lithium-ion battery cell 155 and is electrically connected with the lithium source 151, the other end thereof extends out from the prismatic lithium-ion battery cell 155 and is connected with the negative electrode of the prismatic lithium-ion battery cell 155, and the inductive switch 154 and the resistor 153 are sequentially disposed between the negative electrode and the lithium source 151 on the portion of the lithium replenishment wire 152 that is located outside the prismatic lithium-ion battery cell 155; and
the inductive switch 154 is configured for detecting a discharging electrical signal of the prismatic lithium-ion battery cell 155, and then triggering a normally open switch to be turned on, so that the lithium replenishment wire 152 is turned on or turned off.

Specifically, in the present embodiment, the inductive switch 154 is a current inductive switch, and the current inductive switch is configured for detecting the direction of current on a connecting cable between the prismatic lithium-ion battery cell 155 and an external load 156; as shown in Fig. 164 and Fig. 165, the current inductive switch may be configured for detecting the direction of the current on the connecting cable between the negative electrode of the prismatic lithium-ion battery cell 155 and the external load 156 (the direction of the arrow in Fig. 164 is the direction of the current during discharging, and the current inductive switch is turned on), and may also be configured for detecting the direction of the current of the connecting cable between the positive electrode of the prismatic lithium-ion battery cell and the external load (the direction of the arrow in Fig. 165 is the direction of the current during discharging, and the current inductive switch is turned on).

Specifically, the resistor 153 may adjust the magnitude of a resistance value according to requirements for the magnitude of lithium replenishment current. According to requirements, the resistor 153 with a suitable resistance value may be selected and mounted on the lithium replenishment wire 152, and a sliding rheostat may also be directly selected, and for ease of adjustment, the sliding rheostat is preferably selected as the resistor in the present embodiment.

### Embodiment 51

After the prismatic lithium-ion battery cell is configured for a long time, the internal resistance of the lithium source 151 and the battery are gradually increased, therefore the lithium replenishment current generated merely depending on a potential difference between the negative electrode and the lithium source 151 is gradually decreased, resulting in a worse lithium replenishment effect. Therefore, a lithium replenishment power supply 157 is added in the present embodiment on the basis of Embodiment 50. As shown in Fig. 166 and Fig. 167, the lithium replenishment power supply 157 is disposed on the lithium replenishment wire 152 and is located between the current inductive switch and the resistor 153. In a lithium replenishment process, the lithium replenishment power supply 157 may provide a voltage between the negative electrode and the lithium source 151, so that the lithium replenishment current may always remain unchanged.

In order to prove the lithium replenishment effect of the automatic lithium replenishment apparatus, three 24Ah prismatic lithium iron phosphate batteries produced by the same manufacturer in the same batch are taken to perform the following experiments in the present embodiment:
one 24Ah prismatic lithium iron phosphate battery is used as a comparative sample (the initial capacity of the battery is 23.01Ah), and the other two 24Ah prismatic lithium iron phosphate batteries are modified into prismatic lithium-ion battery cells having automatic lithium replenishment apparatuses, so as to serve as a discharging lithium replenishment sample (the initial capacity of the battery is 22.46Ah) and a charging lithium replenishment sample (the initial capacity of the battery is 23.36Ah); and
the specific modification process of the discharging lithium replenishment sample and the charging lithium replenishment sample is as follows: the bottom of the shell of the 24Ah prismatic lithium iron phosphate battery is opened in a glove box, a lithium source (the mass of the lithium metal layer is 2-3g) is placed at the bottom, one end of the lithium replenishment wire is connected with the lithium source, the other end thereof is led out to be connected with the negative electrode of the 24Ah prismatic lithium iron phosphate battery, and then the shell of the battery is sealed.

A charging and discharging instrument is used as a load connected with the battery;
regarding the comparative sample, only the 24Ah prismatic lithium iron phosphate battery is connected with the charging and discharging instrument to execute normal charging and discharging;
the test process of the discharging lithium replenishment sample is:
   the current inductive switch is connected to a lithium replenishment cable between the lithium source and the negative electrode of the prismatic lithium-ion battery cell to be subjected to lithium replenishment, and the current inductive switch is bound to a connecting cable of the charging and discharging instrument for sensing the direction of current on the connecting cable;
   a voltage is applied between the negative electrode of the prismatic lithium-ion battery cell to be subjected to lithium replenishment and the lithium source by using the lithium replenishment power supply, and the lithium replenishment current is controlled to be 1mA all the time; and
   when the current inductive switch of the discharging lithium replenishment sample senses discharging, the lithium replenishment wire is turned on, and lithium replenishment is started.

The test process of charging lithium replenishment sample is:
the current inductive switch is connected to the lithium replenishment cable between the lithium source and the negative electrode of the prismatic lithium-ion battery cell to be subjected to lithium replenishment, and the current inductive switch is bound to the connecting cable of the charging and discharging instrument for sensing the direction of current on the connecting cable;
a voltage is applied between the negative electrode of the prismatic lithium-ion battery cell to be subjected to lithium replenishment and the lithium source by using the lithium replenishment power supply, and the lithium replenishment current is controlled to be 1mA all the time; and
when the current inductive switch of the charging lithium replenishment sample senses charging, the lithium replenishment wire is turned on, and lithium replenishment is started.

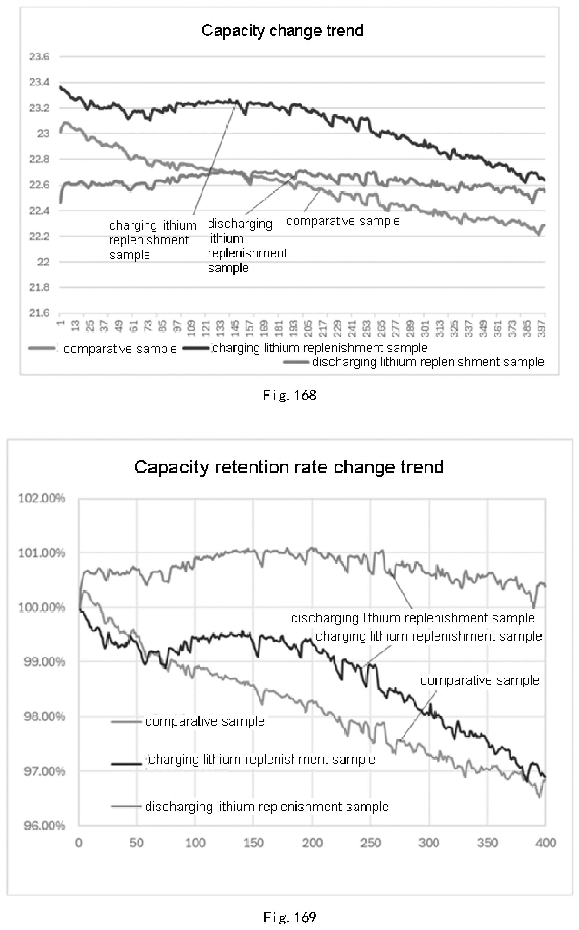

As can be seen from Fig. 168, under the same 400 cycles, it may be discovered by comparing the comparative sample, the charging lithium replenishment sample and the discharging lithium replenishment sample that, although the initial capacity of the discharging lithium replenishment sample is the lowest, the initial capacity of the discharging lithium replenishment sample is always in an ascending trend after the 400 cycles, while the capacity of the comparative sample and the capacity of the charging lithium replenishment sample are always in a descending trend, and moreover, the capacity descending trend of the comparative sample is greater than the capacity descending trend of the charging lithium replenishment sample.

As can be seen from Fig. 168, under the same 400 cycles, it may be discovered by comparing the comparative sample, the charging lithium replenishment sample and the discharging lithium replenishment sample that, the slope of the capacity retention rate of the discharging lithium replenishment sample remains basically unchanged, while the slopes of the capacity retention rates of the comparative sample and the charging lithium replenishment sample are always in a descending trend.

Thus, it can be seen that the lithium replenishment effect of lithium replenishment during discharging is optimal from the perspectives of capacity and capacity retention rate.

### Embodiment 52

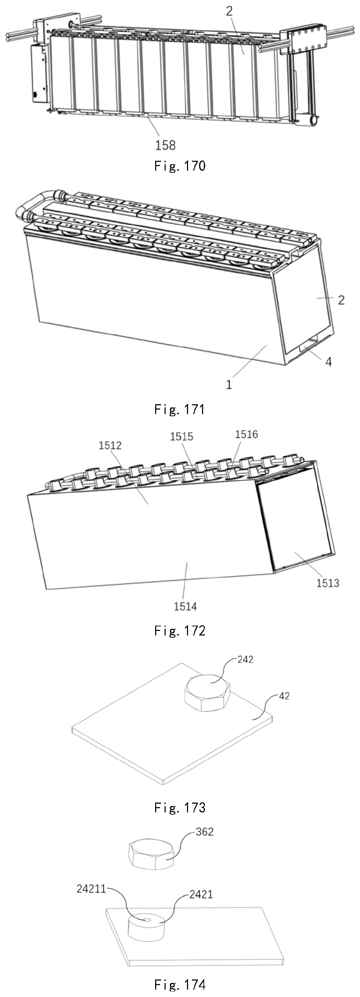

The present embodiment provides a solution for applying the automatic lithium replenishment apparatus to a first high-capacity battery. As shown in Fig. 170, the first high-capacity battery includes a hollow pipe fitting 158 and a plurality of battery cells 2;
the plurality of battery cells 2 are placed side by side, positive terminals of all battery cells 2 are connected as a total positive electrode, and negative terminals of all battery cells 2 are connected as a total negative electrode; specifically, the positive terminals of all battery cells 2 and the negative terminals of all battery cells 2 are all connected by using copper or aluminum electrical connecting plates; and
the hollow pipe fitting 158 communicates electrolyte regions of the inner cavities of the battery cells 2, so that the battery cells 2 are in a unified electrolyte system; the hollow pipe fitting 158 may be a complete circular or rectangular pipe; and the hollow pipe fitting 158 may further be formed by splicing the sub-pipelines on the battery cells 2 by extrusion.

The lithium source of the automatic lithium replenishment apparatus is placed in the hollow pipe fitting 158; and
one end of the lithium replenishment wire extends into the hollow pipe fitting to be connected with the lithium source, the other end of the lithium replenishment wire extends out from the hollow pipe fitting to be connected with the total negative electrode, the inductive switch and the resistor are sequentially disposed between the total negative electrode and the lithium source on the lithium replenishment wire outside the hollow pipe fitting, and the inductive switch is configured for detecting the discharging electrical signal of the high-capacity battery.

### Embodiment 53

The present embodiment provides a solution for applying the automatic lithium replenishment apparatus to a second high-capacity battery. As shown in Fig. 171, the automatic lithium replenishment apparatus serves as a repair mechanism of such a high-capacity battery, and the second high-capacity battery includes a housing 1 and a plurality of battery cells 2; the plurality of battery cells 2 are arranged in a housing 1 in the same direction; an electrolyte sharing chamber 4 is disposed in the housing 1, and the electrolyte sharing chamber 4 communicates the electrolyte regions of the inner cavities of all battery cells 2;
an avoidance hole is formed on a top plate of the housing 1 at a location corresponding to the polarity terminal of each battery cell 2; the polarity terminal of each battery cell 2 extends out from the avoidance hole, and a region of the top plate of the housing 1 corresponding to the avoidance hole is fixed and sealed with a shell of the battery cell 2; and the fixing and sealing manner herein is:
generally, the region of the top plate of the housing around the avoidance hole may be directly welded with the shell of the battery cell for sealing.

However, when the sizes of the battery cells in the height direction are not completely equal, the shells of some battery cells having smaller sizes in the height direction and the top plate of the housing of the high-capacity battery cannot be welded due to the presence of pseudo welding, and thus it is difficult to ensure the sealing performance at the location of the avoidance hole.

In order to overcome such problems, a weak portion may be disposed in a peripheral region of the avoidance hole, differences between the sizes of the battery cells in the height direction are compensated for by the deformation of the weak portion during welding, so that the region of the top plate of the housing at the periphery of the avoidance hole is hermetically welded with the shells of the battery cells. The weak portion may be an annular groove formed in the peripheral region of the avoidance hole by taking the center of the avoidance hole as a center point. The weak portion may further be a strip-shaped groove formed in the peripheral region of the avoidance hole.

The positive terminals of all battery cells are connected as a total positive electrode, and the negative terminals of all battery cells are connected as a total negative electrode;
the lithium source of the automatic lithium replenishment apparatus is placed in the electrolyte sharing chamber; and
one end of the lithium replenishment wire extends into the housing to be connected with the lithium source, the other end of the lithium replenishment wire extends out from the housing to be connected with the total negative electrode, the inductive switch and the resistor are sequentially disposed between the total negative electrode and the lithium source on the lithium replenishment wire outside the housing, and the inductive switch is configured for detecting the discharging electrical signal of the high-capacity battery.

### Embodiment 54

The present embodiment provides a solution for applying the automatic lithium replenishment apparatus to a third high-capacity battery. As shown in Fig. 172, the third high-capacity battery includes an outer box 1512 and a plurality of bare battery cells 1513; the outer box 1512 includes a shell 1514 having an open end, and an upper cover plate 1515; the upper cover plate 1515 is provided with electrode terminals 1516 corresponding to tabs of the bare battery cells 1513; the plurality of bare battery cells 1513 are disposed side by side in the shell 1514, the upper cover plate 1515 is sealed and fixed at the open end of the shell 1514, and the tab of each bare battery cell 1513 is connected with the corresponding electrode terminal 1516; and all electrode terminals, which are connected with positive tabs of the bare battery cells 1513, are connected as a total positive electrode, and all electrode terminals, which are connected with negative tabs of the bare battery cells 1513, are connected as a total negative electrode; and
the lithium source of the automatic lithium replenishment apparatus is placed in the electrolyte sharing chamber; and one end of the lithium replenishment wire extends into the housing to be connected with the lithium source, the other end of the lithium replenishment wire extends out from the housing to be connected with the total negative electrode, the inductive switch and the resistor are sequentially disposed between the total negative electrode and the lithium source on the lithium replenishment wire outside housing, and the inductive switch is configured for detecting the discharging electrical signal of the high-capacity battery.

Embodiment 55 to Embodiment 61 provide a liquid injection and replacement member, which is applied to a lithium-ion battery. The liquid injection and replacement member is mainly composed of a liquid injection and replacement member main body and a blocking member; the liquid injection and replacement member main body is fixed on a housing of the lithium-ion battery, and a first channel penetrating through the inner cavity of the housing is formed on the liquid injection and replacement member main body; the blocking member is configured for blocking the first channel from the outer side of the housing.

After a period of time of a charging and discharging cycle of the lithium-ion battery, electrolyte is reduced by decomposition and consumption, resulting in a reduction in the performance, so that the blocking member may be opened, and then electrolyte is replenished into the inner cavity of the housing from the first channel on the liquid injection and replacement member main body, so as to improve the performance of the lithium-ion battery; or, after a period of time of the charging and discharging cycle of the lithium-ion battery, the performance of the lithium-ion battery is affected by the occurrence of impurities in the electrolyte, so that the electrolyte in the inner cavity of the housing may also be replaced by the liquid injection and replacement member, so as to improve the performance of the lithium-ion battery. The replacement herein may be partial replacement and may also be complete replacement. After the liquid replenishment or liquid replacement operation is completed, the first channel is blocked from the outer side of the housing by using the blocking member, so that the operation is simple and convenient.

It should be noted that the lithium-ion battery may be a lithium-ion battery cell, and may also be a lithium-ion battery module having a housing.

If the lithium-ion battery is a lithium-ion battery cell, the liquid injection-replacement member may be fixed at any location on a housing of the lithium-ion battery cell, and preferably, the liquid injection-replacement member is fixed on a liquid injection port of the lithium-ion battery cell, so as to implement the function of replenishing electrolyte or replacing the electrolyte.

If the lithium-ion battery is a lithium-ion battery module, the liquid injection and replacement member may also be fixed at any location of a housing of the lithium-ion battery module, and on the basis of the liquid injection and replacement member, electrolyte may be replenished into the inner cavity of the housing or the electrolyte in the inner cavity of the housing may be replaced.

For example, a lithium-ion battery module applicable to the following structure is described below:
such a lithium-ion battery module includes a housing and m battery cells that are arranged in the housing and are connected in parallel, and m>1; and the battery cells herein may be prismatic cells and may also be a plurality of commercially available pouch cells connected in parallel. The inner cavity of each battery cell includes an electrolyte region and a gas region.

The housing is provided with an electrolyte sharing chamber; and the electrolyte sharing chamber is in communication with the electrolyte region of the inner cavity of each battery cell.

It should be noted herein that the electrolyte sharing chamber is an electrolyte accommodating cavity, and after the electrolyte sharing chamber is in communication with the electrolyte region of the inner cavity of each battery cell, it is necessary to ensure that in the entire lithium-ion battery module, the electrolyte is not in contact with the external environment.

The housing may further be provided with a gas chamber, and the gas chamber covers a gas port at the top of each battery cell in the lithium-ion battery module. It should be noted that the gas port herein includes the following two meanings:
1) the gas port is a through hole, which is directly formed on an upper cover plate of each battery cell and penetrates through the inner cavity of the battery cell; and
   at this time, the inner cavity of the gas chamber is in communication with the gas region of the inner cavity of each battery cell by the gas port, the gas chamber serves as a gas sharing chamber of the battery cells, the gas regions of the battery cells may be communicated on the basis of the gas chamber to achieve a gas balance, so that gases in the battery cells are shared to ensure the consistency of the battery cells, thereby prolonging the cycle life of the high-capacity battery to a certain degree; and when thermal runaway occurs in any battery cell, a flue gas in the inner cavity of the battery cell enters the gas chamber, and is discharged from the gas chamber, thereby improving the safety of the lithium-ion battery module.
2) The gas port is an explosion venting port or an explosion-proof port disposed on the upper cover plate of each battery cell, and an explosion venting film is disposed at the explosion venting port or the explosion-proof port; and
   at this time, the gas chamber serves as a first explosion venting channel, and when the explosion venting film at the gas port of any battery cell is broken through by the flue gas in the inner cavity, the flue gas in the inner cavity of the battery cell is discharged from the gas chamber, thereby improving the safety of the lithium-ion battery module.

In order to improve the heat dissipation performance of such a lithium-ion battery module, an avoidance hole capable of enabling a polarity terminal of each battery cell to extend out is formed on the housing; and the polarity terminal of each battery cell extends out from the avoidance hole, and a region of a cylinder body top plate around the avoidance hole is fixed and sealed with a shell of the battery cell.

It should be noted that the polarity terminal of the battery cell herein may be an electrode terminal of the battery cell, in order to avoid the situation in which the electrode terminal of the battery cell serving as the polarity terminal cannot smoothly extend out from the avoidance hole, an electrode terminal adapter may further be connected to the electrode terminal of the battery cell, and an overall structure in which the electrode terminal of the battery cell cooperates with the electrode terminal adapter is used as the polarity terminal of the battery cell.

The liquid injection and replacement member may be fixed at any location of the housing of the lithium-ion battery module, for example, the liquid injection and replacement member may be disposed on four sidewalls of the housing, or disposed on a housing top plate or a housing bottom plate. For such a high-capacity battery, after the electrolyte region of the inner cavity of each battery cell is in communication with the electrolyte sharing chamber, electrolyte may further be injected into the inner cavity of each battery cell and the electrolyte sharing chamber again by the liquid injection and replacement member, so as to ensure continuity of the electrolyte.

Embodiment 55 to Embodiment 61 are described in detail below in combination with the drawings.

### Embodiment 55

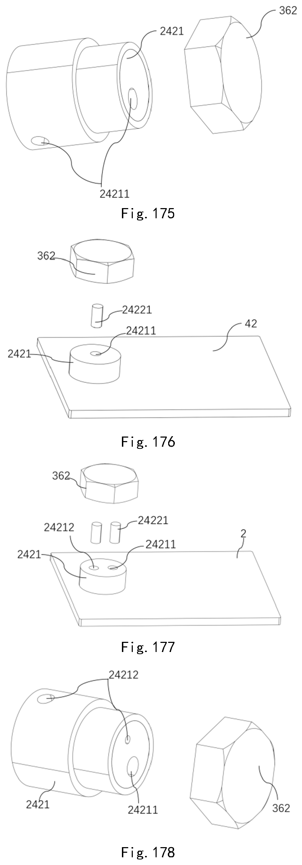

As shown in Fig. 173, it is a schematic structural diagram in the present embodiment in which a liquid injection and replacement member 242 is fixed on a housing 42 of the lithium-ion battery. Referring to Fig. 174, the liquid injection and replacement member 242 in the present embodiment includes a liquid injection and replacement member main body 2421, and a blocking member fixed on the liquid injection and replacement member main body 2421; the liquid injection and replacement member main body 2421 is fixed on the housing 42 of the lithium-ion battery; in the present embodiment, the liquid injection and replacement member main body 2421 is a cylinder, and in some other embodiments, a rectangular column, a semi-cylinder or the like may further be selected; and a through hole is formed on the liquid injection and replacement member main body 2421 to serve as a first channel 24211, and the first channel 24211 may be a straight through hole as shown in Fig. 174, and may also be an L-shaped through hole as shown in Fig. 175, as long as it is ensured that by means of the first channel 24211, electrolyte may be injected into the inner cavity of the housing or the electrolyte in the inner cavity of the housing may be extracted.

The blocking member in the present embodiment is a cover cap 362 (which may be a nut), which is buckled on the liquid injection and replacement member main body 2421, and is in threaded connection with the liquid injection and replacement member main body 2421, and a sealing ring may be disposed at a threaded connection portion to improve the sealing performance of the location and to block the first channel 24211.

In some other embodiments, the cover cap 362 may further be connected with the liquid injection and replacement member main body 2421 in an interference fit manner, but the disassembly is more difficult compared with the present embodiment.

In some other embodiments, as shown in Fig. 176, the cover cap 362 may further be an elastic blocking column 24221 filled in the first channel 24211, so as to further ensure the sealing performance of the first channel 24211. The elastic blocking column 24221 may be made of a rubber material that does not react with the electrolyte, for example, fluororubber, nitrile rubber, natural rubber or ethylene propylene diene monomer rubber, etc.

The elastic blocking column 24221 and the cover cap 362 may be cooperatively used as the blocking member, so as to improve the sealing effect of the blocking member on the first channel 24211.

In the present embodiment, when liquid replenishment is required, the operation may be performed by the following steps:
disassembling the cover cap 362;
stretching an electrolyte injection pipe into the first channel 24211, injecting electrolyte, and after liquid replenishment is completed, pulling out the electrolyte injection pipe; and
sealing and fixing the cover cap 362 on the liquid injection and replacement member main body 2421 to block the first channel 24211.

When liquid replacement is required, the operation may be performed by the following steps:
disassembling the cover cap 362;
stretching an electrolyte extraction pipe into the first channel 24211, and extracting the electrolyte; then, stretching the electrolyte injection pipe into the first channel 24211, and injecting new electrolyte; and after liquid injection is completed, pulling out the electrolyte injection pipe; and
sealing and fixing the cover cap 362 on the liquid injection and replacement member main body 2421 to block the first channel 24211.

It should be noted that in the present embodiment, during liquid injection, if the pressure in the inner cavity of the housing is too large, the problem of difficulty in liquid injection may occur.

### Embodiment 56

On the basis of Embodiment 55, in the present embodiment, a second channel 24212 is formed on the liquid injection and replacement member main body 2421, which is specifically as shown in Fig. 177 and Fig. 178.

In the present embodiment, another through hole is formed on the liquid injection and replacement member main body 2421 to serve as the second channel 24212, the second channel 24212 may be a straight through hole as shown in Fig. 177 and may also be an L-shaped through hole as shown in Fig. 178, as long as it is ensured that by means of the second channel 24212, a protective gas may be injected into the inner cavity of the housing or the gas in the inner cavity of the housing may be discharged.

The blocking member is further configured for blocking the second channel 24212.

As shown in Fig. 177, in the present embodiment, in addition to the cover cap 362 buckled on the liquid injection and replacement member main body 2421, the blocking member further includes elastic blocking columns 24221 sealed in the first channel 24211 and the second channel 24212, so as to ensure that the liquid injection and replacement member 242 has better sealing performance in a normal charging and discharging cycle process.

When liquid replenishment is required, the operation may be performed by the following steps:
disassembling the cover cap 362, and taking out the elastic blocking columns 24221 sealed in the first channel 24211 and the second channel 24212;
when there is a gas in the inner cavity of the housing, the gas overflows from the second channel 24212, so that it is easy to inject electrolyte into the inner cavity of the housing; and in order to ensure more smooth liquid injection, in this step, a gas extraction pipe may be inserted into the second channel 24212, an external gas extraction apparatus connected with the gas extraction pipe is started to perform gas extraction, so that a certain negative pressure is formed in the inner cavity of the housing;
then, stretching the electrolyte injection pipe into the first channel 24211, and injecting electrolyte, wherein during liquid injection, if the problem of difficulty in liquid injection occurs, the external gas extraction apparatus may be started, so that a certain negative pressure is formed in the inner cavity of the housing, and liquid injection is then performed; and
after liquid replenishment is completed, pulling out the electrolyte injection pipe and the gas extraction pipe; and sealing the elastic blocking columns 24221 in the first channel 24211 and the second channel 24212, and then sealing and fixing the cover cap 362 on the liquid injection and replacement member main body 2421.

When liquid replacement is required, the operation may be performed by the following steps:
disassembling the cover cap 362, and taking out the elastic blocking columns 24221 sealed in the first channel 24211 and the second channel 24212;
stretching the electrolyte extraction pipe into the first channel 24211, and extracting electrolyte; when the electrolyte cannot be extracted, inserting a gas injection pipe into the second channel 24212 to inject a protective gas into the inner cavity of the housing 1, so as to perform liquid extraction; after liquid extraction is completed, taking out the electrolyte extraction pipe and the gas injection pipe, stretching the electrolyte injection pipe into the first channel 24211, and injecting new electrolyte; and after liquid injection is completed, pulling out the electrolyte injection pipe; and
sealing the elastic blocking columns 24221 in the first channel 24211 and the second channel 24212, and then the sealing and fixing the cover cap 362 on the liquid injection and replacement member main body 2421.

Compared with Embodiment 55, in the present embodiment, during liquid extraction and liquid injection, by means of the second channel 24212, a gas is injected into the inner cavity of the housing or the gas in the inner cavity of the housing 1 is discharged, so that liquid injection and replacement operations may be better implemented.

### Embodiment 57

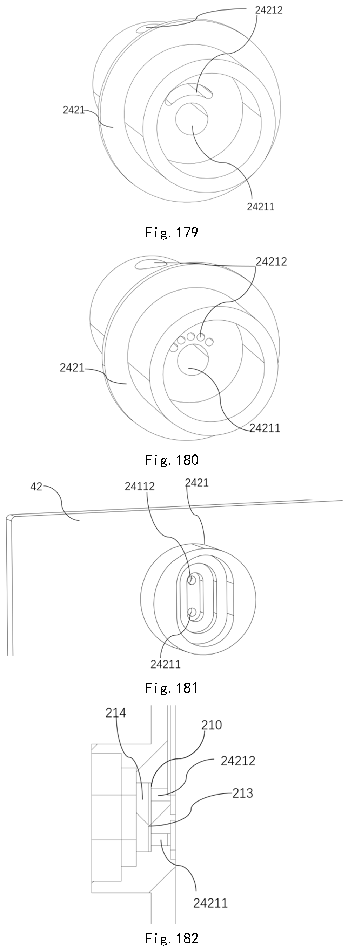

Different from Embodiment 56, as shown in Fig. 179, the second channel 24212 in the present embodiment is an L-shaped through hole, which includes a horizontal through hole and a vertical through hole, wherein the horizontal through hole is formed in the axial direction of the liquid injection and replacement member main body 2421, and the longitudinal cross section thereof is in a fan ring shape, and the fan ring shape is concentric with the first channel 24211. Compared with Embodiment 56, under the condition that the second channel 24212 has the same open area, requirements for the radial size of the liquid injection and replacement member main body 2421 are smaller, and a gas inlet or outlet channel having the maximum open area may be formed on the liquid injection and replacement member main body 2421 having a limited volume, thereby further reducing the difficulty in liquid extraction or liquid injection.

### Embodiment 58

Different from Embodiment 56, as shown in Fig. 180, the second channel 24212 in the present embodiment includes a horizontal through hole group and a vertical through hole, which penetrate through each other, wherein the horizontal through hole group is formed in the axial direction of the liquid injection and replacement member main body 2421, the horizontal through hole group is composed of a plurality of through holes in communication with the vertical through hole, and the plurality of through holes are arranged along the same circumference.

Similar to the fan ring shape, in the present embodiment, under the condition that the second channel 24212 has the same open area, requirements for the radial size of the liquid injection and replacement member main body 2421 are smaller, and a gas inlet or outlet channel having the maximum open area may be formed on the liquid injection and replacement member main body 2421 having a limited volume, thereby further reducing the difficulty in liquid extraction or liquid injection.

### Embodiment 59

Different from the above embodiments, the blocking member in the present embodiment includes a sealing plate 213 and a first hot melting member 214; and the first channel 24211, or the first channel 24211 and the second channel 24212 on the liquid injection and replacement member main body 2421 are blocked in a hot melting manner, and it is taken as an example for description below that the first channel 24211 and the second channel 24212 on the liquid injection and replacement member main body 2421 are blocked:
as shown in Fig. 181, in the present embodiment, coaxial multi-stage stepped holes are formed on the liquid injection and replacement member main body 2421, and the multi-stage stepped holes penetrate through the first channel 24211 and the second channel 24212; in the present embodiment, three-stage stepped holes are taken as an example, when leaving factory, as shown in Fig. 182, in the present embodiment, the sealing plate 213 may be only disposed on a first-stage step surface 210 (the step surface closest to the first channel 24211 and the second channel 24212 is defined as the first-stage step surface 210, the step surface farthest from the first channel 24211 and the second channel 24212 is defined as a third-stage step surface 212, the step surface located at the middle is defined as a second-stage step surface 211), and the first channel 24211 and the second channel 24212 are preliminarily sealed by using the sealing plate 213; then, a hot melting material is poured into a first-stage through hole having the sealing plate 213 in the hot melting manner to form the first hot melting member 214 after the hot melting material cools, so as to secondarily sealing the first channel 24211 and the second channel 24212; and it should be noted that, in addition to playing a role in preliminarily sealing the first channel 24211 and the second channel 24212, the sealing plate 213 may further prevent the hot melting material from flowing into the inner cavity of the housing. Under normal circumstances, the hot melting material is a material that does not react with the electrolyte, for example, fluororubber, nitrile rubber, natural rubber or ethylene propylene diene monomer rubber, and the like; and in addition, when the first channel 24211 and the second channel 24212 are filled with the elastic blocking columns 24221, the sealing plate 213 may further prevent the first hot melting member 214 from being connected with the elastic blocking columns 24221 during hot melting, resulting in the problem of difficulty in opening the first channel 24211 and the second channel 24212 subsequently.

The blocking member in the present embodiment may be used in cooperation with the blocking member in the above embodiments, and may also be used alone.

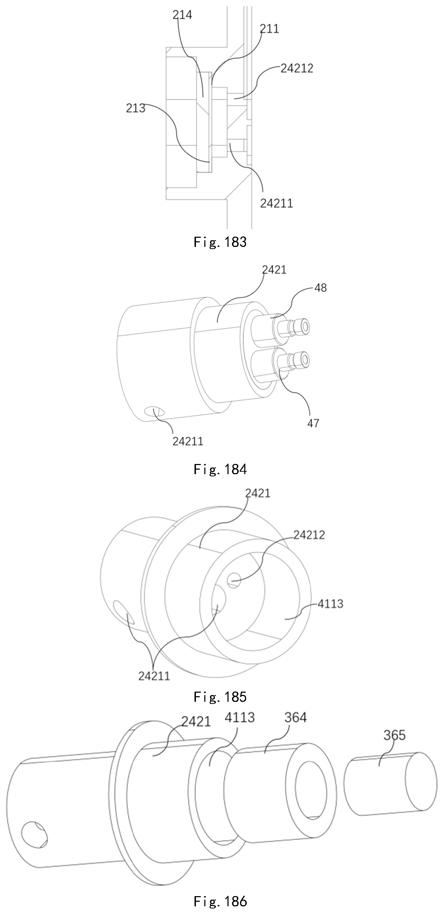

It is taken as an example below that the blocking member is used in cooperation with the cover cap 362, and when liquid replenishment is required, the operation may be performed by the following steps:
disassembling the cover cap 362, and using a cutter to form, on the first hot melting member 214 and the sealing plate 213, open pores penetrating through the first channel 24211 and the second channel 24212;
when there is a gas in the inner cavity of the housing, the gas overflows from the second channel 24212, so that it is easy to inject electrolyte into the inner cavity of the housing; and in order to ensure more smooth liquid injection, in this step, the gas extraction pipe may be inserted into the second channel 24212, the external gas extraction apparatus connected with the gas extraction pipe is started to perform gas extraction, so that a certain negative pressure is formed in the inner cavity of the housing;
then, stretching the electrolyte injection pipe into the first channel 24211, and injecting electrolyte, wherein during liquid injection, if the problem of difficulty in liquid injection occurs, the external gas extraction apparatus may be started, so that a certain negative pressure is formed in the inner cavity of the housing, and liquid injection is then performed;
after liquid replenishment is completed, pulling out the electrolyte injection pipe and the gas extraction pipe;
next, as shown in Fig. 183, fixing the sealing plate 213 on the second-stage step surface 211, and then pouring the hot melting material onto the sealing plate 213 and into a second-stage through hole for sealing, wherein in the present embodiment, during secondary sealing, the second-stage step surface 211 is used as a fixing surface of the sealing plate 213, therefore it is possible to avoid the problem of a sealing effect being unable to be achieved by using the sealing plate 213 due to the fact that when the first-stage step surface 3 is used as the sealing surface, the surface thereof is uneven because of the sealing plate 213 or the first hot melting member 214 remaining on the first-stage step surface 3 during first-time trepanning; and so on, when third-time sealing is performed, the sealing plate 213 may be fixed on the third-stage step surface; and
finally, after the hot melting material cools, sealing and fixing the cover cap 362 on the liquid injection and replacement member main body 2421.

When liquid replacement is required, the operation may be performed by the following steps:
disassembling the cover cap 362, and using the cutter to form, on the first hot melting member 214 and the sealing plate 213, open pores penetrating through the first channel 24211 and the second channel 24212;
stretching the electrolyte extraction pipe into the first channel 24211, and extracting electrolyte; when the electrolyte cannot be extracted, inserting the gas injection pipe into the second channel 24212 to inject a protective gas into the inner cavity of the housing, so as to perform liquid extraction; after liquid extraction is completed, taking out the electrolyte extraction pipe and the gas injection pipe, stretching the electrolyte injection pipe into the first channel 24211, and injecting new electrolyte; and after liquid injection is completed, pulling out the electrolyte injection pipe; and
then, fixing the sealing plate 213 on the second-stage step surface 211, and pouring the hot melting material onto the sealing plate 213 and into the second-stage through-hole for sealing; and after the hot melting material cools, sealing and fixing the cover cap 362 on the liquid injection and replacement member main body 2421.

Compared with Embodiment 56, in the present embodiment, in a charging and discharging cycle process of the high-capacity battery, the sealing performance at the location of the liquid injection and replacement member 242 is better.

### Embodiment 60

Different from the above embodiments, a hydraulic quick connector parent body is used as the blocking member in the present embodiment; and
as shown in Fig. 184, in the present embodiment, a first hydraulic quick connector parent body 47 and a second hydraulic quick connector parent body 48 are respectively fixed in the first channel 24211 and the second channel 24212 to seal the first channel 24211 and the second channel 24212. It is taken as an example in Fig. 184 that the first channel 24211 is an L-shaped through hole.

The blocking member in the present embodiment may be used alone and may also be used in cooperation with the cover cap 362 in Embodiment 55, and after the cover cap 362 is buckled on the liquid injection and replacement member main body 2421, the first hydraulic quick connector parent body 47 and the second hydraulic quick connector parent body 48 are located in the inner cavity of the cover cap 362, to achieve a dual-layer sealing effect.

When liquid replenishment is required, the operation may be performed by steps similar to those in Embodiment 56, except that:
in the present embodiment, since the first hydraulic quick connector parent body 47 and the second hydraulic quick connector parent body 48 are further respectively disposed in the first channel 24211 and the second channel 24212, after the cover cap 362 is disassembled, the first channel 24211 and the second channel 24212 are still in a sealed state due to the sealing of the corresponding first hydraulic quick connector parent body 47 and the second hydraulic quick connector parent body 48; and in addition, in the present embodiment, it is necessary to use the gas extraction pipe, the gas injection pipe, the electrolyte injection pipe and the electrolyte extraction pipe, which are connected with hydraulic quick connector child bodies, and when gas extraction and gas injection or liquid injection and liquid extraction are required, the hydraulic quick connector child bodies are inserted into the corresponding parent bodies to open the corresponding hydraulic quick connector parent bodies, so that the first channel 74511 and the second channel 74211 are in communication with the gas extraction pipe, the gas injection pipe, the electrolyte injection pipe and the electrolyte extraction pipe. After the operations are completed, the hydraulic quick connector child bodies are pulled out, the corresponding hydraulic quick connector parent bodies seal the first channel 74511 and the second channel 74211, and finally the cover cap 362 is sealed and fixed on the liquid injection and replacement member main body 2421.

### Embodiment 61

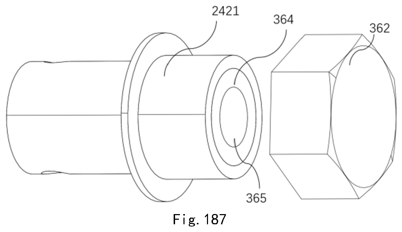

Different from the above embodiments, the blocking member in the present embodiment includes a first rubber ring and a second hot melting member, the first channel 24211, or the first channel 24211 and the second channel 24212 on the liquid injection and replacement member main body 2421 are blocked in another hot melting manner, and it is taken as an example for description below that the first channel 24211 and the second channel 24212 on the liquid injection and replacement member main body 2421 are blocked:
as shown in Fig. 185, a counter bore 4113 penetrating through the first channel 24211 and the second channel 24212 is formed in the axial direction of the liquid injection and replacement member main body 2421; under normal circumstances, the liquid injection and replacement member main body 2421 is made of the same aluminum material as the housing; and in order to block the first channel 24211 in the hot melting manner, as shown in Fig. 186 and Fig. 187, in the present embodiment, the first rubber ring 364 is fixed in the counter bore 4113 in an adhesive sealing manner, the first channel 24211 and the second channel 24212 are blocked in the first rubber ring 364 in the hot melting manner, and after the hot melting material cools, the second hot melting member 365 is formed in the first rubber ring 364. The first rubber ring 364 and the second hot melting member 365 are generally made of a rubber material that does not react with the electrolyte, for example, fluororubber, nitrile rubber, natural rubber or ethylene propylene diene monomer rubber, etc.

The blocking member in the present embodiment may be used alone and may also be used in cooperation with the cover cap 362 in Embodiment 55 to achieve a dual-layer sealing effect.

When liquid replenishment is required, the operation may be performed by the following steps:
disassembling the cover cap 362, and using the cutter to form, on the second hot melting member 365, an open pore penetrating through the first channel 24211 and the second channel 24212;
when there is a gas in the inner cavity of the housing, the gas overflows from the second channel 24212, so that it is easy to inject electrolyte into the inner cavity of the housing; and in order to ensure more smooth liquid injection, in this step, the gas extraction pipe may be inserted into the second channel 24212, the external gas extraction apparatus connected with the gas extraction pipe is started to perform gas extraction, so that a certain negative pressure is formed in the inner cavity of the housing;
then, stretching the electrolyte injection pipe into the first channel 24211, and injecting electrolyte, wherein during liquid injection, if the problem of difficulty in liquid injection occurs, the external gas extraction apparatus may be started, so that a certain negative pressure is formed in the inner cavity of the housing, and liquid injection is then performed; and
after liquid replenishment is completed, pulling out the electrolyte injection pipe and the gas extraction pipe;
next, sealing the trepanning location in the hot melting manner; and
finally, after the hot melting material cools, sealing and fixing the cover cap 362 on the liquid injection and replacement member main body 2421.

When liquid replacement is required, the operation may be performed by the following steps:
disassembling the cover cap 362, and using the cutter to form, on the second hot melting member 365, an open pore penetrating through the first channel 24211 and the second channel 24212;
stretching the electrolyte extraction pipe into the first channel 24211, and extracting electrolyte; when the electrolyte cannot be extracted, inserting the gas injection pipe into the second channel 24212 to inject a protective gas into the inner cavity of the housing, so as to perform liquid extraction; after liquid extraction is completed, taking out the electrolyte extraction pipe and the gas injection pipe, stretching the electrolyte injection pipe into the first channel 24211, and injecting new electrolyte; and after liquid injection is completed, pulling out the electrolyte injection pipe; and
then, pouring the hot melting material onto the trepanning location for sealing; and after the hot melting material cools, sealing and fixing the cover cap 362 on the liquid injection and replacement member main body 2421.

In the present embodiment, in the charging and discharging cycle process of the lithium-ion battery, the sealing performance at the location of the liquid injection and replacement member 242 is better.

## Claims

1. A high-capacity battery assembly, comprising a high-capacity battery and a repair mechanism;
wherein the high-capacity battery comprises a housing and m battery cells arranged in the housing, and m>1; an inner cavity of each battery cell comprises an electrolyte region and a gas region; the housing is provided with an electrolyte sharing chamber; the electrolyte sharing chamber is in communication with the electrolyte region of the inner cavity of each battery cell; an avoidance hole capable of enabling an electrode terminal of each battery cell to extend out is formed on a housing top plate; and the electrode terminal of each battery cell extends out from the avoidance hole on the housing top plate, and a region of the housing corresponding to the avoidance hole is fixed and sealed with a shell of the battery cell; and
the repair mechanism is connected with the high-capacity battery, and is configured for repairing the high-capacity battery having an attenuated capacity or inhibiting the attenuation speed of the high-capacity battery, so as to improve a performance of the high-capacity battery and prolong a cycle life of the high-capacity battery.

2. The high-capacity battery assembly as claimed in claim 1, wherein the repair mechanism comprises an impurity removal member, the impurity removal member is located between a housing bottom plate and a bottom of each battery cell, and is configured for removing impurities in electrolyte; and the impurity removal member is of a hollow structure, an inner cavity of the impurity removal member is filled with an impurity removal material, and a second through hole penetrating through the inner cavity of the impurity removal member and allowing the electrolyte to pass through is formed on the impurity removal member.

3. The high-capacity battery assembly as claimed in claim 2, wherein two impurity removal members are provided; and the two impurity removal members are respectively located on two sides of the electrolyte sharing chamber and extend in a length direction of the housing.

4. The high-capacity battery assembly as claimed in claim 3, wherein the impurity removal member is a hollow box body having a rectangular cross section.

5. The high-capacity battery assembly as claimed in claim 4, wherein a size of the impurity removal member is equal to a size of regions of the housing bottom plate on the two sides of the electrolyte sharing chamber in a y direction.

6. The high-capacity battery assembly as claimed in claim 5, wherein an inner surface of the housing bottom plate is provided with a limiting guide boss extending in an x direction; and the impurity removal member is located between the limiting guide boss and a sidewall of the housing.

7. The high-capacity battery assembly as claimed in claim 6, wherein it is defined that a length direction of the impurity removal member is the x direction, a width direction thereof is the y direction, and a height direction thereof is a z direction; and a plurality of second through holes are formed and are uniformly distributed on at least one sidewall of the impurity removal member that is parallel to an xz plane.

8. The high-capacity battery assembly as claimed in claim 7, wherein the repair mechanism further comprises a magnetic stirring apparatus; the magnetic stirring apparatus comprises a magneton and a magnetic stirrer; and the magneton is located in the electrolyte sharing chamber, and the magnetic stirring apparatus is disposed outside the housing, and drives the magneton to rotate to stir the electrolyte.

9. The high-capacity battery assembly as claimed in any of claims 1-7, wherein the housing top plate is provided with a protrusion portion in a direction away from the housing bottom plate to serve as a gas chamber, and the gas chamber covers a gas port of each battery cell.

10. The high-capacity battery assembly as claimed in claim 9, wherein the impurity removal material is at least one of a 4A molecular sieve, a lithiated molecular sieve or a -alumina.

11. The high-capacity battery assembly as claimed in claim 10, wherein the impurity removal material is composed of the lithiated molecular sieve and the α -alumina, a mass ratio of the lithiated molecular sieve to the α -alumina is 1: 1, and a mass percentage of the impurity removal material in the electrolyte is 3% to 10%.

12. The high-capacity battery assembly as claimed in any of claims 1-7, wherein the repair mechanism comprises a liquid injection and replacement member; and the liquid injection and replacement member is configured for replenishingelectrolyte into the electrolyte sharing chamber and the inner cavity of each battery cell, or replacing the electrolyte in the electrolyte sharing chamber and the inner cavity of each battery cell.

13. The high-capacity battery assembly as claimed in claim 12, wherein the housing comprises a first cylinder body having two open ends, and end plate assemblies respectively fixed at the two open ends of the first cylinder body; the avoidance hole is formed on a first cylinder body top plate; the electrolyte sharing chamber is located on a first cylinder body bottom plate; and the liquid injection and replacement member is located on at least one end plate assembly.

14. The high-capacity battery assembly as claimed in claim 13, wherein the end plate assembly provided with the liquid injection and replacement member comprises a first end sub-plate; and the first end sub-plate is provided with an electrolyte flow channel; the liquid injection and replacement member is located on the first end sub-plate; the liquid injection and replacement member comprises a liquid injection and replacement member main body and a blocking member; a first channel is formed on the liquid injection and replacement member main body for communicating with the electrolyte flow channel; and the blocking member is configured for blocking the electrolyte flow channel.

15. The high-capacity battery assembly as claimed in claim 14, wherein the first cylinder body top plate is provided with a gas chamber; and the gas chamber is in communication with the gas region of the inner cavity of each battery cell.

16. The high-capacity battery assembly as claimed in claim 15, wherein a gas flow channel in communication with the gas chamber is further formed on the first end sub-plate; a second channel is formed on the liquid injection and replacement member main body for communicating with the gas flow channel; and the blocking member is further configured for blocking the gas flow channel.

17. The high-capacity battery assembly as claimed in claim 16, wherein the liquid injection and replacement member main body is a columnar body, and both the first channel and the second channel are first through holes formed on the liquid injection and replacement member main body.

18. The high-capacity battery assembly as claimed in claim 17, wherein the blocking member comprises a cover cap buckled on the liquid injection and replacement member main body.

19. The high-capacity battery assembly as claimed in claim 18, wherein the blocking member further comprises elastic blocking columns sealed in the first channel and the second channel.

20. The high-capacity battery assembly as claimed in claim 18, wherein the blocking member further comprises a sealing plate and a first hot melting member; a stepped hole is formed on the liquid injection and replacement member; the stepped hole penetrates through the first channel and the second channel; and the sealing plate is fixed on a step surface of the stepped hole, and the first hot melting member is fixed on the sealing plate and in the stepped hole where the sealing plate is located.

21. The high-capacity battery assembly as claimed in claim 16, wherein the liquid injection and replacement member main body comprises an annular fixing member and a rotating member; and the rotating member is coaxially located in the annular fixing member, is in clearance fit with the annular fixing member, and is capable of performing autoroatation in the annular fixing member under the action of an external force; and
both the first channel and the second channel are third through holes formed on the rotating member; in a first state, by rotating the rotating member, the first channel is isolated from the electrolyte flow channel, and the second channel is isolated from the gas flow channel; in a second state, by rotating the rotating member, the first channel is in communication with the electrolyte flow channel, and the second channel is in communication with the gas flow channel; the first state is a normal charging and discharging cycle state of the high-capacity battery; and the second state is a state in which electrolyte is replenished into the electrolyte sharing chamber and the inner cavity of each battery cell by the liquid injection and replacement member, or the electrolyte in the electrolyte sharing chamber and the inner cavity of each battery cell is replaced by the liquid injection and replacement member.

22. The high-capacity battery assembly as claimed in claim 21, wherein a first positioning mark and a second positioning mark are respectively disposed on the annular fixing member and the rotating member, and when the first positioning mark and the second positioning mark arrive at set locations, the first channel is in communication with the electrolyte flow channel, and the second channel is in communication with the gas flow channel.

23. The high-capacity battery assembly as claimed in claim 16, wherein the liquid injection and replacement member main body comprises an annular fixing member and a rotating member; the rotating member is coaxially located in the annular fixing member, is in clearance fit with the annular fixing member, and is capable of performing autoroatation in the annular fixing member under the action of an external force;
the first channel and the second channel are the same channel and are the same fourth through hole formed on the rotating member; in the first state, by rotating the rotating member, the fourth through hole is isolated from the electrolyte flow channel and the gas flow channel; and in the second state, by rotating the rotating member, the fourth through hole is in communication with the electrolyte flow channel or the gas flow channel; the first state is a normal charging and discharging cycle state of the high-capacity battery; and the second state is a state in which electrolyte is replenished into the electrolyte sharing chamber and the inner cavity of each battery cell by the liquid injection and replacement member, or the electrolyte in the electrolyte sharing chamber and the inner cavity of each battery cell is replaced by the liquid injection and replacement member.

24. The high-capacity battery assembly as claimed in claim 23, wherein the annular fixing member is provided with a first identifier and a second identifier; and the rotating member is provided with a third identifier, when the third identifier and the first identifier arrive at set locations, the fourth through hole is in communication with the electrolyte flow channel, and when the third identifier and the second identifier arrive at set locations, the fourth through hole is in communication with the gas flow channel.

25. The high-capacity battery assembly as claimed in claim 16, wherein the first end sub-plate is provided with an unpacking apparatus operation port, which is in communication with one end of the electrolyte sharing chamber, and in the normal charging and discharging cycle state of the high-capacity battery, the unpacking apparatus operation port is sealed by a sealing member; and the other end plate assembly is provided with a first explosion venting channel and an explosion venting port; and the two ends of the first explosion venting channel are respectively in communication with the gas chamber and the explosion venting port, and an explosion venting mechanism is sealed at the explosion venting port.

26. The high-capacity battery assembly as claimed in claim 16, wherein the end plate assembly provided with the liquid injection and replacement member further comprises a second end sub-plate; the second end sub-plate is tightly attached to the outermost battery cell in the housing and is fixedly connected with the first end sub-plate.

27. The high-capacity battery assembly as claimed in claim 26, wherein the second end sub-plate is fixedly connected with the first end sub-plate by a screw; a gasket is disposed between the second end sub-plate and the first end plate, and the head of the screw sequentially passes through the second end sub-plate and the gasket to be connected with the first end sub-plate.

28. The high-capacity battery assembly as claimed in claim 27, wherein openings are further formed on the first end sub-plate of the end plate assembly provided with the liquid injection and replacement member to serve as the unpacking apparatus operation port and the explosion venting port to communicate with the electrolyte sharing chamber; and a gap between the first end sub-plate and the second end sub-plate serves as the first explosion venting channel, the two ends of the first explosion venting channel are respectively in communication with the gas chamber and the explosion venting port, and the explosion venting mechanism is sealed at the explosion venting port.

29. The high-capacity battery assembly as claimed in claim 1, wherein it is defined that the length direction of the housing is an x direction, the width direction thereof is a y direction, and the height direction thereof is a z direction; the housing comprises a second cylinder body, and a housing top plate and a housing bottom plate that cover open ends of the second cylinder body, and the housing top plate and the housing bottom plate are parallel to an xy plane; and the electrolyte sharing chamber is disposed on the housing bottom plate; and
the repair mechanism comprises a liquid injection and replacement member, and the liquid injection and replacement member is disposed on at least one first sidewall of the second cylinder body, wherein the first sidewall is a sidewall parallel to a yz plane; and the liquid injection and replacement member is configured for replenishing electrolyte into the electrolyte sharing chamber and the inner cavity of each battery cell, or replacing the electrolyte in the electrolyte sharing chamber and the inner cavity of each battery cell.

30. The high-capacity battery assembly as claimed in claim 29, wherein the first sidewall is provided with an electrolyte flow channel; the liquid injection and replacement member comprises a liquid injection and replacement member main body, and a blocking member fixed on the liquid injection and replacement member main body; a first channel is formed on the liquid injection and replacement member main body; the two ends of the electrolyte flow channel are respectively in communication with the electrolyte sharing chamber and the first channel of the liquid injection and replacement member; and the blocking member is configured for blocking the first channel from the outer side of the first sidewall.

31. The high-capacity battery assembly as claimed in claim 30, wherein a hollow cavity isolated from the electrolyte flow channel is formed on the first sidewall.

32. The high-capacity battery assembly as claimed in claim 31, wherein a first blind hole penetrating through the first sidewall is formed on the first sidewall in the x direction to serve as a mounting hole of the liquid injection and replacement member main body; a second hole penetrating through the first sidewall is formed on the first sidewall in the z direction to serve as the electrolyte flow channel; the liquid injection and replacement member main body is a columnar body, which is fixed in the first blind hole and seals the first blind hole; and the first channel is formed on the liquid injection and replacement member main body and is in communication with the electrolyte flow channel.

33. The high-capacity battery assembly as claimed in claim 32, wherein the housing top plate is provided with a gas chamber; and the gas chamber is in communication with the gas region of the inner cavity of each battery cell.

34. The high-capacity battery assembly as claimed in claim 33, wherein a gas flow channel in communication with the gas chamber is further formed on the first sidewall; a second channel is formed on the liquid injection and replacement member main body, and the second channel is isolated from the first channel; the two ends of the gas flow channel are respectively in communication with the gas chamber and the second channel of the liquid injection and replacement member; and the blocking member is further configured for blocking the second from the outer side of the first sidewall.

35. The high-capacity battery assembly as claimed in claim 34, wherein the second channel is an L-shaped channel, which comprises a horizontal channel and a vertical channel, wherein the longitudinal cross section of the horizontal channel is in a fan ring shape.

36. The high-capacity battery assembly as claimed in claim 34, wherein the second channel comprises a horizontal channel and a vertical channel, which penetrate through each other, wherein the horizontal channel is composed of a plurality of through holes in communication with the vertical channel, and the plurality of through holes are arranged along the same circumference.

37. The high-capacity battery assembly as claimed in claim 34, wherein the blocking member comprises a cover cap in threaded connection with the liquid injection and replacement member main body.

38. The high-capacity battery assembly as claimed in claim 37, wherein the liquid injection and replacement member further comprises a hollow member that is coaxially disposed at the end portion of the liquid injection and replacement member main body and extends in the x direction; the blocking member further comprises a first rubber ring and a second hot melting member; and the first rubber ring is coaxially fixed in the hollow member, and the second hot melting member is fixed in the first rubber ring in a hot melting manner and blocks the first channel and the second channel.

39. The high-capacity battery assembly as claimed in claim 1, wherein the repair mechanism comprises a liquid injection and replacement member, and the liquid injection and replacement member comprises a liquid injection and replacement member main body, an electrolyte flow pipe section and a blocking member; the liquid injection and replacement member main body is fixed on the housing, and a first channel penetrating through the inner cavity of the housing is formed on the liquid injection and replacement member main body; one end of the electrolyte flow pipe section is fixed on the liquid injection and replacement member main body, and penetrates through the first channel; the other end of the electrolyte flow pipe section is in communication with the electrolyte region of the inner cavity of the housing; and the blocking member blocks the first channel from the outer side of the housing.

40. The high-capacity battery assembly as claimed in claim 39, wherein a second channel penetrating through the gas region of the inner cavity of the housing is further formed on the liquid injection and replacement member main body; and the blocking member is further configured for blocking the second channel from the outer side of the housing.

41. The high-capacity battery assembly as claimed in claim 40, wherein the liquid injection and replacement member main body is a cylinder, and both the first channel and the second channel are through holes formed on the liquid injection and replacement member main body.

42. The high-capacity battery assembly as claimed in claim 41, wherein an annular limiting boss is disposed on an outer circumferential surface of the liquid injection and replacement member main body in the circumferential direction thereof, and is configured for cooperating with the housing to fix the liquid injection and replacement member main body.

43. The high-capacity battery assembly as claimed in claim 41, wherein the second channel is formed in the axial direction of the liquid injection and replacement member main body, and the longitudinal cross section of the second channel is in the fan ring shape.

44. The high-capacity battery assembly as claimed in claim 41, wherein the second channel comprises a plurality of through holes formed in the axial direction of the liquid injection and replacement member main body, and the plurality of through holes are arranged along the same circumference.

45. The high-capacity battery assembly as claimed in any of claims 40-44, wherein the blocking member comprises a first rubber ring and a second hot melting member; a counter bore penetrating through the first channel and the second channel is formed in the axial direction of the liquid injection and replacement member main body; and the first rubber ring is coaxially fixed in the counter bore, and the second hot melting member is fixed in the first rubber ring in the hot melting manner and blocks the first channel and the second channel.

46. The high-capacity battery assembly as claimed in claim 45, wherein the blocking member further comprises a cover cap buckled at one end of the liquid injection and replacement member main body, and one end of the liquid injection and replacement member main body is the end of the liquid injection and replacement member main body that is located outside the housing.

47. The high-capacity battery assembly as claimed in claim 39, wherein the housing top plate is provided with a gas chamber; the gas chamber is in communication with the gas region of the inner cavity of each battery cell; and the second channel is in communication with the gas chamber.

48. The high-capacity battery assembly as claimed in claim 47, wherein a mounting hole is formed on the housing, the liquid injection and replacement member main body is coaxially located in the mounting hole, and the annular limiting boss is hermetically welded with a peripheral region of the mounting hole.

49. The high-capacity battery assembly as claimed in claim 1, wherein the repair mechanism comprises a liquid injection and replacement member, and the liquid injection and replacement member comprises a liquid injection and replacement member main body and a blocking member; the liquid injection and replacement member main body is fixed on the housing, and a first channel penetrating through the inner cavity of the housing is formed on the liquid injection and replacement member main body; the blocking member comprises a first rubber ring and a first sealing plate; the first rubber ring is coaxially fixed in the first channel, the first sealing plate is fixed on a first end surface of the first rubber ring in the hot melting manner and blocks the first channel; and the first end surface of the first rubber ring is the end surface of the first rubber ring that is away from the housing of a lithium-ion battery.

50. The high-capacity battery assembly as claimed in claim 49, wherein the liquid injection and replacement member further comprises an electrolyte flow pipe section; one end of the electrolyte flow pipe section is fixed on the liquid injection and replacement member main body, and penetrates through the first channel; and the other end of the electrolyte flow pipe section is in communication with the electrolyte region of the inner cavity of the housing.

51. The high-capacity battery assembly as claimed in claim 50, wherein a second channel penetrating through the gas region of the inner cavity of the housing is further formed on the liquid injection and replacement member main body; the first channel is a stepped through hole formed along the liquid injection and replacement member main body; the second channel is isolated from a small hole of the stepped through hole and penetrates through a large hole of the stepped through hole; and the first rubber ring is coaxially fixed in the large hole of the stepped through hole.

52. The high-capacity battery assembly as claimed in claim 51, wherein an axial length of the first rubber ring is greater than an axial length of the large hole of the stepped through hole; and one end of the first rubber ring is tightly attached to a step surface of the stepped through hole, the outer side of the other end of the first rubber ring is provided with an annular folded edge in the circumferential direction thereof, and the annular folded edge is tightly attached to an end surface of the large hole of the stepped through-hole.

53. The high-capacity battery assembly as claimed in claim 51, wherein the second channel is formed in the axial direction of the liquid injection and replacement member main body, and the longitudinal cross section of the second channel is in the fan ring shape.

54. The high-capacity battery assembly as claimed in claim 51, wherein the second channel comprises a plurality of through holes formed in the axial direction of the liquid injection and replacement member main body, and the plurality of through holes are arranged along the same circumference.

55. The high-capacity battery assembly as claimed in any of claims 49-54, wherein the blocking member further comprises a cover cap buckled at one end of the liquid injection and replacement member main body, and one end of the liquid injection and replacement member main body is the end of the liquid injection and replacement member main body that is located outside the housing.

56. The high-capacity battery assembly as claimed in claim 55, wherein the blocking member further comprises a blocking column fixed in the first rubber ring in the hot melting manner.

57. The high-capacity battery assembly as claimed in claim 49, wherein an annular limiting boss is disposed on an outer circumferential surface of the liquid injection and replacement member main body in the circumferential direction thereof, and is configured for cooperating with the housing to fix the liquid injection and replacement member main body.

58. The high-capacity battery assembly as claimed in claim 51, wherein the sharing chamber is a gas chamber, and the gas chamber is in communication with the gas region of the inner cavity of each battery cell; and the second channel is in communication with the gas chamber.

59. The high-capacity battery assembly as claimed in claim 1, wherein the housing is further provided with a gas chamber; the gas chamber is in communication with the gas region of the inner cavity of each battery cell; and the repair mechanism comprises a gas injection and exhaust member and a liquid injection and replacement member; and
the gas injection and exhaust member is configured for implementing gas replenishment or exhaust of the gas chamber and the inner cavity of each battery cell; and the liquid injection and replacement member is configured for replenishing electrolyte into the electrolyte sharing chamber and the inner cavity of each battery cell, or replacing the electrolyte in the electrolyte sharing chamber and the inner cavity of each battery cell.

60. The high-capacity battery assembly as claimed in claim 59, wherein the housing comprises a first cylinder body having two open ends, and end plate assemblies respectively fixed at the two open ends of the first cylinder body; the avoidance hole is formed on a first cylinder body top plate; the electrolyte sharing chamber is located on a first cylinder body bottom plate; the gas chamber is located on the first cylinder body top plate; and the gas injection and exhaust member and the liquid injection and replacement member are located on the end plate assemblies.

61. The high-capacity battery assembly as claimed in claim 60, wherein the end plate assembly provided with the gas injection and exhaust member and the liquid injection and replacement member comprises a first end sub-plate; the first end sub-plate is provided with a gas flow channel and an electrolyte flow channel; and the gas injection and exhaust member and the liquid injection and replacement member are disposed on an outer surface of the first end sub-plate;
the gas injection and exhaust member comprises a gas injection and exhaust member main body and a first blocking member fixed on the gas injection and exhaust member main body; a first channel is formed on the gas injection and exhaust member main body, and the first blocking member is configured for blocking the first channel from the outer surface side of the first end sub-plate; the two ends of the gas flow channel are respectively in communication with the gas chamber and the first channel of the gas injection and exhaust member; and
the liquid injection and replacement member comprises a liquid injection and replacement member main body and a second blocking member fixed on the liquid injection and replacement member main body; a second channel is formed on the liquid injection and replacement member main body, and the second blocking member is configured for blocking the second channel from the outer surface side of the first end sub-plate; and the two ends of the electrolyte flow channel are respectively in communication with the electrolyte sharing chamber and the second channel of the liquid injection and replacement member.

62. The high-capacity battery assembly as claimed in claim 61, wherein the gas injection and exhaust member main body is a columnar body, and the first channel is a through hole formed on the gas injection and exhaust member main body in the axial direction; the first blocking member is a first cover cap buckled on the gas injection and exhaust member main body; the liquid injection and replacement member is a columnar body, and the second channel is a through hole formed on the liquid injection and replacement member main body in the axial direction; and the second blocking member is a second cover cap buckled on the liquid injection and replacement member main body.

63. The high-capacity battery assembly as claimed in claim 62, wherein the first blocking member further comprises a first hydraulic quick connector parent body sealed in the first channel; and the second blocking member further comprises a second hydraulic quick connector parent body sealed in the second channel.

64. The high-capacity battery assembly as claimed in claim 61, wherein the first end sub-plate is provided with an unpacking apparatus operation port; and the other end plate assembly is provided with a first explosion venting channel and an explosion venting port, the two ends of the first explosion venting channel are respectively in communication with the gas chamber and the explosion venting port, and an explosion venting mechanism is sealed at the explosion venting port.

65. The high-capacity battery assembly as claimed in claim 61, wherein the end plate assembly provided with the gas injection and exhaust member and the liquid injection and replacement member further comprises a second end sub-plate; and the second end sub-plate is tightly attached to the outermost battery cell in the housing and is fixedly connected with the first end sub-plate.

66. The high-capacity battery assembly as claimed in claim 65, wherein the second end sub-plate is fixedly connected with the first end sub-plate by a screw; and a gasket is disposed between the second end sub-plate and the first end plate, and the head of the screw sequentially passes through the second end sub-plate and the gasket to be connected with the first end sub-plate.

67. The high-capacity battery assembly as claimed in claim 65, wherein openings are further formed on the first end sub-plate of the end plate assembly provided with the gas injection and exhaust member and the liquid injection and replacement member to serve as the unpacking apparatus operation port and the explosion venting port; and a gap between the first end sub-plate and the second end sub-plate serves as the first explosion venting channel, the two ends of the first explosion venting channel are respectively in communication with the gas chamber and the explosion venting port, and the explosion venting mechanism is sealed at the explosion venting port.

68. The high-capacity battery assembly as claimed in claim 1, wherein the repair mechanism comprises a liquid injection and replacement member; the liquid injection and replacement member comprises a columnar liquid injection and replacement member main body; the liquid injection and replacement member main body is fixed on the housing, a fifth channel penetrating through the electrolyte region of the inner cavity of the housing is formed on the liquid injection and replacement member main body, and a first pipe fitting is sleeved in the fifth channel; and the end portion of the first pipe fitting that is located outside the housing is sealed.

69. The high-capacity battery assembly as claimed in claim 68, wherein a sixth channel penetrating through the gas region of the inner cavity of the housing is formed on the liquid injection and replacement member main body, and a second pipe fitting is sleeved in the sixth channel; and the end portion of the second pipe fitting that is located outside the housing is sealed.

70. The high-capacity battery assembly as claimed in claim 69, wherein the first pipe fitting and the second pipe fitting are plastic pipes that do not react with the electrolyte, and the end portions located outside the housing are sealed in a heat-shrinkable extrusion sealing manner.

71. The high-capacity battery assembly as claimed in claim 70, wherein the liquid injection and replacement member further comprises a sealing rubber plug; the fifth channel is a stepped through hole formed along the liquid injection and replacement member main body; the sixth channel is isolated from a small hole of the stepped through hole and penetrates through a large hole of the stepped through hole; the end portions of the first pipe fitting and the second pipe fitting that are located outside the housing are located in the large hole of the stepped through hole; and the sealing rubber plug is plugged into the large hole of the stepped through hole to seal the fifth channel and the sixth channel.

72. The high-capacity battery assembly as claimed in claim 71, wherein a sealant layer is disposed on a step surface of the fifth channel, and the end portions of the first pipe fitting and the second pipe fitting that are located outside the housing extend out from the sealant layer.

73. The high-capacity battery assembly as claimed in claim 71, wherein the liquid injection and replacement member further comprises a sealing end cover; and the sealing end cover is detachably fixed on the liquid injection and replacement member main body to seal the fifth channel and the sixth channel again.

74. The high-capacity battery assembly as claimed in claim 1, wherein the repair mechanism comprises a liquid injection and replacement member; the liquid injection and replacement member comprises a liquid injection and replacement member main body and a blocking member; the liquid injection and replacement member main body is columnar and is fixed on the housing, and a seventh channel penetrating through the electrolyte region of the inner cavity of the housing is formed on the liquid injection and replacement member main body; the blocking member comprises n groups of sealing units, wherein n is an integer greater than or equal to 1; when n is equal to 1, the sealing units are disposed in the seventh channel to seal the seventh channel; and when n is greater than 1, the n groups of sealing units are sequentially stacked in the seventh channel in the axial direction of the seventh channel, to seal the seventh channel; and
each group of sealing units comprises a first sealing plug and a sealing coating, which are sequentially stacked in the axial direction of the seventh channel, the first sealing plug is located on the side close to the inner cavity of the housing, and the sealing coating is located on the side away from the inner cavity of the housing.

75. The high-capacity battery assembly as claimed in claim 74, wherein an annular clamping groove is formed on an inner wall of the seventh channel in the circumferential direction thereof; a limiting retainer ring is mounted in the annular clamping groove; an end surface of the outermost sealing unit in the seventh channel abuts against the limiting retainer ring, and the limiting retainer ring limits axial movement of the n groups of sealing units in the seventh channel, wherein the outermost sealing unit in the seventh channel is a sealing unit in the axial direction of the seventh channel that is farthest from the inner cavity of the housing.

76. The high-capacity battery assembly as claimed in claim 75, wherein the blocking member further comprises a second sealing plug; and the second sealing plug is stacked on the outer side of the outermost sealing unit in the axial direction of the seventh channel, and an end surface of the second sealing plug abuts against the limiting retainer ring.

77. The high-capacity battery assembly as claimed in any of claims 74-76, wherein an eighth channel penetrating through the gas region of the inner cavity of the housing is formed on the liquid injection and replacement member main body; the seventh channel is a stepped through hole formed along the liquid injection and replacement member main body; the eighth channel is isolated from a small hole of the stepped through hole and penetrates through a large hole of the stepped through hole; and the blocking member is disposed in the large hole of the stepped through hole.

78. The high-capacity battery assembly as claimed in claim 77, wherein the large hole of the stepped through hole is a tapered hole, and a small end of the tapered hole is close to the small hole of the stepped through hole.

79. The high-capacity battery assembly as claimed in claim 77, wherein the liquid injection and replacement member further comprises an electrolyte communication pipe section; one end of the electrolyte communication pipe section is fixed on the liquid injection and replacement member main body and penetrates through the seventh channel; and the other end of the electrolyte communication pipe section is configured for communicating with the electrolyte region of the inner cavity of the housing.

80. The high-capacity battery assembly as claimed in claim 77, wherein a sealing varnish that does not react with the electrolyte is used as the sealing coating.

81. The high-capacity battery assembly as claimed in claim 1, wherein the top of the housing is provided with a gas chamber, and each battery cell implements the intercommunication of the gas region of each battery cell by the gas chamber; the gas chamber is provided with a first opening in communication with the inner cavity of the gas chamber; the electrolyte sharing chamber is provided with a second opening in communication with the inner cavity of the electrolyte sharing chamber; and
the repair mechanism comprises a liquid injection and replacement mechanism, and the liquid injection and replacement mechanism comprises a first one-way valve and a second one-way valve; and the first one-way valve is disposed on the first opening, the second one-way valve is disposed on the second opening, and the first one-way valve and the second one-way valve have the same structure.

82. The high-capacity battery assembly as claimed in claim 81, wherein the first one-way valve comprises a fixing sleeve, a sealing sleeve and a sealing assembly; the fixing sleeve is mounted on the first opening and is hermetically connected with the first opening; the sealing sleeve is mounted in the fixing sleeve, one end of the inner cavity of the sealing sleeve is provided with a spring limiting plate, the other end thereof is provided with a positioning plate, and both the spring limiting plate and the positioning plate are hollowed-out plates; and
the sealing assembly comprises a third sealing plate, a sealing column and a compression spring, the sealing column is disposed in the sealing sleeve, the two ends of the sealing column respectively pass through the spring limiting plate and the positioning plate, the sealing column is provided with a spring baffle, the compression spring is sleeved on the sealing column and is located between the spring limiting plate and the spring baffle, the third sealing plate is disposed at the end of the sealing column that passes through the spring limiting plate, and the third sealing plate may seal the port of the sealing sleeve under the action of the compression spring; and the end of the sealing column that passes through the positioning plate extends to the outside of the sealing sleeve.

83. The high-capacity battery assembly as claimed in claim 82, wherein an inner wall of the fixing sleeve is provided with a first stepped hole, an outer wall of the sealing sleeve is provided with an annular boss, and the annular boss of the sealing sleeve cooperates with a step surface of the first stepped hole for positioning.

84. The high-capacity battery assembly as claimed in claim 82, further comprising a pressure relief valve, wherein the pressure relief valve is connected to the second one-way valve, and the pressure relief valve comprises an opening assembly and a pressure relief assembly; the pressure relief assembly comprises an outer pipe section and a pressure relief film disposed in the outer pipe section; the outer pipe section is connected with the fixing sleeve; and
the opening assembly comprises an inner pipe section and a jacking and pressing plate, the inner pipe section is nested into the outer pipe section and is located on the end of the outer pipe section that is away from the pressure relief film, the jacking and pressing plate is a hollowed-out plate, which is fixed in the inner pipe section, and is configured for: when the pressure relief valve is connected with the second one-way valve, jacking and pressing the sealing column to open the second one-way valve, so that the inner cavity of the pressure relief valve is in communication with the inner cavity of the electrolyte sharing chamber.

85. The high-capacity battery assembly as claimed in claim 84, wherein the outer pipe section is connected with the fixing sleeve by conical pipe threads, and a thread sealant is coated between connecting threads.

86. The high-capacity battery assembly as claimed in claim 85, wherein a first sealing ring is disposed between an outer wall of the inner pipe section and an inner wall of the fixing sleeve.

87. The high-capacity battery assembly as claimed in claim 84, wherein an inner wall of the outer pipe section is provided with an annular clamping platform, the outer wall of the inner pipe section is provided with an annular step, and the annular clamping platform of the outer pipe section performs axial positioning on the annular step of the inner pipe section, so that the outer pipe section drives the inner pipe section to move axially.

88. The high-capacity battery assembly as claimed in any of claims 80-87, further comprising a blocking cap, wherein the blocking cap is connected to the first one-way valve, and the blocking cap is a circular sealing cover having an open end, which is configured for sealing the first opening.

89. The high-capacity battery assembly as claimed in claim 88, wherein the blocking cap is connected with the first one-way valve by conical pipe threads, and a thread sealant is coated between connecting threads.

90. The high-capacity battery assembly as claimed in any of claims 80-82, further comprising two blocking caps, wherein the two blocking caps are respectively connected to the first one-way valve and the second one-way valve, and the blocking caps are circular sealing covers having one open ends, which are configured for sealing the first opening and the second opening.

91. The high-capacity battery assembly as claimed in claim 1, wherein the repair mechanism comprises a liquid replenishment and replacement apparatus, and the liquid replenishment and replacement apparatus comprises an outer box body, and a rotating assembly, a jacking andpushing assembly, a trepanning assembly, a liquid replenishment and replacement assembly and a hole sealing assembly, which are disposed in the outer box body;
the outer box body is provided with a liquid replenishment and replacement interface;
the trepanning assembly, the liquid replenishment and replacement assembly and the hole sealing assembly are all connected to the rotating assembly, and the rotating assembly is capable of respectively rotating the trepanning assembly, the liquid replenishment and replacement assembly and the hole sealing assembly to the liquid replenishment and replacement interface;
the jacking and pushing assembly provides a linear thrust, so that the trepanning assembly, the liquid replenishment and replacement assembly and the hole sealing assembly move toward the liquid replenishment and replacement interface; and
the trepanning assembly, the liquid replenishment and replacement assembly and the hole sealing assembly are capable of implementing trepanning, liquid replenishment and replacement, and hole sealing operations under an acting force of the jacking and pushing assembly.

92. The high-capacity battery assembly as claimed in claim 91, wherein the rotating assembly comprises at least one rotary table and a rotation drive unit, and the rotation drive unit comprises a rotating shaft and a rotating motor; and the trepanning assembly, the liquid replenishment and replacement assembly and the hole sealing assembly are all mounted on the rotary table, the rotary table is connected to the rotating shaft, and the rotating motor is connected with the rotating shaft, so that the rotary table rotates.

93. The high-capacity battery assembly as claimed in claim 91, wherein there are two rotary tables, comprising a front rotary table and a rear rotary table, the two ends of the trepanning assembly, the liquid replenishment and replacement assembly and the hole sealing assembly are respectively connected with the front rotary table and the rear rotary table, the front rotary table and the rear rotary table are connected by a plurality of screw rods, and the plurality of screw rods are distributed in the circumferential directions of the rotary tables.

94. The high-capacity battery assembly as claimed in claim 91, wherein the jacking and pushing assembly comprises a jacking and pushing rod, a jacking and pushing motor and a gear rack assembly; and an output shaft of the jacking and pushing motor is connected with a gear in the gear rack assembly, the gear rotates to drive a rack to move linearly, the jacking and pushing rod is connected with the rack, the jacking and pushing rod applies a linear thrust under the driving of the rack.

95. The high-capacity battery assembly as claimed in claim 94, wherein the end portion of the jacking and pushing rod at which the linear thrust is applied has a cambered surface.

96. The high-capacity battery assembly as claimed in any of claims 91-95, wherein the trepanning assembly comprises a mounting sleeve, a mounting rod and a trepanning unit, and the trepanning unit comprises a trepanning motor, a drill bit chuck and an auger bit; and the mounting sleeve is fixedly mounted on the rotating assembly, the mounting rod is mounted in the mounting sleeve, one end of the mounting rod is in contact with the jacking and pushing assembly, the other end thereof extends out from the mounting sleeve to be fixedly connected with an outer shell of the trepanning motor, and is mainly configured for transmitting the linear thrust of the jacking and pushing assembly to the trepanning unit, and the trepanning motor is connected with the auger bit by the drill bit chuck, and the auger bit implements a trepanning operation.

97. The high-capacity battery assembly as claimed in claim 96, wherein the trepanning assembly further comprises a trepanning positioning spring, and the trepanning positioning spring is sleeved on the auger bit, and is configured for controlling the feed amount of the auger bit, and meanwhile providing an acting force, so that the trepanning unit restores to an initial location.

98. The high-capacity battery assembly as claimed in any of claim 91-95, wherein the liquid replenishment and replacement assembly comprises a liquid injection inner cylinder, a liquid injection outer cylinder and a liquid injection spring; the liquid injection outer cylinder is connected with the rotating assembly, the liquid injection inner cylinder is disposed in the liquid injection outer cylinder and is connected with an external pipeline at the same time, and the liquid injection spring is disposed in the liquid injection outer cylinder, and provides an acting force to restore the liquid injection inner cylinder to an initial location after the liquid injection inner cylinder completes liquid replenishment and replacement operations.

99. The high-capacity battery assembly as claimed in claim 98, wherein an end portion of the liquid injection inner cylinder is provided with a tapered nozzle, and the liquid injection outer cylinder is provided with a strip-shaped through slot, so that a connecting hose of the liquid injection inner cylinder and the external pipeline moves in the strip-shaped through slot.

100. The high-capacity battery assembly as claimed in any of claims 91-95, wherein the hole sealing assembly comprises a hole sealing spring, a hole sealing cylinder body and a hole sealing push rod; and the hole sealing cylinder body is connected with the rotating assembly, the hole sealing push rod is disposed in the hole sealing cylinder body and is capable of jacking and pushing the sealing plug under the action of the jacking and pushing assembly to perform a hole sealing operation, and the hole sealing spring is disposed in the hole sealing cylinder body and provides an acting force to restore the hole sealing push rod to an initial location after the hole sealing push rod completes the hole sealing operation.

101. The high-capacity battery assembly as claimed in any of claims 91-95, wherein the repair mechanism further comprises a liquid replenishment and replacement connecting assembly; the liquid replenishment and replacement connecting assembly comprises a first liquid replenishment and replacement connector and a second liquid replenishment and replacement connector; the first liquid replenishment and replacement connector is mounted on the high-capacity battery, and the second liquid replenishment and replacement connector is mounted on the liquid replenishment and replacement apparatus; the first liquid replenishment and replacement connector comprises a connector body, and a channel penetrating through the inner cavity of the high-capacity battery is formed on the connector body; an outer wall of the connector body is provided with a first connecting flange, the first connecting flange divides the connector body into a connection section and an insertion section; the second liquid replenishment and replacement connector comprises a connecting sleeve, and an end portion of the connecting sleeve is provided with a second connecting flange; the insertion section of the first liquid replenishment and replacement connector is inserted into the connecting sleeve of the second liquid replenishment and replacement connector, so as to implement plug-in positioning of the first liquid replenishment and replacement connector and the second liquid replenishment and replacement connector, and meanwhile, the first liquid replenishment and replacement connector and the second liquid replenishment and replacement connector are fixedly connected by the first connecting flange and the second connecting flange.

102. The high-capacity battery assembly as claimed in claim 101, wherein the radial end surface of the first connecting flange that is close to the insertion section is provided with a first sealing boss; the radial end surface of the second connecting flange that is away from the connecting sleeve is provided with a second sealing boss; and a first sealing ring is disposed between the first sealing boss and the second sealing boss.

103. The high-capacity battery assembly as claimed in claim 102, wherein the insertion section of the connector body is further provided with an annular boss connected with the first connecting flange, and the radial end surface of the annular boss that is away from the first connecting flange is a first sealing surface; an inner wall of the connecting sleeve is provided with an annular notch, the radial end surface of the annular notch that is away from the second connecting flange is a second sealing surface; and a second sealing ring is disposed between the first sealing surface and the second sealing surface.

104. The high-capacity battery assembly as claimed in claim 101, wherein the connection section of the connector body is further provided with an annular limiting boss, and the annular limiting boss is configured for cooperating with the high-capacity battery to fix the first liquid replenishment and replacement connector.

105. The high-capacity battery assembly as claimed in claim 101, wherein an end portion of the insertion section of the connector body is provided with an annular chamfer.

106. The high-capacity battery assembly as claimed in claim 101, wherein the channel in the first liquid replenishment and replacement connector comprises a ninth channel and a tenth channel, which are isolated from each other, the ninth channel is configured for communicating with the electrolyte region of the high-capacity battery, and the tenth channel is configured for communicating with the gas region of the high-capacity battery.

107. The high-capacity battery assembly as claimed in claim 106, wherein an electrolyte pipe section is connected to the ninth channel, and the ninth channel is in communication with the electrolyte region of the high-capacity battery by the electrolyte pipe section.

108. The high-capacity battery assembly as claimed in claim 107, wherein the connector body is further provided with a sealing channel penetrating through the channel, and a rubber ring is disposed in the sealing channel.

109. The high-capacity battery assembly as claimed in claim 106, wherein the ninth channel and the tenth channel are L-shaped flow channels.

110. The high-capacity battery assembly as claimed in claim 1, wherein the repair mechanism comprises a liquid injection and replacement and explosion venting member;
the liquid injection and replacement and explosion venting member comprises a liquid injection and replacement member and an explosion venting pipe member;
the liquid injection and replacement member comprises a columnar liquid injection and replacement member main body and a third blocking member; the liquid injection and replacement member main body is fixed on the housing, and a third channel penetrating through the electrolyte region of the inner cavity of the housing is formed on the liquid injection and replacement member main body; the third blocking member is configured for blocking the third channel; and the third blocking member may be disengaged from the third channel under the action of a thermal runaway pressure or temperature of a lithium-ion battery; and
the explosion venting pipe member comprises an explosion venting pipe and an explosion venting film fixed in the explosion venting pipe; and the explosion venting pipe is coaxially and hermetically sleeved with the liquid injection and replacement member main body in a detachable manner.

111. The high-capacity battery assembly as claimed in claim 110, wherein a fourth channel penetrating through the gas region of the inner cavity of the housing is further formed on the liquid injection and replacement member main body; the fourth channel and the third channel are isolated from each other; and the third blocking member is further configured for blocking the fourth channel.

112. The high-capacity battery assembly as claimed in claim 111, wherein the third blocking member is solid paraffin filled in the third channel and the fourth channel.

113. The high-capacity battery assembly as claimed in claim 112, further comprising an electrolyte communication pipe and a gas communication pipe, wherein the third channel penetrates through the electrolyte region of the inner cavity of the housing by the electrolyte communication pipe; and the fourth channel penetrates through the gas region of the inner cavity of the housing by the gas communication pipe.

114. The high-capacity battery assembly as claimed in claim 111, wherein the liquid injection and replacement member main body is a cylinder; a first blind hole is formed in the axial direction of the cylinder; a second blind hole and a third blind hole, which are isolated from each other, are formed in the bottom of the blind hole in the axial direction of the cylinder; a fifth through hole and a sixth through hole penetrating through the second blind hole and the third blind hole are respectively formed in the radial direction of the cylinder; the second blind hole and the fifth through hole form the fourth channel; the third blind hole and the sixth through hole form the third channel; and the explosion venting pipe is hermetically sleeved in the first blind hole.

115. The high-capacity battery assembly as claimed in claim 114, wherein an outer wall of the explosion venting pipe is in threaded connection with an inner wall of the first blind hole.

116. The high-capacity battery assembly as claimed in claim 110, wherein one end of the fourth channel is located in the inner cavity of the housing and is in communication with the gas region of the inner cavity of the housing.

117. The high-capacity battery assembly as claimed in claim 113, wherein one end of the electrolyte communication pipe is fixed with one end of the third channel, and the other end port of the electrolyte communication pipe is close to the housing bottom plate; and in the height direction of the housing, the highest location of the electrolyte communication pipe is higher than a liquid level of electrolyte in the inner cavity of the housing.

118. The high-capacity battery assembly as claimed in claim 1, wherein the housing is further provided with a gas chamber; the gas chamber is in communication with the gas region of the inner cavity of each battery cell; and the repair mechanism comprises a functional interface; and
the functional interface comprises a columnar body, a second explosion venting mechanism, a fourth blocking member and a fifth blocking member; a liquid channel, a gas channel and a second explosion venting channel are formed on the columnar body; one end port of the liquid channel is in communication with the electrolyte sharing chamber, and the other port is provided with the fourth blocking member; one end port of the gas channel is in communication with the gas chamber, and the other port is provided with the fifth blocking member; and one end port of the second explosion venting channel is in communication with the gas chamber, and the other port is provided with the second explosion venting mechanism.

119. The high-capacity battery assembly as claimed in claim 118, wherein the housing comprises a first cylinder body having two open ends, and end plate assemblies respectively fixed at the two open ends of the first cylinder body; the avoidance hole is formed on a first cylinder body top plate; the electrolyte sharing chamber is located on a first cylinder body bottom plate; the gas chamber is located on the first cylinder body top plate; and the functional interface is located on one of the end plate assemblies.

120. The high-capacity battery assembly as claimed in claim 119, wherein the end plate assembly provided with the functional interface comprises a first end sub-plate; and the first end sub-plate is provided with a communication channel in communication with the gas channel or an electrolyte channel.

121. The high-capacity battery assembly as claimed in claim 120, wherein the communication channel is composed of a groove formed on the first end sub-plate in the height direction and a blocking plate fixedly covered on the groove.

122. The high-capacity battery assembly as claimed in claim 121, wherein the end plate assembly provided with the functional interface further comprises a second end sub-plate; and the second end sub-plate is tightly attached to the outermost battery cell in the housing and is fixedly connected to the first end sub-plate.

123. The high-capacity battery assembly as claimed in claim 122, wherein the second end sub-plate is fixedly connected with the first end sub-plate by a screw; and a gasket is disposed between the second end sub-plate and the first end plate, and the head of the screw sequentially passes through the second end sub-plate and the gasket to be connected with the first end sub-plate.

124. The high-capacity battery assembly as claimed in claim 123, wherein the fourth blocking member is a plug provided with external threads; and the fourth blocking member has the same structure as the fifth blocking member.

125. The high-capacity battery assembly as claimed in claim 124, wherein the second explosion venting mechanism is an explosion venting film.

126. The high-capacity battery assembly as claimed in claim 1, wherein the repair mechanism is a slow-release lithium replenishment apparatus; and the electrolyte sharing chamber is located at the bottom of the housing, and the slow-release lithium replenishment apparatus is disposed in the electrolyte sharing chamber;
the slow-release lithium replenishment apparatus comprises an outer shell and lithium salt particles disposed in the outer shell, the outer shell is insoluble in the electrolyte, and at least one micropore is formed on a sidewall of the outer shell, so that lithium ions of the lithium salt particles are slowly released in the electrolyte in the housing.

127. The high-capacity battery assembly as claimed in claim 126, wherein the lithium salt particles are inorganic lithium salt particles, the inorganic lithium salt particles are tightly filled in the inner cavity of the outer shell, and the particle size of the inorganic lithium salt particles is greater than the aperture of the micropore.

128. The high-capacity battery assembly as claimed in claim 126, wherein the outer shell is a plastic outer shell.

129. The high-capacity battery assembly as claimed in any of claims 126-128, wherein one end of the slow-release lithium replenishment apparatus is detachably and hermetically mounted on a sidewall or an end portion of the housing of the high-capacity battery.

130. The high-capacity battery assembly as claimed in claim 129, wherein the slow-release lithium replenishment apparatus further comprises a sealing cover fixedly connected with the outer shell, the sealing cover is provided with external threads, a through hole provided with internal threads is formed in a sidewall or an end portion of the housing, the sealing cover is in threaded connection with the through hole on the housing of the high-capacity battery, and a sealing gasket is mounted at the threaded connection location for sealing.

131. The high-capacity battery assembly as claimed in any of claims 126-128, wherein one end of the slow-release lithium replenishment apparatus is fixedly mounted on a sidewall or an end portion of the housing.

132. The high-capacity battery assembly as claimed in claim 131, wherein the slow-release lithium replenishment apparatus further comprises a fixing block, the fixing block is provided with a mounting column, the outer shell is sleeved on the mounting column, a sidewall or end portion of the housing is integrally provided with a mounting base, the fixing block is mounted in a through hole of the mounting base in an interference fit manner, and the fixing block is welded with an inner wall of the through hole of the mounting base.

133. The high-capacity battery assembly as claimed in claim 1, wherein positive terminals of all battery cells are connected to serve as a total positive electrode, and negative terminals of all battery cells are connected to serve as a total negative electrode;
the repair mechanism comprises an automatic lithium replenishment apparatus; and the automatic lithium replenishment apparatus comprises a lithium source, a lithium replenishment wire, a resistor and an inductive switch; and
the lithium source is placed in the electrolyte sharing chamber; one end of the lithium replenishment wire extends into the housing to be connected with the lithium source, and the other end of the lithium replenishment wire extends out from the housing to be connected with the total negative electrode; and the inductive switch and the resistor are sequentially disposed between the total negative electrode and the lithium source on the lithium replenishment wire outside the housing, the inductive switch is configured for detecting a discharging electrical signal of the high-capacity battery, so that the lithium replenishment wire is turned on or turned off

134. The high-capacity battery assembly as claimed in claim 133, wherein the inductive switch is a current inductive switch for detecting the direction of current in a connecting cable between the battery and an external load.

135. The high-capacity battery assembly as claimed in claim 133, wherein the resistor is a sliding rheostat.

136. The high-capacity battery assembly as claimed in claim 133, wherein the lithium source comprises two copper mesh layers and a metal lithium layer disposed between the two copper mesh layers.

137. The high-capacity battery assembly as claimed in any of claims 133-136, wherein the automatic lithium replenishment apparatus further comprises a lithium replenishment power supply, and the lithium replenishment power supply is configured for applying a voltage between the lithium source and the negative electrode in a discharging phase of the battery, so that the lithium replenishment current remains unchanged all the time.

138. A repair mechanism, wherein the repair mechanism is connected with a high-capacity battery, and is configured for repairing the high-capacity battery having an attenuated capacity or inhibiting the attenuation speed of the high-capacity battery, so as to improve the performance of the high-capacity battery and prolong the cycle life of the high-capacity battery.

139. The repair mechanism as claimed in claim 138, wherein the repair mechanism comprises a liquid injection and replacement member; the liquid injection and replacement member comprises a liquid injection and replacement member main body, and a blocking member fixed on the liquid injection and replacement member main body; the liquid injection and replacement member main body is fixed on a housing, and a first channel penetrating through the inner cavity of the housing is formed on the liquid injection and replacement member main body; and the blocking member is configured for blocking the first channel from the outer side of the housing.

140. The repair mechanism as claimed in claim 139, wherein a second channel penetrating through the inner cavity of the housing is further formed on the liquid injection and replacement member main body; and the blocking member is further configured for blocking the second channel from the outer side of the housing.

141. The repair mechanism as claimed in claim 140, wherein the liquid injection and replacement member main body is a columnar body, and both the first channel and the second channel are through holes formed on the liquid injection and replacement member main body.

142. The repair mechanism as claimed in claim 141, wherein the second channel is an L-shaped through hole, which comprises a horizontal through hole and a vertical through hole, wherein the horizontal through hole is formed in the axial direction of the liquid injection and replacement member main body, and the longitudinal cross section of the horizontal through hole is in a fan ring shape.

143. The repair mechanism as claimed in claim 141, wherein the second channel comprises a horizontal through hole group and a vertical through hole, wherein the horizontal through hole group is formed in the axial direction of the liquid injection and replacement member main body, the horizontal through hole group is composed of a plurality of through holes in communication with the vertical through hole, and the plurality of through holes are arranged along the same circumference.

144. The repair mechanism as claimed in any of claims 139-144, wherein the blocking member comprises elastic blocking columns sealed in the first channel and the second channel.

145. The repair mechanism as claimed in any of claims 139-144, wherein the blocking member comprises a sealing plate and a first hot melting member; and
a stepped hole is formed on the liquid injection and replacement member; the stepped hole penetrates through the first channel and the second channel; and the sealing plate is fixed on a step surface of the stepped hole, and the first hot melting member is fixed on the sealing plate and in the stepped hole where the sealing plate is located.

146. The repair mechanism as claimed in any of claims 139-143, wherein the blocking member comprises hydraulic quick connector parent bodies respectively sealed in the first channel and the second channel.

147. The repair mechanism as claimed in any of claims 139-143, wherein the blocking member comprises a first rubber ring and a second hot melting member;
a counter bore penetrating through the first channel and the second channel is formed in the axial direction of the liquid injection and replacement member main body; and the first rubber ring is coaxially fixed in the counter bore, and the second hot melting member is fixed in the first rubber ring in a hot melting manner and blocks the first channel and the second channel.

148. The repair mechanism as claimed in any of claims 139-147, wherein the blocking member comprises a cover cap buckled on the liquid injection and replacement member main body.

149. The repair mechanism as claimed in claim 138, comprising a liquid injection and replacement member, wherein the liquid injection and replacement member comprises a liquid injection and replacement member main body, an electrolyte flow pipe section and a blocking member; the liquid injection and replacement member main body is fixed on the housing, and a first channel penetrating through the inner cavity of the housing is formed on the liquid injection and replacement member main body; one end of the electrolyte flow pipe section is fixed on the liquid injection and replacement member main body, and penetrates through the first channel; the other end of the electrolyte flow pipe section is in communication with an electrolyte region of the inner cavity of the housing; and the blocking member is configured for blocking the first channel from the outer side of the housing.

150. The repair mechanism as claimed in claim 149, wherein a second channel penetrating through a gas region of the inner cavity of the housing is further formed on the liquid injection and replacement member main body; and the blocking member is further configured for blocking the second channel from the outer side of the housing.

151. The repair mechanism as claimed in claim 150, wherein the liquid injection and replacement member main body is a cylinder, and both the first channel and the second channel are through holes formed on the liquid injection and replacement member main body.

152. The repair mechanism as claimed in claim 151, wherein an annular limiting boss is disposed on an outer circumferential surface of the liquid injection and replacement member main body in the circumferential direction thereof, and is configured for cooperating with the housing to fix the liquid injection and replacement member main body.

153. The repair mechanism as claimed in claim 151, wherein the second channel is formed in the axial direction of the liquid injection and replacement member main body, and the longitudinal cross section of the second channel is in a fan ring shape.

154. The repair mechanism as claimed in claim 151, wherein the second channel comprises a plurality of through holes formed in the axial direction of the liquid injection and replacement member main body, and the plurality of through holes are arranged along the same circumference.

155. The repair mechanism as claimed in any of claims 150-154, wherein the blocking member comprises a first rubber ring and a second hot melting member; a counter bore penetrating through the first channel and the second channel is formed in the axial direction of the liquid injection and replacement member main body; and the first rubber ring is coaxially fixed in the counter bore, and the second hot melting member is fixed in the first rubber ring in the hot melting manner and blocks the first channel and the second channel.

156. The repair mechanism as claimed in claim 155, wherein the blocking member further comprises a cover cap buckled at one end of the liquid injection and replacement member main body, and one end of the liquid injection and replacement member main body is the end of the liquid injection and replacement member main body that is located outside the housing.

157. The repair mechanism as claimed in claim 138, comprising a liquid injection and replacement member, wherein the liquid injection and replacement member comprises a liquid injection and replacement member main body and a blocking member; the liquid injection and replacement member main body is fixed on the housing, and a first channel penetrating through the inner cavity of the housing is formed on the liquid injection and replacement member main body; the blocking member comprises a first rubber ring and a first sealing plate; the first rubber ring is coaxially fixed in the first channel, the first sealing plate is fixed on a first end surface of the first rubber ring in the hot melting manner and blocks the first channel; and the first end surface of the first rubber ring is the end surface of the first rubber ring that is away from the housing of a lithium-ion battery.

158. The repair mechanism as claimed in claim 157, further comprising an electrolyte flow pipe section, wherein one end of the electrolyte flow pipe section is fixed on the liquid injection and replacement member main body, and penetrates through the first channel; and the other end of the electrolyte flow pipe section is configured for communicating with the electrolyte region of the inner cavity of the housing.

159. The repair mechanism as claimed in claim 158, wherein a second channel penetrating through the gas region of the inner cavity of the housing is further formed on the liquid injection and replacement member main body; the first channel is a stepped through hole formed along the liquid injection and replacement member main body; the second channel is isolated from a small hole of the stepped through hole and penetrates through a large hole of the stepped through hole; and the first rubber ring is coaxially fixed in the large hole of the stepped through hole.

160. The repair mechanism as claimed in claim 159, wherein an axial length of the first rubber ring is greater than an axial length of the large hole of the stepped through hole; and one end of the first rubber ring is tightly attached to a step surface of the stepped through hole, the outer side of the other end of the first rubber ring is provided with an annular folded edge in the circumferential direction thereof, and the annular folded edge is tightly attached to an end surface of the large hole of the stepped through-hole.

161. The repair mechanism as claimed in claim 159, wherein the second channel is formed in the axial direction of the liquid injection and replacement member main body, and the longitudinal cross section of the second channel is in the fan ring shape.

162. The repair mechanism as claimed in claim 159, wherein the second channel comprises a plurality of through holes formed in the axial direction of the liquid injection and replacement member main body, and the plurality of through holes are arranged along the same circumference.

163. The repair mechanism as claimed in any of claims 157-162, wherein the blocking member further comprises a cover cap buckled at one end of the liquid injection and replacement member main body, and one end of the liquid injection and replacement member main body is the end of the liquid injection and replacement member main body that is located outside the housing.

164. The repair mechanism as claimed in claim 163, wherein the blocking member further comprises a blocking column fixed in the first rubber ring in the hot melting manner.

165. The repair mechanism as claimed in claim 157, wherein an annular limiting boss is disposed on the outer circumferential surface of the liquid injection and replacement member main body in the circumferential direction thereof, and is configured for cooperating with the housing to fix the liquid injection and replacement member main body.

166. The repair mechanism as claimed in claim 138, comprising a liquid injection and replacement member, wherein the liquid injection and replacement member comprises a columnar liquid injection and replacement member main body; the liquid injection and replacement member main body is fixed on the housing, a fifth channel penetrating through the electrolyte region of the inner cavity of the housing is formed on the liquid injection and replacement member main body, and a first pipe fitting is sleeved in the fifth channel; and the end portion of the first pipe fitting that is located outside the housing is sealed.

167. The repair mechanism as claimed in claim 166, wherein a sixth channel penetrating through the gas region of the inner cavity of the housing is formed on the liquid injection and replacement member main body, and a second pipe fitting is sleeved in the sixth channel; and the end portion of the second pipe fitting that is located outside the housing is sealed.

168. The repair mechanism as claimed in claim 167, wherein the first pipe fitting and the second pipe fitting are plastic pipes that do not react with the electrolyte, and the end portions located outside the housing are sealed in a heat-shrinkable extrusion sealing manner.

169. The repair mechanism as claimed in claim 168, further comprising a sealing rubber plug, wherein the fifth channel is a stepped through hole formed along the liquid injection and replacement member main body; the sixth channel is isolated from a small hole of the stepped through hole and penetrates through a large hole of the stepped through hole; the end portions of the first pipe fitting and the second pipe fitting that are located outside the housing are located in the large hole of the stepped through hole; and the sealing rubber plug is plugged into the large hole of the stepped through hole to seal the fifth channel and the sixth channel.

170. The repair mechanism as claimed in claim 169, wherein a sealant layer is disposed on a step surface of the fifth channel, and the end portions of the first pipe fitting and the second pipe fitting that are located outside the housing extend out from the sealant layer.

171. The repair mechanism as claimed in claim 169, further comprising a sealing end cover, wherein the sealing end cover is detachably fixed on the liquid injection and replacement member main body to seal the fifth channel and the sixth channel again.

172. The repair mechanism as claimed in claim 138, comprising a liquid injection and replacement member; the liquid injection and replacement member comprises a liquid injection and replacement member main body and a blocking member, wherein the liquid injection and replacement member main body is columnar and is fixed on the housing, and a seventh channel penetrating through the electrolyte region of the inner cavity of the housing is formed on the liquid injection and replacement member main body; the blocking member comprises n groups of sealing units, wherein n is an integer greater than or equal to 1; when n is equal to 1, the sealing units are disposed in the seventh channel to seal the seventh channel; and when n is greater than 1, the n groups of sealing units are sequentially stacked in the seventh channel in the axial direction of the seventh channel, to seal the seventh channel; and
each group of sealing units comprises a first sealing plug and a sealing coating, which are sequentially stacked in the axial direction of the seventh channel, the first sealing plug is located on the side close to the inner cavity of the housing, and the sealing coating is located on the side away from the inner cavity of the housing.

173. The repair mechanism as claimed in claim 172, wherein an annular clamping groove is formed on an inner wall of the seventh channel in the circumferential direction thereof; a limiting retainer ring is mounted in the annular clamping groove; an end surface of the outermost sealing unit in the seventh channel abuts against the limiting retainer ring, and the limiting retainer ring limits axial movement of the n groups of sealing units in the seventh channel, wherein the outermost sealing unit in the seventh channel is a sealing unit in the axial direction of the seventh channel that is farthest from the inner cavity of the housing.

174. The repair mechanism as claimed in claim 173, wherein the blocking member further comprises a second sealing plug; and the second sealing plug is stacked on the outer side of the outermost sealing unit in the axial direction of the seventh channel, and an end surface of the second sealing plug abuts against the limiting retainer ring.

175. The repair mechanism as claimed in any of claims 172-174, wherein an eighth channel penetrating through the gas region of the inner cavity of the housing is formed on the liquid injection and replacement member main body; the seventh channel is a stepped through hole formed along the liquid injection and replacement member main body; the eighth channel is isolated from a small hole of the stepped through hole and penetrates through a large hole of the stepped through hole; and the blocking member is disposed in the large hole of the stepped through hole.

176. The repair mechanism as claimed in claim 175, wherein the large hole of the stepped through hole is a tapered hole, and a small end of the tapered hole is close to the small hole of the stepped through hole.

177. The repair mechanism as claimed in claim 175, further comprising an electrolyte communication pipe section, wherein one end of the electrolyte communication pipe section is fixed on the liquid injection and replacement member main body and penetrates through the seventh channel; and the other end of the electrolyte communication pipe section is configured for communicating with the electrolyte region of the inner cavity of the housing.

178. The repair mechanism as claimed in claim 175, wherein a sealing varnish that does not react with the electrolyte is used as the sealing coating.

179. The repair mechanism as claimed in claim 138, comprising a liquid injection and replacement and explosion venting member, wherein the liquid injection and replacement and explosion venting member comprises a liquid injection and replacement member and an explosion venting pipe member; the liquid injection and replacement member comprises a columnar liquid injection and replacement member main body and a third blocking member; the liquid injection and replacement member main body is fixed on the housing, and a third channel penetrating through the electrolyte region of the inner cavity of the housing is formed on the liquid injection and replacement member main body; the third blocking member is configured for blocking the third channel; the third blocking member may be disengaged from the third channel under the action of a thermal runaway pressure or temperature of the lithium-ion battery; and the explosion venting pipe member comprises an explosion venting pipe and an explosion venting film fixed in the explosion venting pipe; and the explosion venting pipe is coaxially and hermetically sleeved with the liquid injection and replacement member main body in a detachable manner.

180. The repair mechanism as claimed in claim 179, wherein a fourth channel penetrating through the gas region of the inner cavity of the housing is further formed on the liquid injection and replacement member main body; the fourth channel and the third channel are isolated from each other; and the third blocking member is further configured for blocking the fourth channel.

181. The repair mechanism as claimed in claim 180, wherein the third blocking member is solid paraffin filled in the third channel and the fourth channel.

182. The repair mechanism as claimed in claim 181, further comprising an electrolyte communication pipe and a gas communication pipe, wherein the third channel penetrates through the electrolyte region of the inner cavity of the housing by the electrolyte communication pipe; and the fourth channel penetrates through the gas region of the inner cavity of the housing by the gas communication pipe.

183. The repair mechanism as claimed in claim 180, wherein the liquid injection and replacement member main body is a cylinder; a first blind hole is formed in the axial direction of the cylinder; a second blind hole and a third blind hole, which are isolated from each other, are formed in the bottom of the blind hole in the axial direction of the cylinder; a fifth through hole and a sixth through hole penetrating through the second blind hole and the third blind hole are respectively formed in the radial direction of the cylinder; the second blind hole and the fifth through hole form the fourth channel; the third blind hole and the sixth through hole form the third channel; and the explosion venting pipe is hermetically sleeved in the first blind hole.

184. The repair mechanism as claimed in claim 183, wherein an outer wall of the explosion venting pipe is in threaded connection with an inner wall of the first blind hole.

185. The repair mechanism as claimed in claim 138, comprising an automatic lithium replenishment apparatus, which comprises a lithium source, a lithium replenishment wire, a resistor and an inductive switch; and
the lithium source is disposed in the inner cavity of the battery; one end of the lithium replenishment wire is electrically connected with the lithium source, the other end thereof is connected with a negative terminal of the battery, and the inductive switch and the resistor are sequentially disposed on the lithium replenishment wire between a connection end of the negative terminal of the battery and a connection end for connecting the lithium source; and the inductive switch is configured for detecting a discharging electrical signal of the battery, so that the lithium replenishment wire is turned on or turned off.

186. The repair mechanism as claimed in claim 185, wherein the inductive switch is a current inductive switch for detecting the direction of current in a connecting cable between the battery and an external load.

187. The repair mechanism as claimed in claim 185, wherein the resistor is a sliding rheostat.

188. The repair mechanism as claimed in claim 185, wherein the lithium source comprises two copper mesh layers and a metal lithium layer disposed between the two copper mesh layers.

189. The repair mechanism as claimed in any of claims 185-188, further comprising a lithium replenishment power supply, wherein the lithium replenishment power supply is configured for applying a voltage between the lithium source and the negative electrode in a discharging phase of the battery, so that the lithium replenishment current remains unchanged all the time.

190. A method for repairing a high-capacity battery assembly, wherein a high-capacity battery having an attenuated capacity is repaired or the attenuation speed of the high-capacity battery is inhibited by using a repair mechanism, so as to improve the performance of the high-capacity battery and prolong the cycle life of the high-capacity battery.

191. The repair method for the high-capacity battery assembly as claimed in claim 190, wherein after a set time of a charging and discharging cycle of the high-capacity battery, electrolyte is replenished into an electrolyte sharing chamber and the inner cavity of each battery cell by a liquid injection and replacement member, or the electrolyte in the electrolyte sharing chamber and the inner cavity of each battery cell is replaced by the liquid injection and replacement member.

192. The repair method for the high-capacity battery assembly as claimed in claim 190, wherein:
initial liquid injection step: during initial liquid injection of the high-capacity battery, a second one-way valve is opened by using a hydraulic pressure of the electrolyte, the electrolyte enters the inner cavity of the high-capacity battery by the second one-way valve, and after liquid injection is completed, the hydraulic pressure is removed, so that the second one-way valve is closed to complete an initial liquid injection operation of the high-capacity battery;
liquid replenishment step: the second one-way valve is opened by using the hydraulic pressure of the electrolyte, the electrolyte enters the high-capacity battery by the second one-way valve, meanwhile, a first one-way valve is opened by using an external acting force, a gas in the high-capacity battery is discharged by the first one-way valve, and after liquid replenishment is completed, the hydraulic pressure and the external acting force are removed, so that the first one-way valve and the second one-way valve are closed to complete a liquid replenishment operation of the high-capacity battery;
liquid replacement step: the first one-way valve is first opened by using a gas pressure, a gas enters the inner cavity of the high-capacity battery by the first one-way valve, meanwhile, the second one-way valve is opened by using an external acting force, the electrolyte in the high-capacity battery is drained by the second one-way valve, and after liquid drainage is completed, the gas pressure and the external acting force are removed, so that the first one-way valve and the second one-way valve are closed; and
then, the second one-way valve is opened by using the hydraulic pressure of the electrolyte, the electrolyte enters the high-capacity battery by the second one-way valve, and meanwhile, the first one-way valve is opened by using an external acting force, and the gas in the high-capacity battery is discharged by the first one-way valve, so as to complete a liquid replacement operation of the high-capacity battery.

193. The repair method for the high-capacity battery assembly as claimed in claim 192, wherein the method further comprises a vacuumizing step: before initial liquid injection is performed on the high-capacity battery, opening the first one-way valve or the second one-way valve by using an external acting force, and starting a vacuumizing apparatus to execute a vacuumizing operation on the high-capacity battery.

194. The repair method for the high-capacity battery assembly as claimed in claim 192, wherein the method further comprises a formation and exhaust step: after the initial liquid injection of the high-capacity battery is completed, formation on the high-capacity battery is started, the first one-way valve is opened by using an external acting force during this process, and a gas generated inside the high-capacity battery during the formation is discharged by the first one-way valve, so as to complete formation and exhaust operations.

195. The repair method for the high-capacity battery assembly as claimed in claim 190, wherein the method comprises the following steps:
S1, connecting: a liquid replenishment and replacement interface of a liquid replenishment and replacement apparatus is connected with a liquid replenishment and replacement connector of a lithium-ion battery;
S2, trepanning: a rotating assembly rotates a trepanning assembly to the liquid replenishment and replacement interface;
a jacking and pushing assembly provides a linear thrust, so that the trepanning assembly moves toward the liquid replenishment and replacement interface, and the trepanning assembly forms an open pore on the liquid replenishment and replacement connector of the lithium-ion battery; and the jacking and pushing assembly and the trepanning assembly restore to initial locations;
S3, liquid replenishment and replacement: the rotating assembly rotates a liquid replenishment and replacement assembly to the liquid replenishment and replacement interface; the jacking and pushing assembly provides a linear thrust, so that the liquid replenishment and replacement assembly moves toward the liquid replenishment and replacement interface, the liquid replenishment and replacement assembly is in butt joint with the open pore formed on the liquid replenishment and replacement connector of the lithium-ion battery, and then, the liquid replenishment and replacement assembly performs a liquid replenishment or liquid replacement operation on the lithium-ion battery; and the jacking and pushing assembly and the liquid replenishment and replacement assembly restore to initial locations;
S4, hole sealing: the rotating assembly rotates a hole sealing assembly to the liquid replenishment and replacement interface; the jacking and pushing assembly provides a linear thrust, so that the hole sealing assembly moves toward the liquid replenishment and replacement interface, the hole sealing assembly extrudes a sealing plug into the open pore of the liquid replenishment and replacement connector of the lithium-ion battery under the action of the jacking and pushing assembly, so as to seal the liquid replenishment and replacement connector of the high-capacity battery; and the jacking and pushing assembly and the hole sealing assembly restore to initial locations; and
S5, disassembly and separation: the liquid replenishment and replacement interface of the liquid replenishment and replacement apparatus is disassembled and separated from the liquid replenishment and replacement connector of the lithium-ion battery.
